(19) Europäisches Patentamt
European Patent Office
Office européen des brevets

(11) EP 3 370 540 B1

(12) # EUROPÄISCHE PATENTSCHRIFT

(45) Veröffentlichungstag und Bekanntmachung des Hinweises auf die Patenterteilung:
**02.07.2025 Patentblatt 2025/27**

(21) Anmeldenummer: **16794265.5**

(22) Anmeldetag: **04.11.2016**

(51) Internationale Patentklassifikation (IPC):
***A23F 3/42*** *(2006.01)* ***A23F 5/48*** *(2006.01)*
***A23L 27/10*** *(2016.01)* ***C12C 5/02*** *(2006.01)*
***C12C 12/04*** *(2006.01)* ***A23F 5/26*** *(2006.01)*
***A24B 15/24*** *(2006.01)* ***A23L 2/56*** *(2006.01)*
***A23L 27/00*** *(2016.01)* ***C11B 9/02*** *(2006.01)*
***C12H 3/04*** *(2019.01)* ***C12H 6/02*** *(2019.01)*

(52) Gemeinsame Patentklassifikation (CPC):
**C12C 5/026; A23L 2/56; A23L 27/70; C11B 9/022; C12H 3/04; C12H 6/02;** C12G 2200/21

(86) Internationale Anmeldenummer:
**PCT/EP2016/076743**

(87) Internationale Veröffentlichungsnummer:
**WO 2017/077084 (11.05.2017 Gazette 2017/19)**

(54) **ADSORPTIONSSYSTEM UND VERFAHREN ZUM BETREIBEN EINES ADSORPTIONSSYSTEMS**
ADSORPTION SYSTEM AND METHOD FOR OPERATING AN ADSORPTION SYSTEM
SYSTÈME D'ADSORPTION ET PROCÉDÉ POUR LE FONCTIONNEMENT D'UN SYSTÈME D'ADSORPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2015 DE 102015119154**
**06.11.2015 DE 102015119155**
**01.04.2016 DE 102016105997**
**01.04.2016 DE 102016105992**
**01.04.2016 DE 102016105993**

(43) Veröffentlichungstag der Anmeldung:
**12.09.2018 Patentblatt 2018/37**

(73) Patentinhaber: **Flavologic GmbH**
**85591 Vaterstetten (DE)**

(72) Erfinder:
- **HÄSSELBARTH, Alexander**
  **85591 Vaterstetten (DE)**
- **GEYER, Claudia**
  **85591 Vaterstetten (DE)**

(74) Vertreter: **Hofstetter, Schurack & Partner**
**Patent- und Rechtsanwaltskanzlei**
**PartG mbB**
**Balanstraße 73 / Haus 31A**
**81541 München (DE)**

(56) Entgegenhaltungen:
**WO-A1-2015/104357 US-A- 5 077 061**

Bemerkungen:
Die Akte enthält technische Angaben, die nach dem Eingang der Anmeldung eingereicht wurden und die nicht in dieser Patentschrift enthalten sind.

EP 3 370 540 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Adsorptionssystem zur Anreicherung von Aromastoffen aus einem aromastoffhaltigen Fluid, das ein Lebensmittel aus der Gruppe bierhaltiger Nahrungs- und/oder Genussmittel, Bierwürze, Hopfen, Hopfenextrakt, Mälzwasser, Malzbier, Malzwürze und brauereieigener Rohstoffe und Produkte ist und/oder mittels einer Entalkoholisierungsvorrichtung aus einem Ethanol-haltigen Lebensmittel aus der Gruppe bierhaltiger Nahrungs- und/oder Genussmittel erhalten ist. Die Erfindung betrifft weiterhin ein Verfahren zum Betreiben eines solchen Adsorptionssystems sowie ein Bier, das durch Ausmischen eines zumindest teilweise entalkoholisierten und/oder gärgestoppten Bieres mit einem Aromastoff-Konzentrat erhalten ist.

Im Brauereiwesen sind verschiedene Arten der Herstellung von Bier und bierhaltigen Nahrungs- und Genussmitteln mit niedrigem Alkoholgehalt bekannt. Unter dem Begriff Bier wird dabei generell ein Nahrungs- und Genussmittel verstanden, das durch teilweise oder vollständige Gärung von verzuckerter Stärke hergestellt wird, ohne dass dabei ein Destillationsverfahren zum Einsatz kommen muss. Im engeren Sinn wird unter Bier ein Nahrungs- und Genussmittel verstanden, das aus Malz und/oder aus stärkehaltiger Rohfrucht, das heißt aus Malzersatzstoffen gewonnen und nicht destilliert wird. Der Begriff "bierhaltiges Nahrungs- und Genussmittel" umfasst daher unverschnittenes Bier sowie Bier, das mit weiteren Nahrungs- und/oder Genussmitteln, beispielsweise Fruchtsäften (Biermischgetränk), Gewürzen oder dergleichen verschnitten bzw. ausgemischt ist. Da die Begriffe "alkoholarm" und "alkoholfrei" in verschiedenen Ländern unterschiedlich definiert sind, wird im Folgenden von "alkoholarm" gesprochen, wenn das Bier bzw. das bierhaltige Nahrungs- und Genussmittel maximal 1 Vol.-% und vorzugsweise maximal 0,7 Vol.-% Alkohol enthält. Von "alkoholfrei" wird im Folgenden gesprochen, wenn das bierhaltige Nahrungs- und Genussmittel maximal 0,5 Vol.-% Alkohol enthält. Unter dem Begriff "Alkohol" wird im Rahmen der vorliegenden Offenbarung generell Ethanol verstanden, sofern nichts anderes angegeben ist.

Üblicherweise besitzt Bier (Schank- und Vollbier) einen Alkoholgehalt zwischen etwa 4 und etwa 6 Vol.-%, wobei auch Leicht- und Einfachbiere mit geringerem Alkoholgehalt und Starkbiere wie Bock-, Doppelbock- oder Trippelbockbiere mit teilweise deutlich höherem Alkoholgehalt bekannt sind. Die Klassifizierung erfolg üblicherweise über den bei der Herstellung verwendeten Stammwürzegehalt.

Zur Entalkoholisierung von Bieren werden derzeit hauptsächlich zwei Verfahren verwendet, wobei auch Kombinationen dieser beiden Verfahren bekannt sind. Bei dem einen Verfahren wird ein geringerer Alkoholgehalt dadurch erreicht, dass die Gärung vorzeitig gestoppt wird, also die Alkoholentstehung verhindert oder verringert wird. Dadurch erhält das Getränk in der Regel einen süßlichen Geschmack, da viele Kohlenhydrate noch in ihrer ursprünglichen Form vorliegen. Aromen, die sich erst bei der Gärung entwickeln, fehlen hingegen teilweise oder vollständig. Bei dem anderen Verfahren wird nach abgeschlossenem Gärprozess der Alkohol in einem nachgeschalteten physikalischen Prozess, beispielsweise durch Destillation, Rektifikation, Dialyse oder Umkehrosmose, aus dem Getränk entfernt, wobei zusammen mit dem Alkohol immer auch Aromastoffe entfernt und teilweise sogar durch den Prozess verändert werden. Darüber hinaus existieren weitere Verfahren zur Senkung des Alkoholgehalts wie beispielsweise das Vermischen von Bier mit Wasser, das Verschneiden von alkoholfreiem und alkoholhaltigem Bier etc., die aber häufig zu noch deutlicheren geschmacklichen Veränderungen führen und daher nur eine sehr geringe Verbreitung besitzen.

Nachteilig bei allen derzeit Verfahren ist die vergleichsweise starke geschmackliche Veränderung des Getränks, so dass derzeit erhältliche alkoholfreie oder alkoholreduzierte Biere ein Aromaprofil aufweisen, das vergleichsweise stark vom Aromaprofil des ursprünglichen Bieres bzw. eines Vollbieres abweicht.

Zur Verbesserung des Aromaprofils ist es daher bekannt, bierhaltigen Nahrungs- und Genussmitteln Aromastoffe wieder hinzuzugeben, um entsprechende Verluste während der Entalkoholisierung auszugleichen. Die einfachste Methode besteht in der Zudosierung künstlicher bzw. naturidentischer Aromastoffe. Allerdings sind derartige Zugaben unerwünscht, da sie einerseits deklarationspflichtig sind und es andererseits praktisch unmöglich ist, das ursprüngliche komplexe Aroma korrekt wiederherzustellen. Daher wird das Aromaprofil derartiger bierhaltige Nahrungs- und Genussmitteln vom Konsumenten in der Regel als künstlich bzw. wenig bierartig empfunden.

Eine weitere Möglichkeit besteht in der Gewinnung bzw. Rückgewinnung von Aromastoffen aus brauereieigenen Rohstoffen oder Produkten und der gezielten Zugabe dieser Aromastoffe zum entalkoholisierten Bier, um ein biertypisches Aromaprofil zu erzeugen bzw. wiederherzustellen. Zur Gewinnung bzw. Rückgewinnung eigenen sich neben Bier insbesondere Bierwürze, Hopfen, Hopfenextrakt, Mälzwasser, Malzbier und Malzwürze, wobei diese Aufzählung nicht als abschließend anzusehen ist und weitere brauereieigene Rohstoffe und Produkte umfasst.

Dies hat den Vorteil, dass die Zugabe derart gewonnener Aromastoffe üblicherweise nicht deklarationspflichtig ist und dass im Vergleich zur Zugabe einzelner Aromastoffe ein weniger künstlich anmutendes und bierähnlicheres Aromaprofil als bei der Zugabe einzelner Aromastoffe erreicht werden kann. Die Ursache hierfür liegt vor allem in der hohen Anzahl und der komplexen Zusammensetzung der im Bier enthaltenen Aromastoffe, die eine Rückgewinnung aus Fluiden, die im Rahmen von Entalkoholisierungsverfahren anfallen, oder aus brauereieigenen Rohstoffen oder Produkten erheblich erschwert.

Ein Verfahren zur Gewinnung von Aromastoffkonzentraten ist beispielsweise aus der EP 2 075 321 A1 bekannt.

Bei diesem Adsorptionsverfahren wird als Fluid zunächst ein wässriges Aroma mit einem oder mehreren Aromastoffen bereitgestellt. Das aromastoffhaltige Fluid wird danach durch ein in einem Arbeitsraum angeordnetes Sorptionsmittel geleitet, das auch als Sorbens oder Adsorptionsmaterial bezeichnet werden kann. Dabei adsorbiert zumindest ein Teil des oder der im Fluid enthaltenen Aromastoffe am Sorptionsmittel. Die adsorbierten Aromastoffe können anschließend mit Hilfe eines geeigneten Desorptionsmittels vom Sorptionsmittel desorbiert und als Aromastoffkonzentrat aufgefangen werden, in welchem die Aromastoffe gegenüber ihrer Ausgangskonzentration höher angereichert vorliegen.

Allerdings ist mit Hilfe dieses Adsorptionsverfahrens bzw. Adsorptionssystems keine möglichst gleichmäßige Rückgewinnung und Anreicherung von biertypischen Aromastoffen möglich. Insbesondere ist nur eine verhältnismäßig geringe Aufkonzentrierung von polaren Aromastoffe möglich, so dass unpolare Aromastoffe gegenüber polaren Aromastoffen relativ stark angereicht werden. Damit ist es von vornherein nicht möglich, authentische Aromastoffkonzentrate zu erhalten, das heißt Aromastoffkonzentrate, in denen sowohl polare als auch unpolare Aromastoffe möglichst gleichmäßig und mit möglichst hohen Aufkonzentrierungsfaktoren vorliegen.

Aus der WO 2015/104357 A1 ist ein Verfahren zur Herstellung eines dealkoholisierten Getränks aus seinem alkoholischen Getränkeausgangsprodukt und eine Anlage zur Durchführung des Verfahrens bekannt. Das Verfahren umfasst die folgenden Schritte: Trennen des Getränkeausgangsprodukts in ein alkoholisches und aromatisches Permeat und in ein aromatisches und nahezu alkoholfreies Retentat in einem Permeationsmodul durch nicht-thermische Permeation, Entalkoholisieren des Permeats in einem für diese Aufgabe vorgesehenen Modul und schließlich Mischen des dealkoholisierten Permeats mit dem fast alkoholfreien Retentat in einem Endmischmodul. Vor dem Entalkoholisieren werden Aromastoffe aus dem aromatischen und alkoholischen Permeat durch Kaltadsorption in einem Aroma-Adsorber entfernt, was sowohl zu einer Aroma-Phase als auch zu einem Aroma-freien Permeat führt, bei dem jedoch der Alkohol durch Alkoholabtrennung von ihm entfernt wurde, was zu einer wässrigen, weitgehend entaromatisierten und entalkoholisierten Permeatwasserphase führt. Das abschließende Mischen von Aromaphase, Permeatwasserphase und Retentat findet in einem Endmischmodul statt, um ein entalkoholisiertes Getränk zu ergeben.

Aus der US 5 077 061 A ist ein Verfahren zur Herstellung eines alkoholfreien Bieres oder eines Bieres mit niedrigem Alkoholgehalt bekannt. Das Verfahren umfasst thermisches Brechen von Malzabzug, um einen Malzabfallbrei aus einem Substrat zu erhalten, das aus der Gruppe ausgewählt ist, die aus einer Bierbrauerbasis mit vollem oder hohem Alkoholgehalt oder einer daraus gewonnenen Proteinfraktion besteht.

Aufgabe der vorliegenden Erfindung ist es, ein Adsorptionssystem zu schaffen, welches eine besonders hohe Anreicherung von Aromastoffen unter möglichst weitgehender Beibehaltung eines authentischen Aromaprofils ermöglicht. Weitere Aufgaben der Erfindung bestehen darin, ein Verfahren zum Betreiben eines solchen Adsorptionssystems anzugeben, welches eine hohe und gleichmäßige Aufkonzentrierung von biertypischen Aromastoffen ermöglicht und ein Bier mit einem möglichst geringen Alkoholgehalt und einem bierartigen Aromaprofil zu schaffen.

Die Aufgaben werden erfindungsgemäß durch ein Adsorptionssystem zur Anreicherung von Aromastoffen mit den Merkmalen des Patentanspruchs 1, durch ein Verfahren gemäß Patentanspruch 13 zum Betreiben eines solchen Adsorptionssystems sowie durch ein Bier mit den Merkmalen des Patentanspruchs 20 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen jedes anderen Erfindungsaspekts anzusehen sind.

Ein erster Aspekt der Erfindung betrifft ein Adsorptionssystem gemäß Anspruch 1 zur Anreicherung von Aromastoffen, umfassend wenigstens einen Arbeitsraum, in welchem wenigstens ein Sorptionsmittel als stationäre Phase angeordnet und zur Anlagerung von Aromastoffen mit einem durch den Arbeitsraum leitbaren, aromastoffhaltigen Fluid als mobile Phase beaufschlagbar ist, wobei das aromastoffhaltige Fluid ein Lebensmittel aus der Gruppe bierhaltiger Nahrungs- und/oder Genussmittel, Bierwürze, Hopfen, Hopfenextrakt, Mälzwasser, Malzbier, Malzwürze und brauereieigener Rohstoffe und/oder brauereieigener Produkte ist und/oder mittels einer Entalkoholisierungsvorrichtung aus einem Ethanol-haltigen Lebensmittel aus der Gruppe bierhaltiger Nahrungs- und/oder Genussmittel erhalten ist. Erfindungsgemäß ist es dabei vorgesehen, dass ein Verhältnis von mittlerer Querschnittsdicke zu Gesamtlänge des wenigstens einen Arbeitsraums höchstens 0,3 und die Gesamtlänge eines durch den wenigstens einen Arbeitsraums bereitgestellten Strömungspfads für das Fluid mindestens 4,0 m beträgt, wobei das Adsorptionssystem eine Steuereinrichtung umfasst, welche dazu ausgebildet ist, das Adsorptionssystem in einem Absorptionsmodus, in welchem das wenigstens eine Sorptionsmittel mit dem aromastoffhaltigen Fluid beaufschlagt ist, um Aromastoffe am Sorptionsmittel zu adsorbieren, und in einem Desorptionsmodus, in welchem das wenigstens eine Sorptionsmittel mit einem fluiden Desorptionsmittel aus der Gruppe Ethanol und Ethanol-Wasser-Gemisch beaufschlagt ist, um am Sorptionsmittel adsorbierte Aromastoffe als Aromastoff-Konzentrat zu desorbieren, zu betreiben. Mit anderen Worten ist es erfindungsgemäß vorgesehen, dass das Adsorptionssystem wenigstens einen Arbeitsraum aufweist, in welchem das oder die Sorptionsmittel, die mit dem aromastoffhaltigen Fluid zu durchströmen sind, anordenbar sind. Dabei ist eine Geometrie des wenigstens einen Arbeitsraums derart gewählt, dass das Verhältnis von mittlerer Querschnittsdicke zu Gesamtlänge des oder der Arbeitsräume höchstens 0,3 beträgt. Unter einem Verhältnis von höchsten 0,3 sind dabei Verhältnisse von mittlerer Querschnittsdicke zu Gesamtlänge von beispielsweise 0,3, 0,2, 0,1, 0,09, 0,08, 0,07, 0,06, 0,05, 0,04, 0,03, 0,02, 0,01, 0,009,

0,008, 0,007, 0,006, 0,005, 0,004, 0,003, 0,002, 0,001, 1,0 * $10^{-4}$, 1,0 * $10^{-5}$ oder weniger zu verstehen, wobei entsprechende Zwischenwerte grundsätzlich als mitoffenbart anzusehen sind. Hierdurch wird ein möglichst langes und vergleichsweise schmales Sorbensbett bereitgestellt, wodurch es möglich wird, in Abhängigkeit der Bindungscharakteristik des oder der jeweils verwendeten Sorptionsmittel und der im Fluid befindlichen Aromastoff-Moleküle sowohl polare als auch unpolare Aromastoffe möglichst gleichmäßig auf dem Sorptionsmittel zu adsorbieren. Dementsprechend ist es mit Hilfe des Adsorptionssystems möglich, besonders authentische Aromastoff-Konzentrate, das heißt Aromastoff-Konzentrate, in denen alle im ursprünglichen Fluid vorhandenen Aromastoffe zumindest überwiegend oder im Wesentlichen gleichmäßig und verlustarm angereichert vorliegen, herzustellen. Weiterhin sind mit Hilfe des erfindungsgemäßen Adsorptionssystems sehr hohe Anreicherungsfaktoren erreichbar. Es kann grundsätzlich vorgesehen sein, dass das Verhältnis aus mittlerer Querschnittsdicke zu Gesamtlänge aller Arbeitsräume mindestens 1,0 * $10^{-7}$ beträgt.

Der Aufkonzentrierungs- bzw. Anreicherungsfaktor wenigstens eines Aromastoffs im Aromastoff-konzentrat gegenüber dem ursprünglichen Fluid kann grundsätzlich mindestens 1,01, insbesondere mindestens 10, vorzugsweise mindestens 100, bevorzugt mindestens 1000 und insbesondere mindestens 15000 betragen. Beispielsweise kann der Aufkonzentrierungsfaktor wenigstens eines Aromastoffs mindestens 2, 5, 10, 50, 100, 500, 1000, 1500, 2000, 2500, 3000, 3500, 4000, 4500, 5000, 5500, 6000, 6500, 7000, 7500, 8000, 8500, 9000, 9500, 10000, 10500, 11000, 11500, 12000, 12500, 13000, 13500, 14000, 14500, 15000, 15500, 16000, 16500, 17000, 17500, 18000, 18500, 19000, 19500, 20000, 20000, 25000, 30000, 35000, 40000, 45000, 50000, 55000, 60000, 65000, 70000, 75000, 80000, 85000, 90000, 95000, 100000 oder mehr betragen, wobei entsprechende Zwischenwerte grundsätzlich als mitoffenbart anzusehen sind. Mit anderen Worten muss das Aromastoff-Konzentrat um einen entsprechenden Faktor rückverdünnt werden, damit der Aromastoff wieder in seiner Ausgangskonzentration wie im Fluid vorliegen. Je höher der Aufkonzentrierungsfaktor ist, umso geringer sind die benötigte Lager- und Transportfläche und umso einfacher ist die Weiterverarbeitung des Aromastoff-Konzentrats. Weiterhin sinkt mit der Aufkonzentrierung der Anteil von Lösungsmittel(n), so dass beispielsweise auch ethanolfreie Aromastoffkonzentrate herstellbar sind, die den Halal-Bestimmungen entsprechen. Alternativ oder zusätzlich ist es im Rahmen der vorliegenden Offenbarung für ethanolhaltige Fluide vorgesehen, dass der Aufkonzentrierungs- bzw. Anreicherungsfaktor wenigstens eines Aromastoffs im Aromastoff-Konzentrat bezogen auf einen Ethanolgehalt des Fluids ermittelt wird, das heißt, dass für wenigstens einen Aromastoff außer Ethanol das Verhältnis der Konzentrationen c (in mol/l oder in g/l) $C_{Aromastoff}$:$C_{Ethanol}$ im Fluid und im Aromastoff-Konzentrat gebildet und miteinander verglichen wird, wobei das Verhältnis $c_{Aro\text{-}mastoft}$:$c_{Ethanol}$ im Konzentrat größer ist als das Verhältnis $c_{Aromastoff}$:$c_{Ethanol}$ im Fluid und für mindestens einen Aromastoff mindestens 1,01, insbesondere mindestens 10, vorzugsweise mindestens 100, bevorzugt mindestens 1000 und insbesondere mindestens 15000 beträgt. Hierdurch kann es grundsätzlich vorkommen, dass das Gesamtvolumen des ersten Aromastoff-Konzentrats im Vergleich zum Fluid nur unwesentlich sinkt, im wesentlichen gleich bleibt oder sogar zunimmt, dass aber trotzdem im Aromastoff-Konzentrat das Verhältnis von Aromastoffkonzentration zu Ethanolkonzentration größer ist als im Fluid, da Ethanol bezogen auf den wenigstens einen anderen Aromastoff abgereichert ist. In Sinne dieser Definition des Aufkonzentrierungsfaktors wird Ethanol nicht als Aromastoff verstanden, obwohl Ethanol grundsätzlich auch zum Gesamtaroma des Fluids beitragen kann. Mit anderen Worten ist es vorgesehen, dass die Konzentration wenigstens eines Aromastoffs im Aromastoff-Konzentrat höher ist als im Fluid und/oder dass wenigstens ein Aromastoff bezogen auf das Fluid im Aromastoff-Konzentrat relativ zu Ethanol angereichert vorliegt, das heißt, dass Ethanol im Aromastoff-Konzentrat zumindest relativ zur Konzentration des wenigstens einen Aromastoffs abgereichert ist. Dabei kann es vorgesehen sein, dass mindestens zwei Aromastoffe, eine Mehrzahl von Aromastoffen, eine Vielzahl von Aromastoffen, eine überwiegende Anzahl von Aromastoffen oder alle im Fluid enthaltenen Aromastoffe einen jeweiligen Aufkonzentrierungsfaktor von mindestens 1,01 aufweisen.

Unter der mittleren Querschnittsdicke ist im Rahmen der vorliegenden Erfindung das arithmetische Mittel der Querschnittsdicken über die Gesamtlänge des Arbeitsraums oder der Arbeitsräume zu verstehen. Im einfachsten Fall ist der Arbeitsraum im Querschnitt kreisförmig, so dass die Querschnittsdicke dem Innendurchmesser des Arbeitsraums entspricht. Generell ist die Querschnittsgeometrie aber nicht auf bestimmte Ausführungen beschränkt und kann beispielsweise auch rechteckig, mehreckig, elliptisch, unregelmäßig etc. sein. Die Gesamtlänge ergibt sich im Fall eines einzigen Arbeitsraumes aus seiner Länge bzw. Höhe (in Strömungsrichtung) oder im Fall von zwei oder mehr Arbeitsräumen aus der Addition der Längen bzw. Höhen aller Arbeitsräume. Der wenigstens eine Arbeitsraum ist dabei vorzugsweise zumindest zu 50 Vol.-% mit einem oder mehreren Sorptionsmitteln befüllt. Beispielsweise kann jeder Arbeitsraum zu mindestens 50 Vol.-%, 55 Vol.-%, 60 Vol.-%, 65 Vol.-%, 70 Vol.-%, 75 Vol.-%, 80 Vol.-%, 85 Vol.-%, 90 Vol.-%, 95 Vol.-%, 98 Vol.-%, 99 Vol.-% oder mehr mit einem Sorptionsmittel oder einem Gemisch aus zwei oder mehr Sorptionsmitteln befüllt sein.

Unter einem Aromastoff werden im Rahmen der vorliegenden Erfindung grundsätzlich Geschmacks- und/oder Duftstoffe verstanden. Das Fluid liegt vorzugsweise zumindest unter Standard-Bedingungen (SATP, Standard Ambient Temperature and Pressure, 25 °C/1,013 bar) flüssig und/oder gasförmig vor. Der Gesamtgehalt an Aromastoffen im Fluid kann zwischen etwa 99 Vol.-% und 0,0001 Vol.-% bzw. 1 ppb (1 $\mu$g/kg) oder weniger betragen, wobei sich alle Inhaltsstoffe des Fluids natürlich immer und ausschließlich zu 100 % ergänzen. Prozentuale Angaben sind im Rahmen der vorliegenden Erfindung grundsätzlich als Volumenprozente zu verstehen, sofern nichts Anderes angegeben ist. Die

Aromastoffe können grundsätzlich gelöst und/oder suspendiert bzw. dispergiert im Fluid vorliegen. Das Fluid kann optional einen Ethanolgehalt zwischen 0,0001 Vol.-% und 99 Vol.-% besitzen. Das heißt, dass das Fluid einen Gesamtgehalt an Aromastoffen oder einen Ethanolgehalt von beispielsweise 0,0001 Vol.-%, 0,001 Vol.-%, 0,01 Vol.-%, 0,1 Vol.-%, 0,2 Vol.-%, 0,3 Vol.-%, 0,4 Vol.-%, 0,5 Vol.-%, 0,6 Vol.-%, 0,7 Vol.-%, 0,8 Vol.-%, 0,9 Vol.-%, 1 Vol.-%, 2 Vol.-%, 3 Vol.-%, 4 Vol.-%, 5 Vol.-%, 6 Vol.-%, 7 Vol.-%, 8 Vol.-%, 9 Vol.-%, 10 Vol.-%, 11 Vol.-%, 12 Vol.-%, 13 Vol.-%, 14 Vol.-%, 15 Vol.-%, 16 Vol.-%, 17 Vol.-%, 18 Vol.-%, 19 Vol.-%, 20 Vol.-%, 21 Vol.-%, 22 Vol.-%, 23 Vol.-%, 24 Vol.-%, 25 Vol.-%, 26 Vol.-%, 27 Vol.-%, 28 Vol.-%, 29 Vol.-%, 30 Vol.-%, 31 Vol.-%, 32 Vol.-%, 33 Vol.-%, 34 Vol.-%, 35 Vol.-%, 36 Vol.-%, 37 Vol.-%, 38 Vol.-%, 39 Vol.-%, 40 Vol.-%, 41 Vol.-%, 42 Vol.-%, 43 Vol.-%, 44 Vol.-%, 45 Vol.-%, 46 Vol.-%, 47 Vol.-%, 48 Vol.-%, 49 Vol.-%, 50 Vol.-%, 51 Vol.-%, 52 Vol.-%, 53 Vol.-%, 54 Vol.-%, 55 Vol.-%, 56 Vol.-%, 57 Vol.-%, 58 Vol.-%, 59 Vol.-%, 60 Vol.-%, 61 Vol.-%, 62 Vol.-%, 63 Vol.-%, 64 Vol.-%, 65 Vol.-%, 66 Vol.-%, 67 Vol.-%, 68 Vol.-%, 69 Vol.-%, 70 Vol.-%, 71 Vol.-%, 72 Vol.-%, 73 Vol.-%, 74 Vol.-%, 75 Vol.-%, 76 Vol.-%, 77 Vol.-%, 78 Vol.-%, 79 Vol.-%, 80 Vol.-%, 81 Vol.-%, 82 Vol.-%, 83 Vol.-%, 84 Vol.-%, 85 Vol.-%, 86 Vol.-%, 87 Vol.-%, 88 Vol.-%, 89 Vol.-%, 90 Vol.-%, 91 Vol.-%, 92 Vol.-%, 93 Vol.-%, 94 Vol.-%, 95 Vol.-%, 96 Vol.-%, 97 Vol.-%, 98 Vol.-% oder 99 Vol.-% aufweisen kann, wobei entsprechende Zwischenwerte als mitoffenbart anzusehen sind. Ebenso kann vorgesehen sein, dass das Fluid frei von Ethanol ist. Weiterhin kann vorgesehen sein, dass das Fluid zwischen 0,0001 Vol.-% und 99,9999 Vol.-% Wasser enthält. Weiterhin kann grundsätzlich vorgesehen sein, dass das Fluid alternativ oder zusätzlich zu Ethanol einen oder mehrere Alkohole wie beispielsweise $C_1$-$C_5$-Alkohole, insbesondere Methanol, Propanol, Isopropanol, Butanol, Isobutanol und/oder tert-Butanol, sowie gegebenenfalls einen oder mehrere höhere Alkohole aus der Gruppe $C_6$-$C_{20}$ oder mehr enthält. Das Sorptionsmittel kann aus einer einzigen chemischen Verbindung bzw. Verbindungsklasse (reinsortig) oder aus einem Gemisch von zwei oder mehr chemischen Verbindungen bzw. Verbindungsklassen (Mischung) bestehen. Mehrere Sorptionsmittel können grundsätzlich gemeinsam mit dem Fluid beaufschlagt bzw. gemeinsam im selben Arbeitsraum angeordnet sein. Ebenso kann vorgesehen sein, dass mehrere Sorptionsmittel in Strömungsrichtung betrachtet nacheinander angeordnet sind bzw. nacheinander mit dem Fluid beaufschlagt werden. Unter dem Begriff "sorbieren" werden im Rahmen der vorliegenden Erfindung grundsätzlich alle physikalischen und chemischen Arten von Anlagerungen von Aromastoffen an das Sorptionsmittel verstanden, insbesondere Adsorptions- und/oder Absorptionsprozesse. Dementsprechend werden unter dem Betriff "desorbieren" im Rahmen der vorliegenden Erfindung grundsätzlich alle Umkehrvorgänge verstanden, bei denen Aromastoffe das Sorptionsmittel verlassen.

Mit Hilfe des erfindungsgemäßen Adsorptionssystems können unterschiedliche aromastoffhaltige Fluide aus dem Bereich des Brauereiwesens verarbeitet werden. Das Fluid kann dabei ein fluides Medium (Gasphase und/oder Flüssigphase) oder eine Mischphasen aus diesen sein. Das Fluid kann weiterhin in Lösung und/oder Suspension gebrachte Proteine und Enzyme sowie in Lösung und/oder Suspension gebrachte Zucker (Monosaccharide, Disaccharide, Oligosaccharide und/oder Polymere Zucker (Stärke) umfassen. Das Fluid kann weiterhin in Lösung und/oder Suspension gebrachtes Pflanzenmaterial (z.B. Lignin, Polyphenole) umfassen. Das Fluid kann weiterhin ein Gas aus der Trocknung (Sprühtrockner, Gefriertrockner, Bandtrockner, Walzentrockner), Konzentrierung, Röstung (Trommelröster, Bandröster, Fluidized Bed Roasting), Entschäumung, Begasung oder Entgasung von Flüssigkeiten, Deodorierung (z.B. Plattenverdampfer, Fallstromverdampfer, Wasserdampfdestillation, Dämpfung, Vakuumdämpfung) umfassen oder sein. Das Fluid kann weiterhin aus der Gaswäsche, Abluft aus Produktionsanlagen (Fermenter, Gärung, Abfüllanlagen), Abluft aus Produktionsanlagen (Hopfenspeicher, Malzspeicher), Raumluft aus Produktionsstätten und dergleichen stammen und/oder Pumpenwasser von Vakuumpumpen sein. Das Fluid kann weiterhin eine Wasserphase aus einem Gefriertrockner und/oder ein Kondensat nach Verdampfung oder Begasung oder Trocknen umfassen oder sein.

Das Sorptionsmittel kann grundsätzlich aus der Gruppe Ionentauscher, Normalphasen, polare gebundene Phasen und Umkehrphasen ausgewählt sein bzw. eine beliebige Mischung davon sein, insbesondere Polyaromate, Polystyrole, Poly(meth)acrylate, Polypropylene, Polyester, Polytetrafluorethylen und vernetzte Polystyrole, insbesondere Copolymere aus Ethylvinylbenzol und Divinylbenzol, aus Vinylpyrrolidon und Divinylbenzol, aus Vinylpyridin und Divinylbenzol und/oder aus Styrol und Divinylbenzol bereitgestellt. Eine vorteilhafte Sorptionscharakteristik wird auch durch die Verwendung von Sorptionsmitteln erzielt, die Monomere mit funktionellen Gruppen umfassen. So haben sich besonders Sulfonsäuregruppen, ternäre (z.B. Methacryl Diethylamin) und quaternäre Ammoniumgruppen (z. B. Phenyltrimethylammonium), Amide (z.B. Benzamide), Amine und Halogen-modifizierte Aromaten, Heterocyclen wie 3-Pyrrolidon, 2-Pyrrolidon, 2-Pyrrolin, 3-Pyrrolin, Pyrrol und/oder Piperazin, sowie halogenierte aliphatische Seitenketten bewährt. Auch gelartige Polymere können eingesetzt werden. Es können grundsätzlich auch modifizierte Polyacrylate verwendet werden, insbesondere solche, die folgende Monomeren umfassen: Acrylsäure, Acrylnitril und Alkylacrylate wie beispielsweise Methylmethacrylat, Methylacrylat, Ethylacrylat, 2-Chlorethylvinylether, 2-Ethylhexylacrylat, Hydroxyethylmethacrylat, Butylacrylat und Butylmethacrylat. Alternativ oder zusätzlich sind CMS Sorbentien (CMS: carbon molecular sieve), die aus der Pyrolyse polymerer Vorläufer gebildet werden und selbst eine hochporöse Kohlenstoffstruktur aufweisen. Auch SGPC Sorbentien (SGPC: spherical graphitized polymer carbon) und GCB Sorbentien sind einsetzbbar (GCB: graphitized carbon black). Alternativen sind Polymere auf der Basis von 2,6-Diphenyleneoxid, z. B. Poly(2,6-diphenyl-p-phenylenoxid), oder solche mit Iminodiacetat-Funktionalität. Das oder die Sorptionsmittel können beispielsweise als Schüttgut eingesetzt und damit entsprechende Sorbensbetten im Arbeitsraum aufgebaut werden.

Alternativ oder zusätzlich kann das Sorptionsmittel monolithisch im Arbeitsraum vorliegen und so durchströmt werden.

Mit Hilfe dieser Sorptionsmittel, einzeln oder in beliebiger Kombination, werden eine besonders hohe Adsorption der Aromastoffe und damit eine besonders hohe Rückgewinnungsquote sichergestellt. Zudem kann hierdurch das Sorptionsmittel optimal in Abhängigkeit des jeweiligen Fluids und der darin enthaltenen Aromastoff-Moleküle ausgewählt werden. Vorzugsweise werden die genannten Polymere mittels geeigneter Reagenzien während der Polymerisation des Grundpolymers beziehungsweise durch eine Nachbehandlung des Grundpolymers mit entsprechenden Reagenzien zusätzlich funktionalisiert, um die gewünschte Sorptionscharakteristik zu erreichen.

Generell sind "ein"/"eine" im Rahmen dieser Offenbarung als unbestimmte Artikel zu lesen, also ohne ausdrücklich gegenteilige Angabe immer auch als "mindestens ein" / "mindestens eine".

In einer vorteilhaften Ausgestaltung der Erfindung ist vorgesehen, dass das Adsorptionssystem mindestens zwei fluidisch miteinander koppelbare Arbeitsräume und mindestens eine Pumpeinrichtung zum Fördern des Fluids durch die Arbeitsräume umfasst. Durch diese fluidische Kopplung der zwei oder mehr Arbeitsräume in Verbindung mit der mindestens einen Pumpeinrichtung werden deutlich höhere Fließgeschwindigkeiten bei der Beladung erreicht, insbesondere im Unterschied zu einem einzelnen Arbeitsraum mit gleichem Volumen. Zusätzlich steigt die Gesamtlänge des Adsorptionssystems, so dass eine entsprechend höhere Wiederfindungsrate bzw. eine hohe Endkonzentration im Aromastoff-Konzentrat erzielt werden kann.

In einer weiteren vorteilhaften Ausgestaltung der Erfindung ist es vorgesehen, dass mindestens eine Pumpeinrichtung zwischen zwei Arbeitsräumen angeordnet ist. Dies stellt eine vorteilhafte Möglichkeit dar, um einen Druckabfall stromab eines Arbeitsraumes zu kompensieren und eine hohe Fließgeschwindigkeit des Fluids durch den stromab der Pumpeinrichtung liegenden Arbeitsraum sicherzustellen. Ebenso kann vorgesehen sein, dass wenigstens eine der Pumpeinrichtungen pulsationsfrei und/oder explosionsgeschützt ist und/oder eine umkehrbare Förderung ermöglicht.

Weitere Vorteile ergeben sich, indem das Adsorptionssystem wenigstens eine Ventileinrichtung umfasst, mittels welcher ein Durchfluss durch wenigstens einen Arbeitsraum steuerbar und/oder regelbar ist. Dies erlaubt eine besonders variable und bedarfsgerechte Freigabe, Reduzierung oder Unterbrechung des Durchflusses durch einen oder mehrere Arbeitsräume. Die wenigstens eine Ventileinrichtung kann grundsätzlich manuell und/oder maschinell betätigbar bzw. steuer- und/oder regelbar ausgebildet sein. Im Rahmen der vorliegenden Erfindung werden unter Ventileinrichtungen grundsätzlich auch reine Absperrorgane verstanden, die einen Volumenstrom entweder anhalten oder durchlassen können, aber keine teilweise Reduzierung des Volumenstroms ermöglichen. Beispielsweise kann die wenigstens eine Ventileinrichtung in manchen Ausgestaltungen ein Rückschlag- bzw. Kugelventil oder dergleichen sein, da diese Absperrorgane nicht aktiv gesteuert werden müssen und damit sehr kostengünstig und betriebssicher sind.

Erfindungsgemäß ist vorgesehen, dass das Adsorptionssystem eine Steuereinrichtung umfasst, welche dazu ausgebildet ist, das Adsorptionssystem in einem Absorptionsmodus, in welchem das wenigstens eine Sorptionsmittel mit dem aromastoffhaltigen Fluid beaufschlagt wird, um Aromastoffe am Sorptionsmittel zu adsorbieren, und in einem Desorptionsmodus, in welchem das wenigstens eine Sorptionsmittel mit einem fluiden Desorptionsmittel beaufschlagt wird, um am Sorptionsmittel adsorbierte Aromastoffe als Aromastoff-Konzentrat zu desorbieren, zu betreiben. Dies erlaubt einen hohen Automatisierungs- oder zumindest Teilautomatisierungsgrad des Adsorptionssystems, so dass Aromastoff-Konzentrate kontinuierlich oder zumindest halbkontinuierlich hergestellt werden können. Der Ausdruck "ausgebildet zu" bezieht sich im Rahmen der vorliegenden Erfindung grundsätzlich auf Gegenstände, die nicht nur eine grundlegende Eignung zu etwas besitzen, sondern durch entsprechend eingerichtete Hard- und/oder Software die jeweils angegebene Wirkung während ihres bestimmungsgemäßen Betriebs auch tatsächlich erzielen. Die Steuereinrichtung kann beispielsweise eine Prozessoreinrichtung aufweisen, die dazu eingerichtet ist, die genannten Schritte und insbesondere eine Ausführungsform des Verfahrens gemäß dem zweiten Erfindungsaspekt durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform der genannten Schritte und insbesondere einer Ausführungsform des Verfahrens gemäß dem zweiten Erfindungsaspekt durchzuführen bzw. entsprechende Einrichtungen des Adsorptionssystems entsprechend zu steuern und/oder zu regeln. Der Programmcode kann in einem Datenspeicher der Prozessoreinrichtung gespeichert sein.

In einer vorteilhaften Ausgestaltung der Erfindung ist vorgesehen, dass die Steuereinrichtung ausgebildet ist, eine Fließrichtung des Desorptionsmittels im Desorptionsmodus derart einzustellen, dass die Fließrichtung des Desorptionsmittels entgegengesetzt zu einer Fließrichtung des aromastoffhaltigen Fluids im Adsorptionsmodus ist. Vorzugsweise ist die Steuereinrichtung hierzu zumindest mit wenigstens einer Pumpeinrichtung und/oder wenigstens einem Ventil gekoppelt, um diese bzw. dieses steuernd und/oder regelnd zu betätigen.

In einer weiteren vorteilhaften Ausgestaltung der Erfindung ist vorgesehen, dass die Steuereinrichtung ausgebildet ist, das aromastoffhaltige Fluid im Absorptionsmodus parallel durch mindestens zwei Arbeitsräume zu leiten. Dies ermöglicht eine besonders schnelle Beladung des in den Arbeitsräumen angeordneten Sorptionsmittels mit hoher Anreicherung des oder der im Fluid enthaltenen Aromastoffe. Darüber hinaus können anstelle von einem langen Arbeitsraum mit entsprechend hohem Druckverlust zwei oder mehre kürzere Arbeitsräume verwendet werden, deren

kombinierte Gesamtlänge derjenigen eines besonders langen Arbeitsraums entspricht. Darüber hinaus kann auf diese Weise die Anzahl und Geometrie der Arbeitsräume optimal an die jeweiligen Randbedingungen wie etwa die Fluidmenge, den Fluidstrom und die Zusammensetzung des Fluids und der darin enthaltenen Aromastoffe angepasst werden. Alternativ oder zusätzlich ist es vorgesehen, dass die Steuereinrichtung ausgebildet ist, das Desorptionsmittel im Desorptionsmodus seriell durch mindestens zwei Arbeitsräume zu leiten. Dies ermöglicht eine zumindest im Wesentlichen vollständige Rückgewinnung der adsorbierten Aromastoffe unter Verwendung eines minimalen Volumens an Desorptionsmittel. Alternativ oder zusätzlich ist es vorgesehen, dass die Steuereinrichtung ausgebildet ist, das Desorptionsmittel durch einen Auslass aus dem Adsorptionssystem zu transportieren, wodurch eine einfache Entnahme der desorbierten Aromastoffe bzw. des durch Desorption gewonnenen Aromastoff-Konzentrats ermöglicht ist. Weiterhin ist es alternativ oder zusätzlich vorgesehen, dass die Steuereinrichtung ausgebildet ist, im Desorptionsmodus durch wenigstens zwei Arbeitsräume unterschiedliche Desorptionsmittel zu leiten. Dies erlaubt eine besonders gute und zumindest weitgehend vollständige Rückgewinnung aller biertypischen Aromastoffe mit entsprechend hohen Aufkonzentrierungsfaktoren.

Weitere Vorteile ergeben sich, wenn das Adsorptionssystem wenigstens eine Temperiereinrichtung umfasst, mittels welcher wenigstens ein Arbeitsraum und/oder das Fluid und/oder das Desorptionsmittel und/oder zumindest ein Teil eines Aromastoff-Konzentrats auf eine vorbestimmte Temperatur temperierbar ist. Hierdurch können die Adsorptions- und/oder Desorptionscharakteristik optimal an die Zusammensetzung des Fluids und/oder des gewünschten Aromastoff-Konzentrats angepasst werden. Beispielsweise kann die Temperiereinrichtung derart ausgebildet sein, dass Temperaturen von 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C oder mehr einstellbar sind, wobei entsprechende Zwischenwerte wie beispielsweise 40°C, 41°C, 42°C, 43°C, 44°C, 45°C, 46°C, 47°C, 48°C, 49°C, 50°C usw. als mitoffenbar anzusehen sind. Die Temperiereinrichtung kann grundsätzlich zum relativen Erwärmen und/oder Abkühlen ausgebildet sein.

Weitere Vorteile ergeben sich, indem die Temperiereinrichtung ein Tauchbad, in welchem wenigstens ein Arbeitsraum zum Temperieren zumindest bereichsweise angeordnet ist, und/oder eine Mikrowelleneinrichtung und/oder eine Hochfrequenz-Heizeinrichtung und/oder eine induktive Heizeinrichtung und/oder eine elektrische Heizeinrichtung und/oder eine Heißgas-, Dampf- und/oder Heizflüssigkeitseinrichtung und/oder mindestens eine Kammer, die mit einem Heiz- und/oder Kühlmittel beaufschlagbar ist, und/oder eine doppel- oder mehrwandige Ausführung wenigstens eines Teils des Adsorptionssystems zur Beaufschlagung mit einem Heiz- und/oder Kühlmittel umfasst. Diese erlaubt eine optimale Temperierung sowie gegebenenfalls die Möglichkeit, bereits vorhandene Energiequellen beispielsweise einer Brauerei zu verwenden, wodurch eine verbesserte Energiebilanz und geringere Anschaffungs- und Betriebskosten realisiert werden können. Insbesondere ist eine doppelwandige Ausführung von Teilen des Adsorptionssystems ist geeignet, die entsprechenden Bereiche effizient mit einem Heiz- oder Kühlmittel rasch auf die gewünschte Temperatur einzustellen. Alternativ oder zusätzlich können zumindest Teile des Adsorptionssystems in wenigstens einer entsprechend dimensionierten Wanne angeordnet sein, die je nach Bedarf teilweise oder vollständig mit einem entsprechenden Heiz- oder Kühlmittel gefüllt bzw. durchströmt werden kann.

In einer weiteren vorteilhaften Ausgestaltung der Erfindung ist vorgesehen, dass die Steuereinrichtung mit der Temperiereinrichtung gekoppelt ist und vorzugsweise ausgebildet ist, die Temperiereinrichtung im Adsorptionsmodus und im Desorptionsmodus unterschiedlich zu betreiben. Hierdurch sind besonders hohe Rückgewinnungs- und Anreicherungsfaktoren realisierbar. Beispielsweise kann die Temperiereinrichtung dazu ausgebildet sein, im Adsorptionsmodus eine geringere Temperatur als im Desorptionsmodus einzustellen, so dass mit höheren Temperaturen desorbiert als adsorbiert werden kann. Umgekehrt kann es in manchen Ausführungsformen sinnvoll sein, mit höheren Temperaturen zu adsorbieren als zu desorbieren.

In weiterer Ausgestaltung der Erfindung ist die mittlere Querschnittsfläche wenigstens eines Arbeitsraums derart gewählt, dass ein Volumen $V_1$ an Desorptionsmittel, welches ausreicht, um mindestens 2/3 der im Adsorptionsmodus an das im Arbeitsraum angeordnete Sorptionsmittel adsorbierten Aromastoffe 3-Methylbutan-1-ol und 2-Phenylethanol zu desorbieren, den Formel (I) und (II)

$$V_1 \geq 0{,}025\ m$$

* mittlere Querschnittsfläche in $m^2$ des wenigstens einen Arbeitsraums (I);

$$V_1 \leq 8{,}0\ m\ *$$

mittlere Querschnittsfläche in $m^2$ des wenigstens einen Arbeitsraums (II);
entspricht. Mit anderen Worten werden $V_1$ und die mittlere Querschnittsfläche (gemessen in $m^2$) des wenigstens einen Arbeitsraums so aufeinander abgestimmt, dass $V_1$ dem Faktor aus mittlerer Querschnittsfläche * 0,025 m, 0,030 m, 0,035

m, 0,040 m, 0,045 m, 0,050 m, 0,055 m, 0,060 m, 0,065 m, 0,070 m, 0,075 m, 0,080 m, 0,085 m, 0,090 m, 0,095 m, 0,100 m, 0,105 m, 0,110 m, 0,115 m, 0,120 m, 0,125 m, 0,130 m, 0,135 m, 0,140 m, 0,145 m, 0,150 m, 0,155 m, 0,160 m, 0,165 m, 0,170 m, 0,175 m, 0,180 m, 0,185 m, 0,190 m, 0,195 m, 0,200 m, 0,205 m, 0,210 m, 0,215 m, 0,220 m, 0,225 m, 0,230 m, 0,235 m, 0,240 m, 0,245 m, 0,25 m, 0,50 m, 0,75 m, 1,00 m, 1,25 m, 1,50 m, 1,75 m, 2,00 m, 2,25 m, 2,50 m, 2,75 m, 3,00 m, 3,25 m, 3,50 m, 3,75 m, 4,00 m, 4,25 m, 4,50 m, 4,75 m, 5,00 m, 5,25 m, 5,50 m, 5,75 m, 6,00 m, 6,25 m, 6,50 m, 6,75 m, 7,00 m, 7,25 m, 7,50 m, 7,75 m oder 8,00 m entspricht, wobei auch hier entsprechende Zwischenwerte als mitoffenbart anzusehen sind. Auf diese Weise kann die Geometrie des wenigstens einen Arbeitsraum besonders einfach ausgelegt werden, um eine Rückgewinnung von mindestens 2/3, das heißt beispielsweise von 66,6 Mol-%, 67 Mol-%, 68 Mol-%, 69 Mol-%, 70 Mol-%, 71 Mol-%, 72 Mol-%, 73 Mol-%, 74 Mol-%, 75 Mol-%, 76 Mol-%, 77 Mol-%, 78 Mol-%, 79 Mol-%, 80 Mol-%, 81 Mol-%, 82 Mol-%, 83 Mol-%, 84 Mol-%, 85 Mol-%, 86 Mol-%, 87 Mol-%, 88 Mol-%, 89 Mol-%, 90 Mol-%, 91 Mol-%, 92 Mol-%, 93 Mol-%, 94 Mol-%, 95 Mol-%, 96 Mol-%, 97 Mol-%, 98 Mol-%, 99 Mol-% oder 100 Mol-%, der für Bieraroma hochrelevanten polaren Aromastoffe 3-Methylbutan-1-ol und 2-Phenylethanol sicherzustellen. Diese Auslegung ist dabei insbesondere im Zusammenhang mit organischen Verbindungen wie beispielsweise Ethanol als Desorptionsmittel oder als Teil eines Desorptionsmittelgemisches sinnvoll.

In einer weiteren vorteilhaften Ausgestaltung der Erfindung umfasst das Adsorptionssystem einen ersten Fluidpfad zum Durchleiten des aromastoffhaltigen Fluids durch den wenigstens einen Arbeitsraum und einen zweiten Fluidpfad zum Durchleiten des Desorptionsmittels durch den wenigstens einen Arbeitsraum. Auf diese Weise kann das Adsorptionssystem besonders flexibel betrieben werden, da unterschiedliche Fluidpfade für Adsorption und Desorption gewählt werden können. Den Fluidpfaden können beispielsweise separate Leitungssysteme zugeordnet sein.

Weitere Vorteile ergeben sich, indem der erste und der zweite Fluidpfad unterschiedliche Längen und/oder unterschiedliche mittlere Querschnittsdicken und/oder unterschiedliche Volumina aufweisen. Dies ermöglicht eine vorteilhafte Totraumminimierung sowie die Bereitstellung unterschiedlicher Sorbenskapazitäten in unterschiedlich eluierbaren Bereichen des Adsorptionssystems bzw. des jeweiligen Fluidpfads. Beispielsweise kann der zweite Fluidpfad ein mindestens um den Faktor 2 höheres Gesamtvolumen als der erste Fluidpfad aufweisen, um Stoffe in gewünschter Menge zu sorbieren, die im ersten Fluidpfad aufgrund ihrer physikalischchemischen Eigenschaften nicht ausreihend sorbiert werden können oder sollen. Zudem kann der pH-Wert oder der Salzgehalt vor dem ersten und/oder dem zweiten Fluidpfad variiert bzw. so eingestellt werden, dass bestimmte Stoffe bevorzugt im jeweils dafür vorgesehenen Anlagenteil sorbiert werden.

In einer weiteren vorteilhaften Ausgestaltung des Adsorptionssystems umfasst dieses einen fluidisch mit wenigstens einem Arbeitsraum koppelbaren Sammelbehälter und/oder Fraktionssammler. Hierdurch ist es möglich, das durch Desorption gewonnene Aromastoff-Konzentrat im Sammelbehälter aufzufangen bzw. mit Hilfe des Fraktionssammlers in Abhängigkeit einer zeitlichen Frequenz und/oder eines eingestellten Fraktionsvolumens mehrere Fraktionen zu sammeln, die dann in Einzelstellung oder in beliebiger Weise kombiniert werden können, um ein bestimmtes Aroma-Profil zu erzielen.

In einer weiteren vorteilhaften Ausgestaltung der Erfindung ist es vorgesehen, dass wenigstens ein Arbeitsraum des Adsorptionssystems mindestens zwei fluidisch miteinander verbundene Kanäle zum Anordnen des wenigstens einen Sorptionsmittels umfasst, die ineinander verschachtelt in einem gemeinsamen Gehäuse angeordnet sind. Eine solche "labyrinthartige" Ausgestaltung wenigstens eines Arbeitsraums stellt eine besonders vorteilhafte Möglichkeit dar, um mit geringem Bauraumbedarf einen möglichst langen Fluidpfad bereitzustellen.

Weitere Vorteile entstehen dadurch, dass das Adsorptionssystem wenigstens zwei Arbeitsräume umfasst, die unabhängig voneinander mit dem aromastoffhaltigen Fluid und/oder mit dem Desorptionsmittel durchströmbar sind. Dies ermöglicht einen kontinuierlichen oder zumindest halb-kontinuierlichen Betrieb des Adsorptionssystems, wodurch ein entsprechend hoher Durchsatz ermöglicht wird.

Weitere Vorteile ergeben sich, indem wenigstens ein Arbeitsraum eine entlang seiner Längsachse variierende Querschnittsfläche aufweist. Der Arbeitsraum kann beispielsweise entlang seiner Längserstreckung einen kontinuierlich oder diskontinuierlich bzw. stufenweise abnehmenden Querschnitt besitzen. Beispielsweise kann der Arbeitsraum trichterförmig oder im Längsschnitt dreieckig oder trapezförmig ausgebildet sein. Ebenso kann vorgesehen sein, dass der Arbeitsraum Bereiche mit entlang seiner Längsachse abnehmenden Querschnittsflächen und Bereiche mit zunehmenden Querschnittsflächen aufweist. Alternativ oder zusätzlich ist es vorgesehen, dass das Adsorptionssystem wenigstens zwei Arbeitsräume mit unterschiedlichen mittleren Querschnittsflächen umfasst. Dies ermöglicht es, im Adsorptionssystem unterschiedliche lokale Adsorptionskapazitäten bereitzustellen, um unterschiedlich gut an das jeweils verwendete Sorptionsmittel adsorbierende Aromastoffe dennoch in einem authentischen Mengenverhältnis und vorzugsweise zumindest überwiegend quantitativ zu binden. Beispielsweise kann ein in Beladungsrichtung betrachtet erster Arbeitsraum schmaler als ein oder mehrere in Beladungsrichtung nachfolgende Arbeitsräume ausgebildet sein. Dadurch wird erreicht, dass sich diejenigen Aromastoffe, die sich sehr effizient an einer vergleichsweise kleinen Menge an Sorptionsmittel binden lassen, zumindest weitgehend oder ausschließlich im ersten Arbeitsraum adsorbiert werden können. Damit verbunden ist eine hohe Endkonzentration dieser Stoffe, wodurch nach einer Desorption Aromastoffkonzentrate mit entsprechend hohen Anreicherungsfaktoren erhalten werden können. Diejenigen Aromastoffe, die eine vergleichsweise

größere Menge an Sorptionsmittel benötigen, um sich überwiegend oder zumindest im Wesentlichen quantitativ binden zu lassen, werden aufgrund der größeren Querschnittsflächen und der damit verbundenen lokal höheren Mengen an Sorptionsmittel, das heißt an höherer Adsorptionskapazität, hauptsächlich in dem oder den in Strömungsrichtung nachfolgenden Arbeitsräumen gebunden. Bei einem anschließend Desorptionsschritt, welcher vorzugsweise entgegen der Beladungsrichtung erfolgt, werden dann die Aromastoffe mit vergleichsweise schlechteren Bindungseigenschaften aus den Bereichen mit größeren Querschnittsflächen im mengenmäßig richtigen Verhältnis gelöst und gelangen anschließend in den engeren Arbeitsraum, wo sie zusammen mit den vergleichsweise besser bindenden Aromastoffe desorbiert bzw. herausgelöst werden. Dadurch wird erreicht, dass sowohl die besser als auch die schlechter an das jeweilige Sorptionsmittel bindenden Aromastoffe in einem bezogen auf das Fluid authentischen Mengenverhältnis im resultierenden Aromastoffkonzentrat vorliegen.

Weitere Vorteile ergeben sich dadurch, dass eine mittlere Querschnittsdicke des wenigstens einen Arbeitsraums zwischen 3 mm und 6,0 m beträgt und/oder dass das Verhältnis von mittlerer Querschnittsdicke zu Gesamtlänge des wenigstens einen Arbeitsraums höchstens 0,04 beträgt. Unter einer Gesamtlänge aller vorhandener Arbeitsräume von mindestens 4,0 m sind insbesondere Gesamtlängen von 4,0 m, 4,5 m, 5,0 m, 5,5 m, 6,0 m, 6,5 m, 7,0 m, 7,5 m, 8,0 m, 8,5 m, 9,0 m, 9,5 m, 10,0 m, 10,5 m, 11,0 m, 11,5 m, 12,0 m, 12,5 m, 13,0 m, 13,5 m, 14,0 m, 14,5 m, 15,0 m, 15,5 m, 16,0 m, 16,5 m, 17,0 m, 17,5 m, 18,0 m, 18,5 m, 19,0 m, 19,5 m, 20,0 m, 21 m, 22 m, 23 m, 24 m, 25 m, 26 m, 27 m, 28 m, 29 m, 30 m, 31 m, 32 m, 33 m, 34 m, 35 m, 36 m, 37 m, 38 m, 39 m, 40 m, 41 m, 42 m, 43 m, 44 m, 45 m, 46 m, 47 m, 48 m, 49 m, 50 m, 51 m, 52 m, 53 m, 54 m, 55 m, 56 m, 57 m, 58 m, 59 m, 60 m, 61 m, 62 m, 63 m, 64 m, 65 m, 66 m, 67 m, 68 m, 69 m, 70 m, 71 m, 72 m, 73 m, 74 m, 75 m, 76 m, 77 m, 78 m, 79 m, 80 m, 81 m, 82 m, 83 m, 84 m, 85 m, 86 m, 87 m, 88 m, 89 m, 90 m, 91 m, 92 m, 93 m, 94 m, 95 m, 96 m, 97 m, 98 m, 99 m, 100 m oder mehr zu verstehen. Unter einer Querschnittsdicke zwischen 3 mm und 6,0 m sind insbesondere Querschnittsdicken bzw. Innendurchmesser von 3 mm, 4 mm, 5 mm, 6 mm, 7 mm, 8 mm, 9 mm, 1 cm, 2 cm, 3 cm, 4 cm, 5 cm, 6 cm, 7 cm, 8 cm, 9 cm, 10 cm, 11 cm, 12 cm, 13 cm, 14 cm, 15 cm, 16 cm, 17 cm, 18 cm, 19 cm, 20 cm, 21 cm, 22 cm, 23 cm, 24 cm, 25 cm, 26 cm, 27 cm, 28 cm, 29 cm, 30 cm, 31 cm, 32 cm, 33 cm, 34 cm, 35 cm, 36 cm, 37 cm, 38 cm, 39 cm, 40 cm, 41 cm, 42 cm, 43 cm, 44 cm, 45 cm, 46 cm, 47 cm, 48 cm, 49 cm, 50 cm, 51 cm, 52 cm, 53 cm, 54 cm, 55 cm, 56 cm, 57 cm, 58 cm, 59 cm, 60 cm, 61 cm, 62 cm, 63 cm, 64 cm, 65 cm, 66 cm, 67 cm, 68 cm, 69 cm, 70 cm, 71 cm, 72 cm, 73 cm, 74 cm, 75 cm, 76 cm, 77 cm, 78 cm, 79 cm, 80 cm, 81 cm, 82 cm, 83 cm, 84 cm, 85 cm, 86 cm, 87 cm, 88 cm, 89 cm, 90 cm, 91 cm, 92 cm, 93 cm, 94 cm, 95 cm, 96 cm, 97 cm, 98 cm, 99 cm, 1,0 m, 1,1 m, 1,2 m, 1,3 m, 1,4 m, 1,5 m, 1,6 m, 1,7 m, 1,8 m, 1,9 m, 2,0 m, 2,1 m, 2,2 m, 2,3 m, 2,4 m, 2,5 m, 2,6 m, 2,7 m, 2,8 m, 2,9 m, 3,0 m, 3,1 m, 3,2 m, 3,3 m, 3,4 m, 3,5 m, 3,6 m, 3,7 m, 3,8 m, 3,9 m, 4,0 m, 4,1 m, 4,2 m, 4,3 m, 4,4 m, 4,5 m, 4,6 m, 4,7 m, 4,8 m, 4,9 m, 5,0 m, 5,1 m, 5,2 m, 5,3 m, 5,4 m, 5,5 m, 5,6 m, 5,7 m, 5,8 m, 5,9 m oder 6,0 m sowie entsprechende Zwischenwerte zu verstehen. Die Querschnittsdicke kann insbesondere in Abhängigkeit des geplanten Volumenstroms gewählt sein. Unter einem Verhältnis von mittlerer Querschnittsdicke zu Gesamtlänge des wenigstens einen Arbeitsraums von höchstens 0,04 sind dementsprechende Werte von 0,040, 0,039, 0,038, 0,037, 0,036, 0,035, 0,034, 0,033, 0,032, 0,031, 0,030, 0,029, 0,028, 0,027, 0,026, 0,025, 0,024, 0,023, 0,022, 0,021, 0,020, 0,019, 0,018, 0,017, 0,016, 0,015, 0,014, 0,013, 0,012, 0,011, 0,010, 0,009, 0,008, 0,007, 0,006, 0,005, 0,004, 0,003, 0,002, 0,001, 0,0005, 0,0001 oder weniger zu verstehen, wobei entsprechende Zwischenwerte grundsätzlich als mitoffenbart anzusehen sind.

In weiterer Ausgestaltung ist es vorgesehen, dass die Gesamtlänge und die mittlere Querschnittsdicke des wenigstens einen Arbeitsraums in Abhängigkeit der Sorptionseigenschaften des wenigstens einen Sorptionsmittels bei einer vorbestimmten Prozesstemperatur und einer vorbestimmten mittleren Perkolationsrate des aromastoffhaltigen Fluids derart gewählt sind, dass im Fluid enthaltenes 3-Methylbutan-1-ol und 2-Phenylethanol zu mindestens 66 Mol-%, das heißt zu 66 Mol-%, 67 Mol-%, 68 Mol-%, 69 Mol-%, 70 Mol-%, 71 Mol-%, 72 Mol-%, 73 Mol-%, 74 Mol-%, 75 Mol-%, 76 Mol-%, 77 Mol-%, 78 Mol-%, 79 Mol-%, 80 Mol-%, 81 Mol-%, 82 Mol-%, 83 Mol-%, 84 Mol-%, 85 Mol-%, 86 Mol-%, 87 Mol-%, 88 Mol-%, 89 Mol-%, 90 Mol-%, 91 Mol-%, 92 Mol-%, 93 Mol-%, 94 Mol-%, 95 Mol-%, 96 Mol-%, 97 Mol-%, 98 Mol-%, 99 Mol-% oder 100 Mol-% am wenigstens einen Sorptionsmittel adsorbiert. Die jeweiligen Werte für Gesamtlänge und mittlere Querschnittsdicke können damit durch einfache fachübliche Versuche optimiert werden, so dass eine möglichst weitgehende und vorzugsweise zumindest im Wesentlichen vollständige Adsorption der für ein biertypisches Aroma relevanten polaren Verbindungen 3-Methylbutan-1-ol und 2-Phenylethanol gewährleistet ist.

Weitere Vorteile ergeben sich, indem das Adsorptionssystem wenigstens zwei Arbeitsräume umfasst, wobei wenigstens ein Arbeitsraum ein kleineres Volumen als ein bezüglich einer Beladungsrichtung, in welcher das wenigstens eine Sorptionsmittel mit dem aromastoffhaltigen Fluid zu beaufschlagen ist, stromab liegender Arbeitsraum aufweist. Mit anderen Worten weist das Adsorptionssystem zwei oder mehr in Beladungsrichtung nacheinander angeordnete Arbeitsräume mit in Beladungsrichtung steigendem Volumen auf. Hierdurch ist es besonders einfach möglich, im ersten bzw. stromauf liegenden Arbeitsraum vorwiegend die unpolaren Aromastoffe zu binden und im zweiten bzw. stromabliegenden Arbeitsraum vorwiegend die polaren Aromastoffe. Die Volumenverhältnisse der einzelnen Arbeitsräume korrelieren mit der jeweils einbringbaren Sorbensmenge und mit den jeweils zu bindenden Aromastoffmengen. Weitere Vorteile bestehen darin, dass die mindestens zwei Arbeitsräume auf unterschiedliche Weise bzw. unabhängig voneinander einer Desorption unterzogen werden können. Die Zwei- oder Mehrstufigkeit bietet darüber zusätzliche Möglichkeiten zugunsten der gezielten An- oder Abreicherung bestimmter Aromastoffe, wodurch eine Modulierung des Aromaprofils

möglich ist. Weiterhin ermöglicht die Zwei- oder Mehrstufigkeit, dass besonders hohe Anreicherungsfaktoren erreicht werden können. Ein Arbeitsraum alleine kann in der Regel nicht einerseits ein großes Ausgangsvolumen in einer vernünftigen Prozesszeit aufnehmen und andererseits ein besonders geringes Extraktvolumen mit entsprechend hohen Anreicherungsfaktoren der einzelnen Aromastoffe ermöglichen. Beispielsweise müssten bei einer Anreicherung um einen Faktor 3000 einerseits ca. 3000 Liter im Adsorptionsmodus durch den einen Arbeitsraum gefördert werden, aber nur 1 Liter Extrakt im Desorptionsmodus gewonnen werden. Mit zwei oder mehr Arbeitsräumen ist dies jedoch möglich.

Weitere Vorteile ergeben sich, indem das Adsorptionssystem eine Hochkonzentrationseinrichtung umfasst, mittels welcher wenigstens ein Teil des ersten Aromastoff-Konzentrats, das durch Beaufschlagen des wenigstens einen Sorptionsmittels mit dem fluiden Desorptionsmittel erhältlich ist, in wenigstens ein Permeat und in wenigstens ein zweites Aromastoff-Konzentrat, welches gegenüber dem ersten Aromastoff-Konzentrat ein geringeres Verhältnis von Ethanol : 3-Methylbutan-1-ol aufweist, auftrennbar ist. Eine derartige Hochkonzentrationseinrichtung erlaubt damit ausgehend vom ersten Aromastoff-Konzentrat die Herstellung eines zweiten Aromastoff-Konzentrats mit einer relativen Abreicherung von Ethanol bezogen auf einen oder mehrere andere Aromastoffe, beispielsweise bezogen auf den für ein biertypisches Aroma wichtigen Aromastoff 3-Methylbutan-1-ol. Durch die erste Anreicherungsstufe, deren Ergebnis das erste Aromastoff-Konzentrat darstellt, wird eine fokussierte Applikation in der nachfolgenden Hochkonzentrationseinrichtung ermöglicht und damit eine Minimierung oder vollständige Vermeidung von Verlusten an schwer adsorbierbaren, stark polaren Aromastoffen mit log $P_{ow}$ Werten (dekadischer Logarithmus des n-Octanol-Wasser-Verteilungskoeffizient $K_{ow}$) < 1,5, beispielsweise von Fuselalkoholen, Essigsäureethylester und dergleichen. Es kann weiterhin vorgesehen sein, dass das erste Aromastoff-Konzentrat zwei- oder mehrmals mit Hilfe der Hochkonzentrationseinrichtung aufkonzentrierbar ist.

Besonders vorteilhaft ist es, wenn die Hochkonzentrationseinrichtung dazu ausgebildet ist, ein Verhältnis von Ethanol : 3-Methylbutan-1-ol im zweiten Aromastoff-Konzentrat zumindest um den Faktor 2 gegenüber dem ersten Aromastoff-Konzentrat zu reduzieren. Dies bedeutet, dass im zweiten Aromastoff-Konzentrat mindestens zweimal so viel 3-Methylbutan-1-ol bezogen auf die jeweilige Ethanol-Menge bzw. -Konzentration vorliegt. Der Faktor kann grundsätzlich auch größer als 2 sein und beispielsweise 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100 oder mehr betragen.

Weitere Vorteile ergeben sich, indem die Hochkonzentrationseinrichtung wenigstens einen Arbeitsraum umfasst, in welchem wenigstens ein Sorptionsmittel als stationäre Phase angeordnet und zur Anlagerung von Aromastoffen mit dem durch den Arbeitsraum leitbaren Aromastoff-Konzentrat als mobile Phase beaufschlagbar ist. Mit anderen Worten ist auch die Hochkonzentrationseinrichtung als Festphasenextraktionseinrichtung ausgebildet, wodurch die zweite und jede weitere Aufkonzentrierung des ersten Aromastoff-Konzentrats durch einen rein physikalischen Prozess, der zwischen einer flüssigen Phase (Aromastoff-Konzentrat) und einer festen Phase (Sorptionsmittel bzw. Sorbens) stattfindet, und damit besonders schonend sowie mit hohen Rückgewinnungsraten und Anreichungsfaktoren durchführbar ist.

Weitere Vorteile ergeben sich dadurch, dass der wenigstens eine Arbeitsraum eine Gesamtlänge von mindestens 4,5 m besitzt. Eine mittlere Querschnittsdicke des wenigstens einen Arbeitsraums kann zwischen 3 mm und 6,0 m betragen. Unter einer Gesamtlänge aller vorhandener Arbeitsräume der Hochkonzentrationseinrichtung von mindestens 4,5 m sind insbesondere Gesamtlängen von 4,5 m, 5,0 m, 5,5 m, 6,0 m, 6,5 m, 7,0 m, 7,5 m, 8,0 m, 8,5 m, 9,0 m, 9,5 m, 10,0 m, 10,5 m, 11,0 m, 11,5 m, 12,0 m, 12,5 m, 13,0 m, 13,5 m, 14,0 m, 14,5 m, 15,0 m, 15,5 m, 16,0 m, 16,5 m, 17,0 m, 17,5 m, 18,0 m, 18,5 m, 19,0 m, 19,5 m, 20,0 m, 21 m, 22 m, 23 m, 24 m, 25 m, 26 m, 27 m, 28 m, 29 m, 30 m, 31 m, 32 m, 33 m, 34 m, 35 m, 36 m, 37 m, 38 m, 39 m, 40 m, 41 m, 42 m, 43 m, 44 m, 45 m, 46 m, 47 m, 48 m, 49 m, 50 m, 51 m, 52 m, 53 m, 54 m, 55 m, 56 m, 57 m, 58 m, 59 m, 60 m, 61 m, 62 m, 63 m, 64 m, 65 m, 66 m, 67 m, 68 m, 69 m, 70 m, 71 m, 72 m, 73 m, 74 m, 75 m, 76 m, 77 m, 78 m, 79 m, 80 m, 81 m, 82 m, 83 m, 84 m, 85 m, 86 m, 87 m, 88 m, 89 m, 90 m, 91 m, 92 m, 93 m, 94 m, 95 m, 96 m, 97 m, 98 m, 99 m, 100 m oder mehr zu verstehen. Unter einer Querschnittsdicke zwischen 3 mm und 6,0 m sind insbesondere Querschnittsdicken bzw. Innendurchmesser von 3 mm, 4 mm, 5 mm, 6 mm, 7 mm, 8 mm, 9 mm, 1 cm, 2 cm, 3 cm, 4 cm, 5 cm, 6 cm, 7 cm, 8 cm, 9 cm, 10 cm, 11 cm, 12 cm, 13 cm, 14 cm, 15 cm, 16 cm, 17 cm, 18 cm, 19 cm, 20 cm, 21 cm, 22 cm, 23 cm, 24 cm, 25 cm, 26 cm, 27 cm, 28 cm, 29 cm, 30 cm, 31 cm, 32 cm, 33 cm, 34 cm, 35 cm, 36 cm, 37 cm, 38 cm, 39 cm, 40 cm, 41 cm, 42 cm, 43 cm, 44 cm, 45 cm, 46 cm, 47 cm, 48 cm, 49 cm, 50 cm, 51 cm, 52 cm, 53 cm, 54 cm, 55 cm, 56 cm, 57 cm, 58 cm, 59 cm, 60 cm, 61 cm, 62 cm, 63 cm, 64 cm, 65 cm, 66 cm, 67 cm, 68 cm, 69 cm, 70 cm, 71 cm, 72 cm, 73 cm, 74 cm, 75 cm, 76 cm, 77 cm, 78 cm, 79 cm, 80 cm, 81 cm, 82 cm, 83 cm, 84 cm, 85 cm, 86 cm, 87 cm, 88 cm, 89 cm, 90 cm, 91 cm, 92 cm, 93 cm, 94 cm, 95 cm, 96 cm, 97 cm, 98 cm, 99 cm, 1,0 m, 1,1 m, 1,2 m, 1,3 m, 1,4 m, 1,5 m, 1,6 m, 1,7 m, 1,8 m, 1,9 m, 2,0 m, 2,1 m, 2,2 m, 2,3 m, 2,4 m, 2,5 m, 2,6 m, 2,7 m, 2,8 m, 2,9 m, 3,0 m, 3,1 m, 3,2 m, 3,3 m, 3,4 m, 3,5 m, 3,6 m, 3,7 m, 3,8 m, 3,9 m, 4,0 m, 4,1 m, 4,2 m, 4,3 m, 4,4 m, 4,5 m, 4,6 m, 4,7 m, 4,8 m, 4,9 m, 5,0 m, 5,1 m, 5,2 m, 5,3 m, 5,4 m, 5,5 m, 5,6 m, 5,7 m, 5,8 m, 5,9 m oder 6,0 m sowie entsprechende Zwischenwerte zu verstehen. Die Querschnittsdicke kann insbesondere in Abhängigkeit des geplanten Volumenstroms gewählt sein.

Alternativ oder zusätzlich ist vorgesehen, dass eine Geometrie des wenigstens einen Arbeitsraums derart gewählt ist, dass ein Volumen $V_2$, welches der Arbeitsraum in einem Längenabschnitt von 2 m bis 4 m aufweist, einem

Endvolumen an zweitem Aromastoff-Konzentrat entspricht. Hierdurch kann die Geometrie des Arbeitsraums optimal an dasjenige End- oder Wunschvolumen angepasst werden, welches das zweite Aromastoff-Konzentrat aufweisen soll bzw. auf welches das erste Aromastoff-Konzentrat aufkonzentriert werden soll. Abweichungen von bis zu ± 10 % zwischen dem Volumen $V_2$ und dem Endvolumen können vorgesehen sein.

Weitere Vorteile ergeben sich, indem die Hochkonzentrationseinrichtung wenigstens eine Pumpeinrichtung umfasst, welche dazu ausgelegt ist, das Aromastoff-Konzentrat durch den wenigstens einen Arbeitsraum zu pumpen, vorzugsweise mit einer Perkolationsrate von mindestens 20 ml/(min*$cm^2$). Dies erlaubt eine besonders präzise Prozesskontrolle. Unter einer Perkolationsrate von mindestens 20 ml/(min*$cm^2$) sind beispielsweise Perkolationsraten von 20 ml/(min*$cm^2$), 25 ml/(min*$cm^2$), 30 ml/(min*$cm^2$), 35 ml/(min*$cm^2$), 40 ml/(min*$cm^2$), 45 ml/(min*$cm^2$), 50 ml/(min*$cm^2$), 55 ml/(min*$cm^2$), 60 ml/(min*$cm^2$), 65 ml/(min*$cm^2$), 70 ml/(min*$cm^2$), 75 ml/(min*$cm^2$), 80 ml/(min*$cm^2$), 85 ml/(min*$cm^2$), 90 ml/(min*$cm^2$), 95 ml/(min*$cm^2$), 100 ml/(min*$cm^2$) oder mehr sowie entsprechende Zwischenwerte zu verstehen.

Weitere Vorteile ergeben sich dadurch, dass die Hochkonzentrationseinrichtung mindestens zwei fluidisch miteinander koppelbare Arbeitsräume umfasst, wobei mindestens eine Pumpeinrichtung zum Fördern des Fluids durch die Arbeitsräume stromauf eines Arbeitsraums und/oder zwischen zwei Arbeitsräumen angeordnet ist und/oder dass alle Arbeitsräume fluidisch zwischen zwei Pumpeinrichtungen angeordnet sind. Durch die fluidische Kopplung der zwei oder mehr Arbeitsräume in Verbindung mit der mindestens einen Pumpeinrichtung werden deutlich höhere Fließgeschwindigkeiten bei der Beladung erreicht, insbesondere im Unterschied zu einem einzelnen Arbeitsraum mit gleichem Volumen. Zusätzlich steigt die Gesamtlänge des Adsorptionssystems, so dass eine entsprechend höhere Wiederfindungsrate bzw. eine hohe Endkonzentration im zweiten oder jedem weiteren Aromastoff-Konzentrat erzielt werden kann.

Weitere Vorteile ergeben sich, indem die Hochkonzentrationseinrichtung ausgebildet ist, das wenigstens eine Sorptionsmittel mit einem fluiden Desorptionsmittel zu beaufschlagen, um am Sorptionsmittel adsorbierte Aromastoffe als aromastoffangereichertes zweites Aromastoff-Konzentrat zu desorbieren. Auf diese Weise ist es möglich, das zweite oder jedes weitere Aromastoff-Konzentrat mit Hilfe des Desorptionsmittels als Eluat der Hochkonzentrationseinrichtung zu gewinnen. Das Desorptionsmittel kann grundsätzlich das gleiche Desorptionsmittel wie bei der vorstehend beschriebenen Gewinnung des ersten Aromastoff-Konzentrats sein. Weiterhin kann das Desorptionsmittel der Hochkonzentrationseinrichtung das gleiche Desorptionsmittel/Desorptionsmittelgemisch bzw der gleiche Desorptionsmittelgradient wie bei der Gewinnung des ersten Aromastoff-Konzentrats sein. Alternativ kann ein abweichendes Desorptionsmittel/Desorptionsmittelgemisch bzw. ein abweichender Desorptionsmittelgradient vorgesehen sein. Hierdurch ist beispielsweise eine zumindest weitgehende Entfernung von Ethanol aus dem Aromastoff-Konzentrat im Sinne eines Lösungsmitteltausches möglich, beispielsweise indem als Desorptionsmittel für die Hochkonzentrationseinrichtung Wasser bzw. Wasserdampf verwendet wird. Alternativ kann (auch) in der Hochkonzentrationseinrichtung Ethanol als Desorptionsmittel oder ein Ethanol-haltiges Desorptionsmittelgemisch zur Gewinnung des zweiten oder jedes weiteren Aromastoff-Konzentrats verwendet werden.

Weitere Vorteile ergeben sich, indem die Hochkonzentrationseinrichtung wenigstens eine Temperiereinrichtung umfasst, mittels welcher zumindest ein Bereich der Hochkonzentrationseinrichtung auf eine vorbestimmte Temperatur temperierbar ist. Hierdurch können die Adsorptions- und/oder Desorptionscharakteristik der Hochkonzentrationseinrichtung optimal an die Zusammensetzung des ersten Aromastoff-Konzentrats und/oder des gewünschten zweiten Aromastoff-Konzentrats angepasst werden. Beispielsweise kann die Temperiereinrichtung derart ausgebildet sein, dass Temperaturen von 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C oder mehr einstellbar sind, wobei entsprechende Zwischenwerte wie beispielsweise 40°C, 41°C, 42°C, 43°C, 44°C, 45°C, 46°C, 47°C, 48°C, 49°C, 50°C usw. als mitoffenbar anzusehen sind. Die Temperiereinrichtung kann grundsätzlich zum relativen Erwärmen und/oder Abkühlen ausgebildet sein.

Weitere Vorteile ergeben sich, indem diese eine Dosierungseinrichtung umfasst, mittels welcher ein pH-Wert des Fluids und/oder wenigstens eines Desorptionsmittels und/oder des ersten und/oder zweiten Aromastoff-Konzentrats einzustellen und/oder zu variieren ist. Auf diese Weise ist eine gezielte Diskriminierung von sauren bzw. alkalischen Aromastoffen möglich. Nicht abschließende Beispiele für solche Aromastoffe sind insbesondere Amine (primäre, sekundäre und tertiäre Amine) sowie carbonsäurehaltige Verbindungen (z. B. Ameisensäure, Essigsäure etc.).

Weitere Vorteile ergeben sich, indem wenigstens ein Arbeitsraum zumindest bereichsweise schraubenförmig und/oder spiralförmig und/oder zickzackförmig und/oder mäanderförmig ausgebildet ist. Hierdurch ist der wenigstens eine Arbeitsraum, der wie bereits diskutiert einerseits vergleichsweise lang und andererseits vergleichsweise dünn ist, besonders platzsparend ausgebildet und kann besonders einfach in das Adsorptionssystem bzw. die Hochkonzentrationseinrichtung integriert werden.

Ein zweiter Aspekt der Erfindung betrifft ein Verfahren gemäß Anspruch 13 zum Betreiben eines Adsorptionssystems gemäß dem ersten Erfindungsaspekts, bei welchem wenigstens ein Sorptionsmittel als stationäre Phase im wenigstens einen Arbeitsraum des Adsorptionssystems angeordnet und mit einem aromastoffhaltigen Fluid als mobile Phase durchströmt wird, so dass zumindest ein Teil der im Fluid enthaltenen Aromastoffe am Sorptionsmittel adsorbiert, wobei ein Verhältnis von mittlerer Querschnittsdicke zu Gesamtlänge des wenigstens einen Arbeitsraums höchstens 0,3

und die Gesamtlänge eines durch den wenigstens einen Arbeitsraums bereitgestellten Strömungspfads für das Fluid mindestens 4,0 m beträgt, wobei das Adsorptionssystem eine Steuereinrichtung umfasst, mittels welcher das Adsorptionssystem in einem Absorptionsmodus, in welchem das wenigstens eine Sorptionsmittel mit dem aromastoffhaltigen Fluid beaufschlagt wird, um Aromastoffe am Sorptionsmittel zu adsorbieren, und in einem Desorptionsmodus, in welchem das wenigstens eine Sorptionsmittel mit einem fluiden Desorptionsmittel aus der Gruppe Ethanol und Ethanol-Wasser-Gemisch beaufschlagt wird, um am Sorptionsmittel adsorbierte Aromastoffe als Aromastoff-Konzentrat zu desorbieren, betrieben wird. Als aromastoffhaltiges Fluid wird dabei ein Lebensmittel verwendet, das aus der Gruppe bierhaltiger Nahrungs- und/oder Genussmittel, Bierwürze, Hopfen, Hopfenextrakt, Mälzwasser, Malzbier, Malzwürze und brauereieigener Rohstoffe und Produkte stammt und/oder mittels einer Entalkoholisierungsvorrichtung aus einem Ethanol-haltigen Lebensmittel aus der Gruppe bierhaltiger Nahrungs- und/oder Genussmittel erhalten ist. Hierdurch wird ein möglichst langes und vorzugsweise schmales Sorbensbett bereitgestellt und zur Adsorption zumindest eines Teils der im Fluid enthaltenen Aromastoff-Moleküle verwendet, wodurch es möglich ist, in Abhängigkeit der Bindungscharakteristik des oder der jeweils verwendeten Sorptionsmittel und der im Fluid befindlichen Aromastoff-Moleküle sowohl polare als auch unpolare Aromastoffe möglichst gleichmäßig auf dem Sorptionsmittel zu adsorbieren. Dementsprechend ist es mit Hilfe des Verfahrens möglich, besonders authentische und hochangereicherte Aromastoff-Konzentrate, das heißt Aromastoff-Konzentrate, in denen alle im ursprünglichen Fluid vorhandenen Aromastoffe zumindest überwiegend oder im Wesentlichen gleichmäßig und verlustarm mit hohen Anreicherungsfaktoren angereichert vorliegen, herzustellen. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Das Verfahren kann generell bei allen geeigneten Prozesstemperaturen, beispielsweise bei Temperaturen zwischen -100 °C und +200 °C, also beispielsweise bei -100 °C, -95 °C, -90 °C, - 85 °C, -80 °C, -75 °C, -70 °C, -65 °C, -60 °C, -55 °C, -50 °C, -45 °C, -40 °C, -35 °C, -30 °C, - 25 °C, -20 °C, -15 °C, -10 °C, -5 °C, 0 °C, 5 °C, 10 °C, 15 °C, 20 °C, 25 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, 130 °C, 135 °C, 140 °C, 145 °C, 150 °C, 155 °C, 160 °C, 165 °C, 170 °C, 175 °C, 180 °C, 185 °C, 190 °C, 195 °C, 200 °C oder mehr durchgeführt werden, wobei entsprechende Zwischentemperaturen wie 80 °C, 81 °C, 82 °C, 83 °C, 84 °C, 85 °C, 86 °C, 87 °C, 88 °C, 89 °C, 90 °C usw. als mitoffenbart anzusehen sind. Tiefere Prozesstemperaturen eignen sich beispielsweise in manchen Anwendungen zum Abkühlen und/oder Kondensieren von heißen Fluiden aus der Raumluft oder Industrieprozessen. Höhere Prozesstemperaturen können in manchen Anwendungen das Be- und/oder Entladen des Sorptionsmittels fördern. Weiterhin ist es möglich, die Prozesstemperatur während des Verfahrens ein- oder mehrfach zu variieren.

Weiterhin kann das Verfahren grundsätzlich bei allen geeigneten Prozessdrücken, beispielsweise bei Drücken zwischen etwa 0 bar und etwa 15 bar, also beispielsweise bei 0,0001 bar, 0,001 bar, 0,01 bar, 0,1 bar, 0,2 bar, 0,3 bar, 0,4 bar, 0,5 bar, 0,6 bar, 0,7 bar, 0,8 bar, 0,9 bar, 1 bar, 2 bar, 3 bar, 4 bar, 5 bar, 6 bar, 7 bar, 8 bar, 9 bar, 10 bar, 11 bar, 12 bar, 13 bar, 14 bar, 15 bar oder mehr durchgeführt werden. Weiterhin ist es möglich, den Prozessdruck während des Verfahrens ein- oder mehrfach zu variieren.

In einer vorteilhaften Ausgestaltung der Erfindung ist vorgesehen, dass als Fluid ein aromastoffhaltiges Destillat und/oder ein aromastoffhaltiges Membranpermeat eines zumindest teilweise entalkoholisierten Bieres verwendet wird. Hierdurch können Fluide, die durch unterschiedliche Entalkoholisierungsverfahren gewonnen wurden, vorteilhaft zur Aromastoff-Rückgewinnung und -Anreicherung verwendet werden. Alternativ oder zusätzlich ist es vorgesehen, dass ein Fluid mit einem Ethanolgehalt zwischen 0 Vol.-% und 50 Vol.-% verwendet wird. Unter einem Ethanolgehalt zwischen 0 Vol.-% und 50 Vol.-% werden insbesondere Ethanolgehalte von 0 Vol.-%, 1 Vol.-%, 2 Vol.-%, 3 Vol.-%, 4 Vol.-%, 5 Vol.-%, 6 Vol.-%, 7 Vol.-%, 8 Vol.-%, 9 Vol.-%, 10 Vol.-%, 11 Vol.-%, 12 Vol.-%, 13 Vol.-%, 14 Vol.-%, 15 Vol.-%, 16 Vol.-%, 17 Vol.-%, 18 Vol.-%, 19 Vol.-%, 20 Vol.-%, 21 Vol.-%, 22 Vol.-%, 23 Vol.-%, 24 Vol.-%, 25 Vol.-%, 26 Vol.-%, 27 Vol.-%, 28 Vol.-%, 29 Vol.-%, 30 Vol.-%, 31 Vol.-%, 32 Vol.-%, 33 Vol.-%, 34 Vol.-%, 35 Vol.-%, 36 Vol.-%, 37 Vol.-%, 38 Vol.-%, 39 Vol.-%, 40 Vol.-%, 41 Vol.-%, 42 Vol.-%, 43 Vol.-%, 44 Vol.-%, 45 Vol.-%, 46 Vol.-%, 47 Vol.-%, 48 Vol.-%, 49 Vol.-% oder 50 Vol.-% sowie entsprechende Zwischenwerte verstanden. Hierdurch können unterschiedlichste Fluide, die in einer Brauerei vorhanden sind oder durch diese hergestellt werden, im Rahmen des erfindungsgemäßen Verfahrens verarbeitet und zur Herstellung von Aromastoff-Konzentraten verwendet werden.

Weitere Vorteile ergeben sich, indem das Fluid mit einer mittleren Perkolationsrate von mindestens 20 ml/(min*$cm^2$) durch den wenigstens einen Arbeitsraum geleitet wird. Dies erlaubt eine besonders präzise Prozesskontrolle. Unter einer Perkolationsrate von mindestens 20 ml/(min*$cm^2$) sind beispielsweise Perkolationsraten von 20 ml/(min*$cm^2$), 25 ml/(min*$cm^2$), 30 ml/(min*$cm^2$), 35 ml/(min*$cm^2$), 40 ml/(min*$cm^2$), 45 ml/(min*$cm^2$), 50 ml/(min*$cm^2$), 55 ml/(min*$cm^2$), 60 ml/(min*$cm^2$), 65 ml/(min*$cm^2$), 70 ml/(min*$cm^2$), 75 ml/(min*$cm^2$), 80 ml/(min*$cm^2$), 85 ml/(min*$cm^2$), 90 ml/(min*$cm^2$), 95 ml/(min*$cm^2$), 100 ml/(min*$cm^2$) oder mehr sowie entsprechende Zwischenwerte zu verstehen.

In einer vorteilhaften Ausgestaltung der Erfindung ist vorgesehen, dass das aromastoffhaltige Fluid parallel durch mindestens zwei Arbeitsräume geleitet wird. Die erlaubt eine besonders schnelle Beladung der in den Arbeitsräumen angeordneten Sorbentien bzw. Sorptionsmitteln mit kurzen Verfahrensdurchläufen, wodurch das Verfahren

besonders schnell, kostengünstig und zumindest halb- oder quasi-kontinuierlich durchgeführt werden kann. Zudem können verteilungschromatographische Effekte auf den Sorptionsmitteln besser kontrolliert und eine zu starke räumliche Auftrennung von polaren und unpolaren Aromastoffen verhindert werden. Dies verbessert die Authentizität des durch anschließende Desorption gewinnbaren Aromastoff-Konzentrats zusätzlich. Gleichzeitig wird ein hoher Konzentrationsfaktor erreicht, wodurch entsprechend hochangereicherte Aromastoff-Konzentrate zugänglich werden. Weiterhin können die wenigstens zwei Arbeitsräume unterschiedliche Sorptionsmittel oder unterschiedliche Sorptionsmittel-Gemische enthalten, um eine verbesserte und möglichst vollständige Adsorption aller im Fluid enthaltener Aromastoff-Spezies sicherzustellen. Gleichzeitig können Arbeitsräume mit geringerem Gesamtvolumen bzw. geringerer Sorbens-Beladung verwendet werden, als dies bei der Verwendung eines einzigen Arbeitsraumes mit gleicher Beladungskapazität möglich wäre. Damit sinkt der Druckabfall über die Arbeitsräume, wodurch mit geringeren Differenzdrücken gearbeitet werden kann. Dies erlaubt beispielsweise die Verwendung kostengünstigerer Pumpeinrichtungen und führt zu einem geringeren Verschleiß des Sorptionsmittels, wodurch entsprechende Kosteneinsparungen realisierbar sind. Zusätzlich kann das Verfahren über die jeweils gewählte Anzahl und Art der Arbeitsräume und der darin enthaltenen Sorptionsmittel einfach an unterschiedliche Fluid-Ströme angepasst werden. Alternativ oder zusätzlich ist es vorgesehen, dass das aromastoffhaltigen Fluid gegen die Schwerkraftrichtung durch den wenigstens einen Arbeitsraum geleitet wird. Mit anderen Worten werden der oder die Arbeitsräume möglichst senkrecht angeordnet und von unten nach oben mit dem Fluid durchströmt. Dies verbessert die Adsorption der im Fluid enthaltenen Aromastoffe.

Alternativ oder zusätzlich ist es vorgesehen, dass das Fluid seriell durch wenigstens zwei Arbeitsräume geleitet wird, wobei vorzugsweise wenigstens ein stromab liegender Arbeitsraum ein größeres Volumen als wenigstens ein stromauf liegender Arbeitsraum aufweist. Mit anderen Worten werden zwei oder mehr in Beladungsrichtung nacheinander angeordnete Arbeitsräume seriell durchströmt, wobei die Arbeitsräume in Beladungsrichtung steigende Volumina aufweisen. Hierdurch ist es besonders einfach möglich, im ersten bzw. stromauf liegenden Arbeitsraum vorwiegend die unpolaren Aromastoffe zu binden und im zweiten bzw. stromabliegenden Arbeitsraum vorwiegend die polaren Aromastoffe. Die Volumenverhältnisse der einzelnen Arbeitsräume korrelieren mit der jeweils einbringbaren Sorbensmenge und mit den jeweils zu bindenden Aromastoffmengen. Weitere Vorteile bestehen darin, dass die mindestens zwei Arbeitsräume auf unterschiedliche Weise bzw. unabhängig voneinander einer Desorption unterzogen werden können. Die Zwei- oder Mehrstufigkeit bietet darüber zusätzliche Möglichkeiten zugunsten der gezielten An- oder Abreicherung bestimmter Aromastoffe, wodurch eine Modulierung des Aromaprofils möglich ist. Weiterhin ermöglicht die Zwei- oder Mehrstufigkeit, dass besonders hohe Anreicherungsfaktoren erreicht werden können. Ein Arbeitsraum alleine kann in der Regel nicht einerseits ein großes Ausgangsvolumen in einer vernünftigen Prozesszeit aufnehmen und andererseits ein besonders geringes Extraktvolumen mit entsprechend hohen Anreicherungsfaktoren der einzelnen Aromastoffe ermöglichen. Beispielsweise müssten bei einer Anreicherung um einen Faktor 3000 einerseits ca. 3000 Liter im Adsorptionsmodus durch den einen Arbeitsraum gefördert werden, aber nur 1 Liter Extrakt im Desorptionsmodus gewonnen werden. Mit zwei oder mehr Arbeitsräumen, die in der beschriebenen Weise seriell beladen werden, ist dies jedoch möglich.

Weitere Vorteile ergeben sich, indem beim Durchleiten des Fluids eine Temperatur im wenigstens einen stromaufliegenden Arbeitsraum auf einen höheren Wert eingestellt wird als eine Temperatur im wenigstens einen stromabliegenden Arbeitsraum. Hierdurch kann die Adsorptionscharakteristik optimal eingestellt werden, so dass besonders authentische Aromastoff-Konzentrate mit hohen Rückgewinnungsquoten erhältlich sind.

Es ist vorgesehen, dass das Sorptionsmittel nach dem Adsorbieren zumindest eines Teils der Aromastoffe aus dem Fluid mit dem fluiden Desorptionsmittel beaufschlagt wird, so dass die am Sorptionsmittel adsorbierten Aromastoffe zumindest teilweise desorbieren. Dies erlaubt die Rückgewinnung der adsorbierten Aromastoffe in Form eines diese enthaltenden Aromastoff-Konzentrats.

Weitere Vorteile ergeben sich, indem das Desorptionsmittel im Vergleich zum aromastoffhaltigen Fluid in umgekehrter Fließrichtung durch den wenigstens einen Arbeitsraum geleitet wird. Mit anderen Worten werden der oder die Arbeitsräume bzw. das in diesen angeordnete Sorptionsmittel gegenüber der zur Beladung verwendeten Strömungsrichtung zum Entladen in umgekehrter Richtung durchströmt. Dies stellt eine zumindest im Wesentlichen vollständige Rückgewinnung aller am jeweiligen Sorptionsmittel adsorbierten Aromastoffe sicher, wodurch eine entsprechend vollständige Rückgewinnung der im ursprünglichen Fluid enthaltenen Aromastoffe in hochkonzentrierter Form erreicht wird. Alternativ oder zusätzlich ist es vorgesehen, dass das Desorptionsmittel seriell durch mindestens zwei Arbeitsräume geleitet wird. Auch dies stellt eine zumindest weitgehend vollständige Rückgewinnung der Aromastoffe sicher, die in den mindestens zwei Arbeitsräumen am jeweiligen Sorptionsmittel adsorbiert sind. Alternativ oder zusätzlich ist es vorgesehen, dass das Desorptionsmittel mit einem höheren Differenzdruck gegen die Fließrichtung des Fluids gepumpt wird. Dies ermöglicht es auf einfache Weise, zwischen Adsorption bzw. Beladung und Desorption bzw. Entladung umzuschalten. Zusätzlich ist es möglich, das Desorptionsmittel mit den darin enthaltenen desorbierten Aromastoffen nach dem Arbeitsraum in das Fluid bzw. in einen Fluid-Hauptstrom einzuleiten, im Fluid- Hauptstrom zu verdünnen und einem weiteren Arbeitsraum zuzuleiten. Hierdurch können ein oder mehrere stromab liegende Arbeitsräume mit einem gegenüber dem ursprünglichen Fluid Aromastoffangereicherten Fluid beaufschlagt werden, wodurch in dem einen oder

mehreren stromab liegenden Arbeitsräumen eine (immer) höhere Aromastoff-Anreicherung mit entsprechend hohen Aufkonzentrierungsfaktoren erzielt werden kann.

In einer weiteren vorteilhaften Ausgestaltung der Erfindung ist vorgesehen, dass das Desorptionsmittel in Schwerkraftrichtung durch den wenigstens einen Arbeitsraum geleitet wird. Mit anderen Worten werden der oder die Arbeitsräume möglichst senkrecht angeordnet und von oben nach unten mit dem Desorptionsmittel durchströmt. Dies verbessert die Desorption der am Sorptionsmittel adsorbierten Aromastoffe, wodurch entsprechen hoch konzentrierte authentische Aromastoff-Konzentrate erhalten werden.

Weitere Vorteile ergeben sich dadurch, dass beim Durchleiten durch wenigstens einen Arbeitsraum ein Desorptionsmittelgradient eingesetzt wird und/oder ein Lösungsmittelwechsel zur stufenweisen Desorption von Aromastoffen aus demselben Arbeitsraum eingesetzt wird und/oder dass unterschiedliche Desorptionsmittel durch unterschiedliche Arbeitsräume geleitet werden und/oder dass unterschiedliche Desorptionsmittelvolumina durch unterschiedliche Arbeitsräume geleitet werden. Dies erlaubt wahlweise die Herstellung besonders authentischer Aromastoff-Konzentrate mit besonders hohen Anreichungsfaktoren der einzelnen Aromastoffe oder alternativ die gezielte Modulierung der Zusammensetzung des Aromastoff-Konzentrats, beispielsweise um unerwünschte Aromastoffe nicht oder nur in geringem Umfang zurückzugewinnen bzw. anzureichern während gewünschte Aromastoffe relativ zu den unerwünschten angereicht werden. Ebenso ist hierdurch eine Art Lösungsmitteltausch möglich, bei welchem vorzugsweise Ethanol teilweise gegen Wasser ausgetauscht wird.

Weitere Vorteile ergeben sich dadurch, dass unterschiedlich temperierte Desorptionsmittel durch unterschiedliche Arbeitsräume geleitet werden. Beispielsweise kann ein erster Arbeitsraum mit einem auf Raumtemperatur (25 °C) temperierten Desorptionsmittel und ein zweiter Arbeitsraum mit einer gegenüber der Raumtemperatur erhöhten Temperatur (z. B. 50 °C, 75 °C, 100 °C oder mehr) beaufschlagt werden, um eine bestimmte Desorptionscharakteristik zu erzielen. Alternativ oder zusätzlich ist es vorgesehen, dass nur vorbestimmte Bereiche des wenigstens einen Arbeitsraums mit Desorptionsmittel beaufschlagt werden, wodurch selektiv nur bestimmte Aromastoffe bzw. Aromastoffgruppen oder -fraktionen desorbiert werden können, um das Aromaprofil des resultierenden Aromastoff-Konzentrats gezielt zu modulieren. Alternativ oder zusätzlich ist es vorgesehen, dass wenigstens ein Arbeitsraum mit einem gegenüber einem Normaldruck unter erhöhtem Druck stehenden Desorptionsmittel beaufschlagt wird. Auch hierdurch kann eine bestimmte Desorptionscharakteristik erzielt werden.

Weitere Vorteile ergeben sich, indem mindestens zwei desorbierte Fraktionen gesammelt und zum Aromastoff-Konzentrat vereinigt werden. Dies bedeutet, dass 2, 3, 4, 5, 6, 7, 8, 9, 10, 11, 12, 13, 14, 15, 16, 17, 18, 19, 20 oder mehr Fraktionen gesammelt werden, von denen mindestens zwei vollständig oder teilweise zum Aromastoff-Konzentrat vereinigt werden. Dies ist insbesondere von Vorteil, wenn mehrere Arbeitsräume mit gegebenenfalls unterschiedlichen Desorptionsmitteln beaufschlagt wurden, um eine möglichst vollständige Rückgewinnung aller Aromastoffe sicherzustellen. Umgekehrt ist es grundsätzlich natürlich möglich, eine oder mehrere Fraktionen zu verwerfen oder nur teilweise zum Aromastoff-Konzentrat zu vereinigen, um eine Modellierung des Aromaprofils zu erreichen.

Erfindungsgemäß wird ein Desorptionsmittel aus der Gruppe Ethanol und Ethanol-Wasser-Gemisch verwendet. Hierdurch können insbesondere die Parameter Anreicherungsfaktor, Rückgewinnungsgrad und Ethanolgehalt des Aromastoff-Konzentrats gezielt beeinflusst werden.

Weitere Vorteile ergeben sich dadurch, dass ein Aromastoff-Konzentrat hergestellt wird, bei welchem bezogen auf die Ausgangskonzentrationen im Fluid ein Rückgewinnungsverhältnis von 3-Methylbutan-1-ol : 2-Phenylethanol mindestens 2/3 beträgt und/oder bei welchem bezogen auf die Ausgangskonzentration im Fluid mindestens 30 Mol-%, also beispielsweise 30 Mol-%, 35 Mol-%, 40 Mol-%, 45 Mol-%, 50 Mol-%, 55 Mol-%, 60 Mol-%, 65 Mol-%, 70 Mol-%, 75 Mol-%, 80 Mol-%, 85 Mol-%, 90 Mol-%, 95 Mol-%, 100 Mol-% oder mehr, 2-Phenylethanol zurückgewonnen wurden und/oder bei welchem bezogen auf die Ausgangskonzentrationen im Fluid die Konzentrationen von 3-Methylbutan-1-ol und 2-Phenylethanol mindestens um den Faktor 10, also beispielsweise um den Faktor 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100 oder mehr angereichert sind. Hierdurch ist sichergestellt, dass für das Bieraroma relevante polare und unpolare Aromastoffe zumindest weitgehend zurückgewonnen und möglichst stark aufkonzentriert werden.

In einer weiteren vorteilhaften Ausgestaltung der Erfindung ist es vorgesehen, dass als Fluid ein aromastoffhaltiges Destillat und/oder ein aromastoffhaltiges Membranpermeat eines zumindest teilweise entalkoholisierten Bieres verwendet wird, wobei eine Ethanolmenge des ersten Aromastoff-Konzentrats höchstens 1/10 einer Ethanolmenge des eingesetzten Fluids (Destillat, Membranpermeat) beträgt. Dies erlaubt die Herstellung von entsprechend ethanolabgereicherten Aromastoff-Konzentraten, die problemlos zu einem alkoholfreien Bier hinzugegeben werden können, um das Aromaprofil des entalkoholisierten Bieres zu verbessern, ohne dass es zu einer relevanten Erhöhung des Ethanolgehalts des entalkoholisierten Bieres kommt. Damit können ebenso Biere mit einem Restethanolgehalt von weniger als 0,1 Vol.-%, insbesondere von höchsten 0,045 Vol.-% hergestellt werden, die trotzdem ein authentisches Aromaprofil aufweisen, das beispielsweise demjenigen eines Vollbieres entspricht, ohne dass dem Bier hierzu synthetisierte oder natürliche oder

naturidentische Aromen hinzugegeben werden müssten, insbesondere solche Aromen, die nicht aus Bier gewonnen wurden. Im Gegenteil können alle dem Bier zugegebenen Aromastoffe aus brauereieigenen Rohstoffen und Produkten zurückgewonnen werden. Unter einer Ethanolmenge von höchstens 1/10 sind dabei insbesondere Ethanolmengen von 1/10, 1/20, 1/30, 1/40, 1/50, 1/60, 1/70, 1/80, 1/90, 1/100, 1/110, 1/120, 1/130, 1/140, 1/150, 1/160, 1/170, 1/180, 1/190, 1/200, 1/300, 1/400, 1/500, 1/600, 1/700, 1/800, 1/900, 1/1000, 1/1100, 1/1200, 1/1300, 1/1400, 1/1500, 1/1600, 1/1700, 1/1800, 1/1900, 1/2000, 1/2100, 1/2200, 1/2300, 1/2400, 1/2500, 1/2600, 1/2700, 1/2800, 1/2900, 1/3000, 1/3100, 1/3200, 1/3300, 1/3400, 1/3500, 1/3600, 1/3700, 1/3800, 1/3900, 1/4000, 1/4100, 1/4200, 1/4300, 1/4400, 1/4500, 1/4600, 1/4700, 1/4800, 1/4900, 1/5000 oder weniger bezogen auf die Ethanolmenge im Volumen des eingesetzten Ausgangsfluids zu verstehen.

Weitere Vorteile ergeben sich dadurch, dass ein Ethanolgehalt des Aromastoff-Konzentrats vorzugsweise durch Zugabe von Brauwasser auf einen Wert zwischen 0,5 Vol.-% und 40 Vol.-% eingestellt wird. Der Ethanolgehalt kann damit beispielsweise auf 0,5 Vol.-%, 1,0 Vol.-%, 1,5 Vol.-%, 2,0 Vol.-%, 2,5 Vol.-%, 3,0 Vol.-%, 3,5 Vol.-%, 4,0 Vol.-%, 4,5 Vol.-%, 5,0 Vol.-%, 5,5 Vol.-%, 6,0 Vol.-%, 6,5 Vol.-%, 7,0 Vol.-%, 7,5 Vol.-%, 8,0 Vol.-%, 8,5 Vol.-%, 9,0 Vol.-%, 9,5 Vol.-%, 10,0 Vol.-%, 10,5 Vol.-%, 11,0 Vol.-%, 11,5 Vol.-%, 12,0 Vol.-%, 12,5 Vol.-%, 13,0 Vol.-%, 13,5 Vol.-%, 14,0 Vol.-%, 14,5 Vol.-%, 15,0 Vol.-%, 15,5 Vol.-%, 16,0 Vol.-%, 16,5 Vol.-%, 17,0 Vol.-%, 17,5 Vol.-%, 18,0 Vol.-%, 18,5 Vol.-%, 19,0 Vol.-%, 19,5 Vol.-%, 20,0 Vol.-%, 20,5 Vol.-%, 21,0 Vol.-%, 21,5 Vol.-%, 22,0 Vol.-%, 22,5 Vol.-%, 23,0 Vol.-%, 23,5 Vol.-%, 24,0 Vol.-%, 24,5 Vol.-%, 25,0 Vol.-%, 25,5 Vol.-%, 26,0 Vol.-%, 26,5 Vol.-%, 27,0 Vol.-%, 27,5 Vol.-%, 28,0 Vol.-%, 28,5 Vol.-%, 29,0 Vol.-%, 29,5 Vol.-%, 30,0 Vol.-%, 30,5 Vol.-%, 31,0 Vol.-%, 31,5 Vol.-%, 32,0 Vol.-%, 32,5 Vol.-%, 33,0 Vol.-%, 33,5 Vol.-%, 34,0 Vol.-%, 34,5 Vol.-%, 35,0 Vol.-%, 35,5 Vol.-%, 36,0 Vol.-%, 36,5 Vol.-%, 37,0 Vol.-%, 37,5 Vol.-%, 38,0 Vol.-%, 38,5 Vol.-%, 39,0 Vol.-%, 39,5 Vol.-% oder 40,0 Vol.-% eingestellt werden. Vorzugsweise wird hierzu in Brauereien ohnehin vorhandenes Brauwasser verwendet. Durch Einstellen des Ethanolgehalts kann sichergestellt werden, dass bei einer teilweisen oder vollständigen Weiterprozessierung des ersten Aromastoff-Konzentrats in der Hochkonzentrationseinrichtung eine gewünschte Beladungscharakteristik des oder der Sorptionsmittel erreicht wird.

Weitere Vorteile ergeben sich, indem zumindest ein Teil des ersten Aromastoff-Konzentrats aus wenigstens einem Arbeitsraum der ersten Anreicherungsstufe des Adsorptionssystems mittels einer Hochkonzentrationseinrichtung in wenigstens ein aromastoffabgereichertes Permeat und in wenigstens ein aromastoffangereichertes zweites Aromastoff-Konzentrat aufgetrennt wird. Das aromastoffabgereicherte Permeat kann wahlweise verworfen oder zur Herstellung von alkoholischen Getränken verwendet werden, deren Geschmack nicht an Bier erinnern soll. Das gegenüber dem ersten Aromastoff-Konzentrat weiter angereicherte zweite Aromastoff-Konzentrat kann besonders gut zur Einstellung des Aromaprofils eines entalkoholisierten bzw. alkoholfreien Bieres verwendet werden, ohne dessen Ethanolgehalt zu erhöhen. Alternativ oder zusätzlich kann das zweite Aromastoff-Konzentrat zur Aromatisierung sonstiger Nahrungs- und Genussmittel, Parfums und dergleichen verwendet werden. Weiterhin kann vorgesehen sein, dass wenigstens ein Teil des ersten Aromastoff-Konzentrats mit wenigstens einem Teil des zweiten Aromastoff-Konzentrats zu einem dritten Aromastoff-Konzentrat ausgemischt wird.

Eine zusätzliche Anreicherung des Aromastoff-Konzentrats ist in weiterer Ausgestaltung der Erfindung dadurch ermöglicht, dass das Aromastoff-Konzentrat durch wenigstens einen Arbeitsraum der Hochkonzentrationseinrichtung geleitet wird, in welchem wenigstens ein Sorptionsmittel als stationäre Phase angeordnet ist und Aromastoffen des als mobile Phase durch den Arbeitsraum geleiteten Aromastoff-Konzentrats anlagert.

Weitere Vorteile ergeben sich, indem das Aromastoff-Konzentrat durch wenigstens einen Arbeitsraum geleitet wird, welcher eine Gesamtlänge von mindestens 2,5 m besitzt und/oder dass das Aromastoff-Konzentrat mit einer mittleren Perkolationsrate von mindestens 20 ml/(min*$cm^2$) durch den wenigstens einen Arbeitsraum geleitet wird. Hierdurch wird eine zumindest überwiegende Rückgewinnung sowohl von polaren als auch von unpolaren Aromastoffen in möglichst kurzer Prozesszeit ermöglicht, wodurch das authentische Aromaprofil erhalten bleibt und das Verfahren entsprechend wirtschaftlich durchgeführt werden kann.

Weitere Vorteile ergeben sich, indem das wenigstens eine Sorptionsmittel der Hochkonzentrationseinrichtung mit einem fluiden Desorptionsmittel beaufschlagt und am Sorptionsmittel adsorbierte Aromastoffe als zweites Aromastoff-Konzentrat desorbiert werden, wobei darin zumindest die Aromastoffe 3-Methylbutan-1-ol und 2-Phenylethanol relativ zum ersten Aromastoff-Konzentrat vorzugsweise mindestens um den Faktor 10, also beispielsweise um den Faktor 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100 oder mehr angereichert sind. Ausgehend vom ursprünglichen Fluid ist es damit möglich, ein gegenüber dem ersten Aromastoff-Konzentrat hochkonzentriertes zweites Aromastoff-Konzentrat herzustellen, bei welchem sowohl die biertypischen polaren als auch die biertypischen unpolaren Aromastoffe um den Faktor 400, 450, 500, 550, 600, 650, 700, 750, 800, 850, 900, 950, 1000, 1050, 1100, 1150, 1200, 1250, 1300, 1350, 1400, 1450, 1500, 1550, 1600, 1650, 1700, 1750, 1800, 1850, 1900, 1950, 2000 oder mehr angereicht sind, wobei entsprechende Zwischenwerte als mitoffenbart anzusehen sind.

Weitere Vorteile ergeben sich, indem zur Desorption des das wenigstens einen Sorptionsmittels der Hochkonzentrationseinrichtung wenigstens ein Desorptionsmittel aus der Gruppe Ethanol, Wasser, Wasserdampf und

Ethanol-Wasser-Gemisch verwendet wird. Hierdurch können insbesondere die Parameter Anreicherungsfaktor, Rückgewinnungsgrad und Ethanolgehalt des Aromastoff-Konzentrats gezielt beeinflusst werden. Insbesondere die Verwendung von Wasser und/oder Wasserdampf als Desorptionsmittel erleichtert im Weiteren die Herstellung von alkoholfreien Bieren mit besonders niedrigen Ethanolgehalten (z. B. <0,1 Vol.-%, <0,045 Vol.-% oder weniger), da das Aromastoff-Konzentrat, das mit dem alkoholfreien Bier ausgemischt werden kann, um dessen Aromaprofil zu verbessern, von vornherein sehr wenig Ethanol enthält oder sogar praktisch frei von Ethanol ist, so dass auch die Zugabe größerer Mengen Aromastoff-Konzentrat keine oder zumindest keine relevante Erhöhung des Ethanolgehalts nach sich zieht.

Weitere Vorteile ergeben sich dadurch, dass als Fluid ein aromastoffhaltiges Destillat und/oder ein aromastoffhaltiges Membranpermeat eines zumindest teilweise entalkoholisierten Bieres verwendet wird, wobei eine Ethanolmenge des zweiten Aromastoff-Konzentrats höchstens 1/10 einer Ethanolmenge des eingesetzten Fluids beträgt. Dies erlaubt die Herstellung von besonders hochkonzentrierten Aromastoff-Konzentraten, von denen dementsprechend wenig Volumen zu einem alkoholfreien Bier hinzugegeben werden muss, um das Aromaprofil des entalkoholisierten Bieres zu verbessern, ohne dass es zu einer relevanten Erhöhung des Ethanolgehalts des entalkoholisierten Bieres kommt. Damit können insbesondere Biere mit einem Restethanolgehalt von weniger als 0,1 Vol.-%, insbesondere von höchsten 0,045 Vol.-% hergestellt werden, die trotzdem ein authentisches Aromaprofil aufweisen, das demjenigen eines Vollbieres entspricht, ohne dass dem Bier hierzu künstliche oder naturidentische Aromen hinzugegeben werden müssten. Im Gegenteil können alle dem Bier zugegebenen Aromastoffe aus brauereieigenen Rohstoffen und Produkten zurückgewonnen werden. Unter einer Ethanolmenge von höchstens 1/10 sind dabei insbesondere Ethanolmengen von 1/10, 1/20, 1/30, 1/40, 1/50, 1/60, 1/70, 1/80, 1/90, 1/100, 1/110, 1/120, 1/130, 1/140, 1/150, 1/160, 1/170, 1/180, 1/190, 1/200, 1/300, 1/400, 1/500, 1/600, 1/700, 1/800, 1/900, 1/1000, 1/1100, 1/1200, 1/1300, 1/1400, 1/1500, 1/1600, 1/1700, 1/1800, 1/1900, 1/2000, 1/2100, 1/2200, 1/2300, 1/2400, 1/2500, 1/2600, 1/2700, 1/2800, 1/2900, 1/3000, 1/3100, 1/3200, 1/3300, 1/3400, 1/3500, 1/3600, 1/3700, 1/3800, 1/3900, 1/4000, 1/4100, 1/4200, 1/4300, 1/4400, 1/4500, 1/4600, 1/4700, 1/4800, 1/4900, 1/5000 oder weniger bezogen auf die Ethanolmenge im Gesamtvolumen des eingesetzten Ausgangsfluids zu verstehen.

Weitere Vorteile ergeben sich dadurch, dass ein zweites Aromastoff-Konzentrat hergestellt wird, bei welchem bezogen auf die Ausgangskonzentrationen im Fluid ein Rückgewinnungsverhältnis von 3-Methylbutan-1-ol : 2-Phenylethanol mindestens 2/3 beträgt und/oder bei welchem bezogen auf die Ausgangskonzentration im Fluid mindestens 30 Mol-% 2-Phenylethanol zurückgewonnen wurden und/oder bei welchem bezogen auf die Ausgangskonzentrationen im Fluid die Konzentrationen von 3-Methylbutan-1-ol und 2-Phenylethanol mindestens um den Faktor 10, also beispielsweise um den Faktor 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100 oder mehr angereichert sind. Hierdurch ist sichergestellt, dass für das Bieraroma relevante polare und unpolare Aromastoffe zumindest weitgehend zurückgewonnen und möglichst stark aufkonzentriert werden.

Weitere Vorteile ergeben sich, wenn wenigstens zwei aus einer Gruppe, die aus erstem Aromastoff-Konzentrat, zweitem Aromastoff-Konzentrat, aromastoffhaltigem Fluid, entaromatisiertem Permeat und bierhaltigem Nahrungs- und/oder Genussmittel besteht, ausgemischt werden. Mit anderen Worten werden zwei, drei, vier oder fünf aus der Gruppe erstes Aromastoff-Konzentrat, zweites Aromastoff-Konzentrat (Hochkonzentrationsstufe), aromastoffhaltiges Fluid (Ausgangsmaterial für Aromastoff-Konzentrat-Herstellung), entaromatisiertem Permeat und bierhaltiges Nahrungs- und/oder Genussmittel miteinander zu einem gewünschten Endprodukt vermischt. Das Ausmischen kann beispielsweise manuell über Chargen-Verarbeitung oder automatisch in einem kontinuierlichen In-Line-Prozess erfolgen. Dabei kann grundsätzlich vorgesehen sein, dass das gesamte Volumen oder nur eine oder mehrere Fraktionen von erstem Aromastoff-Konzentrat und/oder zweitem Aromastoff-Konzentrat und/oder aromastoffhaltigem Fluid und/oder entaromatisiertem Permeat und/oder bierhaltigem Nahrungs- und/oder Genussmittel ausgemischt wird bzw. werden. Hierdurch ist eine besonders flexible Möglichkeit zur Einstellung gewünschter Aromastoffprofile sowie zur Herstellung gewünschter Nahrungs- und Genussmittel gegeben. Das Ziel des Ausmischens kann beispielsweise darin bestehen, eine "Aromalücke" zwischen einem Ist-Aromaprofil und einem Soll-Aromaprofil, beispielsweise zwischen dem Aromaprofil eines 0.0% Bieres und dem Aromaprofil eines 0.5%-Bieres oder eines Vollbieres, aufzufüllen bzw. auszugleichen. Alternativ kann ein Ziel des Ausmischens darin bestehen, eine bestimmte Balance bestimmter Aromastoffe herzustellen, um ein gewünschtes Aromaprofil zu erzeugen. Im Fall von Bier kann beispielsweise das Aromaprofil eines 0.0% Bieres durch Ausmischen so eingestellt werden, das ausgehend vom Ist-Aromaprofil bestimmte Aromastoffe analog zu einem 0.5% Bier oder einem Vollbier ausbalanciert werden, ohne dass die Gesamtkonzentration der betreffenden Aromastoffe im ausgemischten Bier notwendigerweise der Gesamtkonzentration in einem Vollbier entspricht.

Es wird lediglich zur Veranschaulichung ein nicht-erfindungsgemäßes Aromastoff-Konzentrat offenbart, welches mittels eines Adsorptionssystems gemäß dem ersten Erfindungsaspekt und/oder durch ein Verfahren gemäß dem zweiten Erfindungsaspekt aus einem aromastoffhaltigen Fluid erhältlich und/oder erhalten ist, wobei das aromastoffhaltige Fluid ein Lebensmittel aus der Gruppe bierhaltiger Nahrungs- und/oder Genussmittel, Bierwürze, Hopfen, Hopfenextrakt, Mälzwasser, Malzbier, Malzwürze und brauereieigener Rohstoffe und Produkte ist und/oder mittels einer Entalkoholisierungsvorrichtung aus einem Ethanol-haltigen Lebensmittel aus der Gruppe bierhaltiger Nahrungs- und/oder Genussmittel erhalten ist. Das Aromastoff-Konzentrat stellt damit wahlweise ein authentisches Abbild des Fluids dar, da die ursprünglich im Fluid enthaltenen Aromastoffe zumindest weitgehend gleichmäßig angereichert sind, oder ein modelliertes Abbild des Fluids, bei welchem bestimmte Aromastoffe relativ zu anderen Aromastoffen abgereichert sind. Dies erlaubt eine besonders flexible Aromatisierung von Nahrungs- und Genussmitteln, insbesondere von alkoholfreiem Bier oder von Biermischgetränken bzw. von Getränken mit Bieraroma, wobei das Aromastoff-Konzentrat grundsätzlich auch in Alleinstellung bzw. zur Raumbeduftung, zur Herstellung von Parfums und dergleichen verwendet werden kann. Beispielsweise kann das Aromastoff-Konzentrat zur Aromatisierung folgender Nahrungs- und Genussmitteln verwendet werden:
Nichtalkoholische Getränke; Präparate für die Zubereitung von Getränken; Alkoholfreie Cocktail-Mixgetränke; alkoholfreie Cocktails; alkoholfreie Getränke mit Fruchtsäften; alkoholfreie Grundbasis für Cocktails; alkoholfreie Weine; Aperitifs, alkoholfrei; aromatisierte, kohlensäurehaltige Getränke; entalkoholisierte Weine; Nicht alkoholische Weine; Smoothies; alkoholfreie Fruchtgetränke; Sorbetgetränke; Sorbets; Sorbets in Form von Getränken; teilgefrorene Erfrischungsgetränke [Slush-Drinks]; tiefgekühlte Getränke auf Fruchtbasis; Weine, alkoholfrei; Weine, entalkoholisiert; Weine, nicht alkoholisch; alkoholfreie Getränke; entalkoholisierte Getränke; Erfrischungsgetränke; alkoholfreie Fruchtgetränke; alkoholfreie Fruchtextrakte; aus Früchten hergestellte Getränke; eisgekühlte Fruchtgetränke; Fruchtgetränke; Fruchtgetränke ohne Alkohol; Fruchtgetränke und Fruchtsäfte; Fruchtnektare; Fruchtsäfte; Fruchtsäfte mit Fruchtfleisch; Fruchtsaftgetränke; Fruchtsaftkonzentrate; Fruchtsirup; Getränke auf der Basis von Früchten; kohlensäurehaltige Säfte; Konzentrierte Fruchtsäfte; konzentrierte Obstsäfte; Most [vergoren/unvergoren]; Obstsäfte zur Verwendung als Getränke; Säfte; Säfte aus gemischten Früchten; Traubensäfte; Traubensaftgetränke; Vorwiegend aus Fruchtsäften bestehende Getränke; alkoholische Getränke, einschließlich Bier; alkoholische Präparate für die Zubereitung von Getränken; alkoholhaltige Geleegetränke; alkoholische kohlensäurehaltige Getränke, einschließlich Bier; Aperitifs; Getränke mit geringem Alkoholgehalt; Spirituosen und Liköre; Weine; Spirituosen; alkoholreduzierte Weine und Biere; Champagner; Fruchtwein; natürliche Schaumweine; Obstschaumweine; Roséweine; Rotwein; Schaumweine; Sekt; Süßweine; Tafelweine; Traubenschaumwein; Traubenwein; Tresterwein; Wein für die Speisezubereitung; Weine mit erhöhtem Alkoholgehalt; weinhaltige Getränke [Weinschorlen]; Weißweine; Alcopops; alkoholhaltige Fruchtextrakte; alkoholhaltige Getränke mit Fruchtgehalt; alkoholische Mischgetränke, einschließlich Biermischgetränke; alkoholischer Punsch; Bowlen [Getränke]; Cocktails und Weinpunsche, wobei diese Aufzählung nicht abschließend ist.

Weiterhin wird lediglich zur Veranschaulichung ein nicht-erfindungsgemäßes entaromatisiertes Permeat offenbart, erhältlich und/oder erhalten aus einem aromastoffhaltigen Fluid mittels eines Adsorptionssystems gemäß dem ersten Erfindungsaspekt und/oder durch ein Verfahren gemäß einem dem zweiten Erfindungsaspekt, wobei das aromastoffhaltige Fluid ein Lebensmittel aus der Gruppe bierhaltige Nahrungs- und/oder Genussmittel, Bierwürze, Hopfen, Hopfenextrakt, Mälzwasser, Malzbier, Malzwürze und brauereieigener Rohstoffe und Produkte ist und/oder mittels einer Entalkoholisierungsvorrichtung aus einem Ethanol-haltigen Lebensmittel aus der Gruppe bierhaltiger Nahrungs- und/oder Genussmittel erhalten ist. Da mit Hilfe des Adsorptionssystems bzw. des Verfahrens eine zumindest weitgehende Rückgewinnung der im Fluid enthaltenen Aromastoffe möglich ist, ist das Permeat entsprechend stark abgereichert und für den Menschen zumindest annähernd geruchlos. Daher kann das entaromatisierte Permeat vorteilhaft zur Herstellung von Nahrungs- und Genussmitteln verwendet werden, die kein biertypisches Aromaprofil besitzen sollen. Eine Aufzählung geeigneter Nahrungs- und Genussmitteln findet sich bei der Beschreibung des Aromastoff-Konzentrats und ist auch auf den vorliegenden Erfindungsaspekt anwendbar.

Ein weiterer Aspekt der Erfindung betrifft ein Bier gemäß Anspruch 20, welches durch Ausmischen eines zumindest teilweise entalkoholisierten und/oder gärgestoppten bierhaltigen Nahrungs- und/oder Genussmittels mit einem Aromastoff-Konzentrat, welches mittels eines Adsorptionssystems gemäß dem ersten Erfindungsaspekt und/oder durch ein Verfahren gemäß dem zweiten Erfindungsaspekt erhalten ist, hergestellt ist. Das Bier weist einen Ethanolgehalt von höchstens 0,3 Vol.-% auf und ist frei von künstlich zugesetzten Aromastoffen und/oder Aromaextrakten, die nicht aus brauereieigenen Rohstoffen und Produkten, insbesondere nicht aus Bier und/oder aus Fluiden aus Entalkoholisierungsanlagen für Bier stammen. Wie bereits erwähnt ist es bei "0.0%-Bier" bzw. sehr alkoholarmen Bieren < 0,3 % in der Regel erforderlich, größere Mengen an biertypischen Aromastoffen zurückzugeben, da "0.0%-Biere" nicht nur gegenüber Vollbieren, sondern auch gegenüber "alkoholfreien" Bieren (0,3-0,5 Vol.-% Ethanol) nochmals deutlich geringere Gehalte insbesondere an polaren, fermentativen Aromastoffen aufweisen. Dementsprechend muss das "0.0%-Bier" mit größeren Volumina an Aromastoff-Konzentrat und/oder mit höher aufkonzentriertem Aromastoff-Konzentrat (z. B. mittels einer Hochanreicherungseinrichtung hochangereichertes zweites Aromastoff-Konzentrat) bzw. mit spezifischen Ausmischungen von erstem und zweitem Aromastoff-Konzentrat rearomatisiert werden. Der Aromastoff 3-Methylbutan-1-ol, bei welchem es sich um eine vergleichsweise stark polare Verbindung handelt, ist einerseits wichtig für ein biertypisches Aromaprofil, wird aber andererseits bei der Herstellung von alkoholfreiem Bier, sei es durch Entalkoholisierung und/oder durch Gärstopp, stark abgereichert bzw. von vornherein nicht oder nur in geringem Umfang gebildet, da 3-Methylbutan-1-ol (Isoamylalkohol) durch Abbau der Aminosäure Leucin während der Vergärung mit Hefen über die Zwischenstufe der $\alpha$-Keto-Isocapronsäure, das heißt erst während der Fermentation gebildet wird. Damit stellt 3-Methylbutan-1-ol einerseits

eine wichtige Aromakomponente und andererseits einen wichtigen Indikator für das Vorliegen eines möglichst authentischen Bieraromas dar, das nur durch eine möglichst gleichmäßige Rückgewinnung sowohl polarer als auch unpolarer Aromastoffe erreicht bzw. wiederhergestellt werden kann. Im Gegensatz zu einer künstlichen Zugabe von reinem 3-Methylbutan-1-ol, welche aufgrund des Fehlens weiterer polarer biertypischer Aromastoffe zu einem entsprechend artifiziellen Geruchseindruck führt, können mittels eines Adsorptionssystems gemäß dem ersten Erfindungsaspekt und/oder durch ein Verfahren gemäß dem zweiten Erfindungsaspekt authentische Aromastoff-Konzentrate aus brauereieigenen Rohstoffen und Produkten gewonnen und durch Ausmischen zur Herstellung von alkoholfreiem Bier mit einem vollbierähnlichen Aromaprofil bzw. mit einem Aromaprofil, das demjenigen des ursprünglichen nicht-entalkoholisierten bzw. durchfermentierten Bieres entsprechen würde, verwendet werden. Aufgrund der hohen Aufkonzentrationsfaktoren, die mit Hilfe des erfindungsgemäßen Adsorptionssystems bzw. Verfahrens erreichbar sind, sind entsprechend geringe Mengen an Aromastoff-Konzentrat erforderlich, um ein biertypisches Aromaprofil zu erzielen, so dass der Ethanolgehalt des entalkoholisierten Bieres nicht oder zumindest praktisch nicht beeinflusst wird. Alternativ ist es mit Hilfe des erfindungsgemäßen Adsorptionssystems bzw. Verfahrens möglich, wässrige Aromastoff-Konzentrate mit gegebenenfalls relativ geringen Aufkonzentrationsfaktoren herzustellen, die aber ethanolfrei oder zumindest im Wesentlichen ethanolfrei sind, so dass ihre Zugabe zu einem entalkoholisierten und/oder gärgestoppten Bier in einer Menge, die zur Sicherstellung eines biertypischen Aromas genügt, keinen oder wenigstens keinen relevanten (<0,1 Vol.-%, insbesondere <0,01 Vol.-%, vorzugsweise <0,005 Vol.-%) Anstieg des Ethanolgehalts des fertigen Bieres nach sich zieht. Das entalkoholisierte und/oder gärgestoppte Bier kann beispielsweise ein ober- oder untergäriges Bier oder eine Mischung aus ober- und untergärigen Bieren sein. Obergärige Biersorten umfassen beispielsweise Ale, Altbier, Berliner Weiße, Dinkelbier, Emmerbier, Gose, Haferbier, Kölsch, Wieß, Porter, Roggenbier, Stout und Weizenbier, während untergärige Biersorten beispielsweise Exportbier, Helles, Lagerbier, Märzen, Münchner Dunkel, Porter, Pils, Schwarzbier, Rotbier oder Zoigl umfassen, wobei diese Aufzählung nicht abschließend ist. Entsprechend kann das Aromastoff-Konzentrat, mit welchem das Bier ausgemischt wird, ebenfalls aus den genannten Biersorten, einzeln oder in beliebiger Kombination, bzw. aus einem Fluid, das im Brauereiwesen im Zusammenhang mit der Herstellung einer oder mehrerer der genannten Biersorten steht, erhalten worden sein. Der Ausdruck ppm (parts per million, "Teile von einer Million", Millionstel) steht für die Zahl $10^{-6}$ und wird im Rahmen der vorliegenden Offenbarung für den millionsten Teil bezogen auf die Masse verwendet. Unter einem Massenanteil von mindestens 0,01 ppm sind insbesondere 0,01 ppm, 0,02 ppm, 0,03 ppm, 0,04 ppm, 0,05 ppm, 0,06 ppm, 0,07 ppm, 0,08 ppm, 0,09 ppm, 0,10 ppm, 0,11 ppm, 0,12 ppm, 0,13 ppm, 0,14 ppm, 0,15 ppm, 0,16 ppm, 0,17 ppm, 0,18 ppm, 0,19 ppm, 0,20 ppm, 0,21 ppm, 0,22 ppm, 0,23 ppm, 0,24 ppm, 0,25 ppm, 0,26 ppm, 0,27 ppm, 0,28 ppm, 0,29 ppm, 0,30 ppm, 0,31 ppm, 0,32 ppm, 0,33 ppm, 0,34 ppm, 0,35 ppm, 0,36 ppm, 0,37 ppm, 0,38 ppm, 0,39 ppm, 0,40 ppm, 0,41 ppm, 0,42 ppm, 0,43 ppm, 0,44 ppm, 0,45 ppm, 0,46 ppm, 0,47 ppm, 0,48 ppm, 0,49 ppm, 0,50 ppm, 0,51 ppm, 0,52 ppm, 0,53 ppm, 0,54 ppm, 0,55 ppm, 0,56 ppm, 0,57 ppm, 0,58 ppm, 0,59 ppm, 0,60 ppm, 0,61 ppm, 0,62 ppm, 0,63 ppm, 0,64 ppm, 0,65 ppm, 0,66 ppm, 0,67 ppm, 0,68 ppm, 0,69 ppm, 0,70 ppm, 0,71 ppm, 0,72 ppm, 0,73 ppm, 0,74 ppm, 0,75 ppm, 0,76 ppm, 0,77 ppm, 0,78 ppm, 0,79 ppm, 0,80 ppm, 0,81 ppm, 0,82 ppm, 0,83 ppm, 0,84 ppm, 0,85 ppm, 0,86 ppm, 0,87 ppm, 0,88 ppm, 0,89 ppm, 0,90 ppm, 0,91 ppm, 0,92 ppm, 0,93 ppm, 0,94 ppm, 0,95 ppm, 0,96 ppm, 0,97 ppm, 0,98 ppm, 0,99 ppm, 1 ppm, 2 ppm, 3 ppm, 4 ppm, 5 ppm, 6 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, 20 ppm, 21 ppm, 22 ppm, 23 ppm, 24 ppm, 25 ppm, 26 ppm, 27 ppm, 28 ppm, 29 ppm, 30 ppm, 31 ppm, 32 ppm, 33 ppm, 34 ppm, 35 ppm, 36 ppm, 37 ppm, 38 ppm, 39 ppm, 40 ppm, 41 ppm, 42 ppm, 43 ppm, 44 ppm, 45 ppm, 46 ppm, 47 ppm, 48 ppm, 49 ppm, 50 ppm, 51 ppm, 52 ppm, 53 ppm, 54 ppm, 55 ppm, 56 ppm, 57 ppm, 58 ppm, 59 ppm, 60 ppm, 61 ppm, 62 ppm, 63 ppm, 64 ppm, 65 ppm, 66 ppm, 67 ppm, 68 ppm, 69 ppm, 70 ppm, 71 ppm, 72 ppm, 73 ppm, 74 ppm, 75 ppm, 76 ppm, 77 ppm, 78 ppm, 79 ppm, 80 ppm, 81 ppm, 82 ppm, 83 ppm, 84 ppm, 85 ppm, 86 ppm, 87 ppm, 88 ppm, 89 ppm, 90 ppm, 91 ppm, 92 ppm, 93 ppm, 94 ppm, 95 ppm, 96 ppm, 97 ppm, 98 ppm, 99 ppm, 100 ppm, 101 ppm, 102 ppm, 103 ppm, 104 ppm, 105 ppm, 106 ppm, 107 ppm, 108 ppm, 109 ppm, 110 ppm, 111 ppm, 112 ppm, 113 ppm, 114 ppm, 115 ppm, 116 ppm, 117 ppm, 118 ppm, 119 ppm, 120 ppm oder mehr zu verstehen, wobei entsprechende Zwischenwerte wie beispielsweise 35,01 ppm, 35,02 ppm, 35,03 ppm, 35,04 ppm, 35,05 ppm, 35,06 ppm, 35,07 ppm, 35,08 ppm, 35,09 ppm, 35,10 ppm, 35,11 ppm, 35,12 ppm, 35,13 ppm, 35,14 ppm, 35,15 ppm, 35,16 ppm, 35,17 ppm, 35,18 ppm, 35,19 ppm, 35,20 ppm, 35,21 ppm, 35,22 ppm, 35,23 ppm, 35,24 ppm, 35,25 ppm, 35,26 ppm, 35,27 ppm, 35,28 ppm, 35,29 ppm, 35,30 ppm, 35,31 ppm, 35,32 ppm, 35,33 ppm, 35,34 ppm, 35,35 ppm, 35,36 ppm, 35,37 ppm, 35,38 ppm, 35,39 ppm, 35,40 ppm, 35,41 ppm, 35,42 ppm, 35,43 ppm, 35,44 ppm, 35,45 ppm, 35,46 ppm, 35,47 ppm, 35,48 ppm, 35,49 ppm, 35,50 ppm, 35,51 ppm, 35,52 ppm, 35,53 ppm, 35,54 ppm, 35,55 ppm, 35,56 ppm, 35,57 ppm, 35,58 ppm, 35,59 ppm, 35,60 ppm, 35,61 ppm, 35,62 ppm, 35,63 ppm, 35,64 ppm, 35,65 ppm, 35,66 ppm, 35,67 ppm, 35,68 ppm, 35,69 ppm, 35,70 ppm, 35,71 ppm, 35,72 ppm, 35,73 ppm, 35,74 ppm, 35,75 ppm, 35,76 ppm, 35,77 ppm, 35,78 ppm, 35,79 ppm, 35,80 ppm, 35,81 ppm, 35,82 ppm, 35,83 ppm, 35,84 ppm, 35,85 ppm, 35,86 ppm, 35,87 ppm, 35,88 ppm, 35,89 ppm, 35,90 ppm, 35,91 ppm, 35,92 ppm, 35,93 ppm, 35,94 ppm, 35,95 ppm, 35,96 ppm, 35,97 ppm, 35,98 ppm, 35,99 ppm, 36,00 ppm etc. als mitoffenbart anzusehen sind. Unter einem Ethanolgehalt von höchstens 0,5 Vol.-% sind dementsprechend Ethanolgehalte von 0,50 Vol.-%, 0,49 Vol.-%, 0,48 Vol.-%, 0,47 Vol.-%, 0,46 Vol.-%, 0,45 Vol.-%, 0,44 Vol.-%, 0,43 Vol.-%, 0,42 Vol.-%, 0,41 Vol.-%, 0,40 Vol.-%, 0,39 Vol.-%, 0,38 Vol.-%, 0,37 Vol.-%, 0,36 Vol.-%, 0,35 Vol.-%, 0,34 Vol.-%, 0,33 Vol.-%, 0,32 Vol.-%, 0,31 Vol.-%, 0,30 Vol.-%,

0,29 Vol.-%, 0,28 Vol.-%, 0,27 Vol.-%, 0,26 Vol.-%, 0,25 Vol.-%, 0,24 Vol.-%, 0,23 Vol.-%, 0,22 Vol.-%, 0,21 Vol.-%, 0,20 Vol.-%, 0,19 Vol.-%, 0,18 Vol.-%, 0,17 Vol.-%, 0,16 Vol.-%, 0,15 Vol.-%, 0,14 Vol.-%, 0,13 Vol.-%, 0,12 Vol.-%, 0,11 Vol.-%, 0,10 Vol.-% oder weniger zu verstehen.

Weitere Vorteile ergeben sich dadurch, dass das Bier einen Ethanolgehalt von höchstens 0,1 Vol.-%, insbesondere von höchstens 0,045 Vol.-% aufweist. Das heißt, dass das bierhaltige Nahrungs- und/oder Genussmittel einen Ethanolgehalt von 0,100 Vol.-%, 0,099 Vol.-%, 0,098 Vol.-%, 0,097 Vol.-%, 0,096 Vol.-%, 0,095 Vol.-%, 0,094 Vol.-%, 0,093 Vol.-%, 0,092 Vol.-%, 0,091 Vol.-%, 0,090 Vol.-%, 0,089 Vol.-%, 0,088 Vol.-%, 0,087 Vol.-%, 0,086 Vol.-%, 0,085 Vol.-%, 0,084 Vol.-%, 0,083 Vol.-%, 0,082 Vol.-%, 0,081 Vol.-%, 0,080 Vol.-%, 0,079 Vol.-%, 0,078 Vol.-%, 0,077 Vol.-%, 0,076 Vol.-%, 0,075 Vol.-%, 0,074 Vol.-%, 0,073 Vol.-%, 0,072 Vol.-%, 0,071 Vol.-%, 0,070 Vol.-%, 0,069 Vol.-%, 0,068 Vol.-%, 0,067 Vol.-%, 0,066 Vol.-%, 0,065 Vol.-%, 0,064 Vol.-%, 0,063 Vol.-%, 0,062 Vol.-%, 0,061 Vol.-%, 0,060 Vol.-%, 0,059 Vol.-%, 0,058 Vol.-%, 0,057 Vol.-%, 0,056 Vol.-%, 0,055 Vol.-%, 0,054 Vol.-%, 0,053 Vol.-%, 0,052 Vol.-%, 0,051 Vol.-%, 0,050 Vol.-%, 0,049 Vol.-%, 0,048 Vol.-%, 0,047 Vol.-%, 0,046 Vol.-%, 0,045 Vol.-%, 0,044 Vol.-%, 0,043 Vol.-%, 0,042 Vol.-%, 0,041 Vol.-%, 0,040 Vol.-%, 0,039 Vol.-%, 0,038 Vol.-%, 0,037 Vol.-%, 0,036 Vol.-%, 0,035 Vol.-%, 0,034 Vol.-%, 0,033 Vol.-%, 0,032 Vol.-%, 0,031 Vol.-%, 0,030 Vol.-%, 0,029 Vol.-%, 0,028 Vol.-%, 0,027 Vol.-%, 0,026 Vol.-%, 0,025 Vol.-%, 0,024 Vol.-%, 0,023 Vol.-%, 0,022 Vol.-%, 0,021 Vol.-%, 0,020 Vol.-%, 0,019 Vol.-%, 0,018 Vol.-%, 0,017 Vol.-%, 0,016 Vol.-%, 0,015 Vol.-%, 0,014 Vol.-%, 0,013 Vol.-%, 0,012 Vol.-%, 0,011 Vol.-%, 0,010 Vol.-%, 0,009 Vol.-%, 0,008 Vol.-%, 0,007 Vol.-%, 0,006 Vol.-%, 0,005 Vol.-%, 0,004 Vol.-%, 0,003 Vol.-%, 0,002 Vol.-%, 0,001 Vol.-% oder weniger aufweisen kann oder vollständig ethanolfrei sein kann. Biere mit einem Ethanolgehalt von 0,099 % oder weniger werden auch als "0.0 %-Biere" bezeichnet. Damit können derartige Nahrungs- und/oder Genussmittel auch in Ländern hergestellt oder gehandelt werden, in denen jeglicher Konsum von Ethanol verboten ist, wobei das Nahrungs- und/oder Genussmittel trotzdem ein biertypisches Aromaprofil, beispielsweise ähnlich oder gleich einem Schank-, Lager- oder Vollbier, besitzt.

Es ist möglich, alkoholfreie Biere herzustellen, die höchstens 0,1 Vol.-% Alkohol oder weniger enthalten, dennoch ein vollbiertypisches Aromaprofil besitzen und zusätzlich den Anforderungen der deutschen Bierverordnung ("Deutsches Reinheitsgebot") oder analogen Regularien entsprechen bzw. keine deklarationspflichtigen Zutaten neben Wasser, Getreide, Hopfen und gegebenenfalls Hefe besitzen. Für spontanvergorenes Bier wird eine implizite Hefezugabe angenommen.

Unter Konzentrationen von mindestens 0,1 ppm sind im Rahmen der vorliegenden Offenbarung beispielsweise Konzentrationen von 0,10 ppm, 0,11 ppm, 0,12 ppm, 0,13 ppm, 0,14 ppm, 0,15 ppm, 0,16 ppm, 0,17 ppm, 0,18 ppm, 0,19 ppm, 0,20 ppm, 0,21 ppm, 0,22 ppm, 0,23 ppm, 0,24 ppm, 0,25 ppm, 0,26 ppm, 0,27 ppm, 0,28 ppm, 0,29 ppm, 0,30 ppm, 0,31 ppm, 0,32 ppm, 0,33 ppm, 0,34 ppm, 0,35 ppm, 0,36 ppm, 0,37 ppm, 0,38 ppm, 0,39 ppm, 0,40 ppm, 0,41 ppm, 0,42 ppm, 0,43 ppm, 0,44 ppm, 0,45 ppm, 0,46 ppm, 0,47 ppm, 0,48 ppm, 0,49 ppm, 0,50 ppm, 0,51 ppm, 0,52 ppm, 0,53 ppm, 0,54 ppm, 0,55 ppm, 0,56 ppm, 0,57 ppm, 0,58 ppm, 0,59 ppm, 0,60 ppm, 0,61 ppm, 0,62 ppm, 0,63 ppm, 0,64 ppm, 0,65 ppm, 0,66 ppm, 0,67 ppm, 0,68 ppm, 0,69 ppm, 0,70 ppm, 0,71 ppm, 0,72 ppm, 0,73 ppm, 0,74 ppm, 0,75 ppm, 0,76 ppm, 0,77 ppm, 0,78 ppm, 0,79 ppm, 0,80 ppm, 0,81 ppm, 0,82 ppm, 0,83 ppm, 0,84 ppm, 0,85 ppm, 0,86 ppm, 0,87 ppm, 0,88 ppm, 0,89 ppm, 0,90 ppm, 0,91 ppm, 0,92 ppm, 0,93 ppm, 0,94 ppm, 0,95 ppm, 0,96 ppm, 0,97 ppm, 0,98 ppm, 0,99 ppm, 1 ppm, 2 ppm, 3 ppm, 4 ppm, 5 ppm, 6 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, 20 ppm, 21 ppm, 22 ppm, 23 ppm, 24 ppm, 25 ppm, 26 ppm, 27 ppm, 28 ppm, 29 ppm, 30 ppm, 31 ppm, 32 ppm, 33 ppm, 34 ppm, 35 ppm, 36 ppm, 37 ppm, 38 ppm, 39 ppm, 40 ppm, 41 ppm, 42 ppm, 43 ppm, 44 ppm, 45 ppm, 46 ppm, 47 ppm, 48 ppm, 49 ppm, 50 ppm, 51 ppm, 52 ppm, 53 ppm, 54 ppm, 55 ppm, 56 ppm, 57 ppm, 58 ppm, 59 ppm, 60 ppm, 61 ppm, 62 ppm, 63 ppm, 64 ppm, 65 ppm, 66 ppm, 67 ppm, 68 ppm, 69 ppm, 70 ppm, 71 ppm, 72 ppm, 73 ppm, 74 ppm, 75 ppm, 76 ppm, 77 ppm, 78 ppm, 79 ppm, 80 ppm, 81 ppm, 82 ppm, 83 ppm, 84 ppm, 85 ppm, 86 ppm, 87 ppm, 88 ppm, 89 ppm, 90 ppm, 91 ppm, 92 ppm, 93 ppm, 94 ppm, 95 ppm, 96 ppm, 97 ppm, 98 ppm, 99 ppm, 100 ppm, 101 ppm, 102 ppm, 103 ppm, 104 ppm, 105 ppm, 106 ppm, 107 ppm, 108 ppm, 109 ppm, 110 ppm, 111 ppm, 112 ppm, 113 ppm, 114 ppm, 115 ppm, 116 ppm, 117 ppm, 118 ppm, 119 ppm, 120 ppm oder mehr sowie entsprechende Zwischenwerte zu verstehen. Unter einer Massenkonzentration von 0,01 ppm sind dementsprechend Werte von 0,010 ppm, 0,011 ppm, 0,012 ppm, 0,013 ppm, 0,014 ppm, 0,015 ppm, 0,016 ppm, 0,017 ppm, 0,018 ppm, 0,019 ppm, 0,020 ppm, 0,021 ppm, 0,022 ppm, 0,023 ppm, 0,024 ppm, 0,025 ppm, 0,026 ppm, 0,027 ppm, 0,028 ppm, 0,029 ppm, 0,030 ppm, 0,031 ppm, 0,032 ppm, 0,033 ppm, 0,034 ppm, 0,035 ppm, 0,036 ppm, 0,037 ppm, 0,038 ppm, 0,039 ppm, 0,040 ppm, 0,041 ppm, 0,042 ppm, 0,043 ppm, 0,044 ppm, 0,045 ppm, 0,046 ppm, 0,047 ppm, 0,048 ppm, 0,049 ppm, 0,050 ppm, 0,051 ppm, 0,052 ppm, 0,053 ppm, 0,054 ppm, 0,055 ppm, 0,056 ppm, 0,057 ppm, 0,058 ppm, 0,059 ppm, 0,060 ppm, 0,061 ppm, 0,062 ppm, 0,063 ppm, 0,064 ppm, 0,065 ppm, 0,066 ppm, 0,067 ppm, 0,068 ppm, 0,069 ppm, 0,070 ppm, 0,071 ppm, 0,072 ppm, 0,073 ppm, 0,074 ppm, 0,075 ppm, 0,076 ppm, 0,077 ppm, 0,078 ppm, 0,079 ppm, 0,080 ppm, 0,081 ppm, 0,082 ppm, 0,083 ppm, 0,084 ppm, 0,085 ppm, 0,086 ppm, 0,087 ppm, 0,088 ppm, 0,089 ppm, 0,090 ppm, 0,091 ppm, 0,092 ppm, 0,093 ppm, 0,094 ppm, 0,095 ppm, 0,096 ppm, 0,097 ppm, 0,098 ppm, 0,099 ppm, 0,01 ppm usw. (s. o.) bis 120 ppm oder mehr zu verstehen. Erfindungsgemäß wird das alkoholfreie Bier mit so viel erfindungsgemäßem Aromastoff-Konzentrat ausgemischt, dass die Endkonzentrationen der einzelnen Aromastoffe im ausgemischten Bier in folgenden Bereichen liegen:

- Essigsäureethylester 1 ppm bis 50 ppm; und
- Buttersäureethylester 0,01 ppm bis 0,2 ppm; und
- Isobutanol 2,0 ppm bis 50 ppm; und
- Isoamylacetat 0,2 ppm bis 5 ppm; und
- 2-Methylbutan-1-ol 3 ppm bis 25 ppm; und
- 3-Methylbutan-1-ol 10 ppm bis 100 ppm; und
- Ethylhexanoat 0,1 ppm bis 0,35 ppm; und
- 2-Phenylethylacetat 0,1 ppm bis 1,5 ppm; und
- 2-Phenylethanol mindestens 5 ppm bis 45 ppm,

um ein vollbierartiges Aromaprofil insbesondere nach Art eines Weizen, Export, Helles oder Lagerbier sicherzustellen.

Vorzugsweise wird das "0.0%" Bier mit so viel erfindungsgemäßem Aromastoff-Konzentrat ausgemischt, dass die Endkonzentrationen der einzelnen Aromastoffe im ausgemischten Bier in folgenden Bereichen liegen:

- Essigsäureethylester 1 ppm bis 50 ppm; und
- Buttersäureethylester 0,01 ppm bis 0,2 ppm; und
- Isobutanol 2,0 ppm bis 50 ppm; und
- Isoamylacetat 0,2 ppm bis 5 ppm; und
- 2-Methylbutan-1-ol 3 ppm bis 25 ppm; und
- 3-Methylbutan-1-ol 10 ppm bis 100 ppm; und
- Ethylhexanoat 0,1 ppm bis 0,35 ppm; und
- 2-Phenylethylacetat 0,1 ppm bis 1,5 ppm; und
- 2-Phenylethanol mindestens 5 ppm bis 45 ppm,

um ein vollbierartiges Aromaprofil insbesondere nach Art eines Weizen, Export, Helles, Lagerbier sicherzustellen.

Weiterhin wird lediglich zur Veranschaulichung ein nicht-erfindungsgemäßes Sorptionsmittel offenbart, das ein Polymer mit substituierten und/oder unsubstituierten Phenylethen- und Divinylbenzen-Monomeren umfasst. Mit anderen Worten ist es vorgesehen, dass das Sorptionsmittel ein Monomer der Formel

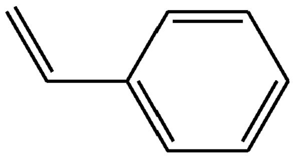

sowie ein oder mehrere Monomere der Formel

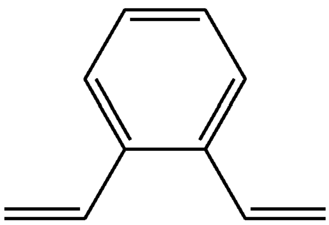
,
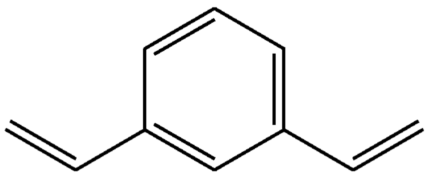

und

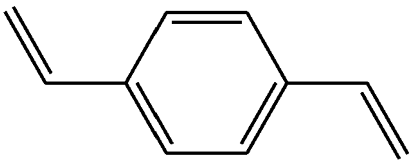

umfasst oder aus diesen Monomeren besteht, wobei die einzelnen Monomere jeweils substituiert oder unsubstituiert sein können. Mit Hilfe des Sorptionsmittels können aus Aromastoff-enthaltenden Fluiden entsprechende Aromastoff-angereicherte Aromastoffkonzentrate und Aromastoff-abgereicherte Permeate mit jeweils authentischem Geruchseindruck erhalten werden. Im Gegensatz zu aus dem Stand der Technik bekannten Sorptionsmitteln erlaubt das Sorptionsmitteln

auch die Bindung polarer Stoffe, wodurch sowohl polare als auch unpolare Stoffe gleichmäßig an- bzw. abgereichert werden. Darüber hinaus können polare Aroma- und Geschmacksstoffe auch vollständig oder zumindest überwiegend desorbiert werden. Deshalb gelingt es mit Hilfe des Sorptionsmittels, auch Farbstoffe und Geschmacksstoffe, insbesondere solche die bitter schmecken, aus dem Fluid zu entfernen, am Sorptionsmittel anzureichern und schließlich nach der Desorption als Konzentrat bereitzustellen. Durch die Wahl des Anteils von Phenylethen- und Divinylbenzen-Monomeren am Gesamtgewicht des Sorptionsmittels sowie durch die Wahl des Verhältnisses von Phenylethen- zu Divinylbenzen-Monomeren können die Zusammensetzung des Konzentrats bzw. die Anreicherungsfaktoren der einzelnen Aromastoffe beeinflusst werden, so dass in jedem Fall ein authentisches Aroma-Konzentrat herstellbar ist. Beispielsweise kann der Massenanteil der Phenylethen-Monomere am Gesamtgewicht des Sorptionsmittels 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 % , 94 %, 95 %, 96 %, 97 %, 98 % oder 99 % betragen, während der Massenanteil der Divinylbenzen-Monomere entsprechend 99 %, 98 %, 97 %, 96 %, 95 %, 94 %, 93 %, 92 %, 91 %, 90 %, 89 %, 88 %, 87 %, 86 %, 85 %, 84 %, 83 %, 82 %, 81 %, 80 %, 79 %, 78 %, 77 %, 76 %, 75 %, 74 %, 73 %, 72 %, 71 %, 70 %, 69 %, 68 %, 67 %, 66 %, 65 %, 64 %, 63 %, 62 %, 61 %, 60 %, 59 %, 58 %, 57 %, 56 %, 55 %, 54 %, 53 %, 52 %, 51 %, 50 %, 49 %, 48 %, 47 %, 46 %, 45 %, 44 %, 43 %, 42 %, 41 %, 40 %, 39 %, 38 %, 37 %, 36 %, 35 %, 34 %, 33 %, 32 %, 31 %, 30 %, 29 %, 28 %, 27 %, 26 %, 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 %, 2 % oder 1 % betragen kann. Vorzugsweise ist das Sorptionsmittel ein Polystyren-Divinylbenzen-Copolymer, wobei grundsätzlich statistische, alternierende, blockförmige und gepfropfte Copolymere vorgesehen sein können. Weiterhin kann vorgesehen sein, dass die Copolymere modifiziert sind bzw. substituierten Monomere umfassen, um beispielsweise basische oder saure Eigenschaften bereitzustellen. Auch andere Monomere oder sonstige in das Polymer einbringbare Verbindungen sind vorgesehen, die dem Polymer gegebenenfalls zusätzlich zu sauren und/oder basischen Gruppen entsprechend der gewünschten Anwendung die gewünschten Sorptionseigenschaften, insbesondere gegenüber polaren Aromastoffen, geben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die nicht alle Merkmale eines ursprünglich formulierten unabhängigen Anspruchs aufweisen. Es sind darüber hinaus Ausführungen und Merkmalskombinationen, insbesondere durch die vorstehend und nachfolgend dargelegten Ausführungen, als offenbart anzusehen, die über die in den Rückbezügen der Ansprüche dargelegten Merkmalskombinationen hinausgehen oder von diesen Merkmalskombinationen abweichen. Dabei zeigt:

Fig. 1 eine Prinzipdarstellung eines nicht-erfindungsgemäßen Adsorptionssystems gemäß einem Ausführungsbeispiel;

Fig. 2 eine Prinzipdarstellung eines erfindungsgemäßen Adsorptionssystems gemäß einem Ausführungsbeispiel, wobei dieses in einem Adsorptionsmodus betrieben wird;

Fig. 3 eine Prinzipdarstellung des in Fig. 2 gezeigten erfindungsgemäßen Adsorptionssystems, wobei dieses in einem Desorptionsmodus betrieben wird;

Fig. 4 eine Prinzipdarstellung des erfindungsgemäßen Adsorptionssystems gemäß einem weiteren Ausführungsbeispiel;

Fig. 5 eine Prinzipdarstellung des erfindungsgemäßen Adsorptionssystems gemäß einem weiteren Ausführungsbeispiel;

Fig. 6 eine Prinzipdarstellung des erfindungsgemäßen Adsorptionssystems gemäß einem weiteren Ausführungsbeispiel;

Fig. 7 eine schematische Schnittansicht eines Arbeitsraums mit zwei fluidisch miteinander verbundenen Kanälen, die ineinander verschachtelt in einem gemeinsamen Gehäuse angeordnet sind;

Fig. 8 eine schematische Schnittansicht eines Arbeitsraums mit vier fluidisch miteinander verbundenen Kanälen, die ineinander verschachtelt in einem gemeinsamen Gehäuse angeordnet sind;

Fig. 9 eine Prinzipdarstellung eines Adsorptionssystems gemäß einem weiteren Ausführungsbeispiel;

Fig. 10 eine Prinzipdarstellung eines Adsorptionssystems gemäß einem weiteren Ausführungsbeispiel;

Fig. 11 eine schematische Schnittansicht von vier Arbeitsräumen mit unterschiedlichen Geometrien;

Fig. 12 eine Prinzipdarstellung eines weiteren Ausführungsbeispiels des erfindungsgemäßen Adsorptionssystems;

Fig. 13 eine Prinzipdarstellung eines weiteren Ausführungsbeispiels des erfindungsgemäßen Adsorptionssystems;

Fig. 14 eine Prinzipdarstellung eines weiteren Ausführungsbeispiels des erfindungsgemäßen Adsorptionssystems;

Fig. 15 eine Prinzipdarstellung eines weiteren Ausführungsbeispiels des erfindungsgemäßen Adsorptionssystems;

Fig. 16 eine Prinzipdarstellung eines weiteren Ausführungsbeispiels des erfindungsgemäßen Adsorptionssystems;

Fig. 17 eine schematische Schnittansicht eines unterteilten Arbeitsraums;

Fig. 18 eine schematische Aufsicht eines DIN-Flansches;

Fig. 19 eine schematische Aufsicht des DIN-Flansches, wobei ein Trennboden in eine Durchtrittsöffnung eingeschweißt ist;

Fig. 20 eine schematische Aufsicht des Trennbodens;

Fig. 21 eine schematische Aufsicht des DIN-Flansches, wobei der Trennboden in die Mitte der Dichtung über der Durchtrittsöffnung eingelegt ist;

Fig. 22 eine schematische Darstellung eines spiralförmigen Arbeitsraums;

Fig. 23 eine schematische Darstellung mehrerer zickzackförmig angeordneter Arbeitsräume mit einer Pumpeinrichtung pro Kehre;

Fig. 24 eine schematische Darstellung mehrerer zickzackförmig angeordneter Arbeitsräume mit einer Pumpeinrichtung für jede zweite Kehre;

Fig. 25 eine schematische Darstellung eines mäanderförmigen Arbeitsraums ohne Pumpeinrichtungen;

Fig. 26 eine Prinzipdarstellung eines weiteren Ausführungsbeispiels des erfindungsgemäßen Adsorptionssystems;

Fig. 27 eine Prinzipdarstellung einer erfindungsgemäßen Hochkonzentrationseinrichtung;

Fig. 28 eine Prinzipdarstellung eines weiteren Ausführungsbeispiels des erfindungsgemäßen Adsorptionssystems;

Fig. 29 eine Prinzipdarstellung eines weiteren Ausführungsbeispiels des erfindungsgemäßen Adsorptionssystems; und

Fig. 30 ein vereinfachtes Flussdiagramm eines Verfahrensablaufs zur Herstellung eines Aromastoff-Konzentrats mit einem biertypischen Aroma.

Fig. 1 zeigt eine Prinzipdarstellung eines Adsorptionssystems 10 gemäß einem ersten, nicht-erfindungsgemäßen Ausführungsbeispiel. Das gezeigte Adsorptionssystem 10 ermöglicht eine Prozessführung zur Isolierung von Aromastoffen als Aromastoff-Konzentrat aus einem aromastoffhaltigen Fluid, wobei einerseits eine besonders hohe Anreicherung der Aromastoffe im Aromastoff-Konzentrat oder Extrakt und andererseits die Beibehaltung eines authentischen Aromaprofils gewährleistet sind. Zu diesem Zweck umfasst das Adsorptionssystem 10 im gezeigten Ausführungsbeispiel drei Arbeitsräume 12, die über ein Leitungssystem 13, das einen ersten Fluidpfad bildet, fluidisch miteinander gekoppelte und jeweils mit einem Sorptionsmittel als stationäre Phase befüllt sind. Die Arbeitsräume 12 können grundsätzlich auch als Säule oder Extraktionszelle bezeichnet werden und besitzen im gezeigten Ausführungsbeispiel jeweils eine kreiszylindrische Form mit identischen geometrischen Abmessungen. Damit besitzen alle Arbeitsräume 12 entlang ihrer jeweiligen Längsachsen L konstante Querschnittsdicken. Weiterhin können anstelle von drei Arbeitsräumen 12 auch nur ein oder zwei oder vier oder mehr Arbeitsräume 12 vorgesehen sein. Im vorliegenden Ausführungsbeispiel sind alle Arbeitsräume 12 mit dem gleichen, reinsortigen Styrol-Divinylbenzol-Copolymer als Sorptionsmittel befüllt. Im Rahmen der vorliegenden Offenbarung bedeutet "reinsortig" nicht, dass Als Sorptionsmittel können generell beispielsweise chemische Verbindungen aus der Gruppe Polyaromate, Polystyrole, Poly(meth)acrylate, Polypropylene, Polyester, Polytetrafluorethylen und vernetzte Polystyrole, insbesondere Copolymere aus Ethylvinylbenzol und Divinylbenzol, aus Vinylpyrrolidon und Divinylbenzol, aus Vinylpyridin und Divinylbenzol und/oder aus Styrol und Divinylbenzol verwendet. Ebenso können Ionenaustausch-Materialien vorgesehen sein. Eine vorteilhafte Sorptionscharakteristik wird auch durch die Verwendung von Sorptionsmitteln erzielt, die Monomere mit funktionellen Gruppen umfassen. So haben sich besonders Sulfonsäuregruppen, ternäre (z.B. Methacryl Diethylamin) und quaternäre Ammoniumgruppen (z. B. Phenyltrimethylammonium), Amide (z.B. Benzamide), Amine und Halogen-modifizierte Aromaten, Heterocyclen wie 3-Pyrrolidon, 2-Pyrrolidon, 2-Pyrrolin, 3-Pyrrolin, Pyrrol und/oder Piperazin sowie halogenierte aliphatische Seitenketten bewährt. Auch gelartige Polymere können eingesetzt werden. Es können grundsätzlich auch modifizierte Polyacrylate verwendet werden, insbesondere solche, die folgende Monomeren umfassen: Acrylsäure, Acrylnitril und Alkylacrylate wie beispielsweise Methylmethacrylat, Methylacrylat, Ethylacrylat, 2-Chlorethylvinylether, 2-Ethylhexylacrylat, Hydroxyethylmethacrylat, Butylacrylat und Butylmethacrylat. Alternativ oder zusätzlich sind CMS Sorbentien (CMS: carbon molecular sieve), die aus der Pyrolyse polymerer Vorläufer gebildet werden und selbst eine hochporöse Kohlenstoffstruktur aufweisen. Auch SGPC Sorbentien (SGPC: spherical graphitized polymer carbon) und GCB Sorbentien sind einsetzbbar (GCB: graphitized carbon black). Alternativen sind Polymere auf der Basis von 2,6-Diphenyleneoxid, z. B. Poly(2,6-diphenyl-p-phenylenoxid), oder solche mit Iminodiacetat-Funktionalität.

Mit Hilfe dieser Sorptionsmittel, einzeln oder in beliebiger Kombination, werden eine besonders hohe Adsorption des oder der Aromastoffe und damit eine besonders hohe Rückgewinnungsquote sichergestellt. Zudem kann hierdurch das Sorptionsmittel optimal in Abhängigkeit des jeweiligen Fluids bzw. der darin enthaltenen Aromastoffe ausgewählt werden. Vorzugsweise werden diese Polymere mittels geeigneter Reagentien während der Polymerisation des Grundpolymers beziehungsweise durch eine Nachbehandlung des Grundpolymers mit entsprechenden Reagentien zusätzlich funktionalisiert, um die gewünschte Sorbtionscharakteristik zu erreichen.

Es kann aber auch vorgesehen sein, dass wenigstens einer der Arbeitsräume 12 mit einer Mischung aus zwei oder mehr Sorptionsmitteln befüllt ist und/oder dass unterschiedliche Arbeitsräume 12 mit unterschiedlichen Sorptionsmitteln oder Sorptionsmittel-Gemischen befüllt sind, um ein spezifisches und optimal an das jeweils zu prozessierende Fluid angepasstes Adsorptionsverhalten zu erzielen. Die drei Arbeitsräume 12 stellen zusammengenommen ein besonders langes und gleichzeitig vergleichsweise dünnes Sorbensbett zur Verfügung, da ein Verhältnis von mittlerer Querschnittsdicke zu kombinierter Gesamtlänge der Arbeitsräume 12 weniger als 0,3 beträgt. Beispielsweise beträgt die mittlerer Querschnittsdicke zwischen 3 mm und 80 cm, während die Gesamtlänge zwischen 2,6 m und 80 m beträgt.

Weiterhin umfasst das Adsorptionssystem 10 insgesamt vier Pumpeinrichtungen 14, die vor, zwischen und nach den Arbeitsräumen 12 angeordnet sind.

Zum Beladen der in den Arbeitsräumen 12 angeordneten Sorptionsmittel wird das Adsorptionssystem 10 in einem Absorptionsmodus betrieben. Hierzu wird das aromastoffhaltige Fluid als mobile Phase durch den Einlass 16 in das Leitungssystem 13 eingebracht und gemäß Pfeil A mit Hilfe der Pumpeinrichtungen 14 seriell durch die Arbeitsräume 12 geleitet. Das Fluid kann beispielsweise ein wässriges Aroma sein. Beispielsweise ist das Fluid ein Lebensmittel aus der Gruppe bierhaltiger Nahrungs- und/oder Genussmittel, Bierwürze, Hopfen, Hopfenextrakt, Mälzwasser, Malzbier, Malzwürze und brauereieigener Rohstoffe und Produkte ist und/oder mittels einer Entalkoholisierungsvorrichtung aus einem Ethanol-haltigen Lebensmittel aus der Gruppe bierhaltiger Nahrungs- und/oder Genussmittel erhalten. Dabei adsorbieren die im Fluid vorhandenen Aromastoffe an das Sorptionsmittel. Am Auslass 18 wird dann das dearomatisierte Fluid bzw. Permeat aus dem Leitungssystem 13 entfernt.

Bedarfsweise kann es vorgesehen sein, dass ein Ethanolgehalt des Fluids vor dem Durchleiten durch das Adsorptionssystem 10 auf einen Wert von mindestens 0,5 Vol-% und/oder auf einen Wert von höchstens 50 Vol-% eingestellt wird. Dies erlaubt eine besonders hohe Rückgewinnungsquote, wobei zusätzlich sichergestellt wird, dass ein besonders "authentisches" Aromastoffkonzentrat erhalten wird, das heißt ein Aromastoffkonzentrat, bei dem sowohl polare als auch unpolare Aromastoffe zumindest im Wesentlichen gleichmäßig angereichert werden. Der Ethanolgehalt kann dabei grundsätzlich durch Zugabe von Ethanol bzw. eines Ethanol-reichen Lösungsmittelgemisches und/oder durch Zugabe eines ethanolfreien Lösungsmittels, beispielsweise von Wasser, bzw. durch Zugabe eines Ethanol-armen Lösungsmittelgemisches auf den geforderten Wert eingestellt werden. Beispielsweise kann der Ethanolgehalt auf einen Wert von 0,5 Vol.-%, 1,0 Vol.-%, 1,5 Vol.-%, 2,0 Vol.-%, 2,5 Vol.-%, 3,0 Vol.-%, 3,5 Vol.-%, 4,0 Vol.-%, 4,5 Vol.-%, 5,0 Vol.-%, 5,5 Vol.-%, 6,0 Vol.-%, 6,5 Vol.-%, 7,0 Vol.-%, 7,5 Vol.-%, 8,0 Vol.-%, 8,5 Vol.-%, 9,0 Vol.-%, 9,5 Vol.-%, 10,0 Vol.-%,

10,5 Vol.-%, 11,0 Vol.-%, 11,5 Vol.-%, 12,0 Vol.-%, 12,5 Vol.-%, 13,0 Vol.-%, 13,5 Vol.-%, 14,0 Vol.-%, 14,5 Vol.-%, 15,0 Vol.-%, 15,5 Vol.-%, 16,0 Vol.-%, 16,5 Vol.-%, 17,0 Vol.-%, 17,5 Vol.-%, 18,0 Vol.-%, 18,5 Vol.-%, 19,0 Vol.-%, 19,5 Vol.-%, 20,0 Vol.-%, 20,5 Vol.-%, 21,0 Vol.-%, 21,5 Vol.-%, 22,0 Vol.-%, 22,5 Vol.-%, 23,0 Vol.-%, 23,5 Vol.-%, 24,0 Vol.-%, 24,5 Vol.-%, 25,0 Vol.-%, 25,5 Vol.-%, 26,0 Vol.-%, 26,5 Vol.-%, 27,0 Vol.-%, 27,5 Vol.-%, 28,0 Vol.-%, 28,5 Vol.-%, 29,0 Vol.-%, 29,5 Vol.-%, 30,0 Vol.-%, 30,5 Vol.-%, 31,0 Vol.-%, 31,5 Vol.-%, 32,0 Vol.-%, 32,5 Vol.-%, 33,0 Vol.-%, 33,5 Vol.-%, 34,0 Vol.-%, 34,5 Vol.-%, 35,0 Vol.-%, 35,5 Vol.-%, 36,0 Vol.-%, 36,5 Vol.-%, 37,0 Vol.-%, 37,5 Vol.-%, 38,0 Vol.-%, 38,5 Vol.-%, 39,0 Vol.-%, 39,5 Vol.-%, 40,0 Vol.-%, 40,5 Vol.-%, 41,0 Vol.-%, 41,5 Vol.-%, 42,0 Vol.-%, 42,5 Vol.-%, 43,0 Vol.-%, 43,5 Vol.-%, 44,0 Vol.-%, 44,5 Vol.-%, 45,0 Vol.-%, 45,5 Vol.-%, 46,0 Vol.-%, 46,5 Vol.-%, 47,0 Vol.-%, 47,5 Vol.-%, 48,0 Vol.-%, 48,5 Vol.-%, 49,0 Vol.-%, 49,5 Vol.-% oder 50,0 Vol.-% eingestellt werden, wobei entsprechende Zwischenwerte als mitoffenbart anzusehen sind. Vorzugsweise wird der Ethanolgehalt auf einen Wert zwischen etwa 1,5 Vol.-% und etwa 10 Vol.-% Ethanol eingestellt. Alternativ kann das Fluid auch frei von Ethanol sein. Ebenso kann grundsätzlich vorgesehen sein, dass der Ethanolgehalt des Fluids nicht eingestellt wird, sondern dass das Fluid in der jeweils vorliegenden Form bzw. mit einem jeweils gegebenen Ethanolgehalt, einschließlich eines Gehalts von 0 %. verwendet wird.

Zum Entladen wird das Adsorptionssystem 10 anschließend in einen Desorptionsmodus geschaltet. Hierzu wird über einen Einlass 16' ein Desorptionsmittel, beispielsweise Wasser, Ethanol oder ein Ethanol/Wasser-Gemisch, in das Leitungssystem 13 eingebracht und mit Hilfe der umkehrbaren Pumpeinrichtungen 14 in entgegen gesetzter Förderrichtung gemäß Pfeil B seriell durch die Arbeitsräume 12 geleitet. Beim Durchleiten des Desorptionsmittels desorbieren die am Sorptionsmittel gebundenen Aromastoffe wieder, so dass am Auslass 18' ein Aromastoff-Konzentrat erhalten und aus dem Leitungssystem 13 entfernt wird.

Durch die fluidische Verknüpfung der einzelnen Arbeitsräume 12 und die vor-, zwischen- und nachgelagerten umkehrbaren Pumpeinrichtungen 14 wird erreicht, dass deutlich höhere Fließgeschwindigkeiten bei der Beladung und Entladung möglich sind als dies bei der Verwendung eines einzelnen Arbeitsraums 12 mit gleichem Volumen möglich wäre. Zusätzlich kann bei der Desorption eine dem verhältnismäßig kleinen Durchmesser bzw. Querschnittsfläche der Arbeitsräume 12 entsprechende geringe Menge an Desorptionsmittel eingesetzt werden, wodurch eine höhere Aufkonzentrierung der Aromastoffe bei geringerem Desorptionsmittelbedarf erreicht wird. Zudem ist es vorteilhaft ein besonders langes Sorbensbett zu verwenden, um sowohl polare als auch unpolare Aromastoffe möglichst quantitativ zu adsorbieren, um entsprechend authentische Aromastoff-Konzentrate und möglichst aromafreie Permeate zu erhalten.

Grundsätzlich ist es im Rahmen der vorliegenden Erfindung bevorzugt, wenn sich zumindest die Verhältnisse der Massenanteile der bis zu fünf aromaprägendsten und vom Desorptionsmittel unterschiedlichen Aromastoffe im Aromastoffkonzentrat um höchstens $\pm$ 50 % von den korrespondierenden Verhältnissen ihrer Massenanteile im Fluid unterscheiden und/oder dass bezogen auf das Fluid jeder vom Desorptionsmittel unterschiedliche Aromastoff im Einzelvergleich mit jedem anderen vom Desorptionsmittel unterschiedlichen Aromastoff im Aromastoffkonzentrat jeweils um einen massebezogenen Faktor von höchstens 1,49 angereichert vorliegt. Dies ermöglicht die Bereitstellung eines besonders "authentischen" Aromastoffkonzentrats, das heißt eines Aromastoffkonzentrats, in welchem alle oder zumindest die fünf das Gesamtaroma prägenden, im ursprünglichen Fluid vorhandenen Aromastoffe - unabhängig von ihren physikalischen Eigenschaften wie beispielsweise Polarität oder Siedepunkt - zumindest im Wesentlichen gleichmäßig im Aromastoffkonzentrat angereichert sind, so dass die sensorischen Eigenschaften des Aromastoffkonzentrats denjenigen des Fluids entsprechen, insbesondere wenn das Aromastoffkonzentrat derart rückverdünnt wird, dass die Konzentration(en) des oder der Aromastoffe zumindest im Wesentlichen wieder ihren ursprünglichen Konzentrationen im Fluid entsprechen. Zumindest die 2, 3, 4 oder 5 Aromastoffe, die von allen im Fluid bzw. im Aromastoffkonzentrat vorhandenen Aromastoffen maßgeblich zum Gesamtaroma des Fluid beitragen, werden möglichst gleichmäßig im Aromastoffkonzentrat angereichert, so dass sich ihre massebezogenen Konzentrationen im Fluid und im Aromastoffkonzentrat im paarweisen Vergleich betragsmäßig um maximal 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 % oder 50 % unterscheiden. Welche der im Fluid vorhandenen Aromastoffe zu den bis zu fünf aromaprägendsten gehören, kann mit Hilfe von dem Fachmann geläufigen Methoden im Rahmen fachüblicher Versuche ermittelt werden. Lediglich beispielhaft wird auf die an sich bekannte Bestimmung von Aromawerten oder auf Weglassversuche mit Rekombinaten verwiesen. Grundsätzlich kann ebenso vorgesehen sein, dass im Aromastoffkonzentrat ein oder mehrere Aromastoffe einer ersten Gruppe unabhängig voneinander jeweils um den Faktor 1,49 oder weniger im Vergleich zu ein oder mehreren Geschmacks- und/oder Duftstoffen einer zweiten Gruppe bezogen auf das ursprünglich bereitgestellte Fluid angereichert sind. Unter einem Faktor von 1,49 oder weniger sind insbesondere Faktoren von 1,49, 1,48, 1,47, 1,46, 1,45, 1,44, 1,43, 1,42, 1,41, 1,40, 1,39, 1,38, 1,37, 1,36, 1,35, 1,34, 1,33, 1,32, 1,31, 1,30, 1,29, 1,28, 1,27, 1,26, 1,25, 1,24, 1,23, 1,22, 1,21, 1,20, 1,19, 1,18, 1,17, 1,16, 1,15, 1,14, 1,13, 1,12, 1,11, 1,10, 1,09, 1,08, 1,07, 1,06, 1,05, 1,04, 1,03, 1,02, 1,01, 1,00, 0,99, 0,98, 0,97, 0,96, 0,95, 0,94, 0,93, 0,92, 0,91, 0,90, 0,89, 0,88, 0,87, 0,86, 0,85, 0,84, 0,83, 0,82, 0,81, 0,80, 0,79, 0,78, 0,77, 0,76, 0,75, 0,74, 0,73, 0,72, 0,71, 0,70, 0,69, 0,68, 0,67, 0,66, 0,65, 0,64, 0,63, 0,62, 0,61, 0,60, 0,59, 0,58, 0,57, 0,56, 0,55, 0,54, 0,53, 0,52, 0,51 oder 0,50 zu verstehen. Die Aromastoffe der ersten Gruppe können beispielsweise ausgewählt werden aus der Gruppe Ethylbutyrat, Ethylmethylbutyrat-2, Methylcapronat, Linalool, alpha-Ionon, beta-Ionon, delta-Decalacton, 2E-Hexenol, 2E-Hexenal, Hexanal, beta-Damascenon, Octanal, Nootkaton, p-Menthenthiol-1, 8, Benzaldehyd, gamma-Decalacton, Linalooloxid, Furfurylthiol-2, 4-Vinylguaiacol, isomere Isopropylmethoxypyrazine, isomere Ethyldimethylpyrazine, Indol, Methyljasmonat, Jasminlacton, Dipropyldisulfid, Dipropy-Itrisulfid, Methypropyldisulfid, L-Menthol, Menthon, L-Carvon, Isoamylacetat (3-Methylbutylacetat), 2-Acetyl-1-pyrrolin, 2E, 4Z-Decadienal, 3, 5-Dimethyltrithiolan, Citral, Caryophyllen, 1-Octen-3-ol, 1-Octen-3-on, Hydroxybenzylaceton, cis-3-Hexenol, 3Z-Hexenol, Methylbutyrat, Geraniol, Ethyl-2E, 4Z-decadienoat, 8-Mercapto-p-Menth-1-en-3-on, 2E, 4Z, 7Z-Tridecatrienal, 2E, 5Z-Undecadienal, Nonanal, 4-Ocanolid, 5-Octanolid, 1-Phenylethanol, 2-Phenylethanol, Weinlacton und Menthofurolactone. Die Aromastoffe der zweiten Gruppe können beispielsweise ausgewählt werden aus C1-C5-Alkohole, bevorzugt, Methanol, Ethanol, Propanol, Isopropanol, Butanol, 2- Methylbutan-1-ol, 3- Methylbutan-1-ol, Diacetyl, Acetaldehyd, Furfural, Furfurylalkohol, Phenol, Acetoin, Dimethylsulfid, Methylmercaptan, Milchsäure und Essigsäure. Mit anderen Worten kann es insbesondere vorgesehen sein, dass im Aromastoffkonzentrat keine oder eine möglichst geringe relative Anreicherung (z. B. ≤ ± 50 %) von eher hydrophoben Aromastoffen (erste Gruppe) gegenüber eher hydrophilen Aromastoffen (zweite Gruppe) bezogen auf das Fluid erfolgt, so dass ein authentisches Aromastoffkonzentrat mit einer möglichst gleichmäßigen Anreicherung aller im Fluid ursprünglich vorhandenen Aromastoffe unabhängig von ihrer Polarität hergestellt wird. Entsprechend kann grundsätzlich auch ein im Vergleich zum Stand der Technik verbessertes Aromastoff-abgereichertes Permeat erzeugt werden, da die im Fluid enthaltenen Aromastoffe entsprechend gleichmäßiger im Permeat abgereichert werden, so dass das Permeat ein abgeschwächtes, aber weiterhin authentisches Geschmacks- und Aromaprofil besitzt oder zumindest für den Menschen weitgehend oder vollständig geruchlos ist.

Alternativ oder zusätzlich ist es vorgesehen, dass sich die Verhältnisse der Massenanteile von wenigstens zwei und vorzugsweise von wenigstens drei unterschiedlichen Aromastoffen im Aromastoffkonzentrat um höchstens ± 50 % von den korrespondierenden Verhältnissen ihrer Massenanteile im Fluid unterscheiden, wobei mindestens einer der Aromastoffe hydrophob (aus der ersten Gruppe ausgewählt) und mindestens ein weiterer Aromastoff hydrophil (aus der zweiten Gruppe ausgewählt) ist. Auch hierdurch wird die Bereitstellung eines besonders "authentischen" Aromastoffkonzentrats ermöglicht, in welchem polare und unpolare Aromastoffe möglichst gleichmäßig angereicht vorliegen.

Der Aufkonzentrierungs- bzw. Anreicherungsfaktor jedes Aromastoffs im Aromastoffkonzentrat gegenüber dem ursprünglichen Fluid kann grundsätzlich mindestens 1,01, insbesondere mindestens 10, vorzugsweise mindestens 100, bevorzugt mindestens 1000 und insbesondere mindestens 15000 betragen. Beispielsweise kann der Aufkonzentrierungsfaktor jedes Aromastoffs 1,01, 1,02, 1,03, 1,04, 1,05, 1,06, 1,07, 1,08, 1,09, 1,10, 1,11, 1,12, 1,13, 1,14, 1,15, 1,16, 1,17, 1,18, 1,19, 1,20, 1,21, 1,22, 1,23, 1,24, 1,25, 1,26, 1,27, 1,28, 1,29, 1,30, 1,31, 1,32, 1,33, 1,34, 1,35, 1,36, 1,37, 1,38, 1,39, 1,40, 1,41, 1,42, 1,43, 1,44, 1,45, 1,46, 1,47, 1,48, 1,49, 1,50, 1,51, 1,52, 1,53, 1,54, 1,55, 1,56, 1,57, 1,58, 1,59, 1,60, 1,61, 1,62, 1,63, 1,64, 1,65, 1,66, 1,67, 1,68, 1,69, 1,70, 1,71, 1,72, 1,73, 1,74, 1,75, 1,76, 1,77, 1,78, 1,79, 1,80, 1,81, 1,82, 1,83, 1,84, 1,85, 1,86, 1,87, 1,88, 1,89, 1,90, 1,91, 1,92, 1,93, 1,94, 1,95, 1,96, 1,97, 1,98, 1,99, 2, 5, 10, 50, 100, 500, 1000, 1500, 2000, 2500, 3000, 3500, 4000, 4500, 5000, 5500, 6000, 6500, 7000, 7500, 8000, 8500, 9000, 9500, 10000, 10500, 11000, 11500, 12000, 12500, 13000, 13500, 14000, 14500, 15000, 15500, 16000, 16500, 17000, 17500, 18000, 18500, 19000, 19500, 20000, 20000, 25000, 30000, 35000, 40000, 45000, 50000, 55000, 60000, 65000, 70000, 75000, 80000, 85000, 90000, 95000, 100000 oder mehr betragen, wobei entsprechende Zwischenwerte als mitoffenbart anzusehen sind. Mit anderen Worten muss das Aromastoffkonzentrat um einen entsprechenden Faktor rückverdünnt werden, damit die Aromastoffe wieder in ihrer Ausgangskonzentration wie im Fluid vorliegen. Je höher der Aufkonzentrierungsfaktor ist, umso geringer sind die benötigte Lager- und Transportfläche und umso einfacher ist die Weiterverarbeitung des Aromastoffkonzentrats. Ebenso erleichtern hohe Aufkonzentrierungsfaktoren die Herstellung von pulverförmigen bzw. eingekapselten Aromen. Weiterhin sinkt mit der Aufkonzentrierung der Anteil von Lösungsmittel(n), insbesondere von Ethanol, so dass beispielsweise auch ethanolfreie Aromastoffkonzentrate herstellbar sind, die den Halal-Bestimmungen entsprechen.

Grundsätzlich kann es auch vorgesehen sein, dass das Desorptionsmittel die gleiche chemische Verbindung ist wie ein im Fluid enthaltener Aromastoff. In diesem Fall wird der betreffende Aromastoff bei der Bestimmung seines Anreichungsgrads im Aromastoffkonzentrat vorzugsweise nicht berücksichtigt, da von vornherein keine sinnvollen Aussagen über seine An- und Abreicherung im Konzentrat bzw. Permeat möglich sind. Beispielsweise kann das ursprüngliche Fluid Ethanol als Aromastoff enthalten, so dass diese chemische Verbindung im Fall der Verwendung von Ethanol als Desorptionsmittel vorzugsweise nicht in die Beurteilung der vorstehend genannten Massenanteil-Verhältnisse einfließt. Alternativ kann in diesem Fall die relative Anreicherung eines oder mehrerer Aromastoffe in Bezug auf Ethanol zur Ermittlung des Auf-konzentrationsfaktors zwischen ursprünglichem Fluid und Aromastoff-Konzentrat herangezogen werden.

Fig. 2 zeigt eine Prinzipdarstellung des erfindungsgemäßen Adsorptionssystems 10 gemäß einem weiteren Ausführungsbeispiel. Das Adsorptionssystem 10 ist auf besonders schnelle Beladungsgeschwindigkeit bei gleichzeitiger Maximierung der Extraktkonzentration im AromastoffKonzentrat optimiert. Zu diesem Zweck umfasst das Adsorptionssystem 10 neben drei Arbeitsräumen 12 und vier Pumpeinrichtungen 14 mehrere steuer- und/oder regelbare Ventileinrichtungen 20, 20’ sowie ein im Verglich zum vorhergehenden Ausführungsbeispiel unterschiedlich ausgebildetes Leitungssystem 13. Es ist zu betonen, dass natürlich auch in diesem Fall eine abweichende Anzahl an Arbeitsräumen

12, Pumpeinrichtungen 14 und Ventileinrichtungen 20 vorgesehen sein kann.

Das Adsorptionssystem 10 wird in Fig. 2 im Adsorptionsmodus betrieben, wobei die zum Beladen verwendete Strömungsrichtung mit Pfeilen symbolisiert wird. Zum Beladen der in den Arbeitsräumen 12 angeordneten Sorptionsmitteln wird das aromastoffhaltige Fluid als mobile Phase erneut durch den Einlass 16 in das Leitungssystem 13 eingebracht, mit Hilfe der Pumpeinrichtungen 14 aber parallel durch alle Arbeitsräume 12 gleichzeitig geleitet. Zu diesem Zweck werden die Ventileinrichtungen 20 geöffnet, während die mit 20' gekennzeichneten Ventileinrichtungen geschlossen werden. Die Steuerung und/oder Regelung der Pumpeinrichtungen 14 und/oder der Ventileinrichtungen 20, 20' sowie das Schalten zwischen Adsorptionsmodus und Desorptionsmodus erfolgt erfindungsgemäß grundsätzlich mit Hilfe einer Steuereinrichtung (nicht gezeigt). Die im Fluid enthaltenen Aromastoffe adsorbieren damit gleichzeitig an den Sorptionsmitteln, mit denen die drei Arbeitsräume 12 befüllt sind. Am Auslass 18 wird dann das dearomatisierte Fluid bzw. Permeat aus dem Leitungssystem 13 entfernt.

Die Desorption der Aromastoffe wird anhand von Fig. 3 erläutert, die eine Prinzipdarstellung des im Desorptionsmodus betriebenen Adsorptionssystems 10 zeigt. Im Desorptionsmodus werden nunmehr die mit 20' gekennzeichneten Ventileinrichtungen geöffnet, während die mit 20 gekennzeichneten Ventileinrichtungen geschlossen werden. Durch den Einlass 16' wird nunmehr ein Desorptionsmittel gemäß den Pfeilen in das Leitungssystem 13 gepumpt und mit Hilfe der umkehrbaren Pumpeinrichtungen 14 in entgegen gesetzter Förderrichtung seriell durch die Arbeitsräume 12 geleitet. Beim Durchleiten des Desorptionsmittels desorbieren die am Sorptionsmittel gebundenen Aromastoffe wieder, so dass am Auslass 18' ein Aromastoff-Konzentrat erhalten und aus dem Leitungssystem 13 entfernt wird. Mit anderen Worten erfolgt die Beladung der Sorptionsmittel im Unterschied zum ersten Ausführungsbeispiel parallel, während das Entladen bzw. Desorbieren erneut seriell durchgeführt wird. Dies ermöglicht die besonders schnelle Beladungsgeschwindigkeit bei gleichzeitiger Maximierung der Extraktkonzentration im Aromastoff-Konzentrat.

Fig. 4 zeigt eine Prinzipdarstellung des erfindungsgemäßen Adsorptionssystems 10 gemäß einem weiteren Ausführungsbeispiel. Das Adsorptionssystem 10 umfasst einen ersten Arbeitsraum 12a und einen zweiten Arbeitsraum 12b, die fluidisch miteinander verbunden und mittelbar oder unmittelbar hintereinander angeordnet sind. Dabei kann grundsätzlich vorgesehen sein, dass die Arbeitsräume 12a, 12b in getrennten Gehäusen oder in einem gemeinsamen Gehäuse angeordnet sind. Im Fall einer Anordnung in einem gemeinsamen Gehäuse kann weiterhin vorgesehen sein, dass die Arbeitsräume 12a, 12b durch einen für Flüssigkeiten durchlässigen Trennboden oder dergleichen voneinander getrennt sind, um eine Vermischung der in den Arbeitsräumen 12a, 12b angeordneten Sorptionsmittel zu verhindern. Im vorliegenden Beispiel ist der Arbeitsraum 12b mit einer sogenannten Normalphase und/oder einer polaren gebundene Phase als Sorptionsmittel befüllt. Normalphasen sind beispielsweise modifizierte oder unmodifizierte Kieselgele oder Aluminiumoxide, an denen überwiegend Adsorptionsvorgänge an polaren OH-Gruppen zur Trennung ausgenutzt werden. Polare gebundene Phasen basieren normalerweise ebenfalls auf Kieselgelen, an die Ketten mit bestimmten funktionellen Gruppen gebunden sind. Dadurch sind diese Sorptionsmittel in verschiedenen Graden polar. Die Trennung erfolgt durch jeweils unterschiedliche Mechanismen und in der Regel über eine Kombination mehrerer Effekte (Molekülgrößenausschluss, Adsorption, Verteilung, Ionenaustausch).

Der Arbeitsraum 12a ist demgegenüber mit einer sogenannten Umkehrphase als Sorptionsmittel befüllt. Bei Umkehrphasen (reversed phases) sind die Polaritätsverhältnisse "umgekehrt" im Vergleich zu den Normalphasen. Üblicherweise werden hierzu unpolare Seitenketten an ein Kieselgelgerüst oder an ein Polymer gebunden. Dadurch verhalten sie sich hydrophob. Mit zunehmender Kettenlänge werden die Phasen unpolarer. Der Trennmechanismus basiert überwiegend auf Van-der-Waals-Kräften. Je ähnlicher ein Aromastoff der Kohlenwasserstoffkette der Phase ist, umso größer sind seine Wechselwirkungen mit dem Sorptionsmittel und umso besser ist seine Adsorption an die Umkehrphase.

Zum Beladen, das heißt im Adsorptionsmodus, wird ein aromastoffhaltiges, wässriges Fluid durch den Einlass 16 und die Pumpeinrichtung 14 entgegen der Schwerkraft durch den Arbeitsraum 12b geleitet, um etwaige Lufteinschlüsse zu entfernen. Die Normalphase/polare Phase hält dabei überwiegend polare Aromastoffe zurück, während unpolare zumindest teilweise weiter in den Arbeitsraum 12a gelangen. Das entaromatisierte Fluid wird dann durch den Auslass 18 aus dem Adsorptionssystem 10 entfernt. Die Ventileinrichtungen 20 sind im Adsorptionsmodus geöffnet, während die Ventileinrichtungen 20' geschlossen sind.

Im Desorptionsmodus werden die Ventileinrichtungen 20 geschlossen, während die Ventileinrichtungen 20' geöffnet werden. Die Ventileinrichtung 20" kann bedarfsweise geöffnet oder geschlossen werden. Über den Einlass 16' kann ein erstes Desorptionsmittel, beispielsweise Ethanol, oder ein erstes Desorptionsmittelgemisch eingeleitet und in Schwerkraftrichtung durch die Arbeitsräume 12a, 12b zu einem Fraktionssammler 22 mit vorliegend drei Sammelbehältern 22a-c geleitet werden. Die Sammelbehälter 22a-c können unabhängig voneinander über die Ventileinrichtungen 20a-c geöffnet oder verschlossen werden, um bedarfsweise entsprechende Fraktionen aufzufangen. Es versteht sich, dass die Anzahl und Art der Sammelbehälter variiert werden kann.

Alternativ oder zusätzlich zum ersten Desorptionsmittel kann über einen weiteren Einlass 16" ein zweites Desorptionsmittel oder ein zweites Desorptionsmittelgemisch über das Leitungssystem 13 durch die Arbeitsräume 12a, 12b geleitet werden. Durch entsprechendes Öffnen und Schließen der Ventileinrichtungen 20, 20' und 20" können sowohl

das erste als auch das zweite Desorptionsmittel entweder entgegen der Schwerkraft durch den Arbeitsraum 12b und anschließend durch den Arbeitsraum 12a oder mit der Schwerkraft durch den Arbeitsraum 12a und anschließend durch den Arbeitsraum 12b geleitet werden.

Ebenso ist es generell möglich, einen kontinuierlichen oder stufenweisen Gradienten von erstem und zweitem Desorptionsmittel zu erzeugen, um ein bestimmtes Desorptionsverhalten der adsorbierten Aromastoffe zu erzielen. Weiterhin ist es generell möglich, zunächst eines der Desorptionsmittel von oben nach unten, das heißt mit der Schwerkraft, zu leiten oder einen der Arbeitsräume 12a, 12b zu überschichten und anschließend das andere Desorptionsmittel in der entgegensetzen Richtung von unten nach oben bzw. gegen die Schwerkraft durch die Arbeitsräume 12a, 12b zu leiten. Hierdurch können besonders scharf aufgelöste Fraktionen erhalten und gesammelt werden. Weiterhin können natürlich auch 3, 4, 5, 6 oder mehr Desorptionsmittel als Gemisch und/oder Gradient verwendet werden.

Das Adsorptionssystem 10 ermöglicht damit eine besonders variable und bedarfsgerechte Prozessführung. Zusätzlich ermöglicht die Verwendung unterschiedlicher Sorptionsmitteltypen, das heißt wenigstens einer Normalphase/polaren Phase und wenigstens einer Umkehrphase in den Arbeitsräumen 12a, 12b eine verbesserte Auftrennung der Aromastoffe durch kombinierte Adsorptions- und Verteilungschromatographieeffekte. Somit kann eine Trennung von Aromastoffen aufgrund verbindungsspezifischer Rückhaltekapazitäten an unterschiedlichen Sorptionsmitteln in einem Adsorptionssystem 10 durchgeführt werden. Die Abtrennung bestimmter Fraktionen kann dabei beispielsweise entsprechend ihrer Eindringtiefe in die Umkehrphase (Arbeitsraum 12a) erfolgen. Ebenso kann eine Abtrennung bestimmter Fraktionen entsprechend ihrer Retentionszeit auf der Normalphase (Arbeitsraum 12b) erfolgen.

Fig. 5 zeigt eine Prinzipdarstellung des erfindungsgemäßen Adsorptionssystems 10 gemäß einem weiteren Ausführungsbeispiel. Der grundsätzliche Aufbau des Adsorptionssystems 10 entspricht dabei dem des in Fig. 4 gezeigten Adsorptionssystems 10. Im Unterschied zum vorhergehenden Ausführungsbeispiel umfasst das vorliegende Adsorptionssystem 10 insgesamt vier Arbeitsräume 12a-d zur fraktionierten Auftrennung unterschiedlicher Aromastoffe. Die vier Arbeitsräume 12a-d sind in diesem Beispiel mit identischen Sorptionsmitteln bzw. Sorptionsmittelgemischen befüllt und bilden damit vier Zonen aus, in denen sich die Aromastoffe aus dem Fluid durch eine Kombination aus adsorptions- und verteilungschromatographischen Effekten verteilen.

Alternativ können die Arbeitsräume 12a-d mit unterschiedlichen Sorptionsmitteln bzw. Sorptionsmittelgemischen befüllt werden, wobei mindestens ein Sorptionsmittel aus der Gruppe der Normalphasen und/oder polaren gebundene Phasen und wenigstens ein anderes Sorptionsmittel aus der Gruppe der Umkehrphasen gewählt ist. Weiterhin umfasst das Adsorptionssystem 10 eine entsprechend größere Anzahl an unabhängig voneinander steuer- bzw. regelbaren Ventileinrichtungen 20, 20', 20", um bedarfsgerecht zwischen dem Adsorptions- und dem Desorptionsmodus umschalten zu können. Insbesondere ist es mit Hilfe des vorliegenden Adsorptionssystems 10 möglich, jeden Arbeitsraum 12a-d individuell mit Aromastoffen zu beladen und zu entladen. Dadurch wird es beispielsweise möglich, nur die im Arbeitsraum 12c adsorbierten Aromastoffe oder nur die in den Arbeitsräumen 12a, 12b und 12d adsorbierten Aromastoffe zu desorbieren, wodurch eine besonders flexible Prozessführung bei gleichzeitiger Totraumverringerung ermöglicht ist.

Fig. 6 zeigt eine Prinzipdarstellung des erfindungsgemäßen Adsorptionssystems 10 gemäß einem weiteren Ausführungsbeispiel. Der grundsätzliche Aufbau des vorliegenden Adsorptionssystems 10 ähnelt dabei demjenigen des im Zusammenhang mit Fig. 5 beschriebenen Adsorptionssystems 10. Zur Totraumminimierung umfasst das vorliegend gezeigte Adsorptionssystem 10 neben einem Leitungssystem 13, welches zum Durchleiten des aromastoffhaltigen Fluids vorgesehen ist, ein zweites Leitungssystem 13', welches zum Durchleiten des oder der Desorptionsmittel vorgesehen ist und ein geringeres Volumen bzw. einen geringeren Querschnitt als das Leitungssystem 13 besitzt. Mit anderen Worten werden zwei Rohrleitungssysteme 13, 13' verwendet, die dementsprechend einen ersten und einen zweiten Fluidpfad bilden, wobei ein Leitungssystem 13 mit vergleichsweise größerem mittleren Durchmesser bzw. verhältnismäßig größerer mittlerer Querschnittsfläche zur Beladung und ein Leitungssystem 13' mit vergleichsweise kleinerem mittleren Durchmesser zur Entladung verwendet wird. Hierdurch werden besonders hochkonzentrierte Aromastoff-Konzentrate erhalten. Ein weiterer Unterschied zum vorherigen Ausführungsbeispiel besteht in den zusätzlichen Pumpeinrichtungen 14a-c, die grundsätzlich als optional anzusehen sind und auch in unterschiedlicher Anzahl und Anordnung vorgesehen sein können. Die Pumpeinrichtungen 14a-c sind jeweils zwischen den Arbeitsräumen 12a-c angeordnet und verbessern den Durchsatz an Fluid bzw. die Beladungsgeschwindigkeit der in den Arbeitsräumen 12a-c angeordneten Sorptionsmittel mit Aromastoffen. Weiterhin umfasst das für die Desorptionsmittel vorgesehene Leitungssystem 13' zusätzliche Ventileinrichtungen 20"', die im Adsorptionsmodus generell geschlossen werden und im Desorptionsmodus unabhängig voneinander geschaltet werden können, um einzelne oder vereinigte Fraktionen aus den Arbeitsräumen 12a-d zu gewinnen. Die Ventileinrichtungen 20‴ können dabei in einfachster Ausgestaltung Rückschlagventile bzw. Kugelventile sein, da diese Absperrorgane automatisch über Druckunterschiede schalten, aber nicht aktiv gesteuert werden müssen und damit sehr kostengünstig und betriebssicher sind.

Fig. 7 zeigt einen schematischen Längsschnitt durch einen Arbeitsraum 12 mit zwei fluidisch miteinander verbundenen Kanälen 24a, 24b, die ineinander verschachtelt in einem gemeinsamen Gehäuse 26 angeordnet sind. Das Gehäuse 26 wird dabei durch eine Wand des äußeren Kanals 24a gebildet, der den inneren Kanal 24b umgibt. Der innere

Kanal 24b mündet in einen Einlass 16, durch den ein Fluid oder ein Desorptionsmittel in den Arbeitsraum 12 eintreten und bis zur Mündung des äußeren Kanals 24a geleitet wird bzw. werden kann. Hier wird das jeweilige Fluid umgeleitet und strömt durch den Kanal 24a zum Auslass 18, wo es den Arbeitsraum 12 wieder verlässt. Damit verbreitert sich der Arbeitsraum 12 in Strömungsrichtung betrachtet am Übergang vom inneren Kanal 24b zum äußeren Kanal 24 stufenförmig, so dass Aromastoffe, die schlechter an das im inneren Kanal 24b angeordnete Sorptionsmittel(gemisch) binden und durchbrechen, mit Hilfe der größeren Kapazität des äußeren Kanals 24a dennoch zuverlässig aufgefangen werden können. Anders ausgedrückt vergrößert sich die durchströmte bzw. durchströmbare Fläche des Sorptionsmittels und damit dessen Kapazität stufenweise vom Einlass 16 in Richtung Auslass 18. Dies ermöglicht die Gewinnung besonders authentischer Aromastoff-Konzentrate.

Grundsätzlich können der Arbeitsraum 12 bzw. seine Kanäle 24a, 24b unabhängig voneinander teilweise oder vollständig mit einem oder mehreren Sorptionsmitteln gleicher Art oder Beschaffenheit befüllt sein. Es kann auch vorgesehen sein, dass die Kanäle 24a, 24b mit unterschiedlichen Sorptionsmitteltypen, beispielsweise mit einer Normalphase und einer Umkehrphase, befüllt sind. Weiterhin kann es natürlich vorgesehen sein, dass Fluid oder Desorptionsmittel durch den Auslass 18 ein- und durch den Einlass 16 ausgeleitet wird. Der Arbeitsraum 12 stellt auf besonders einfache und leicht skalierbare Weise einen möglichst langen und gleichzeitig relativ "dünnen" Strömungspfad bereit, bei welchem ein Verhältnis von mittlerer Querschnittsdicke zu Gesamtlänge höchstens 0,3 oder weniger beträgt. Die Querschnittsfläche oder Dicke des äußeren Kanals 24a entspricht dabei im Wesentlichen der Querschnittsfläche des Arbeitsraums 12 abzüglich der Querschnittsfläche des inneren Kanals 24b.

Fig. 8 zeigt eine schematische Schnittansicht eines Arbeitsraums 12 mit vier fluidisch miteinander verbundenen Kanälen 24a-d, die ineinander verschachtelt in einem gemeinsamen Gehäuse 26 angeordnet sind. Auch in diesem Ausführungsbeispiel erweitert sich an jedem Übergang von einem zum nächsten Kanal 24a-d die Querschnittfläche stufenweise. Der Arbeitsraum 12 stellt damit einen besonders langen und gleichzeitig "dünnen" Strömungspfad bereit, bei welchem ein Verhältnis von mittlerer Querschnittsdicke zu Gesamtlänge 0,03 oder weniger beträgt. Die Anzahl der Kanäle 24a-d kann bedarfsweise variiert werden, so dass auch drei, fünf oder mehr Kanäle 24 vorgesehen sein können. Je mehr ineinander verschachtelte Kanäle 24 vorgesehen werden, umso mehr nähert sich der Querschnittsflächenverlauf entlang des Strömungspfads des Arbeitsraums 12 formal einem Trichter an. Alternativ kann vorgesehen sein, dass zwei oder mehr Kanäle 24 nicht ineinander verschachtelt, sondern beispielsweise nebeneinander angeordnet sind.

Fig. 9 zeigt eine Prinzipdarstellung des Adsorptionssystems 10 gemäß einem weiteren Ausführungsbeispiel. Das aromastoffhaltige Fluid, das auch als Wasserphase bezeichnet werden kann, wird zunächst im Adsorptionsmodus kontinuierlich durch den Einlass 16 zugeführt, mit Hilfe der Pumpeinrichtung 14 in das Leitungssystem 13 gepumpt und durchströmt alle Arbeitsräume 12a-c bzw. die darin angeordneten Sorptionsmittel parallel entgegen der Schwerkraftrichtung. Die Druckdifferenz zwischen dem Einlass und dem Auslass der Arbeitsräume 12a-c beträgt etwa 4 bar. Durch den Auslass 18 wird die dearomatisierte Wasserphase wieder aus dem Leitungssystem 13 entfernt.

Im Desorptionsmodus wird ein Desorptionsmittel, Ethanol, von oben durch den Einlass 16' und das Leitungssystem 13' in Intervallen langsam in den ersten Arbeitsraum 12a geleitet, indem mittels der Pumpeinrichtung 14' ein geringfügig höherer Druck als am Einlass 16 herrscht erzeugt wird und indem die Ventileinrichtungen 20a geöffnet wird, während die Ventileinrichtungen 20b, 20c geschlossen werden. Dadurch wird am Sorptionsmittel adsorbierter Aromaextrakt in die Wasserphase zurückgepumpt und aufgrund der geringeren Flussraten und Volumina so stark verdünnt, dass die Konzentration des Desorptionsmittels im Fluid zumindest im Wesentlichen nicht zur Desorption von bereits adsorbierten Aromastoffen in den stromabliegenden Arbeitsräumen 12b, 12c führt. Das aromastoffhaltige Fluid (Wasserphase) wird mit anderen Worten aromatisiert bzw. mit bereits adsorbierten und wieder desorbierten Aromastoffen angereichert, zu den stromabliegenden Arbeitsräumen 12b, 12c geleitet und dort wieder auf den jeweiligen Sorbensbetten eingefangen. Die Zahl der Arbeitsräume 12a-c (Extraktionszellen) und deren jeweilige Volumina werden vorzugsweise so gewählt, dass die Beladungszeit für einen einzelnen Arbeitsraum 12 möglichst gering ist.

Der beschriebene Vorgang wird analog für den nächsten Arbeitsraum 12b und anschließend für jeden weiteren stromabliegenden Arbeitsraum 12c etc. wiederholt, so dass sich die Aromastoffe zunehmend im bezüglich der Strömungsrichtung letzten Arbeitsraum (hier: 12c) sammeln. Die Ventileinrichtungen 20, 20' können bedarfsweise geöffnet oder geschlossen werden, um den Desorptionsprozess zu unterstützen und um zu verhindern, dass aromastoffhaltiges Fluid ungenutzt aus dem Auslass 18 strömt. Auf dem in Strömungsrichtung betrachtet letzten Arbeitsraum 12c sammelt sich damit in sehr kurzer Zeit eine sehr große Aromamenge. Die Beladungszeit ist für jeden einzelnen Arbeitsraum 12a-c vergleichsweise kurz, so dass praktisch keine polaren oder unpolaren Aromastoffe durch chromatographische Prozesse verloren gehen. Das heißt, dass das resultierende Aromastoff-Konzentrat sehr authentisch ist. Gleichzeitig wird ein hoher Konzentrationsfaktor erreicht bzw. eine ethanolische Phase mit hoher Aromastoff-Konzentration erhalten. Dadurch, dass die Beladungszeiten jedes einzelnen Arbeitsraums 12a-c klein sind, wird das Aromastoff-Konzentrat im Rhythmus der Adsorptionseinrichtung 10 mehrmals am Tag, beispielsweise im Stundentakt, erhalten und kann über die Ventileinrichtung 20" und den Auslass 18' entnommen werden.

Fig. 10 zeigt eine Prinzipdarstellung des Adsorptionssystems 10 gemäß einem weiteren Ausführungsbeispiel. Der Aufbau des Adsorptionssystems 10 entspricht dabei grundsätzlich dem in Fig. 1 gezeigten, im Unterschied zum

ersten Ausführungsbeispiel umfasst das Adsorptionssystem 10 jedoch Arbeitsräume 12a-c mit unterschiedlichen Geometrien, insbesondere mit unterschiedlichen mittleren Querschnittsdicken. Die Arbeitsräume 12a-c sind erneut zumindest im Wesentlichen kreiszylindrisch ausgebildet, weisen jedoch bezüglich der mit Pfeil A bezeichneten Strömungsrichtung zunehmende mittlere Querschnittsdicken auf. Mit anderen Worten besitzen die Arbeitsräume 12a-c die gleiche Höhe, aber unterschiedliche Durchmesser bzw. Querschnittsflächen, wodurch sich eine Art Trichterprozess ergibt. Der erste vom aromastoffhaltigen Fluid beim Beladen angeströmte Arbeitsraum 12a ist schmaler als der zweite Arbeitsraum 12b bzw. als alle stromabliegenden Arbeitsräume 12b, 12c. Dadurch wird erreicht, dass diejenigen Aromastoffe, die sich sehr effizient an einer vergleichsweise kleinen Sorbensmenge binden lassen, sich mehr oder weniger ausschließlich in einem engen Rohr bzw. in einem Arbeitsraum 12a mit geringem Volumen und mit einem möglichst kleinen Verhältnis von mittlerer Querschnittsdicke zu Länge des Arbeitsraums 12a von höchstens 0,3 befinden. Daraus ergibt sich dann bei der anschließenden Desorption eine besonders hohe Endkonzentration dieser Aromastoffe.

Diejenigen Aromastoffe, die eine große Menge an Sorptionsmittel benötigen, um sich zumindest annähernd quantitativ binden zu lassen, werden hauptsächlich in den stromabliegenden Arbeitsräumen 12b oder 12c gebunden, da diese aufgrund ihrer größeren Durchmesser eine größere Bindungskapazität besitzen. Beim Desorbieren entgegen der Beladungsrichtung (Pfeil B), werden dann die Aromastoffe mit schlechteren Bindungseigenschaften zunächst aus dem größten Arbeitsraum 12c im Mengenmäßig richtigen Verhältnis wieder gelöst und gelangen über den zweiten Arbeitsraum 12b in den vergleichsweise engen ersten Arbeitsraum 12a, wo sie die anderen gut bindenden Aromastoffe herauslösen.

Dadurch wird hauptsächlich erreicht, dass die gering bindenden Aromastoffe im korrekten Mengenverhältnis im resultierenden Aromastoff-Konzentrat erscheinen, wodurch dieses besonders authentisch ist. Sollte nicht die gesamt Mende an Desorptionsmittel des größten Arbeitsraums 12c zur Desorption des kleinsten Arbeitsraumes 12a verwendet werden, wird zwar nicht die gesamte verfügbare Menge an schlecht bindenden Aromastoffen zurückgewonnen, aber die zurückgewonnenen Aromastoffe befinden sich quantitativ weiterhin im vergleichbaren Verhältnis wie im ursprünglichen Fluid (Wasserphase).

Fig. 11 zeigt eine schematische Schnittansicht von vier Arbeitsräumen 12a-d mit unterschiedlichen Geometrien. Man erkennt, dass alle Arbeitsräume 12a-d einen sich in Längserstreckungsrichtung L verändernden Durchmesser bzw. eine sich verändernde Querschnittsfläche aufweisen. Damit vergrößert sich bei jedem Arbeitsraum 12a-d die durchströmte bzw. durchströmbare Querschnittsfläche und damit die Kapazität des jeweils im Arbeitsraum angeordneten Sorptionsmittels stufenweise und/oder kontinuierlich vom Einlass 16 in Richtung Auslass 18. Dies ermöglicht die Gewinnung besonders authentischer Aromastoff-Konzentrate, da die Kapazität des Sorptionsmittels in Strömungsrichtung zunimmt, so dass schwerer bindende Aromastoffe dennoch zuverlässig adsorbiert werden können. Eine Beladung mit Aromastoffen erfolgt dementsprechend vorzugsweise in der mit Pfeil A bezeichneten Strömungsrichtung, das heißt von unten nach oben bzw. von Bereichen mit geringem Durchmesser zu Bereichen mit größerem Durchmesser hin. Hierdurch wird sichergestellt, dass für Aromastoffe, die sich gut binden, eine geringere Bindungskapazität vorgehalten wird als für Aromastoffe, die sich schlechter an das jeweilige Sorptionsmittel binden. Das Entladen erfolgt bevorzugt in umgekehrter Strömungsrichtung (Pfeil B), das heißt von Bereichen mit größeren Durchmessern zu Bereichen mit kleineren Durchmessern hin. Damit wird eine umgekehrt besonders zuverlässige Desorption aller gebundenen Aromastoffe erzielt, da die im Bereich des Auslasses 18 gebundenen Aromastoffe, das heißt die nur schwach adsorbierten Verbindungen, sich gut Desorptionsmittel lösen, während die im Bereich des Einlasses 16 gebundenen Aromastoffe, das heißt die stark an das jeweilige Sorptionsmittel bindenden Verbindungen, mit einem entsprechend großen Volumenstrom an Desorptionsmittel desorbiert werden. Die Arbeitsräume 12a-d können grundsätzlich einzeln oder in beliebiger Kombination für das erfindungsgemäße Adsorptionssystem 10 verwendet werden.

Fig. 12 zeigt eine Prinzipdarstellung eines weiteren Ausführungsbeispiels des Adsorptionssystems 10. Der Aufbau des Adsorptionssystems 10 entspricht großteils demjenigen des in Fig. 9 gezeigten Ausführungsbeispiels. Im Unterschied zum in Fig. 9 gezeigten Ausführungsbeispiel weist das vorliegende Ausführungsbeispiel drei zylindrische Arbeitsräume 12a-c auf, die die gleiche Höhe, aber unterschiedliche Querschnittsflächen bzw. Durchmesser besitzen und jeweils mit dem gleichen Sorptionsmittel bzw. Sorptionsmittelgemisch befüllt sind.

Der Arbeitsraum 12a besitzt dabei das größte Volumen, während der Arbeitsraum 12b ein geringeres Volumen aufweist und der Arbeitsraum 12c das kleinste Volumen der drei Arbeitsräume 12a-c besitzt. Damit besitzt der in Beladungsrichtung betrachtet erste Arbeitsraum 12a bzw. das in diesem angeordnete Sorptionsmittel die größte Bindungskapazität für Aromastoffe und ermöglicht den größten Volumenstrom, während die Bindungskapazität und der maximal zulässige Volumenstrom der stromab angeordneten Arbeitsräume 12b, 12c stufenweise sinken. Beispielsweise kann das Volumen des Arbeitsraums 12b 1/10 des Volumens des Arbeitsraums 12a betragen, während das Volumen des Arbeitsraums 12c 1/10 des Volumens des Arbeitsraums 12b beträgt. Auch in diesem Fall kann es natürlich vorgesehen sein, dass anstelle von drei Arbeitsräumen 12a-c nur zwei oder vier oder mehr Arbeitsräume 12 vorgesehen sind. Damit wird insgesamt ein besonders geringes Verhältnis von mittlerer Querschnittsdicke zu Gesamtlänge der Arbeitsräume 12a-c sichergestellt, beispielsweise ein Verhältnis von höchstens 0,03 oder weniger.

Als weiterer Unterschied zum in Fig. 9 gezeigten Ausführungsbeispiel weist das vorliegende Adsorptionssystem 10 ein zusätzliches Leitungssystem 13" auf, welches zwischen den Arbeitsräumen 12a-12b und 12b-12c in das Leitungssystem 13 mündet und einen dritten Fluidpfad bildet. Das weitere Leitungssystem 13" umfasst einen Einlass 16", eine Pumpeinrichtung 14 sowie zwei Ventileinrichtungen 20‴ und dient der im Folgenden beschriebenen Zuführung von Wasser in das Leitungssystem 13.

Auch beim vorliegend gezeigten Adsorptionssystem 10 wird ein Fluid, bei welchem es sich um eine aromastoffhaltige Wasserphase mit einem Ethanolgehalt zwischen 0 Vol.-% und 50 Vol.-%, beispielsweise von 0 Vol.-%, 0,5 Vol.-%, 1 Vol.-%, 6 Vol.-%, 18 Vol.-%, 30 Vol.-%, 37 Vol.-%, 42 Vol.-% oder 49 Vol.-% handelt, zunächst kontinuierlich durch den Einlass 16 in das Leitungssystem 13 eingeleitet und parallel und gleichmäßig durch alle Arbeitsräume 12a-c (Extraktionszellen) geleitet. Die Druckdifferenz zwischen dem unteren Einlass und dem oberen Auslass der Arbeitsräume 12a-c beträgt dabei etwa 4 bar.

Zum Desorbieren wird durch den Einlass 16' Ethanol als Desorptionsmittel von oben durch das Leitungssystem 13', das einen zweiten Fluidpfad bildet, in Intervallen langsam in die Arbeitsräume 12a-c geleitet, indem ein höherer Druck als auf der Wasserseite (Leitungssystem 13) angelegt wird. Mit Hilfe der Ventileinrichtungen 20a-c ist eine individuelle Beaufschlagung der einzelnen Arbeitsräume 12a-c möglich. Dadurch werden die am Sorptionsmittel adsorbierten Aromastoffe desorbiert, als Aromaextrakt in die Wasserphase zurückgepumpt und mit Hilfe des Leitungssystems 13' mit Wasser verdünnt. Dadurch wird der Ethanolgehalt des jeweiligen Desorbats gesenkt, wodurch eine unerwünschte bzw. vorzeitige Desorption der im stromabliegenden Arbeitsraum 12b bzw. 12c adsorbierten Aromastoffe verhindert wird. Vorzugsweise wird dabei die durch das Leitungssystem 13' zugeführte Wassermenge derart gewählt, dass der Ethanol-Gehalt des jeweiligen Desorbats maximal 12-13 Vol.-% beträgt, bevor es in den Arbeitsraum 12b bzw. 12c geleitet wird. Beispielsweise wird das stark ethanolhaltige Desorbat des Arbeitsraums 12a (Ethanolgehalt >90 Vol.-%), in welchem die Aromastoffe beispielsweise 1:100 gegenüber dem Fluid angereichert sind, wieder 1:10 mit Wasser verdünnt, um einen Ethanolgehalt von höchstens 12-13 Vol.-% einzustellen. Damit sind die Aromastoffe, die in den Arbeitsraum 12b eingeleitet werden, etwa um den Faktor 10 gegenüber dem ursprünglichen Fluid angereichert.

Analog wird das stark ethanolhaltige Desorbat des Arbeitsraums 12b, in welchem die Aromastoffe erneut um einen Faktor von etwa 1:100 gegenüber dem Arbeitsraum 12a angereichert sind, wieder 1:10 mit Wasser verdünnt, so dass die Aromastoffe, die in den Arbeitsraum 12c eingeleitet werden, formal um den Faktor 100 gegenüber dem ursprünglichen Fluid angereicht sind. Gleichzeitig beträgt das Volumen des in den Arbeitsraum 12c eingeleiteten Desorbats nur etwa 1/10 des Volumens des in den Arbeitsraum 12b eingeleiteten Desorbats bzw. 1/100 des in den Arbeitsraum 12a eingeleiteten Fluids. Im in Beladungsrichtung betrachtet letzten Arbeitsraum 12c wird folglich in sehr kurzer Zeit eine sehr große Aromamenge gebunden und kann schließlich als ethanolisches Aromastoff-Konzentrat durch Öffnen der Ventileinrichtung 20" über den Auslass 18' aus dem Adsorptionssystem 10 entfernt werden. Hierbei erfolgt keine Verdünnung mit Wasser, wodurch eine Anreichung der Aromastoffe von 1:100 gegenüber dem Arbeitsraum 12b bzw. von 1:1.000 gegenüber dem Arbeitsraum 12a bzw. von 1:10.000 gegenüber dem ursprünglichen Fluid erreicht wird.

Da die Beladungszeit für jeden einzelnen Arbeitsraum 12a-c vergleichsweise kurz ist, werden sowohl unpolare als auch polare Aromastoffe gleichmäßig angereichert und brechen zumindest überwiegend nicht durch. Das heißt, dass das resultierende Aromastoff-Konzentrat sehr authentisch ist. Gleichzeitig wird dadurch ein hoher Aufkonzentrierungsfaktor von 1:10.000 oder mehr erreicht. Dadurch, dass die Beladungszeiten jedes einzelnen Arbeitsraums 12a-c klein sind, kann Aromaextrakt im Rhythmus der Anlage mehrmals am Tag, beispielsweise im Stundentakt oder schneller erhalten werden.

Das dearomatisierte Fluid bzw. die dearomatisierte Wasserphase kann grundsätzlich über den Auslass 18 aus dem Adsorptionssystem 10 ausgeleitet und verworfen oder über den Einlass 16" im Kreis durch das Adsorptionssystem 10 geleitet werden, wobei im letzteren Fall erhebliche Wassereinsparungen sowie eine besonders hohe Ausbeute und Rückgewinnung an Aromastoffen erreicht werden.

Anstelle des Leitungssystems 13' oder zusätzlich zum Leitungssystem 13' kann es vorgesehen sein, dass das Adsorptionssystem 10 einen oder mehrere Zwischenbehälter (nicht gezeigt) umfasst, in welchem oder welchen das jeweilige ethanolische Desorbat aufgefangen, zwischengelagert und gegebenenfalls verdünnt werden kann.

Die folgende Tabelle 1 zeigt die Ergebnisse, die sich beim Aufarbeiten eines aromastoffhaltigen Fluids mit Hilfe einer der vorstehend gezeigten Adsorptionssysteme 10 realisieren lassen. Als Fluid wurde eine Wasserphase mit 6 Vol.-% Ethanol und den biertypischen Aromastoffen 3-Methylbutan-1-ol, Phenol, Hexanal, cis-3-Hexenol, Linalool und 2-Phenylethanol verwendet. In Tabelle 1 sind einerseits die Anreicherungsfaktoren jedes Aromastoffs im Aromastoff-Konzentrat bezogen auf seine jeweilige Ausgangskonzentration im ursprünglichen Fluid angegeben, wobei die Anreicherungsfaktoren relativ gleichmäßig um den Wert 200 liegen. Dies unterstreicht die Authentizität des resultierenden Aromastoff-Konzentrats. Weiterhin sind die relativen Anreicherungsfaktoren von 3-Methylbutan-1-ol zu Hexanal, cis-3-Hexenol, Linalool und 2-Phenylethanol bzw. von Phenol zu Hexanal, cis-3-Hexenol, Linalool und 2-Phenylethanol angegeben. Man erkennt auch hier, dass die relativen Anreicherungsfaktoren im Bereich von 1,0 liegen, so dass vorzugsweise alle Aromastoffe trotz ihrer stark unterschiedlichen Polaritäten sehr gleichmäßig und damit diskriminierungsfrei angereichert wurden.

**Tabelle 1: Anreicherungsfaktoren**

| 6% Ethanol in Wasserphase | Anreicherungsfaktor | Hexanal | cis-3-Hexenol | Linalool | 2-Phenylethanol |
|---|---|---|---|---|---|
| Anreicherungsfaktor | | 206 | 217 | 195 | 241 |
| 3-Methylbutan-1-ol | 194 | 1,06 | 1,12 | 1,00 | 1,24 |
| Phenol | 244 | 0,84 | 0,89 | 0,80 | 0,99 |

In einem weiteren Ausführungsbeispiel wird eine zweistufige Anreicherung eines wässrigen Fluids durchgeführt, das beispielsweise wieder 3-Methylbutan-1-ol, Phenol, Hexanal, cis-3-Hexenol, Linalool und 2-Phenylethanol als biertypische Aromastoffe enthalten kann. In einer ersten Stufe wird eine Adsorption mit einer vergleichsweise hohen Sorbenskapazität durchgeführt. Zu diesem Zweck kann beispielsweise eines der vorstehend beschriebenen Adsorptionssysteme 10 verwendet werden. Dabei werden keine relativen Anreicherungsfaktoren über 1,49 für den jeweiligen Quotient aus Cis-3-Hexenol, 2-Phenylethanol, Linalool, Hexanal über 3-Methylbutan-1-ol und Phenol erreicht. Die Anreicherungsfaktoren bei der anschließenden Desorption mit Ethanol als Desorptionsmittel werden vergleichsweise gering gewählt und betragen beispielsweise 1:10, 1:100 oder 1:500.

In einer zweiten Stufe wird das aus der ersten Stufe gewonnene Aromastoff-Konzentrat, das einen Ethanol-Gehalt von über 90 Vol.-% aufweist, mit Wasser auf etwa 6-20 Vol.-% Ethanol-Gehalt verdünnt. Anschließend wird eine Adsorption mit Hilfe eines vergleichsweise langen und dünnen, mit Sorptionsmittel gefüllten Arbeitsraums 12 durchgeführt, der sich gegebenenfalls aus mehreren Teilräumen 32 (vgl. Fig. 17) zusammensetzen kann. Dabei werden Anreicherungsfaktoren von über 1:100 oder 1:1000 oder höher erhalten bezogen auf das Edukt der zweiten Stufe bzw. das Aromastoff-Konzentrat der ersten Stufe.

Der technologische Vorteil dieser zweistufigen Lösung besteht darin, dass man zwei unterschiedliche Adsorptionssysteme 10 oder zwei unterschiedliche Leitungssysteme 13 verwenden kann, die auf sehr unterschiedliche Flussraten optimiert werden können bzw. sind. Mit anderen Worten kann das Adsorptionssystem 10 bzw. das Leitungssystem 13 für die erste Stufe für hohe Flussraten des gering konzentrierten, wässrigen Fluids optimiert werden, während das zweite Adsorptionssystem 10 bzw. das zweite Leitungssystem 13 für geringe Flussraten des bereits stark aufkonzentrierten Aromastoff-Konzentrats sowie für hohe Ethanol-Gehalte optimiert werden kann, was beispielsweise höhere Anforderungen an Brand- und Explosionsschutz mit sich führt. Das zweite Adsorptionssystem 10 kann dementsprechend grundsätzlich auch als Hochkonzentrationseinrichtung bezeichnet bzw. ausgebildet sein.

Das zweite Adsorptionssystem 10 bzw. das zweite Leitungssystem 13 kann aufgrund der deutlich geringeren Flussraten zudem einen Arbeitsraum 12 mit einem besonders geringen Verhältnis von mittlerer Querschnittsdicke zu Gesamtlänge aufweisen, beispielsweise ein Verhältnis von höchstens 0,03 oder weniger. Dies erlaubt die Darstellung besonders hoher Aufkonzentrierungsfaktoren.

Fig. 13 zeigt eine Prinzipdarstellung eines weiteren Ausführungsbeispiels des erfindungsgemäßen Adsorptionssystems 10. Das Adsorptionssystem 10 umfasst dabei im Unterschied zu den vorhergehenden Ausführungsbeispielen einen Sammelbehälter 28, dessen Funktion im Folgenden näher erläutert werden wird. Man erkennt, dass das Adsorptionssystem 10 drei Arbeitsräume 12a-c aufweist, die im vorliegenden Fall mit dem gleichen Sorptionsmitteltyp gefüllt sind und im Vergleich zu ihrer Länge eine geringe Querschnittsfläche bzw. einen geringen Durchmesser besitzen. Als Sorptionsmittel wird dabei ein sogenanntes Umkehrphasenmaterial verwendet, welches reinsortig oder ein Gemisch von zwei oder mehr Umkehrphasenmaterialien sein kann. Es versteht sich, dass auch im vorliegenden Fall eine abweichende Anzahl an Arbeitsräumen 12a-c vorgesehen sein kann, die zudem gleich oder unterschiedlich ausgebildet bzw. mit gleichen oder unterschiedlichen Sorptionsmitteln befüllt sein können. Als Fluid wird erneut eine aromastoffhaltige Wasserphase aus dem Brauereiwesen verwendet und durch den Einlass 16 in das Leitungssystem 13 des Adsorptionssystems 10 eingeleitet.

In einem Adsorptions- oder Sammelmodus werden zunächst die Ventileinrichtungen 20, 20' geöffnet und die Ventileinrichtungen 20" geschlossen. Das Fluid wird dann so lange gegen die Schwerkraftrichtung parallel durch die Arbeitsräume 12a-c geleitet, bis die Sorptionsmittel überladen sind. Damit werden überwiegend nur unpolare Aromastoffe an den in den Arbeitsräumen 12a-c angeordneten Sorptionsmitteln gebunden, während polare Aromastoffe bereits teilweise oder vollständig "durchbrechen" und aus den Arbeitsräumen 12a-c ausgetragen werden. Die polaren Aromastoffe werden mit dem teilweise entaromatisierten Fluid zu einem weiteren Arbeitsraum bzw. einer weiteren Extraktionszelle 12d geleitet, die im Vergleich zu den stromauf liegenden Arbeitsräumen 12a-c ein größeres Verhältnis von Durchmesser bzw. Querschnittsfläche zu Länge aufweist. Durch die vergleichsweise größere durchströmte Querschnittsfläche besitzt das im Arbeitsraum 12d angeordnete Sorptionsmittel eine höhere Kapazität, so dass die durchgebrochenen polaren Aromastoffe zumindest im Wesentlichen vollständig gebunden werden. Das dearomatisierte Fluid wird dann durch den Auslass 18 aus dem Adsorptionssystem 10 ausgeleitet.

Zur Rückgewinnung der gebundenen Aromastoffe wird das Adsorptionssystem 10 in einen Desorptionsmodus geschaltet. Hierzu werden die Ventileinrichtungen 20, 20' geschlossen und die Ventileinrichtungen 20" geöffnet. Anschließend wird durch den Einlass 16' ein Desorptionsmittel, Ethanol, in Schwerkraftrichtung bzw. gegen die Beladungsrichtung durch den großen Arbeitsraum 12d geleitet. Die zurück gewonnenen Aromastoffe werden dann über das Leitungssystem 13' in den grundsätzlich optionalen Sammelbehälter 28 geleitet, von wo aus sie vollständig oder teilweise entnommen, weiterverarbeitet und/oder weitergeleitet werden können. Im Fall einer Weiterleitung wird das bereits aromastoffhaltige ethanolische Desorptionsmittel mittels der Pumpeinrichtung 14 weiter zu den Arbeitsräumen 12a-c gepumpt und durchströmt diese ebenfalls gegen die Beladungsrichtung bzw. in Schwerkraftrichtung. Die in den kleinen Arbeitsräumen 12a-c gebundenen unpolaren Aromastoffe werden mittels des Desorptionsmittels desorbiert und durch den Auslass 18' aus dem Adsorptionssystem 10 ausgeleitet. Grundsätzlich kann auch vorgesehen sein, dass den Arbeitsräumen 12a-c ein separates Leitungssystem (nicht gezeigt) für das Desorptionsmittel zugeordnet ist, so dass die polaren und die unpolaren Aromastoffe unabhängig voneinander desorbiert werden können. Weiterhin kann vorgesehen sein, dass der Auslass 18' ebenfalls in den Sammelbehälter 28 mündet, um in diesem das Aromastoffkonzentrat zu bilden bzw. um die polaren und unpolaren Aromastoffe in einem gewünschten Verhältnis zu vereinigen. In diesem Fall ist es vorteilhaft, wenn der Sammelbehälter 28 über einen separaten Auslass (nicht gezeigt) verfügt, um das Aromastoffkonzentrat zu entnehmen.

Fig. 14 zeigt eine Prinzipdarstellung eines weiteren Ausführungsbeispiels des erfindungsgemäßen Adsorptionssystems 10. Der grundsätzliche Aufbau und die grundsätzliche Funktionalität entsprechen dabei denjenigen des vorhergehenden Ausführungsbeispiels. Im Unterschied zum vorhergehenden Ausführungsbeispiel umfasst das Adsorptionssystem 10 zusätzlich einen weiteren Einlass 16" mit einer zugeordneten Pumpeinrichtung 14 sowie einen zusätzlichen Auslass 18" mit einer zugeordneten Ventileinrichtung 20"'. Damit ermöglicht das Adsorptionssystem 10 die Durchführung eines steuer- und/oder regelbaren Polaritätswechsels, bei welchem der Permeatstrom der in Beladungsrichtung ersten Arbeitsräume oder Extraktionszellen 12a-c vor dem Eintritt in den Arbeitsraum 12d modifiziert werden kann. Das Polaritätswechselverfahren sieht generell vor, dass als Edukt zunächst ein aromahaltiges wässriges Fluid mit einem vergleichsweise hohem Ethanolgehalt von bis zu 45 Vol.-% oder mehr durch den Einlass 16 eingeleitet und durch den oder die in Strömungsrichtung ersten Arbeitsräume 12a-c geleitet wird, in denen zunächst überwiegend unpolare Aromastoffe adsorbiert werden. Zwischen dem Auslass bzw. den Auslässen der Arbeitsräume 12a-c und dem Einlass des Arbeitsraums 12d wird dann die Polarität und/oder der pH-Wert und/oder die Ionenstärke und/oder der Feststoffgehalt des bereits teilweise dearomatisierten Fluids bzw. Permeats geändert. Hierzu können dem aromastoffhaltigen Permeatstrom durch den Einlass 16" beispielsweise Wasser, Säuren und/oder Laugen beigemischt werden. Geeignete Verbindungen zur pH-Wert Einstellung sind dem Fachmann an sich bekannt und umfassen beispielsweise anorganische und organischen Säuren wie Schwefelsäure, Salzsäure, Phosphorsäure, Ascorbinsäure, Citronensäure, Milchsäure, Äpfelsäure, Essigsäure, Propansäure, Buttersäure, 2-Methylbuttersäure, 3-Methylbuttersäure, Hexansäure, Heptansäure, Octansäure, Nonansäure, Decansäure und deren Derivate sowie anorganische Basen wie Natriumhydroxid, Calciumhydroxid und Kaliumhydroxid, wobei diese Aufzählung nicht als abschließend anzusehen ist. Auf diese Weise ist eine gezielte Diskriminierung von sauren bzw. alkalischen Aromastoffen möglich. Nicht abschließende Beispiele für solche Aromastoffe sind insbesondere:

- Amine (primäre, sekundäre und tertiäre Amine, z. B. Monomethylamin, Dimethylamin, Trimethylamin, Monoethylamin, Diethylamin, Triethylamin usw.) und
- Carbonsäurehaltige Verbindungen (z. B. Ameisensäure, Essigsäure etc.)

Unabhängig davon ist es alternativ oder zusätzlich generell möglich, dem Fluid bzw. Permeat eine vorbestimmte Menge wenigstens eines Stoffs zuzusetzen, der sich zumindest teilweise im Fluid bzw. Permeat löst. Es können einer oder mehrere Stoffe ausgewählt werden, der oder die unter Standardbedingungen fest und/oder flüssig ist bzw. sind. Ebenso kann der wenigstens Stoff aus einer Gruppe ausgewählt werden, die anorganische und organische Salze, monomere, oligomere und polymere Zucker, protische Lösungsmittel, aprotisch-unpolare Lösungsmittel und aprotisch-polare Lösungsmittel umfasst. Ebenso kann wenigstens ein Stoff ausgewählt werden, welcher sich bei 25 °C und 1,013 bar unter Standardbedingungen exergon im Fluid bzw. Permeat löst. Der wenigstens eine Stoff kann in einer Menge von mindestens 0,1 g/l, insbesondere von mindestens 1 g/l und vorzugsweise von mindestens 10 g/l zum Fluid zugegeben werden. Ebenso ist es möglich, dass der wenigstens eine Stoff in einer Menge zum Fluid zugegeben wird, dass ein Wassergehalt des Fluids bezogen auf das Gesamtvolumen des Fluids höchstens 94 Vol.-% beträgt. Die Erfindung basiert dabei auf der Erkenntnis, dass durch das Lösen des oder der Stoffe eine entsprechende Menge an Fluid-Molekülen an den oder die Stoffe gebunden werden und damit nicht mehr für Wechselwirkungen zur Verfügung stehen. Mit steigender Konzentration des Stoffs oder der Stoffe im Fluid adsorbieren die im Fluid gelösten Aromastoff-Moleküle daher verstärkt am Sorptionsmittel, wodurch eine besonders hohe Rückgewinnungsquote und Aufkonzentrierung der noch im Fluid vorhandenen Aromastoffe ermöglicht wird. Alternativ oder zusätzlich ist es generell möglich, als Desorptionsmittel kein reines Lösungsmittel oder Lösungsmittelgemisch zu verwenden, sondern dem Desorptionsmittel wenigstens einen Stoff zuzusetzen, der unter Standardbedingungen vorzugsweise fest ist und sich zumindest teilweise im Desorptionsmittel löst. Das Desorptionsmittel kann grundsätzlich eine Lösung, Emulsion oder Suspension sein. Die Erfindung basiert dabei auf der

Erkenntnis, dass durch das Lösen des Stoffs oder der Stoffe das Desorptionsverhalten sowie das chromatographische Trennverhalten bestimmter Aromastoffe gezielt beeinflusst werden kann. Mit steigender Konzentration des Stoffs oder der Stoffe im Desorptionsmittel desorbieren bestimmte Aromastoff-Moleküle verstärkt vom Sorptionsmittel, wodurch eine besonders hohe Rückgewinnungsquote und eine einfache Abtrennung dieser Aromastoffe von anderen Aromastoffen ermöglicht wird. Auch in diesem Fall kann der wenigstens eine Stoff in einer Menge von mindestens 0,1 g/l, insbesondere von mindestens 1 g/l und vorzugsweise von mindestens 10 g/l zugegeben werden

Ebenso ist es möglich, zumindest einen Teil des Permeats aus den Arbeitsräumen 12a-c durch den Auslass 18" auszuleiten, indem die Ventileinrichtung 20‴ geöffnet wird. Dadurch gelangt nur ein Teil der polaren Aromastoffe in den Arbeitsraum 12d und wird an dem in diesem angeordneten Sorptionsmaterial gebunden. Durch diese steuer- und/oder regelbare Mengenreduktion können polare Aromastoffe gegenüber unpolaren Aromastoffen relativ abgereichert werden, wobei das Verhältnis der polaren Aromastoffe zueinander zumindest im Wesentlichen konstant bleibt.

Zur Desorption werden nach Beendigung der Beladungs- oder Sorptionsphase die Aromastoffe aller Arbeitsräume 12a-d in zur Beladungsrichtung umgekehrter Entladungsrichtung mit Ethanol als Desorptionsmittel desorbiert und ein entsprechendes Aromastoff-Konzentrat gewonnen, das durch den Auslass 18' ausgeleitet werden kann. Dabei kann optional vorgesehen sein, dass zumindest ein Teil der desorbierten polaren Aromastoffe über die geöffnete Ventileinrichtung 20‴ und den Auslass 18" ausgeleitet werden. Auch hierdurch ist eine relative Abreicherung der polaren gegenüber den unpolaren Aromastoffen unter Beibehaltung des relativen Verhältnisses der polaren Aromastoffe zueinander möglich. Das Ausleiten durch den Auslass 18" kann durch Schließen der Ventileinrichtungen 20' unterstützt werden. Der beschriebene Polaritätswechsel und die damit verbundenen Elemente und Zusatzstoffe können grundsätzlich immer verwendet werden, wenn das aromastoffhaltige Fluid durch zwei oder mehr Arbeitsräume 12 in Folge geleitet wird und wenn eine relative Abreicherung polarer gegenüber unpolarer Aromastoffe unter zumindest weitgehendem Erhalt des relativen Verhältnisses der polaren Aromastoffe zueinander gewünscht wird.

Fig. 15 zeigt eine Prinzipdarstellung eines weiteren Ausführungsbeispiels des erfindungsgemäßen Adsorptionssystems 10. Der grundsätzliche Aufbau des Adsorptionssystems 10 entspricht dabei weitgehend demjenigen des in Fig. 12 gezeigten Ausführungsbeispiels. Zusätzlich zum in Fig. 12 gezeigten Ausführungsbeispiel umfasst das Adsorptionssystem 10 einen über eine Ventileinrichtung 20d öffen- und verschließbaren Auslass 18", der fluidisch zwischen dem ersten und dem zweiten Arbeitsraum 12a, 12b angeordnet ist, sowie einen über eine Ventileinrichtung 20e öffen- und verschließbaren Auslass 18"', der fluidisch zwischen dem zweiten und dem dritten Arbeitsraum 12b, 12c angeordnet ist. Damit ermöglicht das Adsorptionssystem 10 nicht nur eine stufenweise Aufkonzentrierung der Aromastoffe über die Arbeitsräume 12a-c, sondern auch die Durchführung des vorstehend beschriebenen Polaritätswechsels über den Einlass 16" und die Ventileinrichtungen 20"', sowie eine davon unabhängige steuer- und/oder regelbare Mengenreduktion über die grundsätzlich optionalen Auslässe 18" und 18"'.

Grundsätzlich können alle Ausführungsformen des erfindungsgemäßen Adsorptionssystems 10 in der gezeigten Weise um die Möglichkeit eines steuer- und/oder regelbaren Polaritätswechsels und/oder einer steuer- und/oder regelbaren Mengenreduktion erweitert werden. Fig. 16 zeigt hierzu beispielhaft eine Prinzipdarstellung eines weiteren Ausführungsbeispiels des erfindungsgemäßen Adsorptionssystems 10, dessen Aufbau großteils demjenigen des in Fig. 1 gezeigten Adsorptionssystems 10 entspricht. Zusätzlich zum in Fig. 1 gezeigten Beispiel umfasst das vorliegende Adsorptionssystem 10 einen über eine Ventileinrichtung 20 öffen- und verschließbaren Einlass 16" mit einer zugeordneten Pumpeinrichtung 14 sowie einen über eine Ventileinrichtung 20 öffen- und verschließbaren Einlass 16‴ mit einer zugeordneten Pumpeinrichtung 14, über welche Wasser, Säuren, Basen und/oder lösliche Stoffe bedarfsweise in das Leitungssystem 13 bzw. in den bereits teilweise dearomatisierten Fluidstrom eingeleitet werden können. Die Einlässe 16" und 16‴ münden jeweils zwischen zwei Extraktionszellen 12. Weiterhin umfasst das Adsorptionssystem 10 einen über eine Ventileinrichtung 20' öffen- und verschließbaren Auslass 18" sowie einen über eine Ventileinrichtung 20' öffen- und verschließbaren Auslass 18'", über welche eine bedarfsweise Mengenreduktion erfolgen kann. Auch die Auslässe 18" und 18‴ münden jeweils zwischen zwei Arbeitsräumen 12.

Fig. 17 zeigt eine schematische Schnittansicht einesunterteilten Arbeitsraums 12, der beispielsweise in einem erfindungsgemäßen Adsorptionssystem 10 verwendet werden kann. Der Arbeitsraum 12 kann auch als Extraktionszelle bezeichnet werden. Zur Realisierung eines möglichst langen und vergleichsweise dünnen Adsorptionsweges und damit zur Darstellung eines Arbeitsraums 12, bei welchem ein Verhältnis von mittlerer Querschnittsdicke zu Gesamtlänge L höchstens 0,3 beträgt, kann ein entsprechend langes, mit Sorptionsmaterial gefülltes bzw. befüllbares Rohr verwendet werden. Mit zunehmender Länge L steigt allerdings auch der Fließwiderstand bzw. der zur Aufrechterhaltung eines sinnvollen Fluidflusses benötigte Eingangsdruck. Da Sorptionsmaterialien in der Regel porös sind, besteht die Gefahr, dass das oder die Sorptionsmaterialien bei Anwendung von Drücken oberhalb von etwa 1 bis 2 bar auf Dauer zerdrückt werden und damit ihre Adsorptionswirkung einbüßen und den Durchfluss blockieren, was zu einem weiteren Druckanstieg führen kann. Zudem kann das Sorptionsmaterial unter hohem Druck den Auslass des Arbeitsraums 12 verstopfen. Um dieses Phänomen zu verhindern, werden erfindungsgemäß möglichst lange Extraktionswege mit geringen Querschnittsflächen dadurch ermöglicht, dass lange Rohre mit vergleichsweise geringem Durchmesser durch den Einbau fester Trennböden 30, die beispielsweise als Sieb- oder Sinterböden ausgebildet sein können, segmentiert werden.

Dadurch entsteht eine Reihe unabhängiger Fließwiderstände, so dass über jedes einzelne Segment nur ein Druckabfall in der Höhe realisiert wird, der das Sorbens bzw. Sorptionsmittel nicht schädigt. Dementsprechend ist der Arbeitsraum 12 vorliegen durch in Anzahl und Anordnung exemplarische vier Trennböden 30 in fünf Teilräume 32 gleichen Volumens geteilt. Es versteht sich, dass anstelle von vier Trennböden 30 auch lediglich 1, 2 oder 3 sowie 5, 6, 7, 8, 9, 10 oder mehr Trennböden 30 vorgesehen sein können. Die resultierenden Teilräume 32 eines Arbeitsraums 12 können grundsätzlich gleiche oder unterschiedliche Höhen, Querschnittsflächen und/oder Volumina aufweisen. Dabei kann vorgesehen sein, dass das Rohr in entsprechende Rohrsegmente unterteilbar ist, um das Befüllen bzw. das Austauschen von Sorbensmitteln zu erleichtern. Die einzelnen Rohrsegmente können in beliebiger Weise miteinander verbindbar und aneinander festlegbar sein, beispielsweise durch Gewinde, Bajonettverschluss, Flansche 34 (s. Fig. 18), Rohrklemmen etc. Ebenso kann vorgesehen sein, dass die Rohrsegmente stoffschlüssig, beispielsweise durch Schweißen verbunden werden.

Soll beispielsweise ein Druckabfall zwischen Einlass 16 und Auslass 18 des mit einem Sorptionsmittel befüllten Arbeitsraums 12 von 1 bar eingestellt werden, würde sich bei einer exemplarischen Bettlänge von 1 m eine bestimmte Flussrate ergeben. Typische Werte für die Flussrate sind etwa 1,5 L/min Durchsatz bei 4 bar Druck und einer durchströmten Fläche von etwa 20 $cm^2$. Im Fall einer durchströmten Fläche von etwa 2000 $cm^2$ beträgt der typische Durchsatz bei ansonsten gleichen Randbedingungen etwa 150 L/min. Wollte man nun die Bettlänge bzw. die Länge L des Arbeitsraums 12 beispielsweise auf 5 m erhöhen, würde man zur Aufrechterhaltung der gleichen Fließgeschwindigkeit bzw. Flussrate den Druck am Einlass 16 auf 5 bar erhöhen müssen. Das würde in der Regel zu einer schnellen Zerstörung bzw. Inaktivierung des Sorptionsmittels führen, wodurch neben einem erheblichen Wartungsaufwand auch entsprechend hohen Betriebskosten entstünden. Wenn aber der 5 m lange Arbeitsraum 12 wie gezeigt in fünf Teilräume 32 oder Segmente unterteilt wird, die durch jeweilige Trennböden 30 begrenzt sind, fällt an jedem einzelnen dieser Trennböden 30 nur ein Druckabfall von etwa 1 bar (d. h. ca. 1 bar/m) an, wodurch der Arbeitsraum 12 und ein mit diesem ausgestattetes Adsorptionssystem 10 ohne Zerstörung des in den Teilräumen 32 angeordneten Sorptionsmittels dauerhaft stabil betrieben werden kann. Generell empfiehlt es sich, Arbeitsräume 12 mit einer Länge zwischen 1 m und 5 m zu verwenden, wobei vorzugsweise nach jedem Meter ein Trennboden 30 vorgesehen wird, um Erdrücken des Sorbens zu verhindern.

Ebenso ist es nicht nur möglich, gleiche Sorptionsmitteltypen, sondern auch unterschiedliche Sorptionsmitteltypen in die einzelnen Teilräume 32 einzufüllen, wobei in jedem Teilraum 32 entweder ein sortenreines Sorptionsmittel oder ein Sorptionsmittelgemisch vorgesehen sein kann. Hierdurch können die Adsorptionseigenschaften des gesamten Arbeitsraums 12 optimal an die jeweilige Trennaufgabe angepasst werden. Beispielsweise können in bezüglich einer Beladungsrichtung stromauf liegenden Teilräumen 32 Umkehrphasen vorgesehen sein, während in stromab liegenden Teilräumen 32 Normalphasen und/oder polare gebundene Phasen als Sorptionsmittel angeordnet werden. Umgekehrte Anordnungen, das heißt in Beladungsrichtung zuerst Normalphase(n)/polare Phase(n) und anschließend Umkehrphase(n), sowie abwechselnde Anordnungen sind natürlich ebenfalls denkbar.

Fig. 18 zeigt eine schematische Aufsicht eines DIN-Flansches 34, über welchen korrespondierend ausgebildete Rohrsegmente miteinander verbindbar sind, um einen Arbeitsraum 12 mit zwei oder mehr Teilräumen 32 zu schaffen. Man erkennt, dass der Flansch 34 eine zentrale Durchtrittsöffnung 36 aufweist, in welche ein Trennboden 30 einsetzbar ist. Fig. 19 zeigt hierzu eine schematische Aufsicht des Flansches 34, wobei ein als Siebboden ausgebildeter Trennboden 30 in die Durchtrittsöffnung 36 eingelegt und mit dem Flansch 34 verschweißt ist, um eine besonders dauerhafte und belastbare Verbindung sicherzustellen.

Fig. 20 zeigt eine schematische Aufsicht des Trennbodens 30, welcher exemplarisch als Siebboden ausgebildet ist. Die Maschenweite des Trennbodens 30 wird in an sich bekannter Weise an die Korngröße des Sorptionsmittels angepasst, so dass dieses zuverlässig zurückgehalten wird, ohne den Fluidfluss durch den Trennboden 30 zu verhindern. Alternativ zu einem Siebboden kann der Trennboden 30 auch Sintermaterial mit einer typischen Porengröße von etwa 40-150 $\mu$m umfassen.

Fig. 21 zeigt eine schematische Aufsicht des DIN-Flansches 34, wobei der Trennboden 30 in eine leicht erweitere Durchtrittsöffnung 36 eingelegt ist, bzw. auch in einen Dichtungsring eingelegt sein kann und von diesem Dichtungsring so im Zentrum des Flansches 34 über der Durchtrittsöffnung 36 gehalten wird. Im Unterschied zu einer stoffschlüssigen Anbindung kann der Trennboden 30 bei dieser Anordnung leicht ersetzt oder getauscht und beispielsweise an unterschiedliche Sorptionsmittelkorngrößenverteilungen angepasst werden.

Fig. 22 eine schematische Darstellung eines spiralförmigen Arbeitsraums 12 für ein erfindungsgemäßes Adsorptionssystem 10. Man erkennt, dass der röhrenförmige und mit Sorptionsmittel befüllte Arbeitsraum vergleichsweise lang und gleichzeitig dünn ausgebildet ist, so dass ein Verhältnis von Durchmesser: Länge <0,3 ist. Beispielsweise kann der Arbeitsraum mindestens 250 cm lang sein und einen Innendurchmesser von 5 cm aufweisen, wodurch sich ein Verhältnis von Durchmesser: Länge von 0,02 ergibt. Durch die spiralförmige Ausgestaltung ist der Arbeitsraum 12 besonders kompakt und platzsparend und kann darüber hinaus entsprechend einfach temperiert werden. Man erkennt weiterhin, dass der Arbeitsraum 12 mit einer einzelnen Pumpeinrichtung 14 gekoppelt ist, mittels welcher Flüssigkeiten und/oder Gase durch den Arbeitsraum 12 gepumpt werden können.

Fig. 23 zeigt eine schematische Darstellung mehrerer zickzackförmig angeordneter bzw. alternierend auf- und ablaufender Arbeitsräume 12 mit jeweils einer Pumpeinrichtung 14 pro Kehre bzw. pro Arbeitsraum 12. Die Arbeitsräume

12 sind jeweils überwiegend linear mit abgewinkelten Endbereichen ausgebildet und bilden eine Art Rohrbündel. Damit ergeben sich im vorliegenden Ausführungsbeispiel sechs Arbeitsräume 12 und sechs Pumpeinrichtungen 14, wobei grundsätzlich auch eine abweichende Anzahl an Arbeitsräumen 12 und/oder Pumpeinrichtungen 14 vorgesehen sein kann. Hierdurch können Druck- und Pumpverluste über die langen Arbeitsräume 12 besonders einfach ausgeglichen werden. Beispielsweise können die einzelnen Arbeitsräume 12 unabhängig voneinander Längen zwischen 2 m und 20 m aufweisen. Im vorliegenden Fall sind die Arbeitsräume jeweils 2 m lang, so dass bezogen auf die Gesamtlänge aller Arbeitsräume 12 von vorliegend 12 m nach 2 m, 4 m, 6 m, 8 m und 10 m jeweils eine weitere Pumpeinrichtung 14 vorgesehen ist. Auf diese Weise können die Arbeitsräume 12 gleichermaßen gut in beide Richtungen durchströmt werden, beispielsweise im Adsorptionsmodus in eine Richtung und im Desorptionsmodus in die Gegenrichtung. Darüber hinaus kann mit relativ geringen Druckdifferenzen von jeweils weniger als 5 bar, insbesondere weniger als 2 bar gearbeitet werden, wodurch einerseits kostengünstigere Pumpen verwendet werden können und andererseits die Lebensdauer des Sorptionsmittels verlängert wird.

Fig. 24 zeigt eine schematische Darstellung mehrerer zickzackförmig angeordneter Arbeitsräume 12, wobei die Arbeitsäume im Unterschied zum vorhergehenden Ausführungsbeispiel nicht im Wesentlichen linear sind, sondern jeweils eine Kehre aufweisen. Dementsprechend sind im gezeigten Ausführungsbeispiel lediglich drei im Wesentlichen U-förmige Arbeitsräume 12 und drei Pumpeinrichtungen 14 vorhanden, wobei auch in diesem Fall eine abweichende Anzahl an Arbeitsräumen 12 und/oder Pumpeinrichtungen 14 vorgesehen sein kann.

Fig. 25 zeigt eine schematische Darstellung eines mäanderförmigen Arbeitsraums 12 ohne Pumpeinrichtungen 14. Der Arbeitsraum 12 umfasst im Ausführungsbeispiel fünf Kehren, wobei auch in diesem Fall eine abweichende Anzahl an Kehren vorgesehen sein kann. Im Unterschied zu den vorherigen Ausführungsbeispielen sind die Kehren nicht eckig, sondern abgerundet, wodurch in manchen Fällen die Befüllbarkeit des Arbeitsraums 12 bzw. der Austausch des Sorptionsmittels erleichtert wird.

Fig. 26 zeigt eine Prinzipdarstellung eines weiteren Ausführungsbeispiels des erfindungsgemäßen Adsorptionssystems 10, wobei Fig. 26 lediglich eine erste Anreicherungsstufe des Adsorptionssystems 10 zeigt, während eine zweite, grundsätzlich optionale Anreicherungsstufe in Fig. 27 gezeigt ist. Die erste Anreicherungsstufe des Adsorptionssystems 10 umfasst zwei Gruppen von sorbensgefüllten Arbeitsräumen 12a, 12b, durch welche im Adsorptionsmodus ein aromastoffhaltiges Fluid, beispielsweise ein Destillat, ein Pumpensperrwasser und/oder ein Membranpermeat aus einer Entalkoholisierungsanlage geleitet und dabei die im Fluid enthaltenen Aromastoffe sorbiert werden. Die Arbeitsräume 12a, 12b können unabhängig voneinander auch aus mehreren Teilräumen 32 bzw. Bündeln von Arbeitsräumen 12 bestehen.

Im ersten Arbeitsraum 12a, der ein geringeres Volumen als der zweite Arbeitsraum 12b besitzt, werden überwiegend unpolare Aromastoffe gebunden, während im zweiten Arbeitsraum 12b überwiegend die polaren Aromastoffe gebunden werden. Die Geometrieverhältnisse der Arbeitsräume 12a, 12b bestimmen über die dort jeweils gebundenen Aromastoffmengen.

Jeder Arbeitsraum 12a, 12b kann beispielsweise mindestens 2,5 m lang sein, wobei auch Längen von 6 m, 16 m, 20 m, 50 m, 70 m, 100 m oder mehr sowie entsprechende Zwischenlängen denkbar sind. Weiterhin kann es vorgesehen sein, dass ein oder mehrere Arbeitsräume 12a, 12b in zwei oder mehr Teilräume unterteilt sind, wobei eine Gesamtlänge stets mindestens 2,5 m beträgt. Die Anzahl an Pumpeinrichtungen 14 wird entsprechend dem Bedarf und Druckabfall gewählt, wobei als allgemeine Empfehlung mindestens eine Pumpeinrichtung 14 pro 4 m Arbeitsraumlänge vorgesehen werden sollte. Alternativ oder zusätzlich sollte in der Regel eine Pumpeinrichtung 14 vorgesehen werden, wenn ein Druckabfall von 4 bar oder mehr bei einer Perkolationsrate von 70 $mL/min/cm^2$ oder mehr auftritt.

Die Perkolationsrate des ersten Arbeitsraums 12a sollte auf etwa 50-100 $mL/min/cm^2$ eingestellt werden. Der Durchmesser bzw. die mittlere Querschnittsdicke des ersten Arbeitsraums 12a wird entsprechend dem gewünschten Fluss gewählt. Der Durchmesser bzw. die mittlere Querschnittsdicke des zweiten Arbeitsraums 12b ist etwa 4 bis 10 mal größer als derjenige des ersten Arbeitsraums 12a. Generell beträgt ein Verhältnis von mittlerer Querschnittsdicke bzw. Durchmesser zu Länge bei jedem Arbeitsraum 12a, 12b höchstens 0,3 und vorzugsweise zwischen 0,04 für große Flussraten und 0,0002 für geringe Flussraten.

Man erkennt, dass die Arbeitsräume 12a, 12b in jeweiligen, vorliegend als Tauchbäder ausgebildeten Temperiereinrichtung 40a, 40b angeordnet sind, mittels welchen die Temperatur der Arbeitsräume 12a, 12b bzw. der darin befindlichen Sorptionsmittel eingestellt werden kann. Im Adsorptionsmodus wird mittels der Temperiereinrichtung 40a eine gegenüber der Raumtemperatur (25 °C) erhöhte Temperatur (z. B. 40 °C oder mehr) im Arbeitsraum 12a eingestellt, während mittels der Temperiereinrichtung 40b im Arbeitsraum 12b eine niedrigere Temperatur (z. B. 39 °C oder weniger) als im Arbeitsraum 12a eingestellt wird. Hierdurch wird eine zumindest im Wesentlichen vollständige Adsorption aller Aromastoffe erreicht.

Umgekehrt wird im Desorptionsmodus mittels der Temperiereinrichtung 40a im Arbeitsraum 12a eine Temperatur im Bereich der Raumtemperatur oder kälter (bis 0 °C oder weniger) eingestellt, während mittels der Temperiereinrichtung 40b im Arbeitsraum 12b eine über der Raumtemperatur liegende Temperatur (z. B. 30 °C oder mehr) als im Arbeitsraum 12a eingestellt wird. Alternativ kann auch im Desorptionsmodus im Arbeitsraum 12a eine gegenüber der

Raumtemperatur erhöhte Temperatur eingestellt werden. Hierdurch wird eine zumindest im Wesentlichen vollständige Desorption aller adsorbierten Aromastoffe erreicht.

Man erkennt, dass das Adsorptionssystem 10 weitere, in Strömungsrichtung gesehen stromauf und zwischen den Arbeitsräumen 12a, 12b im bzw. am Leitungssystem 13 angeordnete Temperiereinrichtungen 40 umfasst, mittels welchen das Fluid und/oder das Desorptionsmittel im Adsorptions- und Desorptionsmodus bedarfsweise temperiert werden kann. Weiterhin sind mehrere Ventileinrichtungen 20 im Leitungssystem 13 vorgesehen, mittels welchen im Adsorptions- und Desorptionsmodus bedarfsweise unterschiedliche Fluidpfade geschaltet werden können.

Im Adsorptionsmodus wird zunächst ein aromahaltiges, wässriges Fluid aus dem Brauereiwesen mit einem Ethanolgehalt zwischen 0 Vol.-% und 50 Vol.-% durch den Einlass 16 zum ersten Arbeitsraum 12a gepumpt. Mittels der Temperiereinrichtung 40a wird der erste Arbeitsraum 12a dabei erwärmt, beispielsweise auf Temperaturen von 40 °C oder mehr. Das bereits teilweise dearomatisierte Fluid wird stromab des ersten Arbeitsraums 12a gekühlt, beispielsweise auf 25 °C oder weniger, und gelangt in den zweiten Arbeitsraum 12b, welcher ein größeres Volumen und damit eine größere Sorbensmenge mit höherer Bindungskapazität als der erste Arbeitsraum 12a aufweist, so dass auch schlechter adsorbierende Aromastoffe, beispielsweise 2-Phenylethanol und 3-Methylbutan-1-ol, zuverlässig sorbiert werden. Nach dem zweiten Arbeitsraum 12b wird das dearomatisierte wässrige Permeat durch den Auslass 18 entfernt und kann verworfen oder zur Herstellung von Nahrungs- und Genussmitteln, die kein biertypisches Aroma aufweisen sollen, verwendet werden.

Anschließend wird das Adsorptionssystem 10 im Desorptionsmodus betrieben, um die adsorbierten Aromastoffe als Aromastoff-Konzentrat zurückzugewinnen. Hierzu wird durch den Einlass 16' ein erstes Desorptionsmittel, bei welchem es sich beispielsweise um Ethanol oder um eine Kombination bzw. einen Gradienten aus Ethanol und Wasser handeln kann, in den zweiten Arbeitsraum 12b geleitet. Ein hoher Wasseranteil über 50 Vol.-%, insbesondere von mehr als 95 Vol.-% ist bevorzugt. Das Desorptionsmittel kann mittels der stromab des Einlasses 16' angeordneten Temperiereinrichtung 40 temperiert werden, wobei die Temperatur in Abhängigkeit der Zusammensetzung des Desorptionsmittels gewählt wird. Üblicherweise wird eine Temperatur über 30 °C eingestellt. Dabei kann es vorgesehen sein, dass die Temperatur auf Werte zwischen 70 °C und 100 °C oder bis 120 °C oder mehr eingestellt wird, so dass das Desorptionsmittel beispielsweise Wasserdampf umfasst. Alternativ kann das Desorptionsmittel unter Druck gesetzt werden, so dass gemäß einer nicht-erfindungsgemäßen Ausführung beispielsweise bei einem Druck von etwa 2 bar flüssiges Wasser mit einer Temperatur von 120 °C als Desorptionsmittel verwendet werden kann.

Das Desorptionsmittelvolumen, das durch den zweiten Arbeitsraum 12b gepumpt wird, entspricht etwa dem 5 bis 20-fachen Innenvolumen, das der zweite Arbeitsraum 12b auf einer Länge von etwa 2 m bis etwa 4 m besitzt.

Dabei kann es vorgesehen sein, dass die Temperatur während der Desorption variiert, insbesondere kontinuierlich oder stufenweise erhöht wird. Dies ermöglicht die Erhöhung der Trennwirkung und eine selektive Desorption von leichter desorbierbaren Aromastoffen, z. B. Alkohole (C3-C6) oder Ethylacetat, bzw. von Aromastoffen mit einem niedrigen log Pow (log Pow < 2,0) bei niedrigeren Temperaturen und anschließend bei höherer Temperatur die Elution von unpolareren Verbindungen wie z. B. längerkettigen Estern und Aromastoffen mit einem log Pow > 2,0.

Die Ventileinrichtungen 20 werden dabei mittels einer aus Gründen der Übersichtlichkeit nicht dargestellte Steuereinrichtung in einer Ausführungsform derart geschaltet, dass das mit den desorbierten Aromastoffen angereicherte Desorptionsmittel teilweise oder vollständig als erstes Aromastoff-Konzentrat durch den Auslass 18' entnommen und dementsprechend nicht oder nicht vollständig durch den ersten Arbeitsraum 12a geleitet wird. Dabei kann vorgesehen sein, dass das Aromastoff-Konzentrat mittels der im Bereich des Auslasses 18' angeordneten Temperiereinrichtung 40 gekühlt wird, um etwaige Aromaverluste zu verhindern.

Zur Desorption der im ersten Arbeitsraum 12a sorbierten Aromastoffe wird ein weiteres Desorptionsmittel durch den Einlass 16" eingeleitet, durch den ersten Arbeitsraum 12a gepumpt und über den Auslass 18" als weiteres Aromastoff-Konzentrat aus dem Adsorptionssystem entfernt. Das weitere Desorptionsmittel kann beispielsweise Ethanol oder eine Kombination bzw. einen Gradienten aus Ethanol und Wasser sein, wobei ein hoher Ethanolanteil über 50 Vol.-%, insbesondere zwischen 65 Vol.-% und 96 Vol.-% oder mehr bevorzugt ist. Das Desorptionsmittelvolumen entspricht etwa dem ein- bis dreifachen Innenvolumen, das der erste Arbeitsraum 12a auf einer Länge von 2 m bis 4 m besitzt.

Das erste und das weitere Aromastoff-Konzentrat werden aufgefangen und können dann teilweise oder vollständig vereinigt werden, wobei durch eine vollständige Vereinigung das gesamte Aroma des ursprünglichen Fluids zumindest annähernd vollständig zurückgewonnen wird. Alternativ können das erste und das weitere Aromastoff-Konzentrat unabhängig voneinander verwendet oder weiterverarbeitet werden, um das Aromaprofil zu modifizieren. Die Zweistufigkeit des Adsorptionssystems 10 ermöglicht damit zusätzliche Möglichkeiten zugunsten der gezielten An- oder Abreicherung bestimmter Aromastoffe bzw. Aromastoffgruppen.

Die nicht-erfindungsgemäße Anwendung von Wasser zur Desorption von schwer sorbierbaren Aromastoffen im zweiten Arbeitsraum 12b spart Ethanol und ermöglicht eine höhere Anreicherung von Aromastoffen. Umgekehrt werden durch Anwendung von Ethanol oder Desorptionsmitteln mit hohem Ethanolanteil im ersten Arbeitsraum 12a zur Desorption leicht sorbierbarer Aromastoffe diese vollständig desorbiert, was mit reinem Wasser häufig nur teilweise gelingt oder große Volumina erfordert. Die Zweistufigkeit ermöglicht zudem, dass besonders hohe Anreicherungsfaktoren

erreicht werden können. Ein Arbeitsraum 12a allein kann häufig nicht einerseits eine großes Ausgangsvolumen an aromastoffhaltigem Fluid in einer wirtschaftlich sinnvollen Zeit aufnehmen und zugleich ein geringes Extraktvolumen erzeugen. Beispielsweise müssten bei einer Anreicherung um einen Faktor 3000 einerseits ca. 3000 Liter durch das Adsorptionssystem 10 gefördert werden, aber nur ca. 1 Liter Aromastoff-Konzentrat gewonnen werden.

Die nicht-erfindungsgemäße Verwendung von heißem Wasser oder Wasserdampf kann auch als Hochtemperaturverfahren bezeichnet werden. Dadurch entfallen alle technologischen Schwierigkeiten, die mit dem Umgang von organischen Lösungsmitteln im Zusammenhang stehen, wie z.B. Entflammbarkeit, Explosionsgefahr, Gesundheitsgefährdung, Umweltbelastungen, Abfallbeseitigung und regulatorische Grenzen bei Einsatz in der Lebensmittel- und Getränkeindustrie. Üblicherweise wird ein organisches Lösungsmittel eingesetzt, um am Sorbens gebundene Aromastoffe wieder frei zu setzen. Auf diesem Prinzip funktionieren auch alle üblichen analytischen Anwendungen von Sorbentien und auch verschiedenen Industrieprozesse. Jedoch kann durch Anwendung von Wasser zur Desorption bei gleichzeitiger Anwendung von Wärme die Bindung von Aromastoffen am Sorptionsmittel aufgehoben werden. Damit entfällt die Notwendigkeit der Verwendung von organischen Lösungsmitteln, insbesondere von Ethanol. Die Beimischung von geringen Anteilen organischer Desorptionsmittel kann im Einzelfall in Erwägung gezogen werden, um die Desorption zu steuern in dem Sinne, dass unpolare Stoffe früher eluieren. Üblicherweise werden polare Stoffe mit geringem log $P_{ow}$ rascher desorbiert als solche mit höherem log $P_{ow}$. Beispiele für biertypische polare Stoffe umfassen 2-Methylpropan-1-ol, 2- Methylbutan-1-ol, 3-Methylbutan-1-ol, Ethylacetat und 2-Phenylethanol. In vielen Fällen ist es vorteilhaft, das Sorbens bei niedrigen Temperaturen zu beladen (0-30 °C) und bei entsprechend deutlich höheren Temperaturen zu entladen (80-100 °C). Die nicht-erfindungsgemäße Verwendung von Wasser als Desorptionsmittel bietet den zusätzlichen Vorteil, dass das resultierende Aromastoff-Konzentrat nahezu oder vollständig ethanolfrei ist, so dass das Aromastoff-Konzentrat besonders gut zur Aromatisierung bzw. Rearomatisierung von alkoholfreien Bieren, einschließlich Bieren mit einem Alkoholgehalt <0,045 Vol.-% verwendet werden kann, da das erhaltene Wasserphasenaroma in beliebiger Menge dem entalkoholisierten Bier zurückgegeben werden kann. Mit anderen Worten sind vorzugsweise alle Aromastoffe im Aromastoff-Konzentrat im Vergleich zum aromastoffhaltigen Fluid zumindest bezogen auf den Ethanolgehalt und vorzugsweise auch in Bezug auf das Volumen, das heißt in ihrer Konzentration, angereichert. In diesem Sinne wird Ethanol nicht als Aromastoff verstanden.

Eine weitere Möglichkeit besteht im Zusatz von Feststoffen, Säuren und/oder Basen im Adsorptions- und/oder Desorptionsmodus. Dies ermöglicht eine Steuerung des pH-Werts und eine Erhöhung der Sorbenskapazität durch Salz oder andere im Fluid und/oder Desorptionsmittel lösliche Feststoffe. Durch einen nur zeitweiligen Einsatz dieser Zusatzstoffe kann der gewünschte Effekt gezielt abgeschwächt und damit kontrolliert werden. So können bestimmte Stoffe gezielt an- oder abgereichert werden, z. B. können organische Säuren in der Regel nicht oder überwiegend nicht sorbiert werden bei Anwendung eines pH-Wertes über etwa 8 bzw. wenn sie in der deprotonierten Form vorliegen. Umgekehrt können stickstoffhaltige organische Verbindungen durch Einstellen eines pH-Werts unter etwa 5 bzw. wenn sie in der protonierten Form vorliegen nicht oder überwiegend nicht sorbiert werden.

In einer alternativen, nicht-erfindungsgemäßen Betriebsweise des Adsorptionssystems 10 wird im Desorptionsmodus zunächst der zweite Arbeitsraum 12b mit heißem Wasser als Desorptionsmittel beaufschlagt. Im Übergang vom zweiten Arbeitsraum 12b zum ersten Arbeitsraum 12a wird das bereits mit Aromastoffen angereicherte heiße Wasser abgekühlt in den ersten Arbeitsraum 12a eingeleitet. Dadurch wird eine Anreicherung von denjenigen Aromastoffen im ersten Arbeitsraum 12a erzielt, die im Adsorptionsmodus bzw. während der Sorptionsphase in den zweiten Arbeitsraum 12b der Anlagen wandern konnten.

Anschließend erfolgt eine Desorption aller im ersten Arbeitsraum 12a sorbierten Aromastoffe mittels Ethanol oder einem Desorptionsmittelgemisch bzw. Gradient. Durch dieses Verfahren erreicht man eine besonders hohe Konzentration von Aromastoffen in einem vergleichsweise kleinen Volumen, das anschließend in einen Extrakt mit entsprechend hoher Aromastoffkonzentration überführt werden kann.

Fig. 27 zeigt eine Prinzipdarstellung einer erfindungsgemäßen Hochkonzentrationseinrichtung 42, die grundsätzlich optional ist und auch als zweite Anreicherungsstufe des Adsorptionssystems 10 bezeichnet werden kann. Die Hochkonzentrationseinrichtung 42 umfasst einen Einlass 16, durch welchen in einem Adsorptionsmodus der Hochkonzentrationseinrichtung 42 ein Aromastoff-Konzentrat der ersten Anreicherungsstufe eingeleitet wird. Im Fall der vorstehend beschriebenen Zwei- oder Mehrstufigkeit der ersten Anreicherungsstufe kann das Aromastoff-Konzentrat durch Vereinigung aller anfallenden Aromastoff-(Teil) Konzentrate der ersten Anreicherungsstufe erhalten sein. Alternativ kann als Ausgangsmaterial der zweiten Anreicherungsstufe nur ein Teil des Aromastoff-Konzentrats oder der Aromastoff-(Teil)Konzentrate der ersten Anreicherungsstufe bzw. eine bestimmte Ausmischung davon verwendet werden. Alternativ oder zusätzlich ist es möglich, zunächst den Ethanolgehalt des ersten Aromastoff-Konzentrats einzustellen, beispielsweise auf einen Wert zwischen 2,5 Vol.-% und 17 Vol.-%. Dies kann wahlweise durch Zugabe von Ethanol und/oder von Wasser, insbesondere von Brauwasser erfolgen. Hierdurch kann bei Bedarf die Adsorption von bestimmten Aromastoffen am Sorptionsmittel verbessert werden.

Das Aromastoff-Konzentrat wird dann durch einen mittels einer Temperiereinrichtung 40c auf eine Temperatur zwischen 0 °C und 30 °C temperierten Arbeitsraum 12c geleitet, welcher mit einem Sorptionsmittel befüllt ist und

grundsätzlich auch als Extraktionsrohr bezeichnet werden kann. Das dearomatisierte Permeat wird dann durch den Auslass 18 ausgeleitet und kann wie vorstehend beschrieben verworfen oder weiterverwendet werden.

In einem Desorptionsmodus wird dann ein Desorptionsmittel, beispielsweise Ethanol, Wasser bzw. Wasserdampf oder eine beliebige Mischung hieraus, durch den Einlass 16' in umgekehrter Richtung durch den auf eine Temperatur über 60 °C temperierten Arbeitsraum 12c geleitet, so dass über den Auslass 18' ein zweites Aromastoff-Konzentrat aufgefangen werden kann, in welchem vorzugsweise alle Aromastoffe im Vergleich zum ersten Aromastoff-Konzentrat zumindest bezogen auf den Ethanolgehalt und vorzugsweise auch in Bezug auf das Volumen, das heißt in ihrer Konzentration, angereichert sind. Im Bereich des Auslasses 18' ist eine grundsätzlich optionale Temperiereinrichtung 40 angeordnet, mittels welcher das zweite Aromastoff-Konzentrat gekühlt werden kann, um unerwünschte Änderungen des Aromaprofils zu verhindern.

Die Ventileinrichtungen 20, die Temperiereinrichtungen 40 und die Beaufschlagung des Sorptionsmittels im Arbeitsraum 12c mit den jeweiligen Fluiden können ebenfalls mit der aus Gründen der Übersichtlichkeit nicht dargestellten Steuereinrichtung des Adsorptionssystems 10 gesteuert bzw. geregelt werden. Auch im Fall der Hochkonzentrationseinrichtung 42 besteht die Möglichkeit, Feststoffe, Säuren und/oder Basen im Adsorptions- und/oder Desorptionsmodus zuzugeben. Dies ermöglicht auch hier eine Steuerung des pH-Werts und eine Erhöhung der Sorbenskapazität durch Salz oder andere im ersten Aromastoff-Konzentrat und/oder Desorptionsmittel lösliche Feststoffe. Durch einen nur zeitweiligen Einsatz dieser Zusatzstoffe kann der gewünschte Effekt gezielt abgeschwächt und damit kontrolliert werden. So können bestimmte Stoffe gezielt an- oder abgereichert werden, z. B. können organische Säuren in der Regel nicht oder überwiegend nicht sorbiert werden bei Anwendung eines pH-Wertes über etwa 8. Umgekehrt können Aminoverbindungen durch Einstellen eines pH-Werts unter etwa 5 nicht oder überwiegend nicht sorbiert werden.

Der Vorteil der Hochkonzentrationseinrichtung 42 besteht darin, dass diese zwar grundsätzlich gleich oder ähnlich wie die erste Anreicherungsstufe des Adsorptionssystems 10 aufgebaut sein kann, dass aber der Arbeitsraum 12c kleiner dimensioniert sein kann und gegebenenfalls ein abweichendes Sorptionsmittel verwendet werden kann. Damit können dann sehr hoch konzentrierte (Faktor 200 oder mehr bezogen auf das Fluid) Aromastoff-Konzentrate hergestellt werden unter Rückgewinnung selbst polarer Aromastoffe.

Aromastoffe werden von Sorptionsmitteln unterschiedlich stark gebunden. Zudem ist die Kapazität des Sorptionsmittels ist für Aromastoffe charakteristisch und unterschiedlich. Während der Beladung des Sorptionsmittels mit einem Aromastoffe enthaltenden Fluid dringen Aromastoffe entsprechend ihrer Menge und Charakteristik unterschiedlich tief in das Sorbensbett ein bzw. werden unterschiedlich stark an diesem sorbiert. Aus diesem Grund dringen insbesondere Aromastoffe, die für den Charakter von durch Fermentation gewonnenen Nahrungs- und Genussmitteln (Bier und Wein) wichtig sind, tief in das Sorbensbett ein. Um eine vollständige Rückgewinnung von Aromastoffen zu gewährleisten und ein Durchbrechen von Stoffen während der Beladungsphase zu vermeiden, wird erfindungsgemäß ein entsprechend langes, gleichzeitig aber relativ dünnes bzw. schmales Sorbensbett zur Verfügung gestellt. Die exakte Länge des Sorbensbetts kann den jeweiligen Erfordernissen bezüglich Art und Menge wichtiger Aromastoffe durch fachübliche Versuche angepasst werden. Im Falle von Bier sind insbesondere 2-Methylbutan-1-ol, 3-Methylbutan-1-ol, 2-Methylpropanol und Ethylacetat wichtige Aromastoffe, die aus geschmacklichen Gründen wiedergewonnen werden müssen, um ein authentisches, biertypisches Aromaprofil zu erreichen.

Die gleichzeitige Rückgewinnung von polaren und unpolaren Aromastoffen war bislang aber technisch nicht möglich, da handelsübliche Extraktionszellen eine maximale Länge von wenigen Zentimetern bis etwa 1 m aufweisen. Diese Betthöhe ist in aber keiner Weise ausreichend, um den gewünschten Effekt einer authentischen Abbildung mit hohen Aufkonzentrationsfaktoren zu erzielen. Im Unterschied dazu ist es mit Hilfe des erfindungsgemäßen Adsorptionssystem 10 möglich, neben unpolaren Aromastoffen auch bis zu 100 % sogar stark polarer Aromastoffe wie beispielsweise 2-Methylbutan-1-ol, 3-Methylbutan-1-ol, 2-Methylpropanol und Ethylacetat (Log $P_{ow}$ = 0,73) zurückzugewinnen.

Insbesondere durch Anwendung des vorstehend beschriebenen zwei- oder mehrstufigen Verfahrens mit einer großvolumigen ersten Anreicherungsstufe für eine Anreicherung um einen Faktor von bis zu 300 oder mehr und einer Hochkonzentrationseinrichtung 42 in einer kleinen zweiten Anreicherungsstufe um einen Faktor von bis zu 10 oder mehr können erstens hohe Anreicherungsfaktoren bei gleichzeitiger Rückgewinnung polarer Aromastoffe erzielt werden und zweitens kann das Ausgangsmaterial für die zweite Anreicherungsstufe beispielsweise bezüglich des pH-Wertes so eingestellt werden, dass gegebenenfalls ungewünschte Aromastoffe (Säuren, Amine, Sulfide etc.) am Sorptionsmaterial in deprotonierter oder protonierter Form vorbeigeleitet werden und mit dem Permeat entsorgt werden können. Dadurch muss eine solche pH-Einstellung nicht zwingend am Fluid des ersten Prozessschrittes durchgeführt werden und es kann das Permeat der ersten Anreicherungsstufe in seiner authentischen Zusammensetzung einer weiteren Verwendung zugeführt werden, z. B. als ethanolische Basis für alkoholische Getränke ohne Biergeschmack. Umgekehrt ist es bei Verwendung eines ionentauschenden Sorptionsmaterials möglich, überwiegend oder ausschließlich die deprotonierten bzw. protonierten Verbindungen zu adsorbieren, während die nicht-ionischen Aromastoffe im Permeat aufgefangen werden können.

Ein weiterer Vorzug der Zwei- oder Mehrstufigkeit liegt darin, dass die Prozessdauer im Falle einer Hochaufkonzentration unter der vergleichbaren Dauer einer Adsorptionssystems 10 mit einem einzigen Arbeitsraum 12 liegen

kann, da entsprechend dünne Rohre verwendet werden müssten und eine entsprechend lange Beladungszeit mit vergleichsweise hohen Druckdifferenzen resultieren würde. Zudem würden in einer solchen Anlage insbesondere polare Stoffe sehr lange Zeit durch das Sorbensbett wandern (Chromatographie-Effekt), so dass die Bettlänge noch höher ausfallen müsste.

Der Vorteil einer Rückgewinnung mit heißem Wasser ist insbesondere für bei der Herstellung eines Aromastoff-Konzentrats (Aromaextraktes) für ein Bier (oder einen Wein) mit einem Alkoholgehalt von 0,0 Vol.-% vorteilhaft gegenüber der Rückgewinnung mit Ethanol, da die Ethanolmenge bei der Ausmischung nicht streng kontrolliert werden muss. Ein langer Sorbensweg durch verhältnismäßig dünne Rohre ist insbesondere auch bei Anwendung einer Aromastoff-Desorption mit (heißem) Wasser bzw. Wasserdampf vorteilhaft, da lange, dünne Arbeitsräume 12 erheblich schneller temperiert werden können als kurze, dicke Arbeitsräume 12.

Üblicherweise werden als alkoholfrei solche Nahrungs- und Genussmittel verstanden, deren Alkoholgehalt unter 0,5 Vol.-% Ethanol liegt. Bei diesen Nahrungs- und Genussmitteln können auch ethanolische Aromastoff-Konzentrate mit einem relativ geringen Anreicherungsfaktor zur Aromatisierung verwendet werden, da ausgehend von einem Alkoholgehalt von beispielsweise 0,4 Vol.-% vergleichsweise große Volumina an Aromastoff-Konzentrat zugegebene werden können, ohne dass die Grenze von 0,5 Vol.-% überschritten würde. Soll das Nahrungs- und Genussmittel aber einen Alkoholgehalt von 0,1 Vol.-% oder sogar 0,0 Vol.-% aufweisen, muss der tatsächliche Alkoholgehalt deutlich niedriger, beispielsweise unter 0,045 Vol.-% Ethanol liegen, was stark erhöhe Anforderungen an die Technologie stellt. Ohne die erfindungsgemäße Verwendung besonders langer und gleichzeitig verhältnismäßig dünner Sorbensbetten ist dieser Anspruch bei gleichzeitiger Rückgewinnung einer sensorisch relevanten Menge an Aromastoffen nicht erfüllbar. Ohne die Verwendung eines entsprechend langen und vergleichsweise dünnen Sorbensbettes kann beispielsweise bei einer nicht-erfindungsgemäßen Desorption mit (heißem) Wasser bzw. Wasserdampf zwar der erforderliche Restgehalt an Ethanol leicht erreicht werden, aber nicht die Rückgewinnung der wichtigen polaren Aromastoffe, wodurch kein authentisches und insbesondere kein biertypisches Aromaprofil gegeben wäre. Umgekehrt kann bei herkömmlichen kurzen, dicken Extraktionszellen und der Verwendung von Ethanol als Desorptionsmittel der gewünschte niedrige Alkoholgehalt von 0,1 Vol.-% oder weniger im Endprodukt von vornherein nicht erfüllt werden.

Fig. 28 zeigt eine Prinzipdarstellung eines weiteren Ausführungsbeispiels des erfindungsgemäßen Adsorptionssystems 10, wobei Ventileinrichtungen 20 aus Gründen der Übersichtlichkeit nicht dargestellt sind. Das Adsorptionssystem 10 ist einstufig aufgebaut und umfasst lediglich einen temperierbaren Arbeitsraum 12, der mit einem Sorptionsmittel befüllt ist. Im Adsorptionsmodus wird ein aromastoffhaltiges Fluid aus dem Brauereiwesen mit einem Ethanolgehalt von 0 bis 40 Vol.-% durch den Einlass 16 in das Leitungssystem 13 eingebracht und durch den auf 0°°C-35 °C temperierten Arbeitsraum 12 geleitet. Das dearomatisierte Permeat wird durch den Auslass 18 abgeführt. Im Desorptionsmodus wird ein auf 50 °C-100 °C temperiertes Desorptionsmittel durch den Einlass 16' in das Leitungssystem 13 eingeleitet und in umgekehrter Fließrichtung durch den Arbeitsraum 12 geleitet. Die Temperatur kann gegebenenfalls während des Desorptionsprozesses gesteigert werden. Das resultierende Aromastoff-Konzentrat wird durch die Temperiereinrichtung 40 im Bereich des Auslasses 18' vorgekühlt. Dabei kann grundsätzlich vorgesehen sein, dass zwei oder mehr Fraktionen gesammelt und in spezieller Weise, das heißt durch Verwerfen zumindest eines Teils einer oder mehrerer Fraktionen, ausgemischt werden, um das Aromaprofil des Aromastoff-Konzentrats einzustellen.

Auch hier besteht die Möglichkeit eines Zusatzes von Feststoffen, Säuren und/oder Basen im Adsorptions- und/oder Desorptionsmodus. Dies ermöglicht eine Steuerung des pH-Werts und eine Erhöhung der Sorbenskapazität durch Salz oder andere im Fluid und/oder Desorptionsmittel lösliche Feststoffe. Durch einen nur zeitweiligen Einsatz dieser Zusatzstoffe kann der gewünschte Effekt gezielt abgeschwächt und damit kontrolliert werden. So können bestimmte Stoffe gezielt an- oder abgereichert werden, z. B. können organische Säuren in der Regel nicht oder überwiegend nicht sorbiert werden bei Anwendung eines pH-Wertes über etwa 8. Umgekehrt können Aminoverbindungen durch Einstellen eines pH-Werts unter etwa 5 nicht oder überwiegend nicht sorbiert werden.

Fig. 29 zeigt eine Prinzipdarstellung eines weiteren Ausführungsbeispiels des erfindungsgemäßen Adsorptionssystems 10. Der Aufbau des Adsorptionssystems 10 entspricht weitgehend demjenigen des in Fig. 26 gezeigten Ausführungsbeispiels. Im Unterschied zum in Fig. 26 gezeigten Ausführungsbeispiel ist der erste Arbeitsraum 12a nicht in einem Tauchbad angeordnet bzw. nicht mit einer Temperiereinrichtung 40 versehen. Im Unterschied zum in Fig. 26 gezeigten Ausführungsbeispiel kann das den Arbeitsraum 12a verlassende Aromastoff-Konzentrat im Desorptionsmodus wahlweise über den Auslass 18' oder über den Auslass 18" entnommen werden. Dies ermöglicht eine einfache Fraktionierung, wobei beispielsweise ein überwiegend ethanolisches Eluat vom Anfang des Arbeitsraums 12a durch den Auslass 18" und ein überwiegend wässriges Eluat vom Ende des Arbeitsraums 12a durch den Auslass 18' entnommen werden kann oder umgekehrt. Es versteht sich, dass auch abweichende konstruktive Variationen denkbar sind.

Fig. 30 zeigt ein vereinfachtes Flussdiagramm eines Verfahrensablaufs zur Herstellung eines Aromastoff-Konzentrats mit einem biertypischen Aroma unter Verwendung eines erfindungsgemäßen Adsorptionssystems 10. In einem ersten Schritt 50 wird ein aromastoffhaltiges, wässriges Fluid aus dem Brauereiwesen bereitgestellt und in Schritt 52 durch einen mit Sorptionsmittel befüllten ersten Arbeitsraum 12 geleitet. Optional können in Schritt 54 einer oder mehrere stromab des ersten Arbeitsraums 12 liegende weitere Arbeitsräume 12 mit dem Fluid durchströmt werden. In

Schritt 56 wird ein teilweise oder vollständig dearomatisiertes Permeat erhalten, das verworfen oder anderweitig verwendet werden kann. In Schritt 58 werden ein oder mehrere Desorptionsmittel, Desorptionsmittelgemische und/oder Desorptionsmittelgradienten bereitgestellt und zur Desorption der Aromastoffe verwendet, die in dem oder den Arbeitsräumen am Sorptionsmittel adsorbiert vorliegen. Hierdurch werden in Schritt 60 bzw. optional auch 62 ein oder mehrere Aromastoff-Konzentrate erhalten, die jeweils in 1, 2, 3, 4, 5, 6, 7, 8, 9, 10 oder mehr Fraktionen aufgefangen werden können. Eine, mehrere oder alle Fraktionen können in Schritt 64 einer grundsätzlich optionalen Hochanreicherung mit Hilfe einer Hochkonzentrationseinrichtung 42 unterworfen werden. Das Resultat einer solchen Hochanreicherung ist ein in Schritt 66 abgetrenntes Permeat sowie ein zweites Aromastoff-Konzentrat, das in Schritt 68 aufgefangen wird. Dabei sind vorzugsweise alle Aromastoffe im zweiten Aromastoff-Konzentrat im Vergleich zum ersten Aromastoff-Konzentrat (Schritt 60 und/oder 62) zumindest bezogen auf den Ethanolgehalt und vorzugsweise auch in Bezug auf das Volumen, das heißt in ihrer Konzentration, angereichert. In diesem Sinne wird Ethanol nicht als Aromastoff verstanden. Alternativ können manche Aromastoffe gezielt abgereichert werden, beispielsweise um Fehlaromen zu entfernen oder um das bereits vorhandene Aromaprofil eines Nahrungs- und Genussmittels, mit welchem das Aromastoff-Konzentrat ausgemischt werden soll, optimal zu berücksichtigen. Eine Möglichkeit zur Modulierung des Desorptionsverhaltens ist die Zugabe von löslichen Substanzen und/oder die Einstellung bzw. Variierung des pH-Werts. Dies ist unabhängig voneinander bei bzw. vor den mit einem Stern-Symbol gekennzeichneten Schritten möglich, wobei hierbei beliebige Kombinationen vorgesehen sein können.

Gemäß einem weiteren Ausführungsbeispiel wird in einem ersten Schritt ein aromastoffhaltiges, wässriges Fluid aus dem Brauereiwesen bereitgestellt und in einem folgenden Schritt durch einen mit Sorptionsmittel befüllten ersten Arbeitsraum 12a geleitet. Die adsorbierten Aromastoffe werden in einem folgenden Schritt zunächst nur mit (ggf. heißem) Wasser als Desorptionsmittel desorbiert. Anschließend wird das Sorptionsmittel im Arbeitsraum 12a mit Ethanol als Desorptionsmittel beaufschlagt. Mit anderen Worten wird ein Stufengradient Wasser-Ethanol als Desorptionsmittel verwendet. Die erhaltenen Desorbate (Wasser-Ethanol) werden getrennt in mindestens 2 Fraktionen aufgefangen. Der mittels Wasser desorbierte Anteil des Aromastoff-Konzentrats kann ohne weitere Aufarbeitung zur Rearomatisierung von entalkoholisiertem Bier eingesetzt werden, da auch größere Mengen zugegeben werden können, ohne den Ethanolgehalt zu verändern.

Der mittels Ethanol desorbierte Anteil des Aromastoff-Konzentrats kann gegebenenfalls mit Wasser (Brauwasser) auf einen vorbestimmten Ethanolgehalt verdünnt und einer Hochkonzentrationseinrichtung 42 zugeführt werden. Dort wird das ethanolische erste Aromastoff-Konzentrat sorbiert und anschließend mittels Desorption mit Ethanol entsprechend hoch in Ethanol als zweites Aromastoff-Konzentrat angereichert. Aufgrund der hohen Aufkonzentrationsfaktoren von bis zu 2000 oder mehr, können dem alkoholarmen/alkoholfreien Bier entsprechend geringe Mengen an zweitem Aromastoff-Konzentrat zur Erzeugung eines gewünschten Aromaprofils verwendet werden, so dass die resultierende Ethanolmenge bzw. -konzentration die erlaubten Höchstmengen im entalkoholisierten Bierprodukt nicht überschreitet. Alternativ oder zusätzlich kann auch die Hochkonzentrationseinrichtung 42 mittels ggf. heißem Wasser und/oder Wasserdampf desorbiert werden. Durch Einsatz dieses Verfahrens können insbesondere unpolare und schwer sorbierbare, aber mittels heißem Wasser leicht desorbierbaren Aromastoffe weitgehend quantitativ im ersten Schritt gewonnen werden, während die leicht sorbierbaren unpolaren Stoffe in der Hochanreicherungsphase weitestgehend quantitativ gewonnen werden. Dadurch wird auch erreicht, dass bereits vor der Hochanreicherungsstufe schwer sorbierbare Stoffe weitestgehend quantitativ entfernt werden und folglich auch nicht in diesem Schritt verloren gehen können. Dadurch wird zudem erreicht, dass die benötigte Anlagengröße der Hochkonzentrationseinrichtung 42 zur Hochanreicherung minimiert wird und entsprechend höhere Anreicherungsfaktoren erzielt werden können.

Eine Methodik zur Analyse des Aromastoffprofils von Bier oder bierhaltigen Getränken über GC/MS ist in der folgenden Tabelle 2 angegeben. Die Messergebnisse können dazu verwendet werden, dasjenige Volumen an Aromastoff-Konzentrat zu bestimmen, das einem entalkoholisierten bzw. gägrgestoppten Bier hinzugegeben werden muss, um ein gewünschtes, insbesondere Vollbier-ähnliches Aromaprofil zu erzeugen bzw. wiederherzustellen.

Tabelle 2: Messmethode Bieranalytik

| | | | |
|---|---|---|---|
| Probenherstellung: | | | |
| | 200-250 mg | Bier | |
| | 800 μl | Methanol | |
| | 100 μl | 2,3-Dimethoxytoluol (DMOT) | 82,4 ppm in DMOT-Lösung |
| Externe Kalibrierung, 2-Punkt-kalibrierung<br>Geräteparameter | | | |

(fortgesetzt)

| | | | | |
|---|---|---|---|---|
| Autosampler | Auto Injector AOC-20i | | | |
| GC | Shimadzu GC-2010 plus | | | |
| MS | Shimadzu GCMS-QP2010 SE | | | |
| Liner | Glaswolle gefüllter Liner von Shimadzu | | | |
| Temperatur Injektor | 230°C | | | |
| Injektionsvolumen | 1 μL | | | |
| Trägergas Helium 4.6 | 35 cm/s | | | |
| Ofenprogramm | | | | |
| Starttemperatur | 30°C | | | |
| Haltezeit | 1 min | | | |
| Aufheizrate | 6 °C/min | | | |
| Endtemperatur | 240 °C | | | |
| Haltezeit | 5 min | | | |
| konstanter Druck / Split Injektion | | | | |
| Kopfdruck | 45,6 kPa | | | |
| totale Flussrate | 34 mL/min | | | |
| Säulenfluss | 1 mL/min | | | |
| Purge Fluss | 3mL/min | | | |
| Splitverhältnnis | 30 | | | |
| Säule: FFAP, 30 m x 0.25 mm Innendurchmesser, 0.25 μm Filmdicke, J&W Scientific | | | | |
| SIM-Modus | | | | |
| Aufnahme Massenspektra EI Mode 70 eV | | | | |
| Analyten und interner Standard | | | | |
| Substanzname; CAS-Nummer | | retention time | target mass | qualifier mass |
| 2,3-Dimethoxytoluol; 4463-33-6 | ISTD | 18.650 | 152 | 137 |
| Essigsäureethylester; 141-78-6 | Target | 2.750 | 43 | 70 |
| Buttersäureethylester; 105-54-4 | Target | 4.950 | 88 | 71 |
| Isobutanol; 78-83-1 | Target | 6.250 | 43 | 41 |
| Isoamylacetat; 123-92-2 | Target | 6.650 | 70 | 55 |
| 2-Methylbutan-1-ol; 137-32-6 | Target | 8.600 | 57 | 70 |
| 3-Methylbutan-1-ol; 123-51-3 | Target | 8.660 | 55 | 70 |
| Ethylhexanoat; 123-66-0 | Target | 9.190 | 99 | 88 |
| 2-Phenylethylacetat; 103-45-7 | Target | 21.820 | 104 | 91 |
| 2-Phenylethanol; 60-12-8 | Target | 23.600 | 91 | 92 |
| Peak-Flächenkorrektur für co-eluierende Analyten (2-Methylbutan-1-ol und 3-Methylbutan-1-ol) | | | | |

Die Verbindungen 2-Methylbutan-1-ol und 3-Methylbutan-1-ol haben beide jeweils Massenfragmente bei m/z = 55 und bei m/z = 57. Diese Massenfragmente entstehen im Massenspektrometer (EI, 70eV) jeweils in konstanten Mengenverhältnissen. Diese Verhältnisse stehen im folgenden Verhältnis zueinander:
Verhältnis der Massenfragmente m/z = 57 zu m/z = 55 in 2-Methylbutan-1-ol: $r_2$ = 2,941 Verhältnis der Massenfragmente m/z = 57 zu m/z = 55 in 3-Methylbutan-1-ol: $r_3$ = 0,246 Aufgrund der Co-Elution können nur Peakflächen auf den Massenspuren m/z = 55 zu m/z = 57 gemessen werden, die jeweils Anteile von 2-Methylbutan-1-ol und 3-Methylbutan-1-ol enthalten, $PA_{55}$ und $PA_{57}$. Zur Bestimmung der jeweiligen Anteile von 2-Methylbutan-1-ol und 3-Methylbutan-1-ol wird

gemäß den folgenden Formeln (III) und (IV) für 2-Methylbutan-1-ol die auf m/z=57 erhaltene Peakfläche um den Teil korrigiert, die dem Mengenanteil an 3-Methylbutan-1-ol auf der Masse 57 entspricht. Für 3-Methylbutan-1-ol wird die auf m/z=55 erhaltene Peakfläche um den Teil korrigiert, die dem Mengenanteil auf dieser Masse an 2-Methylbutan-1-ol entspricht:

$$PA_{korrigiert,\,3Methylbutanol,\,55} = \frac{PA_{57} - PA_{55} * r_2}{r_3 - r_2} \qquad \text{(III)}$$

$$PA_{korrigiert,\,2Methylbutanol,\,57} = \left(PA_{55} - \frac{PA_{57} - PA_{55} * r_2}{r_3 - r_2}\right) * r_2 \qquad \text{(IV)}$$

In der folgenden Tabelle 3 werden exemplarisch die Ausgangswerte biertypischer Aromastoffe eines sogenannten "0.0%" Bieres, das heißt eines Bieres, das durch Gärstopp und/oder Entalkoholisierung auf einen Ethanolgehalt von höchstens 0,045 Vol.-% oder weniger gebracht wurde, die Ausgangswerte biertypischer Aromastoffe eines alkoholfreien "0.5%" Bieres (zwischen 0,3 und 0,5 Vol.-% Ethanol), sowie Zielbereiche der entsprechenden Aromastoffe, die durch Ausmischen des jeweiligen 0.0% oder 0.5% Ausgangsbieres mit einem erfindungsgemäßen Aromastoff-Konzentrat erreicht werden, angegeben.

Tabelle 3: Beispiel für mit einem Aromastoff-Konzentrat ausgemischte Biere

| | "0.0 %" Bier - Aromagehalt vor Zugabe des Aromastoff-Konzentrats | "0.5 %" Bier - Aromagehalt vor Zugabe des Aromastoff-Konzentrats | Aromagehalt des Bieres nach Ausmischen mit dem Aromastoff-Konzentrat | |
|---|---|---|---|---|
| | ppm | ppm | ppm Min | ppm Max |
| Essigsäureethylester; 141-78-6 | 0,000 | 0,05 | 5 | 50 |
| Buttersäureethylester; 105-54-4 | 0,000 | 0,000 | 0 | 0,2 |
| Isobutanol; 78-83-1 | 0,000 | 0,000 | 5 | 50 |
| Isoamylacetat; 123-92-2 | 0,000 | 0,000 | 0,2 | 5 |
| 2-Methylbutan-1-ol; 137-32-6 | 0,000 | 0,05 | 7 | 25 |
| 3-Methylbutan-1-ol; 123-51-3 | 0,001 | 0,05 | 10 | 90 |
| Ethylhexanoate; 123-66-0 | 0,000 | 0,000 | 0,05 | 0,35 |
| 2-Phenylethylacetat; 103-45-7 | 0,020 | 0,020 | 0,15 | 1,5 |
| 2-Phenylethanol; 60-12-8 | 0,4 | 0,2 | 10 | 50 |

Dabei sind grundsätzlich alle ppm-Zwischenwerte der jeweiligen "ppm Min"- und "ppm Max"-Angaben als mitoffenbart anzusehen. Beispielsweise sind durch die Angabe 5 ppm Min und 50 ppm Max Werte von 5 ppm, 6 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, 20 ppm, 21 ppm, 22 ppm, 23 ppm, 24 ppm, 25 ppm, 26 ppm, 27 ppm, 28 ppm, 29 ppm, 30 ppm, 31 ppm, 32 ppm, 33 ppm, 34 ppm, 35 ppm, 36 ppm, 37 ppm, 38 ppm, 39 ppm, 40 ppm, 41 ppm, 42 ppm, 43 ppm, 44 ppm, 45 ppm, 46 ppm, 47 ppm, 48 ppm, 49 ppm, 50 ppm sowie entsprechende Zwischenwerte wie 5,00 ppm, 5,01 ppm, 5,02 ppm, 5,03 ppm, 5,04 ppm, 5,05 ppm, 5,06 ppm, 5,07 ppm, 5,08 ppm, 5,09 ppm, 5,10 ppm, 5,11 ppm, 5,12 ppm, 5,13 ppm, 5,14 ppm, 5,15 ppm, 5,16 ppm, 5,17 ppm, 5,18 ppm, 5,19 ppm, 5,20 ppm, 5,21 ppm, 5,22 ppm, 5,23 ppm, 5,24 ppm, 5,25 ppm, 5,26 ppm, 5,27 ppm, 5,28 ppm, 5,29 ppm, 5,30 ppm, 5,31 ppm, 5,32 ppm, 5,33 ppm, 5,34 ppm, 5,35 ppm, 5,36 ppm, 5,37 ppm, 5,38 ppm, 5,39 ppm, 5,40 ppm, 5,41 ppm, 5,42 ppm, 5,43 ppm, 5,44 ppm, 5,45 ppm, 5,46 ppm, 5,47 ppm, 5,48 ppm, 5,49 ppm, 5,50 ppm, 5,51 ppm, 5,52 ppm, 5,53 ppm, 5,54 ppm, 5,55 ppm, 5,56 ppm, 5,57 ppm, 5,58 ppm, 5,59 ppm, 5,60 ppm, 5,61 ppm, 5,62 ppm, 5,63 ppm, 5,64 ppm, 5,65 ppm, 5,66 ppm, 5,67 ppm, 5,68 ppm, 5,69 ppm, 5,70 ppm, 5,71 ppm, 5,72 ppm, 5,73 ppm, 5,74 ppm, 5,75 ppm,

5,76 ppm, 5,77 ppm, 5,78 ppm, 5,79 ppm, 5,80 ppm, 5,81 ppm, 5,82 ppm, 5,83 ppm, 5,84 ppm, 5,85 ppm, 5,86 ppm, 5,87 ppm, 5,88 ppm, 5,89 ppm, 5,90 ppm, 5,91 ppm, 5,92 ppm, 5,93 ppm, 5,94 ppm, 5,95 ppm, 5,96 ppm, 5,97 ppm, 5,98 ppm, 5,99 ppm, 6,00 ppm etc. zu verstehen. Entsprechendes gilt für alle anderen ppm-Bereiche. Es versteht sich, dass grundsätzlich auch abweichende Zielbereiche für die Ausmischung vorgesehen sein können, beispielsweise um typische Aromaprofile unterschiedlicher Biertypen zu erzeugen, und dass die Ausgangskonzentrationen im 0.0% Bier und im 0.5% Bier je nach Biertyp und verwendeter Technologie zum Entalkoholisieren abweichen können.

Da verschiedene Aromastoffe wie beispielsweise 3-Methylbutan-1-ol in 0.0% Bier regelmäßig um den Faktor 10 oder mehr gegenüber einem 0.5% Bier abgereichert sind, in welchem verschiedene Aromastoffe gegenüber einem Vollbier um den Faktor 10 oder mehr abgereichert sind, muss üblicherweise entsprechend mehr Aromastoff-Konzentrat bzw. eine vergleichbare Menge eines höher aufkonzentrierten Aromastoff-Konzentrats zugegeben werden, um eine Ausmischung mit einem vollbiertypischen Aromaprofil zu erzeugen bzw. wiederherzustellen.

Daher ist es mit sinkendem Ethanolgehalt des Ausgangsbieres umso entscheidender, dass das erfindungsgemäße bzw. erfindungsgemäß hergestellte Aromastoff-Konzentrat einen möglichst hohen bzw. authentischen Gehalt insbesondere an den in Tabelle 3 angegebenen polaren Aromastoffen, die überwiegend fermentativ gebildet werden und daher entscheidend zum biertypischen Aroma beitragen, enthält. In diesem Zusammenhang wird darauf hingewiesen, dass im Rahmen der vorliegenden Offenbarung alle möglichen Stereoisomere der jeweils genannten Aromastoffe und Verbindungen grundsätzlich als mitoffenbart anzusehen sind.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Adsorptionssystem (10) zur Anreicherung von Aromastoffen, umfassend wenigstens einen Arbeitsraum (12), in welchem wenigstens ein Sorptionsmittel als stationäre Phase angeordnet und zur Anlagerung von Aromastoffen mit einem durch den Arbeitsraum leitbaren, aromastoffhaltigen Fluid als mobile Phase beaufschlagbar ist, wobei das aromastoffhaltige Fluid ein Lebensmittel aus der Gruppe bierhaltiger Nahrungs- und/oder Genussmittel, Bierwürze, Hopfen, Hopfenextrakt, Mälzwasser, Malzbier, Malzwürze und brauereieigener Rohstoffe und Produkte ist und/oder mittels einer Entalkoholisierungsvorrichtung aus einem Ethanol-haltigen Lebensmittel aus der Gruppe bierhaltiger Nahrungs- und/oder Genussmittel erhalten ist,
   **dadurch gekennzeichnet, dass**
   ein Verhältnis von mittlerer Querschnittsdicke zu Gesamtlänge des wenigstens einen Arbeitsraums (12) höchstens 0,3 und die Gesamtlänge eines durch den wenigstens einen Arbeitsraums (12) bereitgestellten Strömungspfads für das Fluid mindestens 4,0 m beträgt, wobei das Adsorptionssystem (10) eine Steuereinrichtung umfasst, welche dazu ausgebildet ist, das Adsorptionssystem (10) in einem Absorptionsmodus, in welchem das wenigstens eine Sorptionsmittel mit dem aromastoffhaltigen Fluid beaufschlagt ist, um Aromastoffe am Sorptionsmittel zu adsorbieren, und in einem Desorptionsmodus, in welchem das wenigstens eine Sorptionsmittel mit einem fluiden Desorptionsmittel aus der Gruppe Ethanol und Ethanol-Wasser-Gemisch beaufschlagt ist, um am Sorptionsmittel adsorbierte Aromastoffe als Aromastoff-Konzentrat zu desorbieren, zu betreiben.

2. Adsorptionssystem (10) nach Anspruch 1,
   **dadurch gekennzeichnet, dass**
   dieses mindestens zwei fluidisch miteinander koppelbare Arbeitsräume (12a-d) und mindestens eine Pumpeinrichtung (14) zum Fördern des Fluids durch die Arbeitsräume (12a-d) umfasst, wobei vorzugsweise mindestens eine Pumpeinrichtung (14) zwischen zwei Arbeitsräumen (12a-d) angeordnet ist.

3. Adsorptionssystem (10) nach einem der Ansprüche 1 oder 2,
   **dadurch gekennzeichnet, dass**
   dieses wenigstens eine Temperiereinrichtung (40) umfasst, mittels welcher wenigstens ein Arbeitsraum (12) und/oder das Fluid und/oder das Desorptionsmittel und/oder zumindest ein Teil eines Aromastoff-Konzentrats auf eine vorbestimmte Temperatur temperierbar ist.

4. Adsorptionssystem (10) nach Anspruch 3,
   **dadurch gekennzeichnet, dass**
   die Steuereinrichtung mit der Temperiereinrichtung (40) gekoppelt ist und vorzugsweise ausgebildet ist, die Temperiereinrichtung (40) im Adsorptionsmodus und im Desorptionsmodus unterschiedlich zu betreiben.

5. Adsorptionssystem (10) nach einem der Ansprüche 1 bis 4,
**dadurch gekennzeichnet, dass**
die mittlere Querschnittsfläche wenigstens eines Arbeitsraums (12) derart gewählt ist, dass ein Volumen $V_1$ an Desorptionsmittel, welches ausreicht, um mindestens 2/3 der im Adsorptionsmodus an das im Arbeitsraum (12) angeordnete Sorptionsmittel adsorbierten Aromastoffe 3-Methylbutan-1-ol und 2-Phenylethanol zu desorbieren, den Formel (I) und (II)

$$V_1 \geq 0{,}025 \text{ m} *$$

mittlere Querschnittsfläche in $m^2$ des wenigstens einen Arbeitsraums (I);

$$V_1 \leq 8{,}0 \text{ m} *$$

mittlere Querschnittsfläche in $m^2$ des wenigstens einen Arbeitsraums (II); entspricht.

6. Adsorptionssystem (10) nach einem der Ansprüche 1 bis 5,
**dadurch gekennzeichnet, dass**
dieses einen ersten Fluidpfad zum Durchleiten des aromastoffhaltigen Fluids durch den wenigstens einen Arbeitsraum (12) und einen zweiten Fluidpfad zum Durchleiten des Desorptionsmittels durch den wenigstens einen Arbeitsraum (12) umfasst, wobei vorzugsweise der erste und der zweite Fluidpfad unterschiedliche Längen und/oder unterschiedliche mittlere Querschnittsdicken und/oder unterschiedliche Volumina aufweisen.

7. Adsorptionssystem (10) nach einem der Ansprüche 1 bis 6,
**dadurch gekennzeichnet, dass**
dieses wenigstens zwei Arbeitsräume (12a-d) umfasst, die unabhängig voneinander mit dem aromastoffhaltigen Fluid und/oder mit dem Desorptionsmittel durchströmbar sind.

8. Adsorptionssystem (10) nach einem der Ansprüche 1 bis 7,
**dadurch gekennzeichnet, dass**
wenigstens ein Arbeitsraum (12) eine entlang seiner Längsachse (L) variierende Querschnittsfläche aufweist und/oder dass das Adsorptionssystem (10) wenigstens zwei Arbeitsräume (12a-d) mit unterschiedlichen mittleren Querschnittsflächen umfasst.

9. Adsorptionssystem (10) nach einem der Ansprüche 1 bis 8,
**dadurch gekennzeichnet, dass**
eine mittlere Querschnittsdicke des wenigstens einen Arbeitsraums zwischen 3 mm und 6,0 m beträgt und/oder dass das Verhältnis von mittlerer Querschnittsdicke zu Gesamtlänge des wenigstens einen Arbeitsraums (12) höchstens 0,04 beträgt.

10. Adsorptionssystem (10) nach einem der Ansprüche 1 bis 9,
**dadurch gekennzeichnet, dass**
dieses wenigstens zwei Arbeitsräume (12a, 12b) umfasst, wobei wenigstens ein Arbeitsraum (12a) ein kleineres Volumen als ein bezüglich einer Beladungsrichtung, in welcher das wenigstens eine Sorptionsmittel mit dem aromastoffhaltigen Fluid zu beaufschlagen ist, stromab liegender Arbeitsraum (12b) aufweist.

11. Adsorptionssystem (10) nach einem der Ansprüche 1 bis 10,
**dadurch gekennzeichnet, dass**
dieses eine Hochkonzentrationseinrichtung (42) umfasst, mittels welcher wenigstens ein erstes Aromastoff-Konzentrat, das durch Beaufschlagen des wenigstens einen Sorptionsmittels mit dem fluiden Desorptionsmittel erhältlich ist, in wenigstens ein Permeat und in wenigstens ein zweites Aromastoff-Konzentrat, welches gegenüber dem ersten Aromastoff-Konzentrat ein geringeres Verhältnis von Ethanol : 3-Methylbutan-1-ol aufweist, auftrennbar ist.

12. Adsorptionssystem (10) nach einem der Ansprüche 1 bis 11,
**dadurch gekennzeichnet, dass**
diese eine Dosierungseinrichtung umfasst, mittels welcher ein pH-Wert des Fluids und/oder wenigstens eines Desorptionsmittels und/oder des ersten und/oder zweiten Aromastoff-Konzentrats einzustellen und/oder zu variieren ist.

**13.** Verfahren zum Betreiben eines Adsorptionssystems (10) nach einem der Ansprüche 1 bis 12, bei welchem wenigstens ein Sorptionsmittel als stationäre Phase im wenigstens einem Arbeitsraum (12) des Adsorptionssystems (10) angeordnet und mit einem aromastoffhaltigen Fluid als mobile Phase durchströmt wird, so dass zumindest ein Teil der im Fluid enthaltenen Aromastoffe am Sorptionsmittel adsorbiert, wobei das aromastoffhaltige Fluid ein Lebensmittel aus der Gruppe Bier, bierhaltige Getränke, Bierwürze, Hopfen, Hopfenextrakt, Mälzwasser, Malzbier, Malzwürze und brauereieigener Rohstoffe und Produkte ist und/oder mittels einer Entalkoholisierungsvorrichtung aus einem Ethanol-haltigen Lebensmittel aus der Gruppe Bier und bierhaltige Getränke erhalten ist und wobei ein Verhältnis von mittlerer Querschnittsdicke zu Gesamtlänge des wenigstens einen Arbeitsraums (12) höchstens 0,3 und die Gesamtlänge eines durch den wenigstens einen Arbeitsraums (12) bereitgestellten Strömungspfads für das Fluid mindestens 4,0 m beträgt, wobei das Adsorptionssystem (10) eine Steuereinrichtung umfasst, mittels welcher das Adsorptionssystem (10) in einem Absorptionsmodus, in welchem das wenigstens eine Sorptionsmittel mit dem aromastoffhaltigen Fluid beaufschlagt wird, um Aromastoffe am Sorptionsmittel zu adsorbieren, und in einem Desorptionsmodus, in welchem das wenigstens eine Sorptionsmittel mit einem fluiden Desorptionsmittel aus der Gruppe Ethanol und Ethanol-Wasser-Gemisch beaufschlagt wird, um am Sorptionsmittel adsorbierte Aromastoffe als Aromastoff-Konzentrat zu desorbieren, betrieben wird.

**14.** Verfahren nach Anspruch 13,
**dadurch gekennzeichnet, dass**
als Fluid ein aromastoffhaltiges Destillat und/oder ein aromastoffhaltiges Membranpermeat eines zumindest teilweise entalkoholisierten Bieres verwendet wird und/oder dass ein Fluid mit einem Ethanolgehalt zwischen 0 Vol.-% und 50 Vol.-% verwendet wird.

**15.** Verfahren nach Anspruch 13 oder 14,
**dadurch gekennzeichnet, dass**
das aromastoffhaltige Fluid parallel durch mindestens zwei Arbeitsräume (12a-d) geleitet wird und/oder dass das Fluid seriell durch wenigstens zwei Arbeitsräume (12a-d) geleitet wird, wobei vorzugsweise wenigstens ein stromab liegender Arbeitsraum (12b) ein größeres Volumen als wenigstens ein stromauf liegender Arbeitsraum (12a) aufweist.

**16.** Verfahren nach einem der Ansprüche 13 bis 15,
**dadurch gekennzeichnet, dass**
das Sorptionsmittel nach dem Adsorbieren zumindest eines Teils der Aromastoffe aus dem Fluid mit einem fluiden Desorptionsmittel beaufschlagt wird, so dass die am Sorptionsmittel adsorbierten Aromastoffe zumindest teilweise als Aromastoff-Konzentrat desorbieren, wobei das Desorptionsmittel im Vergleich zum aromastoffhaltigen Fluid in umgekehrter Fließrichtung durch den wenigstens einen Arbeitsraum (12a-d) geleitet wird.

**17.** Verfahren nach einem der Ansprüche 13 bis 16,
**dadurch gekennzeichnet, dass**
beim Durchleiten durch wenigstens einen Arbeitsraum (12a-d) ein Desorptionsmittelgradient eingesetzt wird und/oder ein Lösungsmittelwechsel zur stufenweisen Desorption von Aroma aus demselben Arbeitsraum (12a) eingesetzt wird und/oder dass unterschiedliche Desorptionsmittel durch unterschiedliche Arbeitsräume (12a-d) geleitet werden und/oder dass unterschiedliche Desorptionsmittelvolumina durch unterschiedliche Arbeitsräume (12a-d) geleitet werden.

**18.** Verfahren nach einem der Ansprüche 13 bis 17,
**dadurch gekennzeichnet, dass**
unterschiedlich temperierte Desorptionsmittel durch unterschiedliche Arbeitsräume (12a-d) geleitet werden und/oder dass nur vorbestimmte Bereiche des wenigstens einen Arbeitsraums (12a-d) mit Desorptionsmittel beaufschlagt werden und/oder dass wenigstens ein Arbeitsraum (12a-d) mit einem gegenüber einem Normaldruck unter erhöhtem Druck stehenden Desorptionsmittel beaufschlagt wird.

**19.** Verfahren nach einem der Ansprüche 13 bis 18,
**dadurch gekennzeichnet, dass**
zumindest ein Teil des ersten Aromastoff-Konzentrats aus wenigstens einem Arbeitsraum (12) der ersten Anreicherungsstufe des Adsorptionssystems (10) mittels einer Hochkonzentrationseinrichtung (42) in wenigstens ein aromastoffabgereichertes Permeat und in wenigstens ein aromastoffangereichertes zweites Aromastoff-Konzentrat aufgetrennt wird.

**20.** Bier,
**dadurch gekennzeichnet, dass**

dieses durch Ausmischen eines zumindest teilweise entalkoholisierten und/oder gärgestoppten Bieres mit einem Aromastoff-Konzentrat, welches mittels eines Adsorptionssystems (10) nach einem der Ansprüche 1 bis 12 und/oder durch ein Verfahren gemäß einem der Ansprüche 13 bis 19 erhalten ist, hergestellt ist, wobei das Bier einen Ethanolgehalt von höchstens 0,3 Vol.-% aufweist und dieses 0 Vol.-% Aromastoffe und/oder Aromaextrakte, die nicht aus brauereieigenen Rohstoffen und Produkten stammen, enthält,
wobei eine Endkonzentrationen folgender Aromastoffe im ausgemischten Bier in folgenden Bereichen liegen:

- Essigsäureethylester 1 ppm bis 50 ppm; und
- Buttersäureethylester 0,01 ppm bis 0,2 ppm; und
- Isobutanol 2,0 ppm bis 50 ppm; und
- Isoamylacetat 0,2 ppm bis 5 ppm; und
- 2-Methylbutan-1-ol 3 ppm bis 25 ppm; und
- 3-Methylbutan-1-ol 10 ppm bis 100 ppm; und
- Ethylhexanoat 0,1 ppm bis 0,35 ppm; und
- 2-Phenylethylacetat 0,1 ppm bis 1,5 ppm; und
- 2-Phenylethanol mindestens 5 ppm bis 45 ppm.

## Claims

**1.** An adsorption system (10) for enrichment of flavoring agents, including at least one working space (12), in which at least one sorbent is arranged as a stationary phase and can be supplied with a fluid containing flavoring agents capable of being passed through the working space as a mobile phase for attachment of flavoring agents, wherein the fluid containing flavoring agents is a food product from the group of nutritional products and/or stimulants containing beer, beer wort, hop, hop extract, wort water, malt beer, malt wort and brewery-owned raw materials and products and/or is obtained from a food product containing ethanol from the group of nutritional products and/or stimulants containing beer by means of a dealcoholization device,
**characterized in that**
a ratio of average cross-sectional thickness to total length of the at least one working space (12) is at most 0.3 and the total length of a flow path for the fluid provided through the at least one working space (12) is at least 4.0 m, wherein the adsorption system (10) includes a control device, which is formed to operate the adsorption system (10) in an absorption mode, in which the at least one sorbent is supplied with the fluid containing flavoring agents, to adsorb flavoring agents on the sorbent, and in a desorption mode, in which the at least one sorbent is supplied with a fluidic desorbent from the group of ethanol and ethanol-water mixture, to desorb flavoring agents adsorbed on the sorbent as a flavoring agent concentrate.

**2.** The adsorption system (10) according to claim 1,
**characterized in that**
it includes at least two working spaces (12a-d) capable of being fluidically coupled to each other and at least one pumping device (14) for conveying the fluid through the working spaces (12a-d), wherein at least one pumping device (14) is preferably arranged between two working spaces (12a-d).

**3.** The adsorption system (10) according to any one of claims 1 or 2,
**characterized in that**
**it includes** at least one tempering device (40), by means of which at least one working space (12) and/or the fluid and/or the desorbent and/or at least a part of a flavoring agent concentrate can be tempered to a predetermined temperature.

**4.** The adsorption system (10) according to claim 3,
**characterized in that**
the control device is coupled to the tempering device (40) and is preferably formed to differently operate the tempering device (40) in the adsorption mode and in the desorption mode.

**5.** The adsorption system (10) according to any one of claims 1 to 4,
**characterized in that**

the average cross-sectional area of at least one working space (12) is selected such that a volume $V_1$ of desorbent, which is sufficient to desorb at least 2/3 of the flavoring agents of 3-methylbutane-1-ol and 2-phenylethanol adsorbed on the sorbent arranged in the working space (12) in the adsorption mode, corresponds to the formulas (I) and (II)

$V_1 \geq 0.025$ m * average cross-sectional area in $m^2$ of the at least one working space (I);

$V_1 \leq 8.0$ m * average cross-sectional area in $m^2$ of the at least one working space (II).

**6.** The adsorption system (10) according to any one of claims 1 to 5,
**characterized in that**
it includes a first fluid path for passing the fluid containing flavoring agents through the at least one working space (12) and a second fluid path for passing the desorbent through the at least one working space (12), wherein the first and the second fluid path preferably have different lengths and/or different average cross-sectional thicknesses and/or different volumes.

**7.** The adsorption system (10) according to any one of claims 1 to 6,
**characterized in that**
it includes at least two working spaces (12a-d), which can be passed by the fluid containing flavoring agents and/or by the desorbent independently of each other.

**8.** The adsorption system (10) according to any one of claims 1 to 7,
**characterized in that**
at least one working space (12) has a cross-sectional area varying along its longitudinal axis (L) and/or that the adsorption system (10) includes at least two working spaces (12a-d) with different average cross-sectional areas.

**9.** The adsorption system (10) according to any one of claims 1 to 8,
**characterized in that**
an average cross-sectional thickness of the at least one working space is between 3 mm and 6.0 m and/or that the ratio of average cross-sectional thickness to total length of the at least one working space (12) is at most 0.04.

**10.** The adsorption system (10) according to any one of claims 1 to 9,
**characterized in that**
it includes at least two working spaces (12a, 12b), wherein at least one working space (12a) has a smaller volume than a working space (12b) situated downstream with respect to a charging direction, in which the at least one sorbent is to be supplied with the fluid containing flavoring agents.

**11.** The adsorption system (10) according to any one of claims 1 to 10,
**characterized in that**
it includes a high-concentration device (42), by means of which at least one first flavoring agent concentrate, which is obtainable by supplying the at least one sorbent with the fluidic desorbent, can be separated into at least one permeate and into at least one second flavoring agent concentrate, which has a lower ratio of ethanol : 3-methylbutane-1-ol with respect to the first flavoring agent concentrate.

**12.** The adsorption system (10) according to any one of claims 1 to 11,
**characterized in that**
it includes a dosing device, by means of which a pH value of the fluid and/or of at least one desorbent and/or of the first and/or second flavoring agent concentrate can be adjusted and/or varied.

**13.** A method for operating an adsorption system (10) according to any one of claims 1 to 12, in which at least one sorbent is arranged in at least one working space (12) of the adsorption system (10) as a stationary phase and is passed by a fluid containing flavoring agents as a mobile phase, such that at least a part of the flavoring agents contained in the fluid adsorbs on the sorbent, wherein the fluid containing flavoring agents is a food product from the group of beer, beverages containing beer, beer wort, hop, hop extract, wort water, malt beer, malt wort and brewery-owned raw materials and products and/or is obtained from a food product containing ethanol from the group of beer and beverages containing beer by means of a dealcoholization device, and wherein a ratio of average cross-sectional thickness to total length of the at least one working space (12) is at most 0.3 and the total length of a flow path for the fluid provided through the at least one working space (12) is at least 4.0 m, wherein the adsorption system (10) includes a control device, by means of which the adsorption system (10) is operated in an absorption mode, in which the at least one sorbent is supplied with the fluid containing flavoring agents, to adsorb flavoring agents on the sorbent,

and in a desorption mode, in which the at least one sorbent is supplied with a fluidic desorbent from the group of ethanol and ethanol-water mixture, to desorb flavoring agents adsorbed on the sorbent as a flavoring agent concentrate.

**14.** The method according to claim 13,
**characterized in that**
a distillate containing flavoring agents and/or a membrane permeate containing flavoring agents of an at least partially dealcoholized beer are used as the fluid and/or that a fluid with an ethanol content between 0 % vol and 50 % vol is used.

**15.** The method according to claim 13 or 14,
**characterized in that**
the fluid containing flavoring agents is passed in parallel through at least two working spaces (12a-d) and/or that the fluid is passed serially through at least two working spaces (12a-d), wherein at least one downstream working space (12b) preferably has a larger volume than at least one upstream working space (12a).

**16.** The method according to any one of claims 13 to 15,
**characterized in that**
the sorbent is supplied with a fluidic desorbent after adsorbing at least a part of the flavoring agents from the fluid, such that the flavoring agents adsorbed on the sorbent at least partially desorb as a flavoring agent concentrate, wherein the desorbent is passed through the at least one working space (12a-d) in inverse flow direction compared to the fluid containing flavoring agents.

**17.** The method according to any one of claims 13 to 16,
**characterized in that**
upon passing through at least one working space (12a-d), a desorbent gradient is employed and/or a solvent change for stepwise desorption of flavor from the same working space (12a) is employed and/or that different desorbents are passed through different working spaces (12a-d) and/or that different desorbent volumes are passed through different working spaces (12a-d).

**18.** The method according to any one of claims 13 to 17,
**characterized in that**
differently tempered desorbents are passed through different working spaces (12a-d) and/or that only predetermined areas of the at least one working space (12a-d) are supplied with desorbent and/or that at least one working space (12a-d) is supplied with a desorbent under increased pressure with respect to a normal pressure.

**19.** The method according to any one of claims 13 to 18,
**characterized in that**
at least a part of the first flavoring agent concentrate from at least one working space (12) of the first enrichment stage of the adsorption system (10) is separated into at least one permeate depleted in flavoring agents and into at least one second flavoring agent concentrate enriched in flavoring agents by means of a high-concentration device (42).

**20.** A beer,
**characterized in that**

it is produced by blending a beer at least partially dealcoholized and/or stopped in fermentation with a flavoring agent concentrate, which is obtained by means of an adsorption system (10) according to any one of claims 1 to 12 and/or by a method according to any one of claims 13 to 19, wherein the beer has an ethanol content of at most 0.3 % vol and it contains 0 % vol of flavoring agents and/or flavor extracts, which do not originate from brewery-owned raw materials and products,
wherein final concentrations of the following flavoring agents in the blended beer are in the following ranges:

- ethyl acetate 1 ppm to 50 ppm; and
- ethyl butyrate 0.01 ppm to 0.2 ppm; and
- isobutanol 2.0 ppm to 50 ppm; and
- isoamyl acetate 0.2 ppm to 5 ppm; and
- 2-methylbutane-1-ol 3 ppm to 25 ppm; and
- 3-methylbutane-1-ol 10 ppm to 100 ppm; and
- ethyl hexanoate 0.1 ppm to 0.35 ppm; and

- 2-phenylethyl acetate 0.1 ppm to 1.5 ppm; and
- 2-phenylethanol at least 5 ppm to 45 ppm.

## Revendications

**1.** Système d'adsorption (10) destiné à accumuler des substances aromatisantes, comprenant au moins une chambre de travail (12), dans laquelle au moins un agent de sorption est disposé sous forme de phase fixe et peut être soumis à un fluide contenant des substances aromatisantes et pouvant être conduit à travers la chambre de travail sous forme de phase mobile pour la fixation de substances aromatisantes, le fluide contenant des substances aromatisantes étant une denrée alimentaire du groupe constitué d'aliments et/ou de produits de luxe contenant de la bière, du moût de bière, du houblon, de l'extrait de houblon, de l'eau maltée, de la bière au malte, du moût de malte et des ingrédients et des produits spécifiques à la brasserie et/ou étant obtenu au moyen d'un dispositif de désalcoolisation à partir d'une denrée alimentaire contenant de l'éthanol du groupe constitué d'aliments et/ou de produits de luxe contenant de la bière,
**caractérisé en ce qu'**
un rapport de l'épaisseur de section transversale moyenne sur une longueur totale de la au moins une chambre de travail (12) est d'au plus 0,3 et la longueur totale d'un trajet d'écoulement pour le fluide prévu à travers la au moins une chambre de travail (10) est d'au moins 4,0 m, le système d'adsorption (10) comprenant un dispositif de commande conçu pour faire fonctionner le système d'adsorption (10) dans un mode d'absorption, dans lequel le au moins agent de sorption est soumis au fluide contenant des substances aromatisantes afin d'adsorber des substances aromatisantes sur l'agent de sorption, et dans un mode de désorption, dans lequel le au moins un agent de sorption est soumis à un agent de désorption fluide du groupe constitué d'éthanol et d'un mélange éthanol-eau, afin de désorber des substances aromatisantes adsorbées sur l'agent de sorption sous forme de concentré de substances aromatisantes.

**2.** Système d'adsorption (10) selon la revendication 1,
**caractérisé en ce que**
ce système comprend au moins deux chambres de travail (12a-d) pouvant être fluidiquement couplées l'une à l'autre et au moins un dispositif de pompage (14) pour conduire le fluide à travers les chambres de travail (12a-d), au moins un dispositif de pompage (14) étant de préférence agencé entre deux chambres de travail (12a-d).

**3.** Système d'adsorption (10) selon l'une des revendications 1 ou 2,
**caractérisé en ce que**
ce système comprend au moins un dispositif de mise en température (40) au moyen duquel au moins une chambre de travail (12) et/ou le fluide et/ou l'agent de désorption et/ou au moins une partie d'un concentré de substances aromatisantes peuvent être amenés à une température prédéterminée,

**4.** Système d'adsorption (10) selon la revendication 3,
**caractérisé en ce que**
le dispositif de commande est couplé au dispositif de mise en température (40) et de préférence conçu pour faire fonctionner le dispositif de mise en température (40) de façon différente dans le mode d'adsorption et dans le mode de désorption.

**5.** Système d'adsorption (10) selon l'une des revendications 1 à 4,
**caractérisé en ce que**
la surface de section transversale moyenne d'au moins une chambre de travail (12) est choisie de telle sorte qu'un volume $V_1$ d'agent de désorption qui est suffisant pour désorber au moins 2/3 des substances aromatisantes 3-méthylbutan-1-ol et 2-phényléthanol adsorbées dans le mode d'adsorption sur l'agent de sorption disposé dans la chambre de travail (12), correspond aux formules (I) et (II) :

$V_1 \geq$ 0,025 m * surface de section transversale moyenne en $m^2$ de la au moins une chambre de travail (I) ;
$V_1 \leq$ 8,0 m * surface de section transversale moyenne en $m^2$ de la au moins une chambre de travail (II).

**6.** Système d'adsorption (10) selon l'une des revendications 1 à 5,
**caractérisé en ce que**
ce système comprend un premier trajet de fluide pour conduire le fluide contenant des substances aromatisantes à travers la au moins une chambre de travail (12) et un second trajet de fluide pour conduire l'agent de désorption à

travers la au moins une chambre de travail (12), les premier et second trajets de fluide ayant de préférence différentes longueurs et/ou différentes épaisseurs de section transversale moyennes et/ou différents volumes.

**7.** Système d'adsorption (10) selon l'une des revendications 1 à 6,
**caractérisé en ce que**
ce système comprend au moins deux chambres de travail (12a-d) à travers lesquelles du fluide contenant des substances aromatisantes et/ou l'agent de désorption peuvent s'écouler indépendamment l'un de l'autre.

**8.** Système d'adsorption (10) selon l'une des revendications 1 à 7,
**caractérisé en ce qu'**
au moins une chambre de travail (12) a une surface de section transversale qui varie le long de son axe longitudinal (L) et/ou **en ce que** le système d'adsorption (10) comprend au moins deux chambres de travail (12a-d) avec différentes surfaces de section transversale moyennes.

**9.** Système d'adsorption (10) selon l'une des revendications 1 à 8,
**caractérisé en ce qu'**
une épaisseur de section transversale moyenne de la au moins une chambre de travail est comprise entre 3 mm et 6,0 m est et/ou **en ce que** le rapport de l'épaisseur de section transversale moyenne sur une longueur totale de la au moins une chambre de travail (12) est d'au plus 0,04.

**10.** Système d'adsorption (10) selon l'une des revendications 1 à 9,
**caractérisé en ce que**
ce système comprend au moins deux chambres de travail (12a, 12b), au moins une chambre de travail (12a) ayant un volume inférieur à une chambre de travail (12b) située en amont par rapport à un sens de chargement dans lequel le au moins un agent de sorption doit être soumis au fluide contenant des substances aromatisantes.

**11.** Système d'adsorption (10) selon l'une des revendications 1 à 10,
**caractérisé en ce que**
ce système comprend un dispositif à concentration élevée (42) au moyen duquel au moins un premier concentré de substances aromatisantes, qui peut être obtenu en soumettant le au moins un agent de sorption à l'agent de désorption fluide, peut être séparé en au moins un perméat et en au moins un second concentré de substances aromatisantes qui a, par rapport au premier concentré de substances aromatisantes, un rapport éthanol :3-méthylbutane-1-ol plus faible.

**12.** Système d'adsorption (10) selon l'une des revendications 1 à 11,
**caractérisé en ce que**
ce système comprend un dispositif de dosage au moyen duquel une valeur de pH du fluide et/ou d'au moins un agent de désorption et/ou du premier et/ou du second concentré de substances aromatisantes doit être ajustée et/ou modifiée.

**13.** Procédé pour faire fonctionner un système d'adsorption (10) selon l'une des revendications 1 à 12, dans lequel au moins un agent de sorption est disposé dans au moins une chambre de travail (12) du système d'adsorption (10) sous forme de phase fixe et à travers laquelle s'écoule un fluide contenant des substances aromatisantes sous forme de phase mobile, de telle sorte qu'au moins une partie des substances aromatisantes contenues dans le fluide est adsorbée sur l'agent de sorption, le fluide contenant des substances aromatisantes contenant une denrée alimentaire du groupe constitué de bière, de boissons contenant de la bière, de moût de bière, de houblon, d'extrait de houblon, d'eau maltée, de bière au malte, de moût de malte et d'ingrédients et de produit spécifiques à la brasserie et/ou étant obtenu au moyen d'un dispositif de désalcoolisation à partir d'une denrée alimentaire contenant de l'éthanol du groupe constitué d'aliments et/ou de boissons contenant de la bière, et un rapport d'une épaisseur de section transversale moyenne sur une longueur totale de la au moins une chambre de travail (12) étant d'au plus 0,3 et la longueur totale d'un trajet d'écoulement pour le fluide prévu à travers la au moins une chambre de travail (12) étant d'au moins 4,0 m, le système d'adsorption (10) comprenant un dispositif de commande au moyen duquel le système d'adsorption (10) fonctionne dans un mode d'absorption, dans lequel le au moins agent de sorption est soumis au fluide contenant des substances aromatisantes afin d'adsorber des substances aromatisantes sur l'agent de sorption, et dans un mode de désorption, dans lequel le au moins un agent de sorption est soumis à un agent de désorption fluide du groupe constitué d'éthanol et d'un mélange éthanol-eau, afin de désorber des substances aromatisantes adsorbées sur l'agent de sorption sous forme de concentré de substances aromatisantes.

**14.** Procédé selon la revendication 13,
**caractérisé en ce qu'**
un distillat contenant des substances aromatisantes et/ou un perméat de membrane contenant des substances aromatisantes d'une bière au moins partiellement désalcoolisée est utilisé comme fluide et/ou **en ce qu'**un fluide ayant une teneur en éthanol comprise entre 0 % en volume et 50 % en volume est utilisé.

**15.** Procédé selon la revendication 13 ou 14,
**caractérisé en ce que**
le fluide contenant des substances aromatisantes est conduit en parallèle à travers au moins deux chambres de travail (12a-d) et/ou **en ce que** le fluide est conduit en série à travers au moins deux chambres de travail (12a-d), au moins une chambre de travail (12b) située en aval ayant de préférence un volume plus grand qu'au moins une chambre de travail (12a) située en amont.

**16.** Procédé selon l'une des revendications 13 à 15,
**caractérisé en ce que**
l'agent de sorption, après l'adsorption d'au moins une partie des substances aromatisantes provenant du fluide, est soumis à un agent de désorption fluide, de telle sorte que les substances aromatisantes adsorbées sur l'agent de sorption sont désorbées au moins partiellement sous forme de concentré de substances aromatisantes, l'agent de désorption étant conduit dans un sens d'écoulement inverse par rapport au fluide contenant des substances aromatisantes à travers la au moins une chambre de travail (12a-d).

**17.** Procédé selon l'une des revendications 13 à 16,
**caractérisé en ce que**
lors du passage à travers au moins une chambre de travail (12a-d), un gradient d'agent de désorption est utilisé et/ou un changement de solvant est utilisé pour la désorption progressive d'arômes provenant de la même chambre de travail (12a) et/ou en ce que différents agents de désorption sont conduits à travers différentes chambres de travail (12a-d) et/ou **en ce que** différents volumes d'agent de désorption sont conduits à travers différentes chambres de travail (12a-d).

**18.** Procédé selon l'une des revendications 13 à 17,
**caractérisé en ce que**
des agents de désorption à différentes températures sont conduits à travers différentes chambres de travail (12a-d) et/ou **en ce que** seules des zones prédéterminées de la au moins une chambre de travail (12a-d) sont soumises à des agents de désorption et/ou **en ce qu'**au moins une chambre de travail (12a-d) est soumise à un agent de désorption à une pression élevée par rapport à une pression normale.

**19.** Procédé selon l'une des revendications 13 à 18,
**caractérisé en ce qu'**
au moins une partie du premier concentré de substances aromatisantes provenant d'au moins une chambre de travail (12) du premier étage d'enrichissement du système d'adsorption (10) est séparée, au moyen d'un dispositif à concentration élevée (42), en au moins un perméat appauvri en substances aromatisantes et en au moins un second concentré de substances aromatisantes enrichi en substances aromatisantes.

**20.** Bière,
**caractérisée en ce que**
cette bière est préparée en mélangeant une bière au moins partiellement désalcoolisée et/ou à fermentation interrompue avec un concentré de substances aromatisantes obtenu au moyen d'un système d'adsorption (10) selon l'une des revendications 1 à 12 et/ou par un procédé selon l'une des revendications 13 à 19, la bière ayant une teneur en éthanol d'au plus 0,3 % en volume et cette bière contenant 0 % en volume de substances aromatisantes et/ou d'extraits aromatisants qui ne proviennent pas d'ingrédients ou de produits spécifiques à la brasserie, les concentrations finales des substances aromatisantes suivantes dans la bière mélangée étant :

- ester éthylique de l'acide acétique : 1 ppm à 50 ppm ; et
- ester éthylique de l'acide butyrique : 0,01 ppm à 0,2 ppm ; et
- isobutanol : 2,0 ppm à 50 ppm ; et
- acétate d'isoamyle : 0,2 ppm à 5 ppm ; et
- 2-méthylbutane-1-ol : 3 ppm à 25 ppm ; et
- 3-méthylbutane-1-ol : 10 ppm à 100 ppm ; et

- hexanoate d'éthyle : 0,1 ppm à 0,35 ppm ; et
- acétate de 2-phényléthyle : 0,1 ppm à 1,5 ppm ; et
- 2-phényléthanol : au moins 5 ppm à 45 ppm.

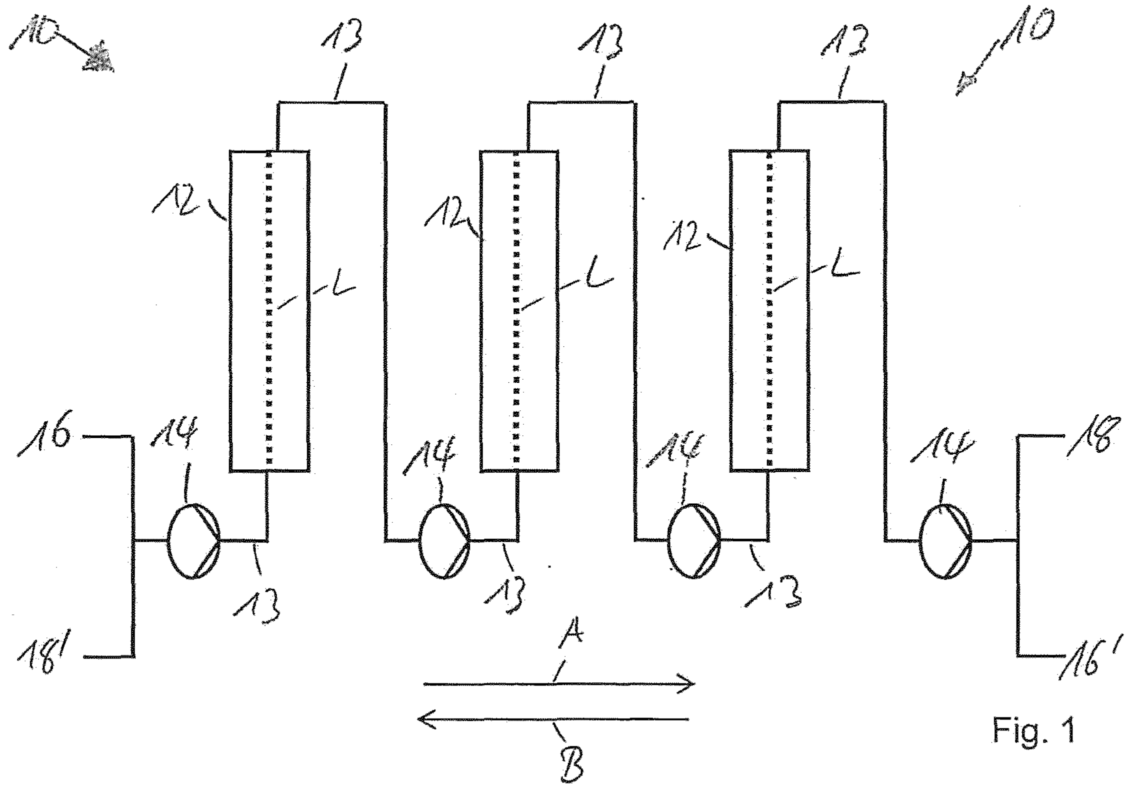
10
13
13
13
10
12
L
12
L
12
L
16
14
14
14
14
18
13
13
13
18'
A
16'
B

Fig. 1

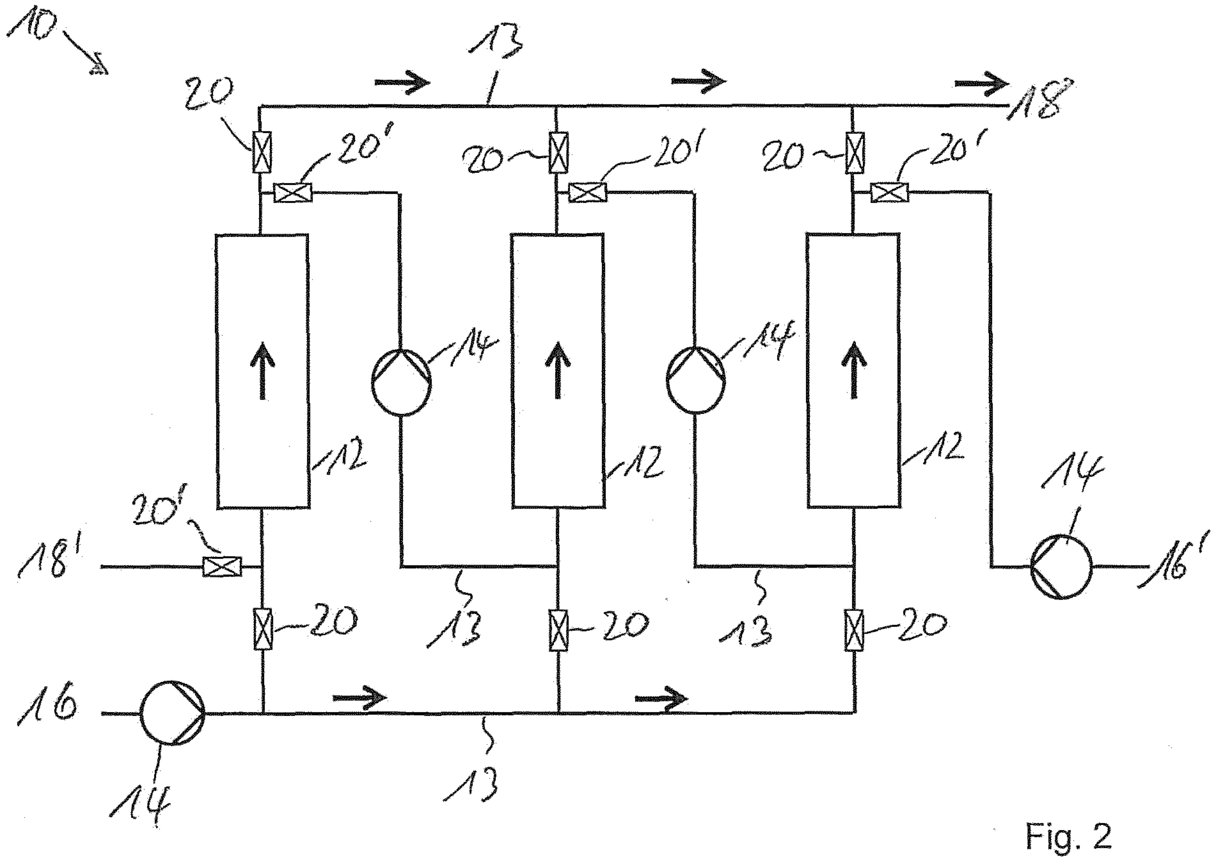
10
13
20
18
20'
20
20'
20
20'
14
14
12
12
12
14
20'
18'
16'
20
13
20
13
20
16
14
13

Fig. 2

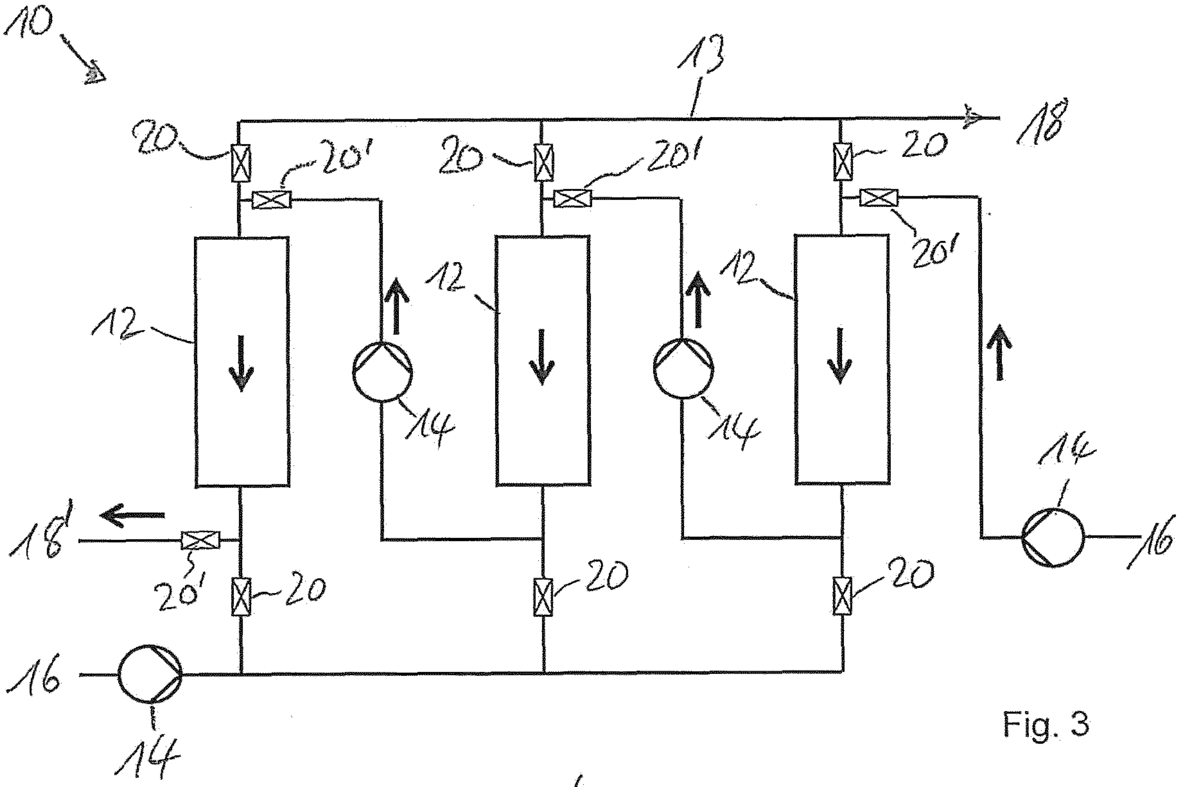
10
13
18
20
20'
12
14
18'
16
16'

Fig. 3

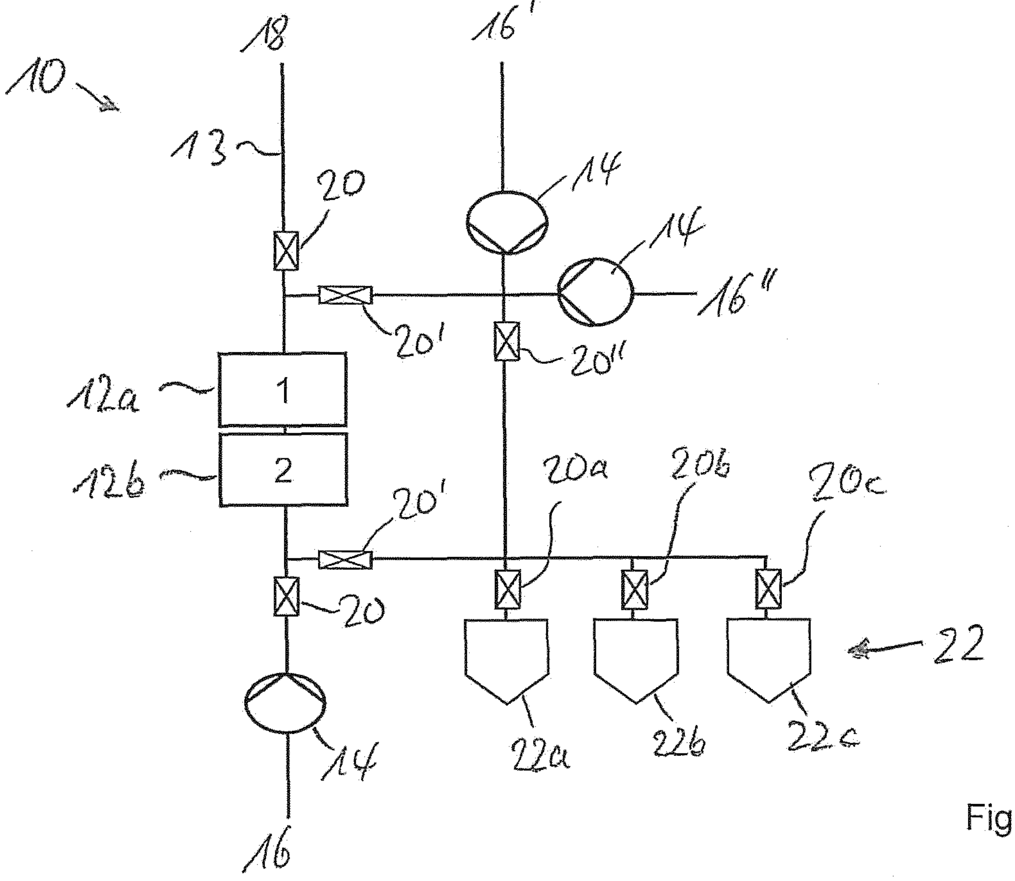
18
16'
10
13
20
14
16''
20'
20''
12a
1
12b
2
20a
20b
20c
22
22a
22b
22c
16

Fig. 4

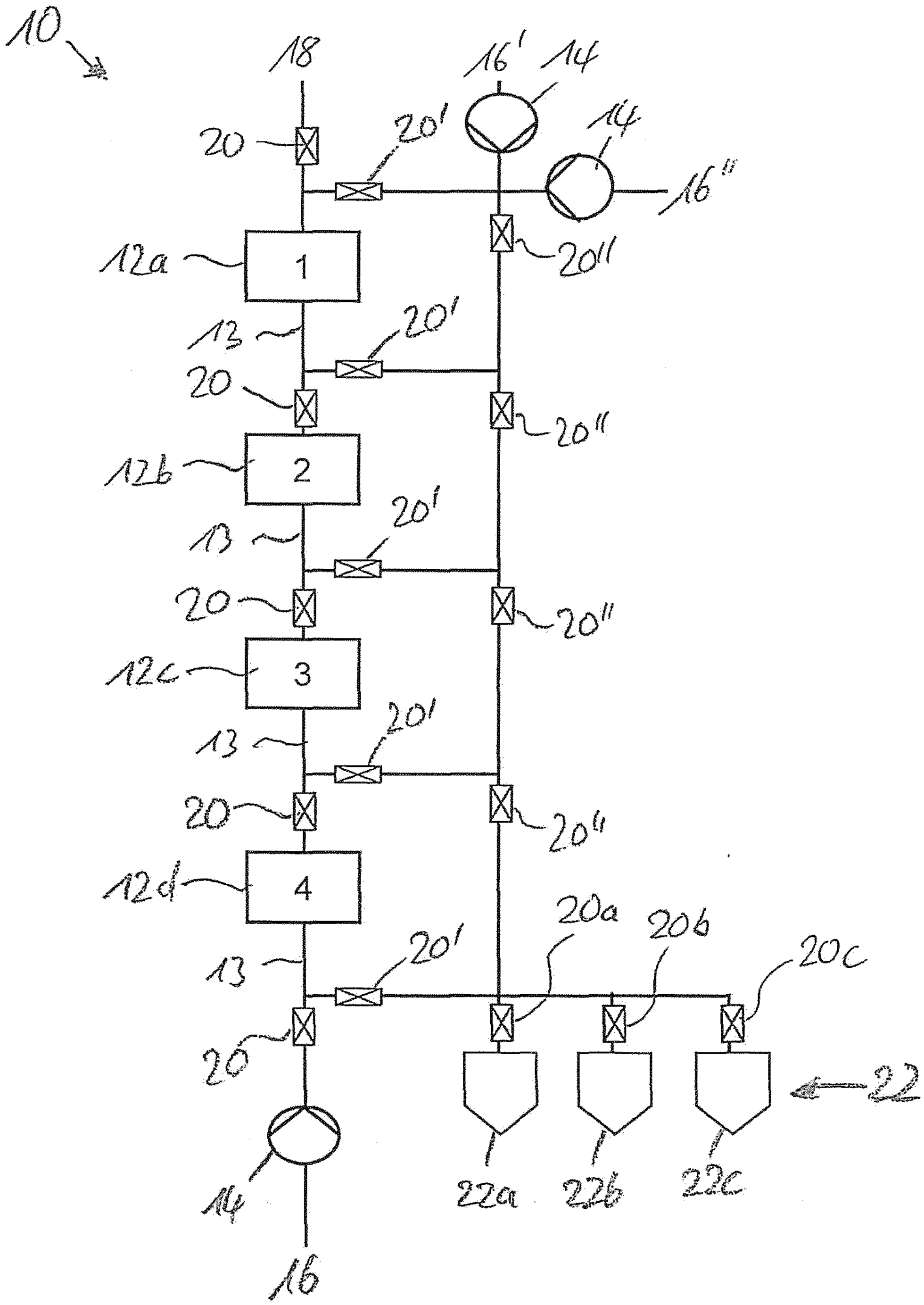
10
18
16'
14
14
16''
20
20'
20''
12a
1
13
20'
20
20''
12b
2
13
20'
20
20''
12c
3
13
20'
20
20''
12d
4
20a
20b
20c
13
20'
20
22
22a
22b
22c
14
16

Fig. 5

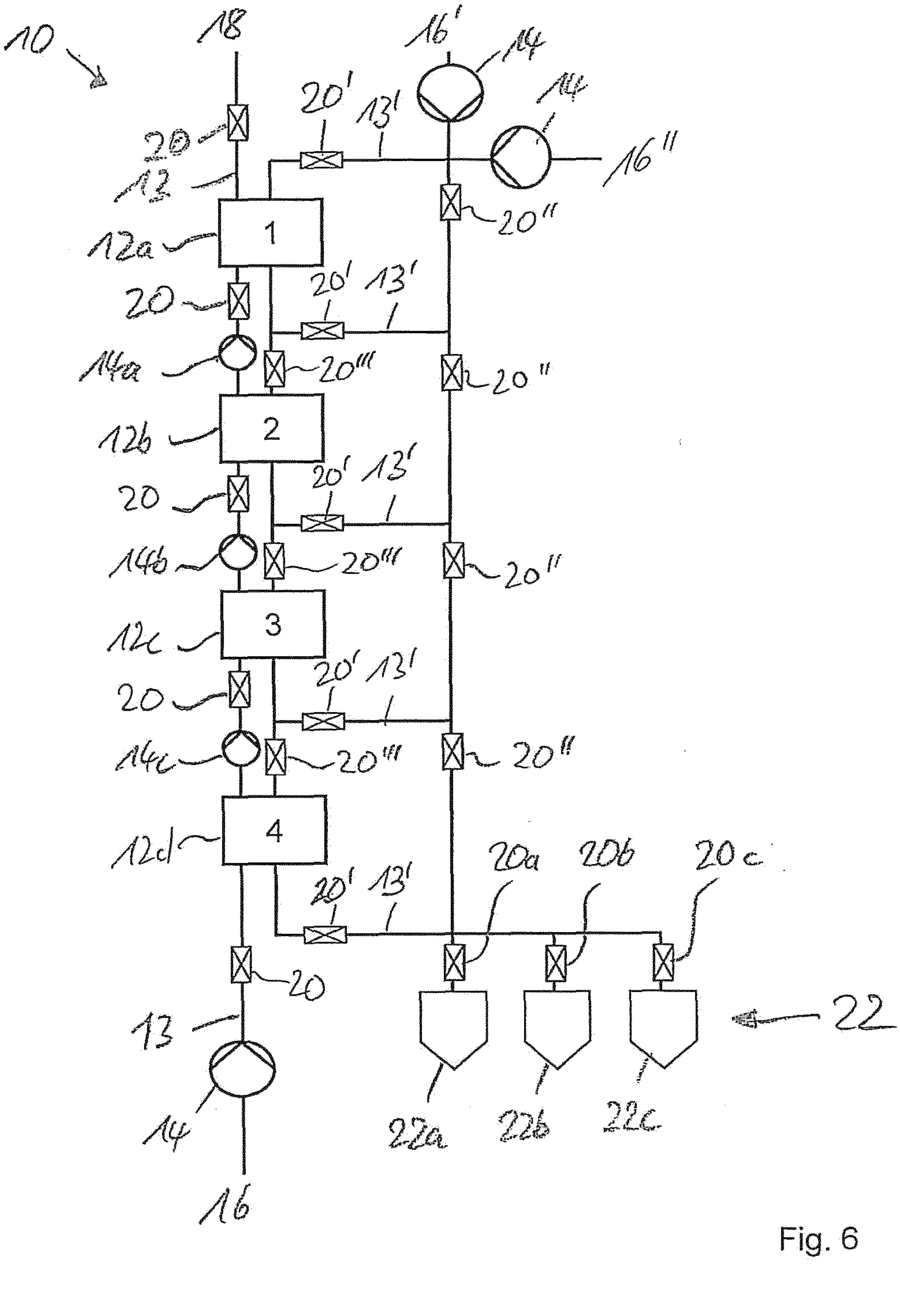
10
18
16'
14
14
20'
13'
16''
20
13
20''
1
12a
20
20'
13'
14a
20'''
20''
2
12b
20'
13'
20
14b
20'''
20''
3
12c
20'
13'
20
14c
20'''
20''
4
12d
20a
20b
20c
20'
13'
20
13
22
14
22a
22b
22c
16

Fig. 6

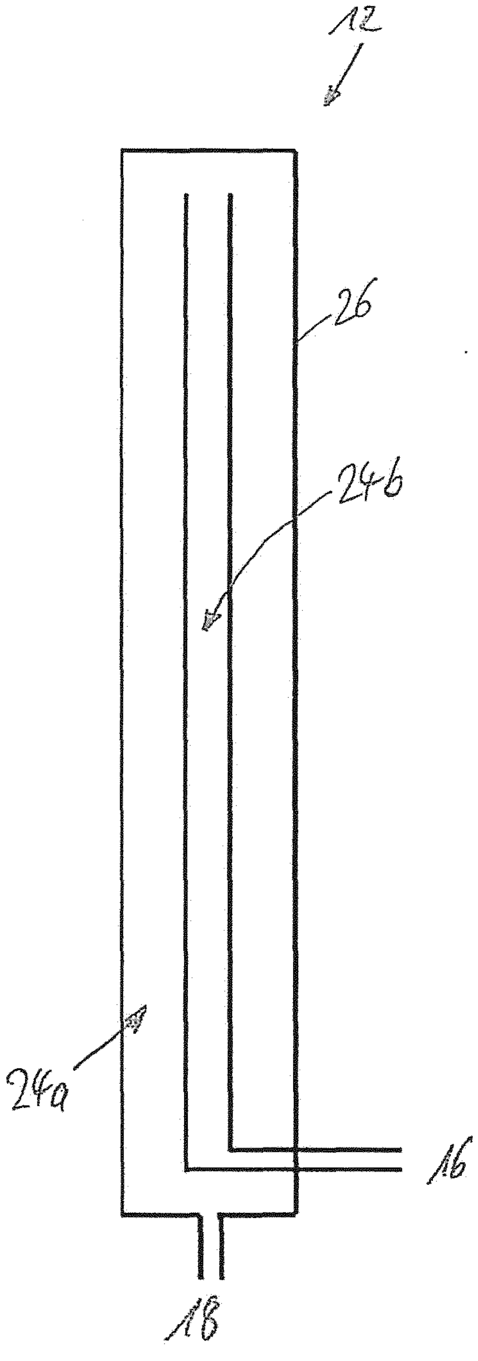


Fig. 7

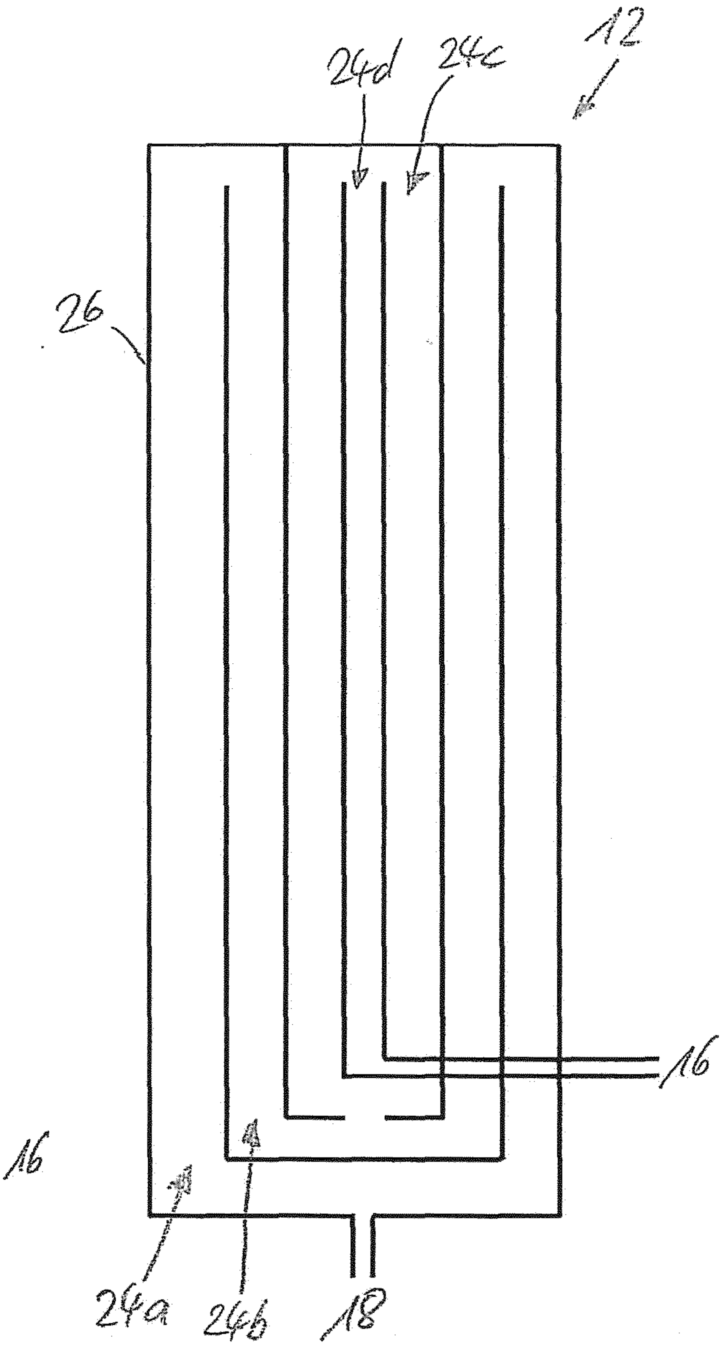


Fig. 8

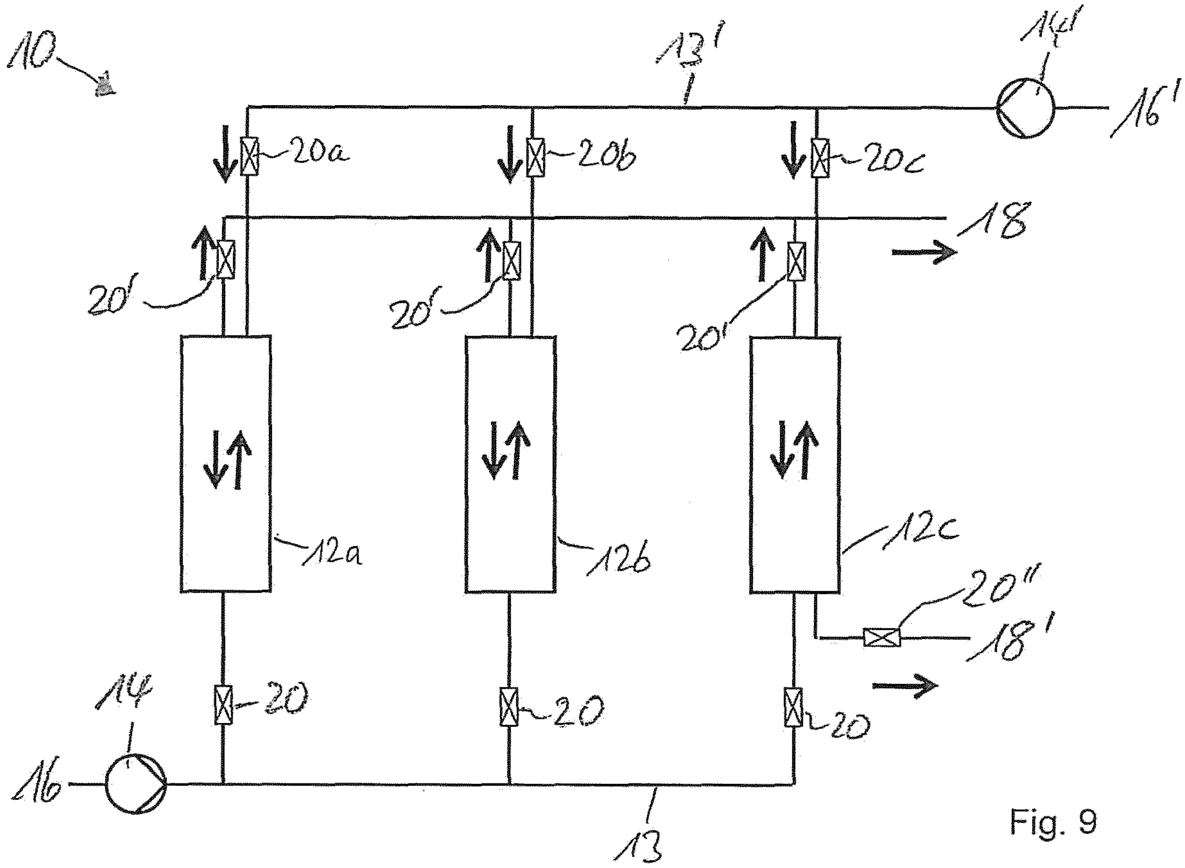
10
13'
14'
16'
20a
20b
20c
18
20'
20'
20'
12a
12b
12c
20''
18'
14
20
20
20
16
13

Fig. 9

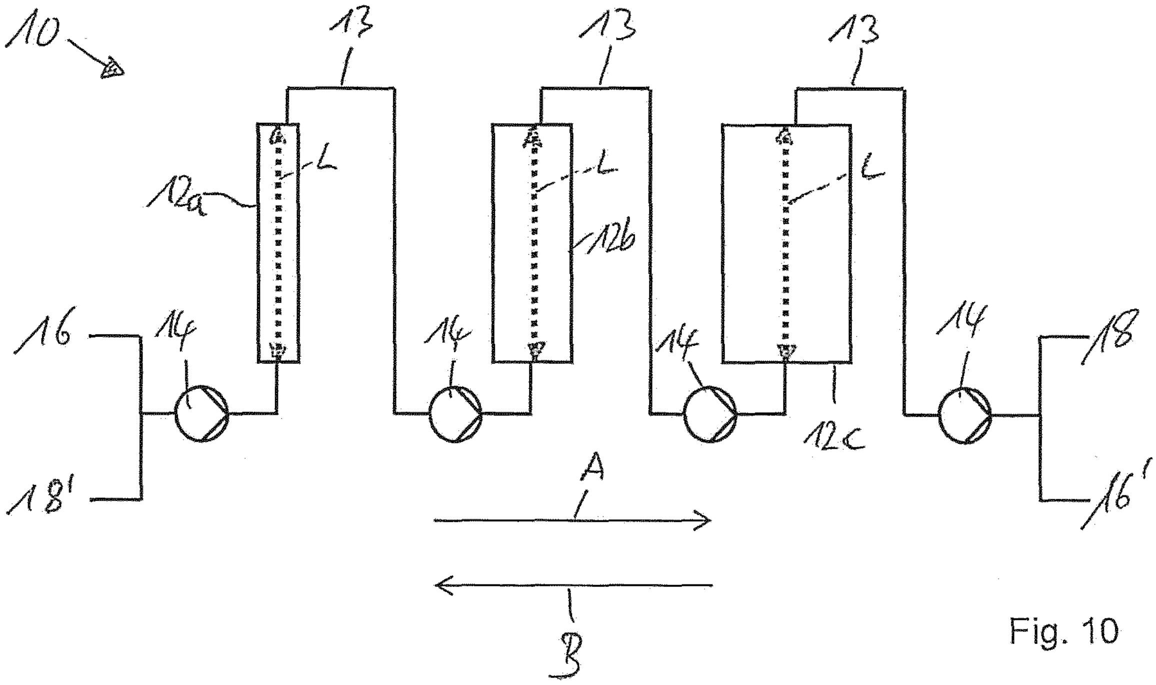
10
13
13
13
L
L
L
12a
12b
16
14
14
14
14
18
18'
12c
16'
A
B

Fig. 10

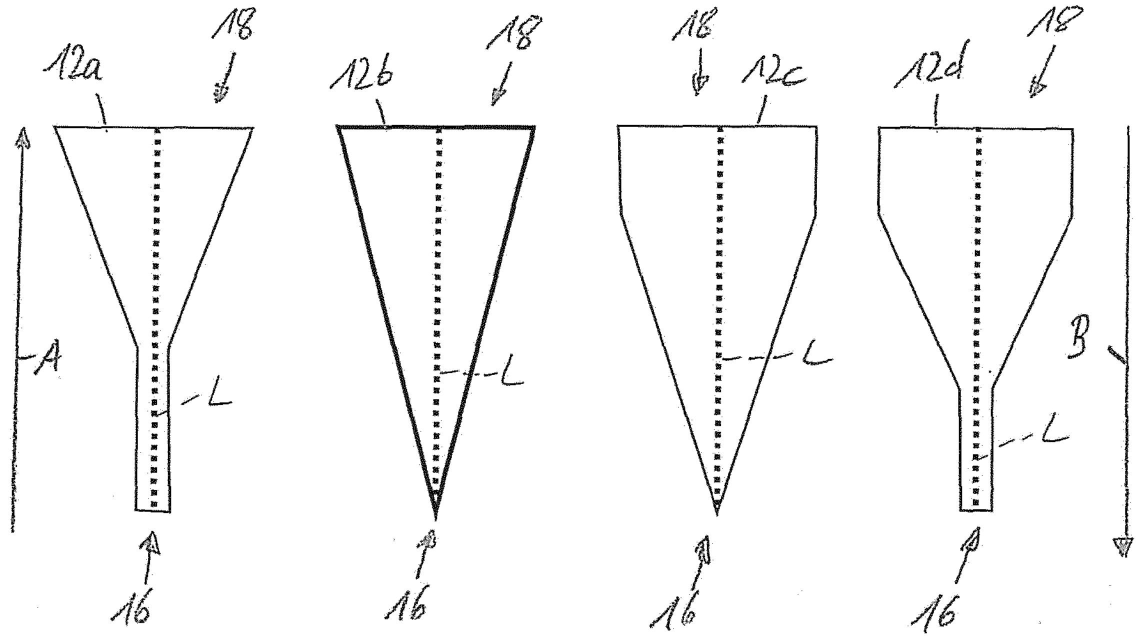
12a
18
12b
18
18
12c
12d
18
A
L
L
L
B
L
16
16
16
16

Fig. 11

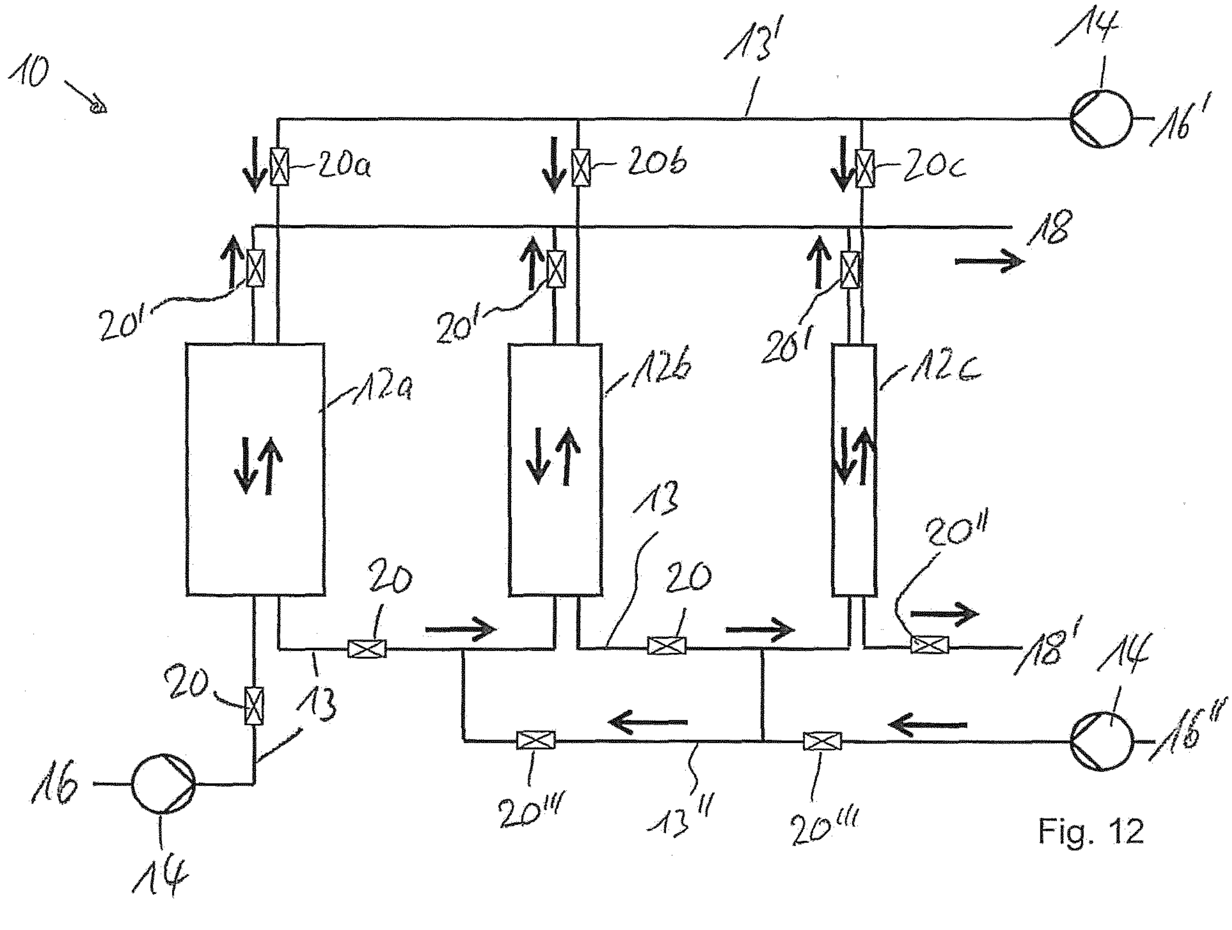
10
13'
14
16'
20a
20b
20c
18
20'
20'
20'
12a
12b
12c
13
20"
20
20
18'
14
20
13
16"
16
20'''
13"
20'''
14

Fig. 12

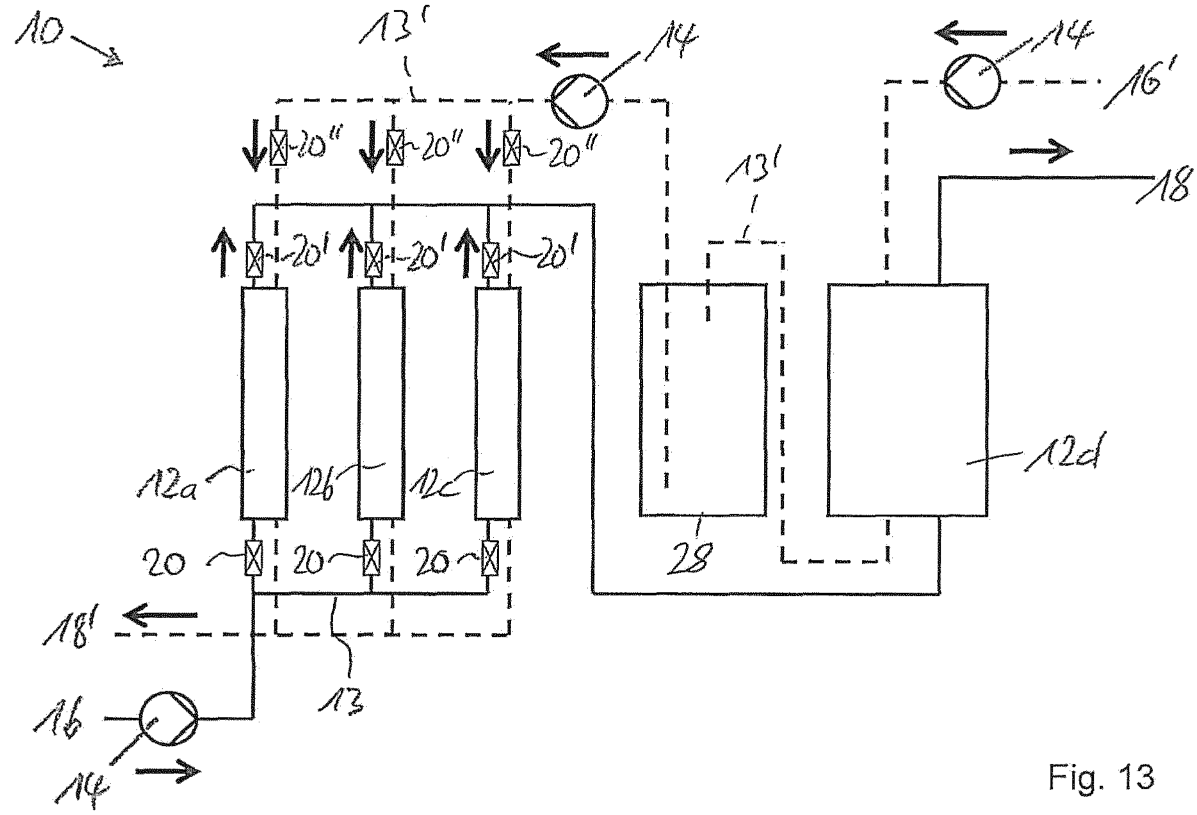
10
13'
14
14
16'
20''
20''
20''
13'
18
20'
20'
20'
12a
12b
12c
12d
20
20
20
28
18'
13
16
14

Fig. 13

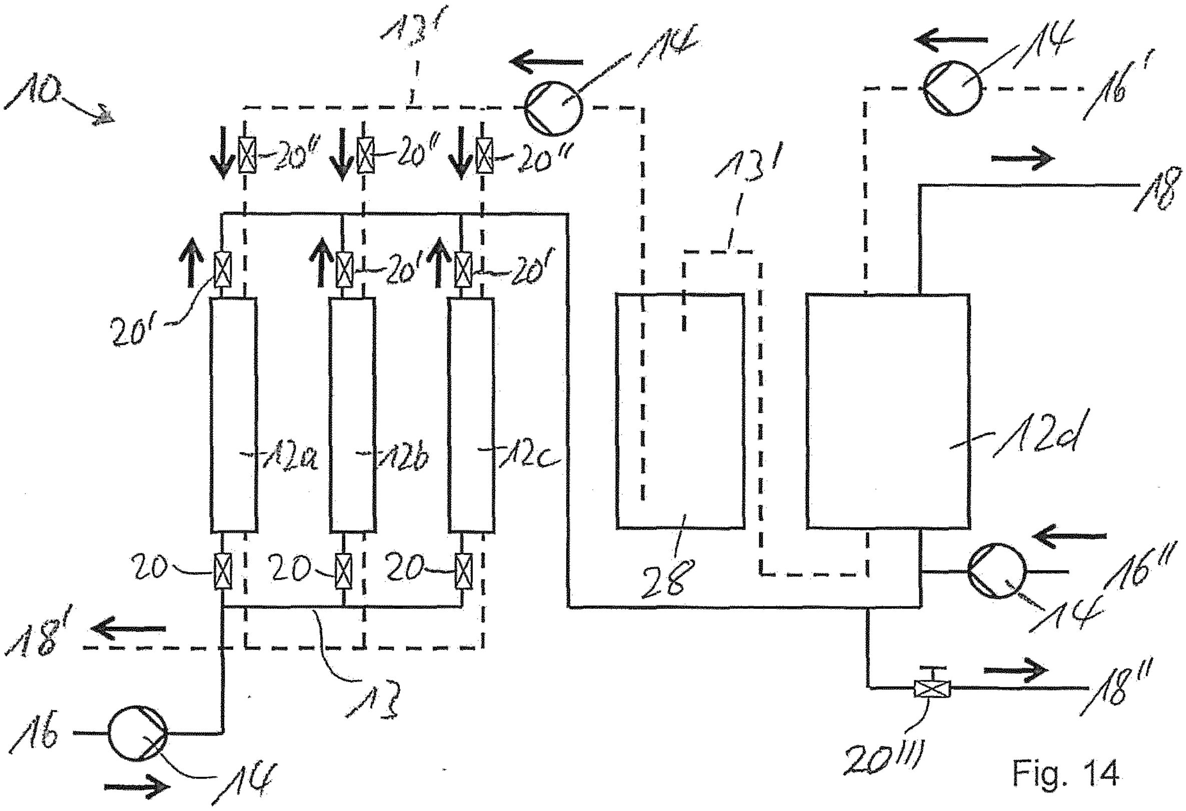
13'
10
14
14
16'
20''
20''
20''
18
13'
20'
20'
20'
12a
12b
12c
12d
28
20
20
20
16''
14
18'
13
18''
16
14
20'''

Fig. 14

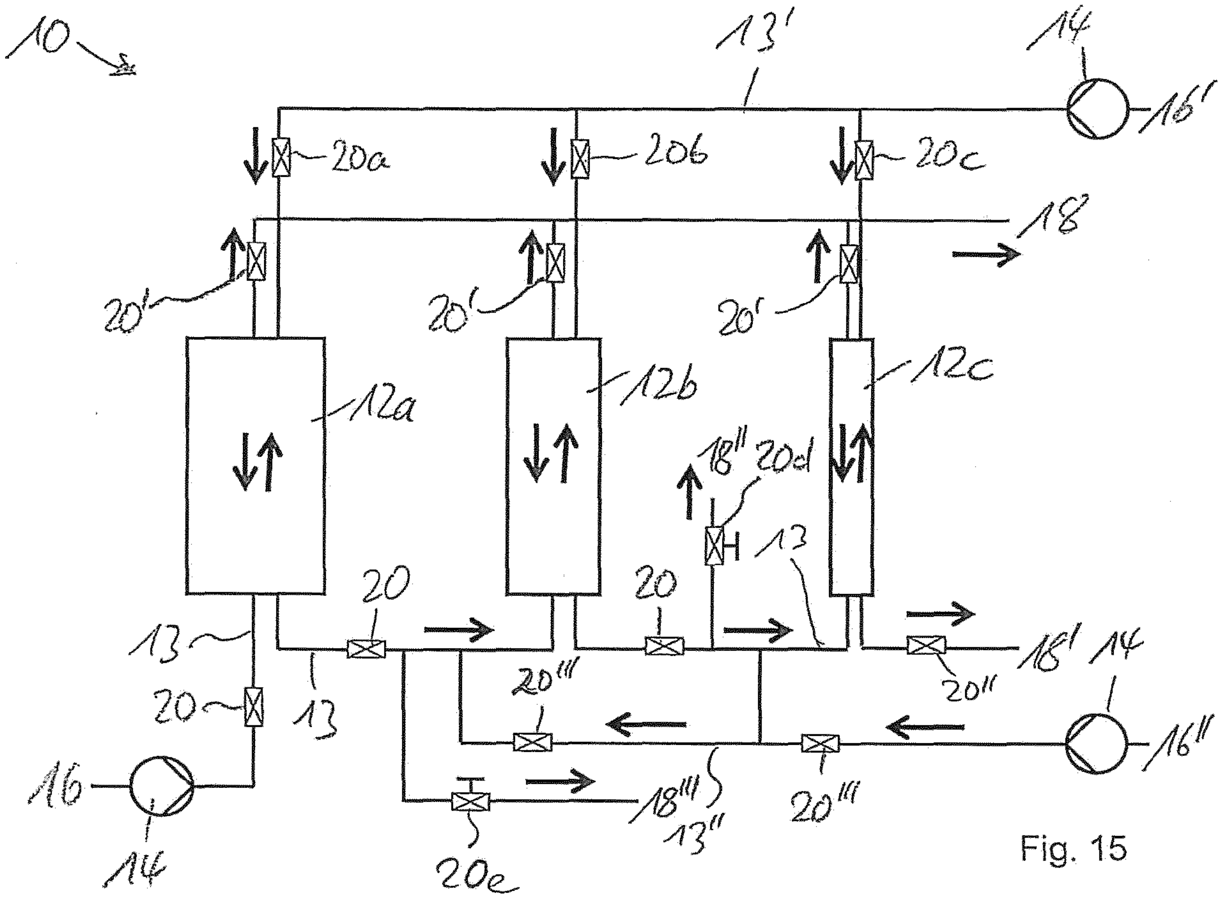
10
13'
14
16'
20a
20b
20c
18
20'
20'
20'
12a
12b
12c
18''
20d
13
20
20
13
20
13
18'
14
20'''
20''
20
16
14
13''
18'''
20'''
16''
20e
14

Fig. 15

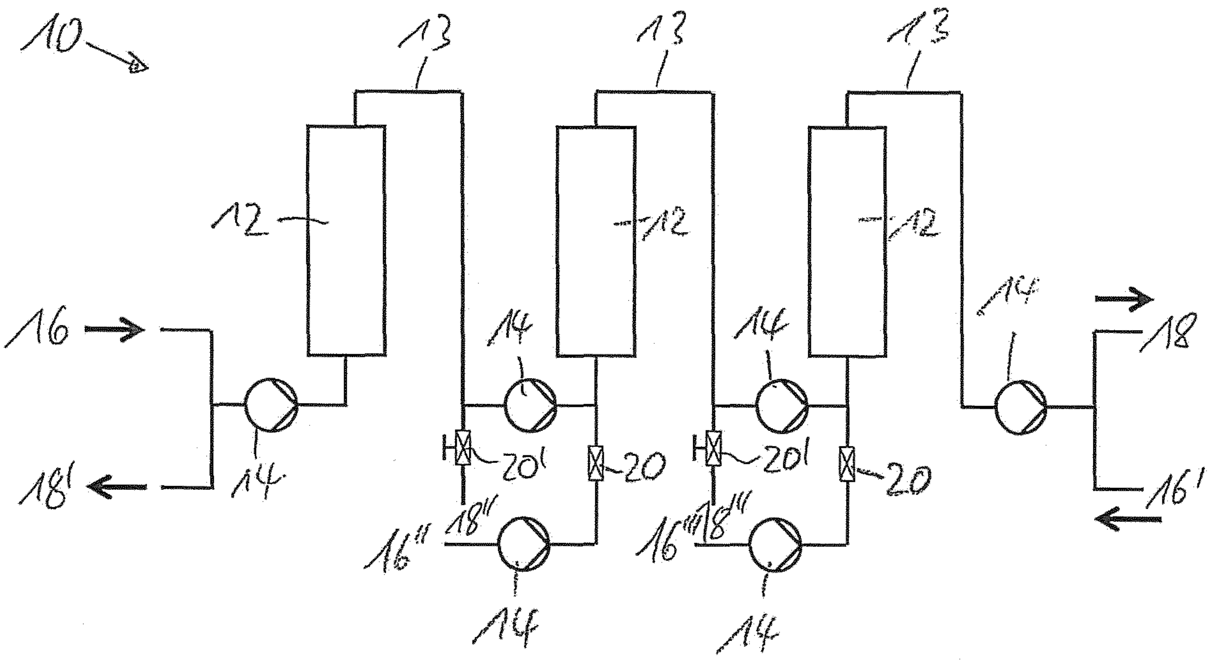
10
13
13
13
12
12
12
14
14
14
16
18
18'
14
20'
20
20'
20
16'
16''
18''
16'''
18''
14
14

Fig. 16

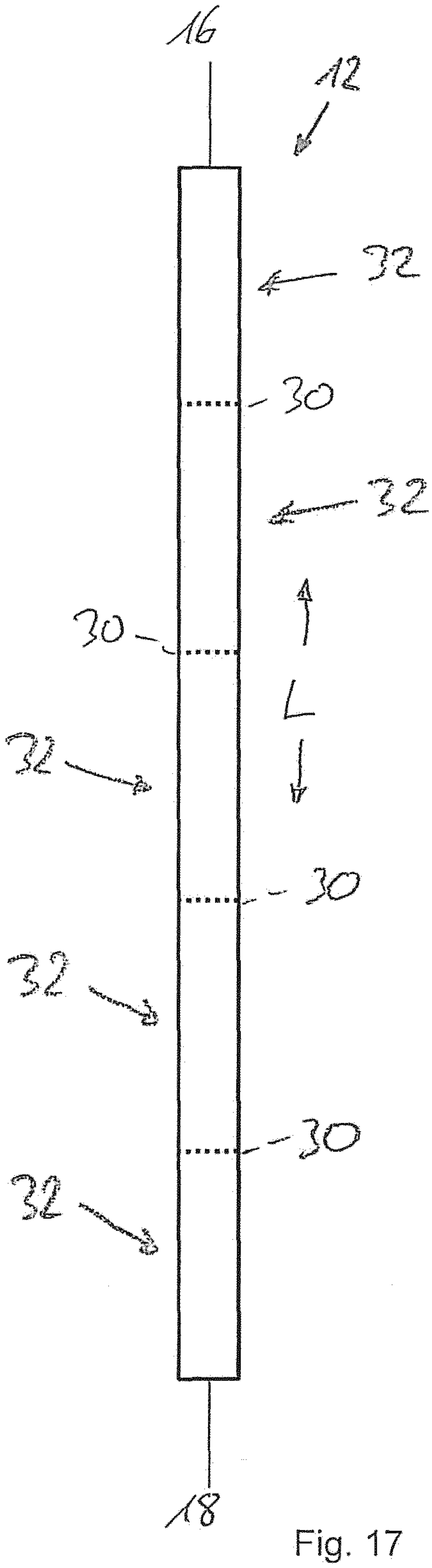


Fig. 17

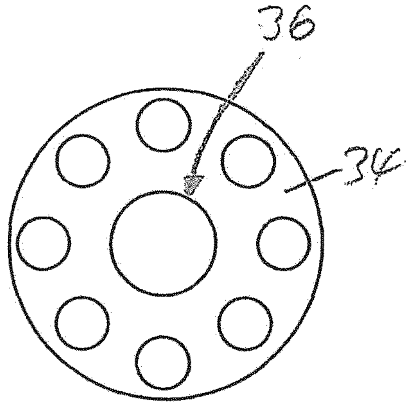


Fig. 18

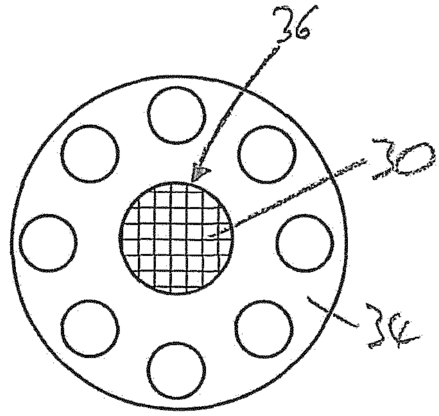


Fig. 19

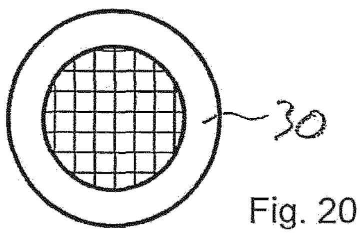


Fig. 20

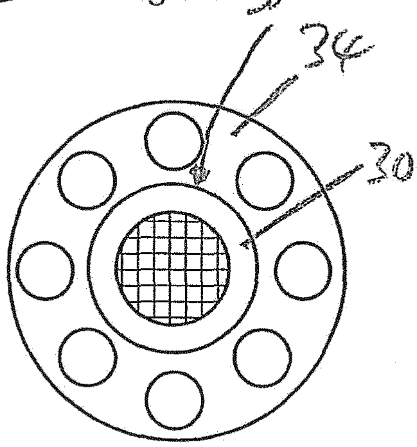


Fig. 21

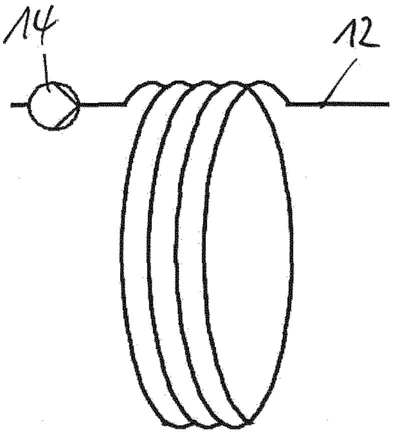


Fig. 22

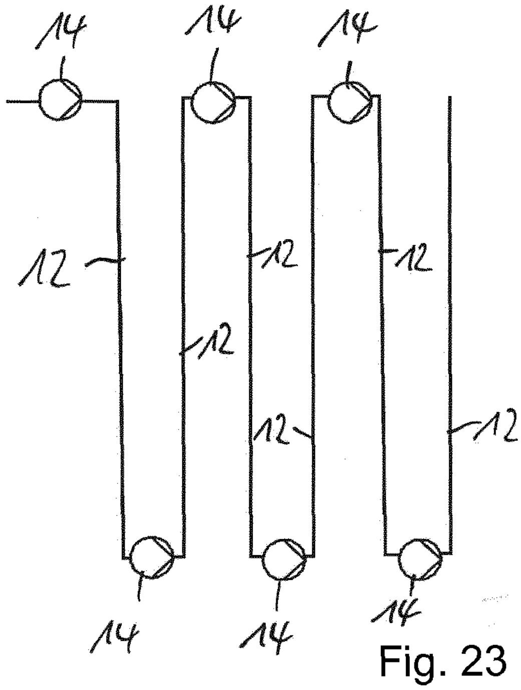


Fig. 23

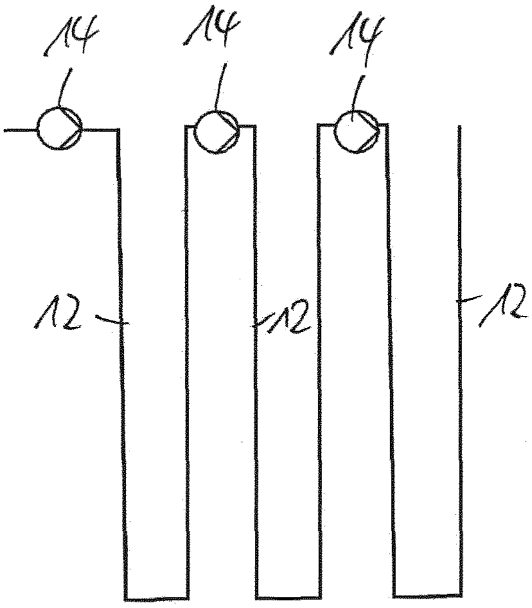


Fig. 24

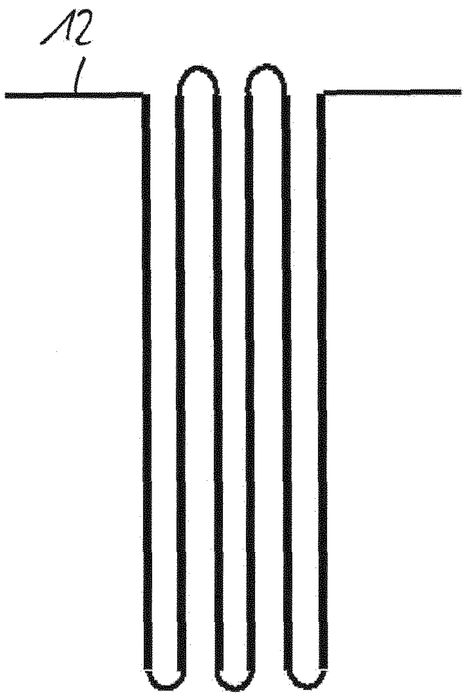


Fig. 25

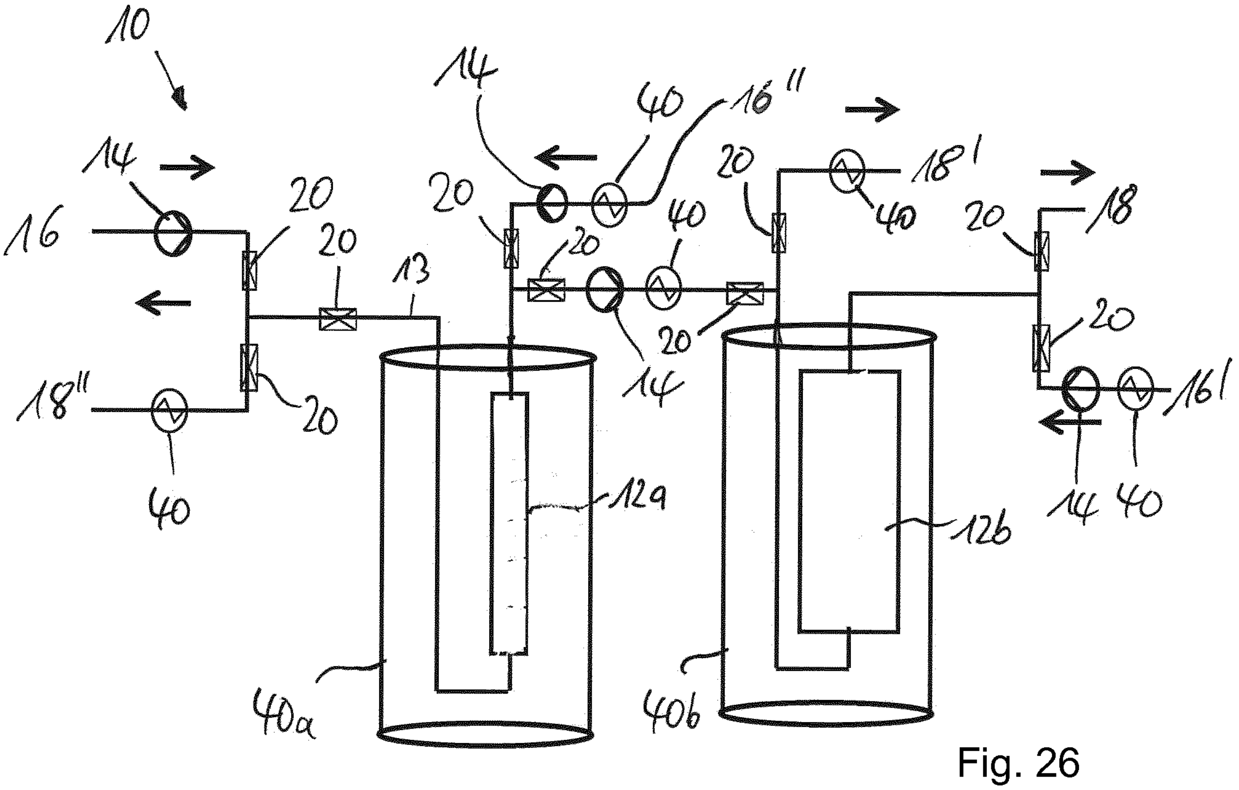
10
14
40
16''
18'
20
16
18''
13
12a
12b
18
16'
40a
40b

Fig. 26

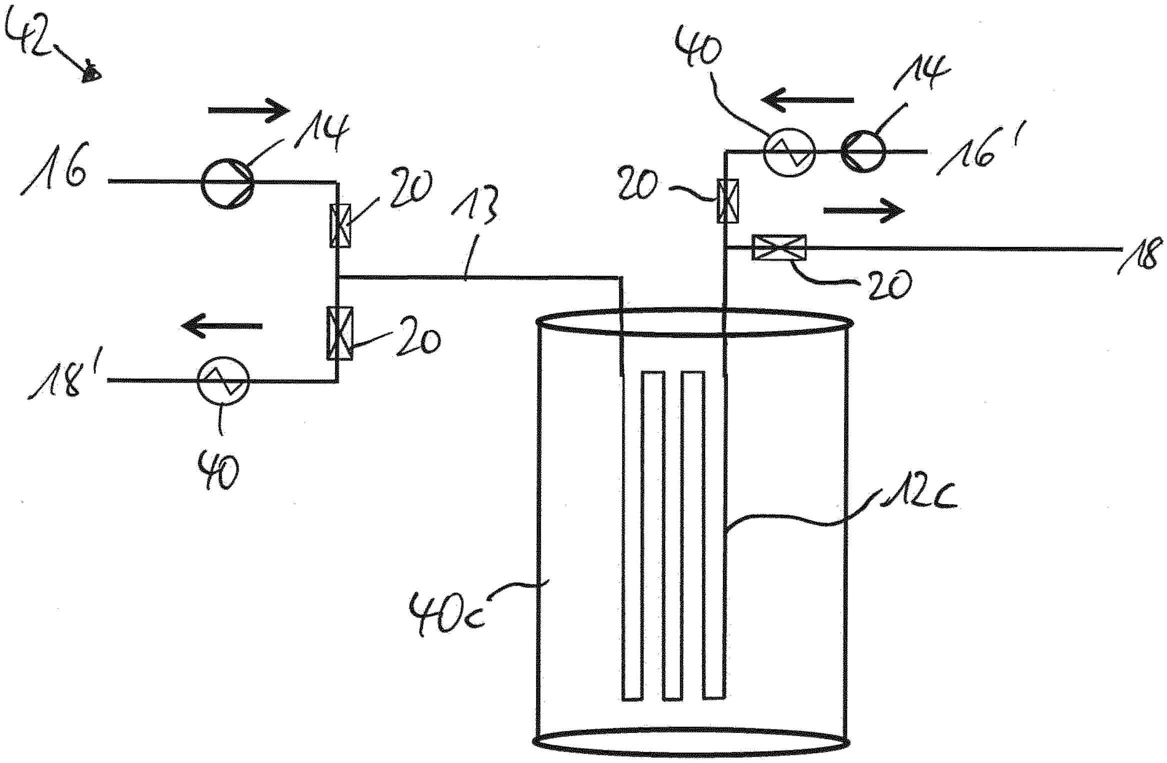
42
14
40
16
16'
20
13
18
18'
12c
40c

Fig. 27

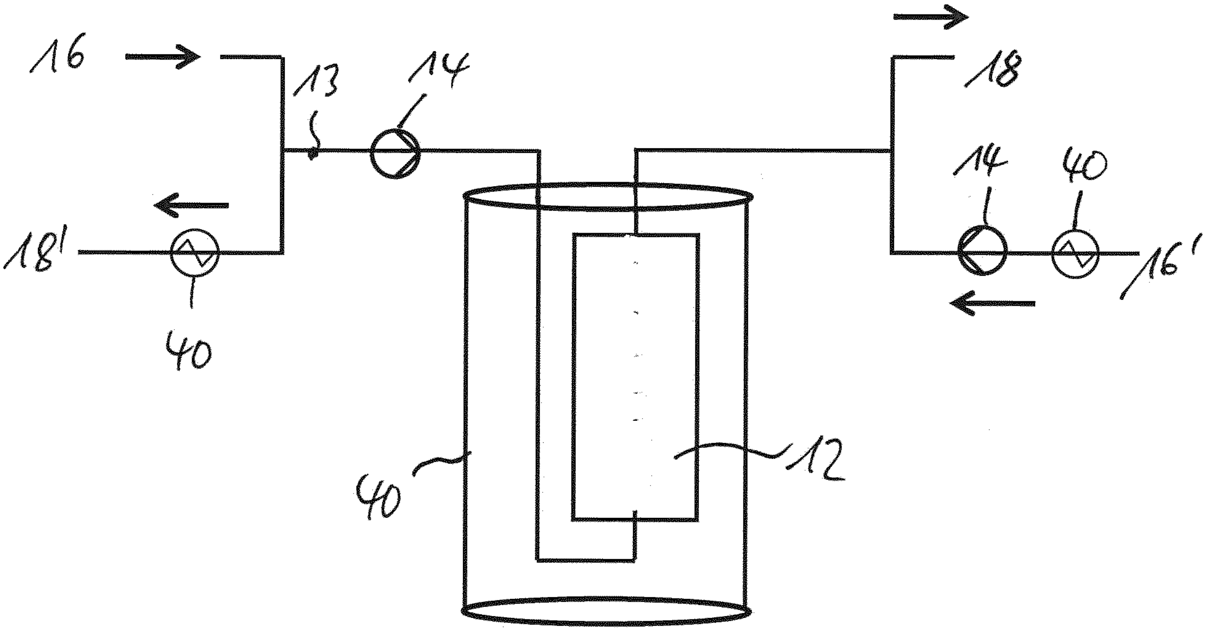
16
13
14
18
18'
14
40
16'
40
40
12

Fig. 28

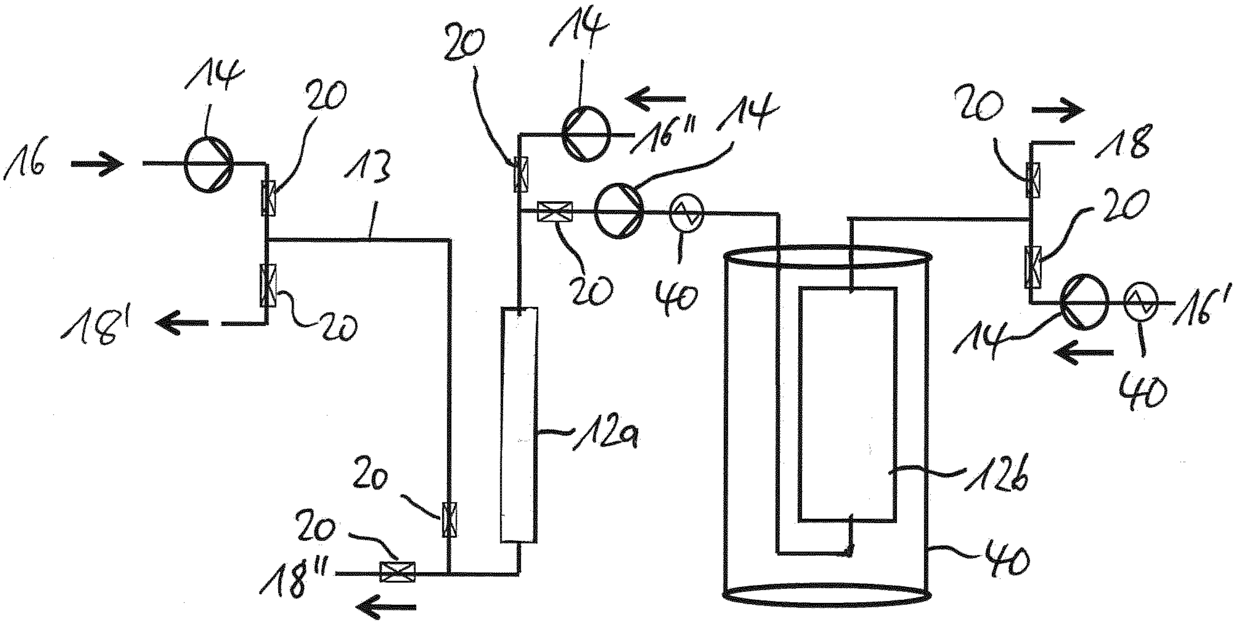
14
20
16
13
20
18'
20
14
16''
14
20
20
18
20
40
14
40
16'
12a
12b
20
20
18''
40

Fig. 29

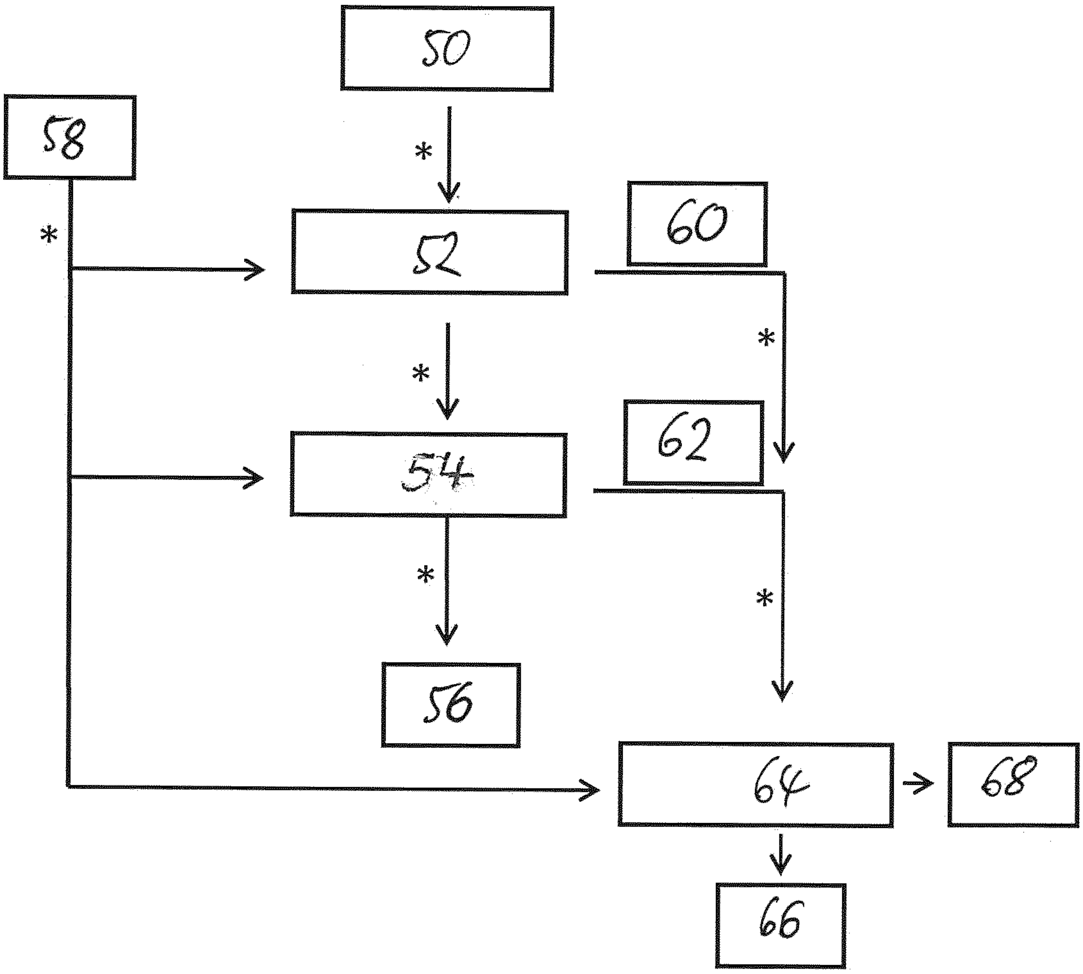


Fig. 30

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2075321 A1
- WO 2015104357 A1
- US 5077061 A